# EUROPEAN PATENT APPLICATION

(11) **EP 4 652 903 A1**
(43) Date of publication of application: **26.11.2025**
(21) Application number: 24744391.4
(22) Date of filing: 19.01.2024
(51) Int. Cl.: A47J 31/00, A47J 31/44

(54) **INTEGRATED INTELLIGENT BEVERAGE ROBOT**

(30) Priority: 20.01.2023 CN 202310097872
(71) Applicant: Aarobot Technology Co., Ltd., Daxing District, Beijing 100176 (CN)
(72) Inventor: WANG, Guodong, Beijing 100176 (CN)
(74) Representative: EIP
(86) International application number: PCT/CN2024/073216
(87) International publication number: WO 2024/153221

(57) **Abstract**

An integrated intelligent beverage robot, comprising: a material storage and supply module (1000), configured to supply stored materials to a multi-station dual-rotary module (2000, 3000); and the multi-station dual-rotary module (2000, 3000), comprising a first rotary component (2150, 3150) and a second rotary component (2250, 3250). The first rotary component (2150, 3150) can carry a finished product cup (2101) to move through a plurality of first-type stations so as to perform a beverage making operation related to the finished product cup (2201) at each first-type station, and the second rotary component (2250, 3250) can carry a material mixing cup (2201) to move through a plurality of second-type stations so as to perform a beverage making operation related to the material mixing cup (2201) at each second-type station. The plurality of first-type stations comprise a first handover station, and the plurality of second-type stations comprise a second handover station, the first handover station corresponding to the second handover station. When the finished product cup (2101) is located at the first handover station, the corresponding material mixing cup (2201) is located at the second handover station, so as to execute a handover operation at the first handover station and the second handover station, the handover operation comprising pouring materials in the material mixing cup (2201) into the finished product cup (2101).

## Description

### TECHNICAL FIELD

The present application relates to the field of intelligent robots, and more particularly to an integrated intelligent beverage robot.

### BACKGROUND

With the development of the beverage industry, people have put forward higher requirements for the quality of various beverages. However, due to the fact that higher quality beverages usually mean the need for more professional operators and more sophisticated beverage production operations by operators, the current situation of the beverage industry still makes a compromise between the labor cost of beverage production and the quality of beverages. In addition, the prior art has not been able to make beverages fully automatically, let alone make various beverages with high quality in a fully automatic way.

Therefore, there is a need for a device capable of fully automatically making a wide variety of beverages of high quality, which can greatly reduce labor costs while meet space compactness requirements.

### SUMMARY

Therefore, an integrated intelligent beverage robot for fully automated beverage making is proposed, the integrated intelligent beverage robot comprising:
- a material storage and supply module configured to store materials for fully automated beverage making and capable of supplying materials to a multi-station dual-revolving module of the integrated intelligent beverage robot;
- a multi-station dual-revolving module configured to make beverages automatically, and comprising:
   a first revolving member configured to carry a finished-product cup and move along a first trajectory passing through a plurality of first type stations to perform beverage making operations associated with the finished-product cup at each of the first type stations,
   a second revolving member configured to carry a blending cup along a second trajectory through a plurality of second type stations to perform beverage making operations associated with the blending cup at each of the second type stations,
   wherein the plurality of first type stations comprises a first pouring station, the plurality of second type stations comprises a second pouring station, the first pouring station being arranged corresponding to the second pouring station, and when the finished-product cup is located at the first pouring station, a respective blending cup is located at the second pouring station, so as to perform pouring operation at the first pouring station and the second pouring station, the pouring operation comprising pouring materials from the blending cup into the finished-product cup.

The integrated intelligent beverage robot proposed by the present disclosure may further include one or more of the following further developments.

In some embodiments, the integrated intelligent beverage robot further includes an intelligent cabinet module comprising a cabinet which comprises compartments for storage of the finished-product cups with finished beverages, the cabinet module being configured to transfer the finished-product cups with finished beverages from the first revolving member to a respective compartment of the cabinet.

In some embodiments, the integrated intelligent beverage robot further includes a main control module configured to communicate with the material storage and supply module, the multi-station dual-revolving module and the intelligent cabinet module to command and control operations of the material storage and supply module, the multi-station dual-revolving module and the intelligent cabinet module.

In some embodiments, the central computer is further configured to communicate with a mobile device.

In some embodiments, the cabinet intelligent cabinet is further configured to allow a customer or a delivery man or waiter to remove the finished-product cups in the respective compartment.

In some embodiments, the intelligent cabinet module is also configured to communicate with a mobile device.

In some embodiments, the integrated intelligent robot further includes an automated cleaning module configured to perform cleaning operations for components of the material storage and supply module and the multi-station dual-revolving module.

In some embodiments, the main control module is further configured to communicate with the automated cleaning module to be able to command and control the operation of the automated cleaning module.

In some embodiments, the intelligent cabinet module further comprises a grasping assembly configured to move the finished-product cup from the multi-station dual-revolving module to a finished-product cup receptacle of the cabinet, the grasping assembly comprising:
a grasping jaw assembly configured to be movable between a grasping position and a cup placing position, and comprising:
   grasping jaws configured to grasp the finished-product cup located on a first revolving member of the multi-station dual-revolving module in the grasping position and to place the finished-product cup in the finished-product cup receptacle in the cup placing position; and
   a grasping jaw drive configured to drive the grasping jaws to become tightened and loosened,
a grasping drive assembly configured to drive the grasping jaw assembly to move between the grasping position and the cup placing position.

In some embodiments, the grasping drive assembly includes: a grasping lifting drive configured to drive the grasping jaw assembly for moving up and down in a height direction; and a grasping rotating drive configured to drive the grasping jaw assembly for rotational movement.

In some embodiments, the grasping lifting drive is a grasping lifting cylinder including a grasping lifting cylinder body and a lifting movable member capable of moving in a height direction relative to the grasping lifting cylinder body; the grasping rotating drive is a grasping rotating cylinder including a grasping rotating cylinder body coupled to the lifting movable member and a rotating shaft rotatable relative to the grasping rotating cylinder body; wherein the grasping jaw assembly is coupled with the rotating shaft; and/or the grasping jaw drive is a grasping jaw cylinder.

In some embodiments, the grasping assembly is configured such that, in operation, after the grasping jaws have grasped the finished-product cup, the lifting movable member moves upward in the height direction, and then the rotating shaft is rotated by an angle in a first circumferential direction.

In some embodiments, the angle is 180°.

In some embodiments, the grasping assembly further includes a grasping horizontal drive configured to drive the grasping jaw assembly for horizontal translational movement.

In some embodiments, the grasping horizontal drive is a grasping horizontal cylinder comprising a grasping horizontal cylinder body and a horizontal movable member coupled with the grasping lifting cylinder body.

In some embodiments, the grasping horizontal cylinder is a rodless cylinder and the horizontal movable member is a grasping horizontal cylinder slider.

In some embodiments, the grasping assembly is further configured to move the grasping horizontal cylinder to the cup placing position in a first translational direction after the rotating shaft is rotated by the angle.

In some embodiments, the grasping assembly is further configured such that, in the cup placing position, the lifting movable member is lowered to place the finished-product cup in a cup holder at the finished-product cup receptacle, and then the grasping jaws release the finished-product cup.

In some embodiments, the grasping assembly is further configured to move the horizontal movable member back in a second translational direction opposite the first translational direction after the grasping jaws release the finished-product cup.

In some embodiments, the grasping assembly further includes a fourth sensor fixed at an intermediate position between the grasping position and the cup placing position, and configured to sense proximity or presence of the horizontal movable member during the moving back of the horizontal movable member in the second translational direction opposite the first translational direction and to communicate with a solenoid valve controlling operation of the grasping rotating cylinder, so as to rotate the rotating shaft by the angle in a second circumferential direction opposite the first circumferential direction upon sensing the proximity or presence of the horizontal movable member.

In some embodiments, the fourth sensor is further configured to communicate with a solenoid valve controlling operation of the grasping horizontal cylinder to suspend operation of the grasping horizontal cylinder for a time period upon sensing proximity or presence of a horizontal movable member.

In some embodiments, the time period is 1 to 3 seconds.

In some embodiments, the intelligent cabinet module further includes a lid-pressing assembly configured to press a finished-product cup lid against a respective finished-product cup at the finished-product cup receptacle, and at least including: a first rotating lid-pressing cylinder including a first rotating shaft that is rotatably move up and down, and a first lid-pressing link lever coupled to the first rotating shaft to be movable with the first rotating shaft.

In some embodiments, the lid pressing assembly further comprises a second rotating lid-pressing cylinder including a second rotational shaft that is rotatably movable up and down, and a second lid-pressing link lever coupled to the second rotating shaft to be movable with the second rotating shaft.

In some embodiments, the first rotating lid-pressing cylinder and the second rotating lid-pressing cylinder are suitable for finished-product cups of different heights.

In some embodiments, the lid-pressing assembly further includes a first pressure relief valve for the first rotating lid-pressing cylinder and/or a second pressure relief valve for the second rotating lid-pressing cylinder.

In some embodiments, the cabinet includes at least a first side on which a plurality of rows of compartments are provided for storing the finished-product cups.

In some embodiments, the cabinet further includes a second side adjacent to and disposed at an angle with respect to the first side, on which a plurality of rows of compartments for storing the finished-product cups are disposed.

In some embodiments, the intelligent cabinet module includes a transfer assembly configured to transfer the finished-product cup from the finished-product cup receptacle of the cabinet into a respective compartment of the cabinet, the transfer assembly comprising:
a transfer jaw assembly configured to be movable between the finished-product cup receptacle and the compartments and comprising:
   transfer jaws configured to grasp the finished-product cup located in the finished-product cup receptacle and to place the finished-product cup into a respective compartment; and
   a transfer jaw drive configured to drive the transfer jaws to be tightened and loosened,
a transfer drive assembly configured to drive the transfer jaw assembly for movement between the finished-product cup receptacle and the compartments.

In some embodiments, the transfer drive assembly includes: a transfer lifting drive assembly configured to drive the transfer jaw assembly for moving up and down in a height direction; and a transfer horizontal drive assembly configured to drive the transfer jaw assembly for horizontal translation movement.

In some embodiments, the transfer lifting drive assembly comprises:
a transfer lifting drive motor comprising a fifth motor shaft; and
a transfer lifting transmission assembly comprising:
   a second rack which is fixedly disposed;
   a drive gear configured to be driven by the fifth motor shaft and meshed with the second rack to be able to move up and down along the second rack in a height direction and thus to drive the transfer jaw assembly to move up and down.

In some embodiments, the transfer lifting transmission assembly further comprises a first speed reducer disposed between the transfer lifting drive motor and the drive gear and comprising a first housing and a first reduction transmission assembly located within the first housing.

In some embodiments, the first reduction transmission assembly includes: an input shaft configured to be coupled with the fifth motor shaft of the transfer lifting drive motor via a coupling referred to as a second coupling; and a planetary gear train configured to include an input gear coupled with the input shaft and an output gear coupled with the drive gear.

In some embodiments, the transfer horizontal drive assembly is configured to be driven by the transfer lifting drive assembly for moving up and down in a height direction, and comprises:
a transfer horizontal drive motor;
a first linear module comprising a first horizontal slider drivable by the transfer horizontal drive motor for translational movement,
wherein the transfer jaw assembly is arranged to be coupled with the first horizontal slider so as to be able to translate with the first horizontal slider.

In some embodiments, the transfer drive assembly further includes a transfer intermediate drive assembly configured to transfer power between the transfer lifting drive assembly and the transfer horizontal drive assembly.

In some embodiments, the transfer intermediate drive assembly is disposed to be coupled to the first housing of the first speed reducer of the transfer lifting drive assembly so as to be able to move up and down with the transfer lifting drive assembly.

In some embodiments, the transfer intermediate drive assembly comprises: a transfer intermediate drive motor; a second linear module comprising a second horizontal slider drivable by the transfer intermediate drive motor for translational movement; wherein the transfer horizontal drive assembly is arranged to be connected with the second horizontal slider to be capable of translational movement with the second horizontal slider.

In some embodiments, the transfer horizontal drive assembly is configured to connect with the second horizontal slider via a transfer rotating drive assembly configured to rotatably connect the transfer horizontal drive assembly to the second horizontal slider.

In some embodiments, the transfer rotating drive assembly comprises: a transfer rotary motor comprising a sixth motor shaft; a transfer rotating shaft configured to be connected to the sixth motor shaft so as to be driven rotatably by the transfer rotary motor; wherein the transfer horizontal drive assembly is arranged to be coupled with the transfer rotating shaft to be rotatable with the transfer rotating shaft.

In some embodiments, the transfer rotating drive assembly further comprises a second speed reducer disposed between the transfer rotary motor and the transfer rotating shaft, and comprising a second housing and a second reduction transmission assembly disposed within the second housing.

In some embodiments, the second slider is connected to the second housing of the second speed reducer.

In some embodiments, the transfer rotating drive assembly further comprises an angle detection assembly configured to detect an angular position of the transfer rotating shaft, the angle detection assembly comprising: an angle detection piece arranged to move together with the transfer rotating shaft; a fifth sensor fixedly arranged and configured to detect an angular position of the angle detection piece.

In some embodiments, the transfer lifting drive assembly includes an assembly for identifying original point in height direction comprising: a detection piece for identifying original point in height direction configured to move in the height direction with the transfer lifting drive motor; a sensor for identifying original point in height direction which is fixedly arranged and configured to be capable of detecting the detection piece for identifying original point in height direction.

In some embodiments, each compartment is provided with a first door, and the transfer jaws are arranged to push open the first door to enable the finished-product cup to be placed into the compartment.

In some embodiments, the top of the first door is hinged with a top plate of the compartment.

In some embodiments, the compartment is further provided with a second resilient returning member connected between the first door and a side plate of the compartment on which the first door is mounted and configured to apply a restoring force to the first door that tends to close the first door when the first door is opened.

In some embodiments, the side plate of the compartment provided with the first door is further provided with a stop for limiting the travel of the first door when the first door is returned.

In some embodiments, each compartment is provided with a sixth sensor configured to detect the presence or absence of the finished-product cup in the compartment.

In some embodiments, the sixth sensor is a laser sensor.

In some embodiments, the compartment is further provided with an indicator light configured to illuminate when the laser sensor detects the presence of the finished-product cup in the compartment.

In some embodiments, each compartment is configured to accommodate two finished-product cups, and each compartment is provided with two laser sensors, each sensor for detecting the presence or absence of a respective one of the two finished-product cups.

In some embodiments, each compartment is further provided with a second door through which the finished-product cup can be taken out.

### BRIEF DESCRIPTION OF THE DRAWINGS

In order to more clearly explain the technical solutions of the embodiments of the present disclosure, the following drawings that need to be used in the embodiments will be briefly introduced, and it should be understood that the following drawings only illustrate certain embodiments of the present disclosure, and therefore should not be regarded as limiting the scope. For those skilled in the art, other related drawings can be obtained from these drawings without inventive work. In the drawings:
Fig. 1 is a schematic perspective view of a material storage and supply module according to an exemplary embodiment, in which a portion of a material storage device is shown;
Fig. 2 is a top view of a material storage device according to an exemplary embodiment, wherein a dotted portion represents a state when respective doors of the material storage device are opened;
Fig. 3 shows a top portion of a material storage device according to an exemplary embodiment;
Fig. 4 shows a schematic diagram of relative positions between a material container chamber and an ice discharge chamber of a material storage device and a multi-station dual-revolving module according to an exemplary embodiment;
Fig. 5 shows, in a perspective schematic view, a material container chamber of a material storage device of a material storage and supply module according to an exemplary embodiment and a mechanism for supplying material containers from the material container chamber to a multi-station dual-revolving module;
Fig. 6 shows in a perspective schematic view a portion of a material storage and supply module according to an exemplary embodiment, wherein one material container chamber, a corresponding manipulator drive mechanism, and a portion of a mechanism for supplying material containers from the material container chamber to a multi-station dual-revolving module are shown;
Fig. 7 shows in a perspective schematic view a portion of a material storage and supply module according to an exemplary embodiment, wherein one material container chamber, a manipulator for grasping material containers from the material container chamber, and a manipulator drive mechanism are shown;
Fig. 8 shows a portion of a material storage and supply module according to an exemplary embodiment in another perspective schematic view, wherein a material container chamber, a manipulator for grasping a material container from the material container chamber, and a manipulator drive mechanism are shown;
Fig. 9 shows, in a perspective schematic view, a manipulator and a manipulator drive mechanism for grasping a material container from a material container chamber according to an exemplary embodiment;
Fig. 10 shows a manipulator for grasping a material container from a material container chamber and a manipulator drive mechanism in another perspective schematic view according to an exemplary embodiment;
Fig. 11 shows a bottom schematic view of a manipulator that grasps a material container from a material container chamber and a manipulator drive mechanism according to an exemplary embodiment;
Fig. 12 shows, in a perspective schematic view, a first transfer device for transferring a material container from a material container chamber to another mechanism and a first waste material container collector according to an exemplary embodiment;
Fig. 13 shows, in a schematic perspective view, a second transfer device for transferring a material container from a material container chamber to another mechanism according to an exemplary embodiment;
Fig. 14 shows, in a schematic perspective view, a first transfer device, a first film opening mechanism, a first material feeding device, and a first waste material container collector according to an exemplary embodiment, wherein the first material container is being cut while the first film opening cylinder of the first film opening mechanism is in an operating position;

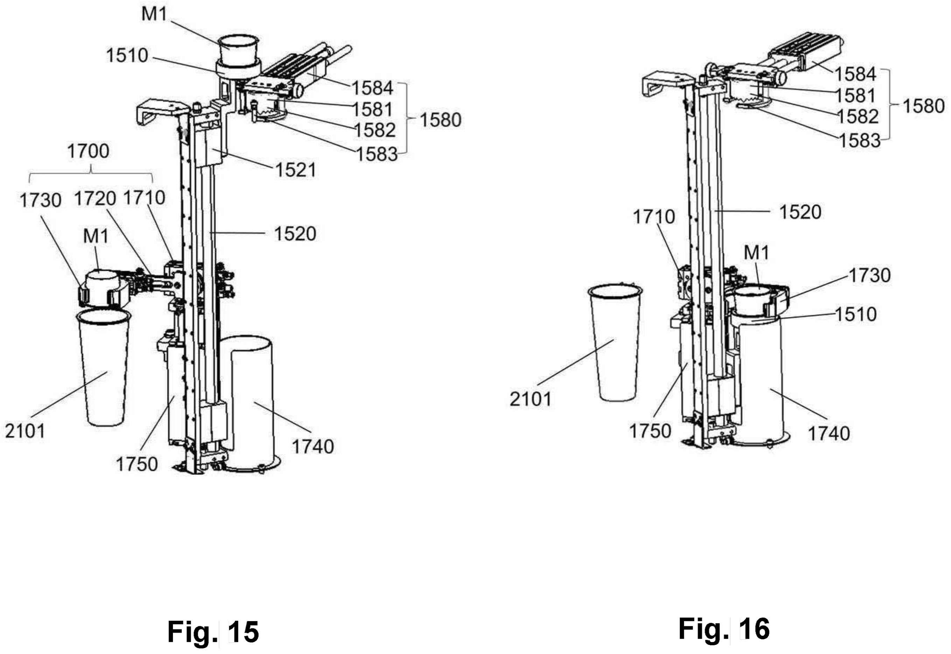

Fig. 15 shows in a perspective schematic view a first transfer device, a first film opening mechanism, a first material feeding device, and a first waste material container collector according to an exemplary embodiment, wherein material in a first material container for making a previous beverage is being poured into a finished-product cup by the first material feeding device, the first material container for making a subsequent beverage is just placed on a first tray of the first transfer device by a first manipulator, and the first film opening cylinder of the first film opening mechanism is in a stowed position so as not to interfere with subsequent movement of the first transfer device;
Fig. 16 shows, in a schematic perspective view, a first transfer device, a first film opening mechanism, a first material feeding device, and a first waste material container collector, wherein the first material container is being discarded by the first material feeding device to the first waste material container collector, according to an exemplary embodiment;
Fig. 17 shows in a perspective schematic view a material container chamber and a portion of first and second transfer devices for transferring material containers from the material container chamber and a portion of a second material feeding mechanism according to an exemplary embodiment;
Fig. 18 shows in a perspective schematic view a second tray and a second inclined slideway of a second transfer device according to an exemplary embodiment;
Fig. 19 shows a second transfer device, a second inclined slideway, a second intermediate transfer device, a second film cutting mechanism in a retracted position, a second material feeding mechanism, and a second waste material container collector in a perspective schematic view according to an exemplary embodiment, wherein a second intermediate tray in a film cutting height position and a second intermediate tray in a feeding height position of the second transfer device are shown;
Fig. 20 shows in a perspective schematic view a second inclined slideway, a second intermediate transfer device and a second material feeding mechanism according to an exemplary embodiment;
Fig. 21 shows a second transfer device, a second inclined slideway, a second intermediate transfer device, a second film cutting mechanism, a second material feeding mechanism, and a second waste material container collector in a perspective schematic view according to an exemplary embodiment, wherein the second intermediate tray of the second transfer device is shown in a film cutting height position and the second film cutting mechanism is in a working position and performing film cutting operations on the second material container;
Fig. 22 shows a second inclined slideway, a second intermediate transfer device, and a second material feeding mechanism in a schematic perspective view according to an exemplary embodiment, wherein a feeding jaw of the second material feeding mechanism is shown grasping a second material container located on a second intermediate tray;
Fig. 23 shows a second transfer device, a second inclined slideway, a second intermediate transfer device, a second film cutting mechanism, and a second material feeding mechanism in a perspective schematic view according to an exemplary embodiment, wherein the second material feeding mechanism is shown to pour material in a second material container into a blending cup;
Fig. 24 shows a second transfer device, a second inclined slideway, a second intermediate transfer device, a second film cutting mechanism, a second material feeding mechanism, and a second waste material container collector in a perspective schematic view according to an exemplary embodiment, wherein it is shown that the second material feeding mechanism is pouring material from a second material container for a previous beverage into a blending cup and the film of a second material container for a subsequent beverage is being cut;
Fig. 25 shows a second intermediate transfer device and a second film cutting mechanism in a schematic perspective view according to an exemplary embodiment;
Fig. 26 illustrates a motion-interrelating mechanism according to an exemplary embodiment in a schematic perspective view;
Fig. 27 shows a cylindrical cam and a cover plate of the motion-interrelating mechanism according to an exemplary embodiment in a perspective schematic view;
Fig. 28 shows a portion of an ice discharge chamber and an ice discharge mechanism in a perspective schematic view according to an exemplary embodiment;
Fig. 29 shows, in a perspective schematic view, a portion of an ice discharge chamber and a portion of an ice discharge mechanism in which an ice cube storage tank of the ice discharge mechanism is removed to show an ice cube delivery assembly according to an exemplary embodiment;
Fig. 30 shows an ice cube delivery member and a delivery drive member of the ice discharge mechanism according to an exemplary embodiment in a schematic perspective view;
Fig. 31 shows a first embodiment of an ice discharge mechanism in a perspective schematic view;
Fig. 32 is a schematic perspective view showing a second embodiment of the ice discharge mechanism;
Fig. 33 shows a second embodiment of the ice discharge mechanism in a partial perspective schematic view;
Figs. 34 and 35 illustrate, in schematic perspective views, a closed and an open state of the main box usable for the first embodiment and the second embodiment of the ice discharge mechanism, respectively;
Figs. 36 and 36a show a third embodiment of the ice discharge mechanism in a schematic perspective view;
Figs. 37 and 38 respectively show a third specific embodiment of the ice discharge mechanism in a partial perspective schematic view, wherein the auxiliary boxes are respectively in different states;
Figs. 39 and 40 illustrate a multi-station dual-revolving module according to the first embodiment in a schematic perspective view from different angles;
Fig. 41 shows a multi-station dual-revolving module according to a first embodiment in a top view;
Fig. 42 shows in a schematic perspective view a second revolving assembly, a portion of a blending cup holding mechanism, a portion of a cup washing mechanism, and a blending cup lid covering and cleaning mechanism of a multi-station dual-revolving module according to a second embodiment;
Fig. 43 shows in a perspective schematic view a first revolving assembly of a multi-station dual-revolving module according to a second embodiment;
Fig. 44 shows, in a top view, a first drive mechanism of a first revolving assembly when the first revolving member is a first turntable;
Fig. 45 shows, in a schematic perspective view, a first drive mechanism of a first revolving assembly when the first revolving member is a first turntable;
Fig. 46 is a schematic cutaway perspective view showing a first drive mechanism of a first revolving assembly when the first revolving member is a first turntable;
Fig. 47 is a schematic perspective view of the first drive mechanism of the first revolving assembly when the first revolving member is a first turntable at another angle;
Fig. 48 is a schematic perspective view showing the first revolving assembly when the first revolving member is a first revolving belt, i.e. showing the first revolving assembly of the multi-station dual-revolving module according to the first embodiment;
Figs. 49, 50, and 51 illustrate, in partial perspective schematic views, a portion of the first revolving assembly when the first revolving member is a first revolving belt;
Fig. 52 shows in a perspective schematic view a second revolving assembly and a support column of a multi-station dual-revolving module according to a second embodiment;
Figs. 53 and 54 show a second revolving assembly and a support column of a multi-station dual-revolving module according to the first embodiment in a schematic perspective view from different viewpoints;
Figs. 55 and 56 illustrate a rotary table in a perspective schematic view according to an exemplary embodiment;
Fig. 57 shows in a perspective schematic view a blending cup with a clamping collar according to an exemplary embodiment;
Fig. 58 shows a blending cup and a blending cup holding mechanism according to the first embodiment in a schematic perspective view;
Fig. 59 shows a driving shaft of a blending cup drive mechanism of the blending cup holding mechanism according to the first embodiment in a schematic perspective view;
Fig. 60 shows a blending cup drive mechanism of the blending cup holding mechanism according to the first embodiment in a cutaway perspective schematic view;
Fig. 61 is a partially cut-away perspective schematic view showing a portion of the blending cup drive mechanism of the blending cup holding mechanism according to the first embodiment;
Fig. 62 is a schematic perspective view showing a portion of the blending cup drive mechanism of the blending cup holding mechanism according to the second embodiment;
Fig. 63 is a schematic perspective view showing an electric cylinder of a blending cup drive mechanism of the blending cup holding mechanism according to the second embodiment;
Fig. 64 is a cut-away perspective schematic view showing a portion of the blending cup drive mechanism of the blending cup holding mechanism according to the second embodiment;
Fig. 65 shows an electric slip ring mechanism in a cutaway perspective schematic view according to an exemplary embodiment;
Fig. 66 is a schematic perspective view showing a container dropping mechanism used in a multi-station dual-revolving module according to a first embodiment;
Fig. 67 shows in a perspective schematic view a portion of a container dropping mechanism used in a multi-station dual-revolving module according to the first embodiment, wherein a drive mechanism and a support plate frame of the container dropping mechanism are shown;
Figs. 68, 69, 70 and 71 illustrate in front view, respectively, different states of the container dropping mechanism used in the multi-station dual-revolving module according to the first embodiment;
Fig. 72 shows a multi-station dual-revolving module according to a first embodiment in a schematic perspective view, wherein a labeling station and a cup washing station are shown;
Fig. 73 illustrates, in a partially enlarged view, a labeling mechanism in a multi-station dual-revolving module according to an exemplary embodiment;
Figs. 74, 75, 76, 77, and 78 illustrate a labeling mechanism according to an exemplary embodiment in different views;
Figs. 79 and 80 show a liquid material feeding mechanism according to an exemplary embodiment in perspective schematically, respectively, from different views;
Fig. 81 shows a first filling valve in a cutaway view according to an exemplary embodiment;
Figs. 82 and 83 illustrate in perspective schematic views, respectively, different states of the liquid material feeding mechanism according to the first modification, wherein Fig. 82 corresponds to a state when the liquid material feeding operation is performed and Fig. 83 corresponds to a state when the liquid material feeding operation is not performed;
Fig. 84 shows in a perspective schematic view a liquid material feeding mechanism according to a second variant;
Fig. 85 shows a blending mechanism according to an exemplary embodiment in a schematic perspective view;
Fig. 86 is a partially cut-away perspective view showing a blending cup lid covering and cleaning mechanism according to an exemplary embodiment;
Fig. 87 shows a blending cup lid covering and cleaning mechanism in a schematic perspective view according to an exemplary embodiment;
Fig. 88 is a schematic perspective view showing a blending cup lid cleaning tray of a blending cup lid covering and cleaning mechanism according to an exemplary embodiment;
Fig. 89 shows in a partially enlarged perspective schematic view a portion of a blending cup lid covering and cleaning mechanism according to an exemplary embodiment;
Fig. 90 illustrates, in a partially enlarged schematic view, a pouring mechanism according to an exemplary embodiment of a multi-station dual-revolving module;
Fig. 91 shows a pouring mechanism in a schematic perspective view according to an exemplary embodiment;
Figs. 92, 93, 94, 95 and 96 illustrate in partial perspective schematic views a pouring mechanism in different states according to an exemplary embodiment of a multi-station dual-revolving module, wherein Figs. 92-93 illustrate the pouring mechanism in an initial state or just starting operation, Fig. 94 illustrates a state when a finished-product cup is taken away from a cup holder on a first revolving member, Fig. 95 illustrates a state corresponding to a first stage of material pouring operation, and Fig. 96 illustrates a state corresponding to a second stage of material pouring operation;
Fig. 97 shows in a perspective schematic view a cup washing mechanism according to an exemplary embodiment;
Fig. 98 shows a cup washing mechanism according to an exemplary embodiment in a schematic perspective view from different viewpoints;
Fig. 99 is a schematic perspective view showing a milk cap feeding mechanism according to the first embodiment;
Fig. 100 shows in a perspective schematic view a second filling valve and an ultrasonic liquid level sensor of a milk cap feeding mechanism according to an exemplary embodiment;
Fig. 101 shows a second filling valve in a cutaway view according to an exemplary embodiment;
Fig. 102 is a schematic perspective view showing a milk cap feeding mechanism according to a second embodiment;
Fig. 103 illustrates an example of a container dropping mechanism used by the multi-station dual-revolving module according to the second embodiment;
Fig. 104 illustrates an example of a lid dropping and pressing mechanism used by the multi-station dual-revolving module according to the second embodiment;
Fig. 105 shows, in a perspective schematic view, an example of a milk cap feeding mechanism and a lid dropping and pressing mechanism at a finishing station of the multi-station dual-revolving module according to the second embodiment, wherein the milk cap feeding mechanism is the one according to the second embodiment shown in Fig. 102;
Figs. 106 and 107 illustrate different states of the lid dropping and pressing mechanism described in Fig. 104, wherein Fig. 106 corresponds to a state in which the lid dropping operation is performed and Fig. 107 corresponds to a state in which the lid dropping operation is not performed;
Fig. 108 illustrates, in a perspective schematic view, a cabinet in an intelligent cabinet module according to an exemplary embodiment;
Fig. 109 illustrates a partially cut-away perspective view of a compartment in a cabinet according to an exemplary embodiment;
Fig. 110 illustrates in a perspective schematic view a compartment in a cabinet according to an exemplary embodiment;
Figs. 111 and 112 illustrate, in a perspective schematic view, a grasping assembly and a lid-pressing assembly of an intelligent cabinet module according to an exemplary embodiment;
Fig. 113 illustrates a grasping assembly and a lid-pressing assembly of an intelligent cabinet module in a side view according to an exemplary embodiment;
Fig. 114 illustrates, in a perspective schematic view, a transfer assembly of an intelligent cabinet module according to an exemplary embodiment;
Figs. 115, 116, and 117 illustrate, in a partial perspective schematic view, a transfer assembly of an intelligent cabinet module according to an exemplary embodiment;
Fig. 118 illustrates, in a perspective schematic view, a transfer rotating drive assembly of a transfer assembly of an intelligent cabinet module according to an exemplary embodiment;
Fig. 119 shows, in a perspective schematic view, a state of the transfer assembly of the intelligent cabinet module according to the exemplary embodiment when the finished-product cup is just grasped;
Fig. 120 shows, in a perspective schematic view, a state when the transfer jaws of the transfer assembly of the intelligent cabinet module according to the exemplary embodiment just grasp the finished-product cup;
Fig. 121 is a perspective schematic diagram showing a state when the transfer jaws of the transfer assembly of the intelligent cabinet module according to the exemplary embodiment grasping the finished-product cup and is retracted;
Fig. 122 shows, in a perspective schematic view, a state when the transfer horizontal drive assembly of the transfer assembly of the intelligent cabinet module according to the exemplary embodiment is rotated by 90° with respect to Fig. 121;
Fig. 123 shows, in a perspective schematic view, a state in which the first horizontal slider of the transfer horizontal drive assembly of the transfer assembly of the intelligent cabinet module according to the exemplary embodiment is extended outward with respect to Fig. 122;
Fig. 124 illustrates, in a perspective schematic view, a state in which the transfer assembly of the intelligent cabinet module places a finished-product cup into a certain compartment on a first side of the cabinet according to an exemplary embodiment;
Fig. 125 shows, in a perspective schematic view, a state when the transfer horizontal drive assembly of the transfer assembly of the intelligent cabinet module according to the exemplary embodiment is rotated by 180° with respect to Fig. 121;
Fig. 126 shows, in a perspective schematic view, a state in which the first horizontal slider of the transfer horizontal drive assembly of the transfer assembly of the intelligent cabinet module according to the exemplary embodiment is extended outwardly with respect to Fig. 125;
Fig. 127 illustrates, in a perspective schematic view, a state in which the transfer assembly of the intelligent cabinet module according to an exemplary embodiment places a finished-product cup into a certain compartment on the second side of the cabinet;
Fig. 128 illustrates a material bucket in a perspective schematic view according to an exemplary embodiment;
Figs. 129 and 130 illustrate the interior of a material bucket according to an exemplary embodiment in a perspective schematic view from different angles;
Fig. 131 shows in a perspective view the placement of a material bucket in a respective liquid chamber or milk cap chamber;
Figs. 132 and 133 illustrate the constituent components of the automated cleaning module in a schematic view.

### DETAILED DESCRIPTION OF THE PREFERRED EMBODIMENTS

Hereinafter, embodiments of an intelligent beverage robot and its various modules according to the present disclosure will be described in detail with reference to the accompanying drawings. To clarify the objectives, technical solutions, and advantages of this disclosure, the following description with reference to the drawings provides a clear and comprehensive explanation of the embodiments. It should be noted that the described embodiments represent only a portion of the disclosed embodiments, not all possible implementations.

Accordingly, the detailed description of these embodiments with reference to the drawings is not intended to limit the scope of the claimed disclosure, but merely illustrates selected implementations. Based on these embodiments, all other implementations obtainable by those skilled in the art without creative effort shall fall within the protection scope of this disclosure.

Unless otherwise defined by context, singular terms include their plural forms. Throughout this specification, terms such as "comprise", "include", and "have" are used to indicate the presence of stated features, quantities, steps, operations, elements, components, or combinations thereof, but do not preclude the existence or addition of one or more other features, quantities, steps, operations, elements, components, or combinations.

Furthermore, while ordinal terms like "first" and "second" may be used to describe various components, these terms serve only to distinguish between elements and do not limit the components. For instance, within the scope of this disclosure, a "first component" may alternatively be referred to as a "second component", and vice versa.

In describing the present invention, it should be understood that directional terms such as "upper", "lower", "left", "right", "inner", and "outer" refer to orientations or positional relationships shown in the drawings, conventional placement during product use, or standard technical understandings. These terms are used solely to facilitate description and do not imply that the referenced elements must maintain specific orientations or configurations, nor should they be construed as limiting the disclosure.

For purposes of this disclosure, two or more components being "coupled" indicates that their movements are integrally connected.

The present disclosure relates generally to an intelligent beverage robot for fully automated beverage making.

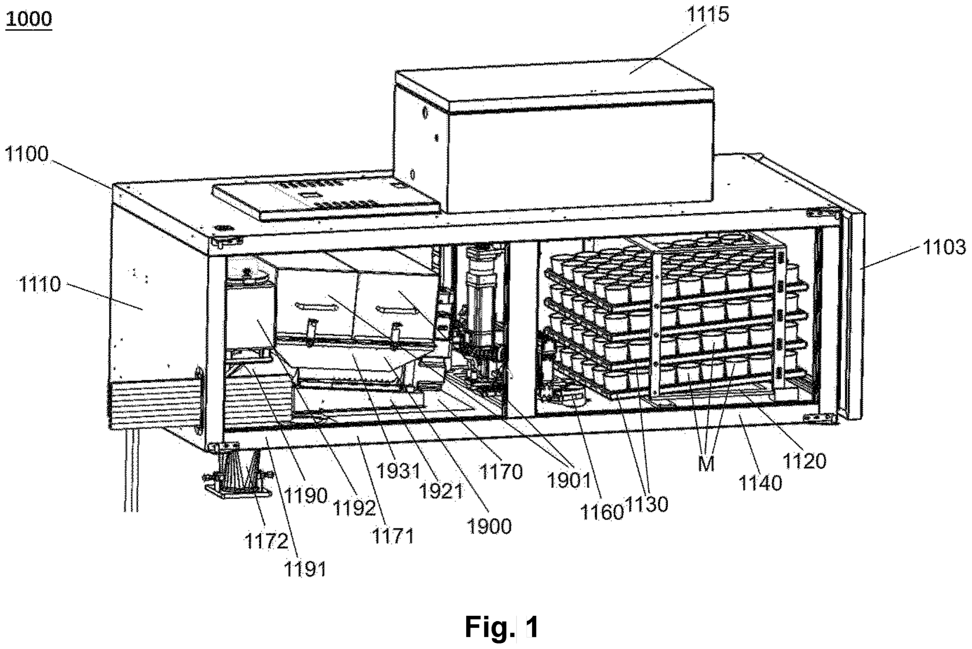

In some embodiments, the intelligent beverage robot may include a material storage and supply module 1000, as shown in Figs. 1-6 and 17, configured to store various materials for automated beverage making and supply corresponding materials to various actuators or components for automated beverage making, the actuators including various mechanisms provided at the multi-station dual-revolving module.

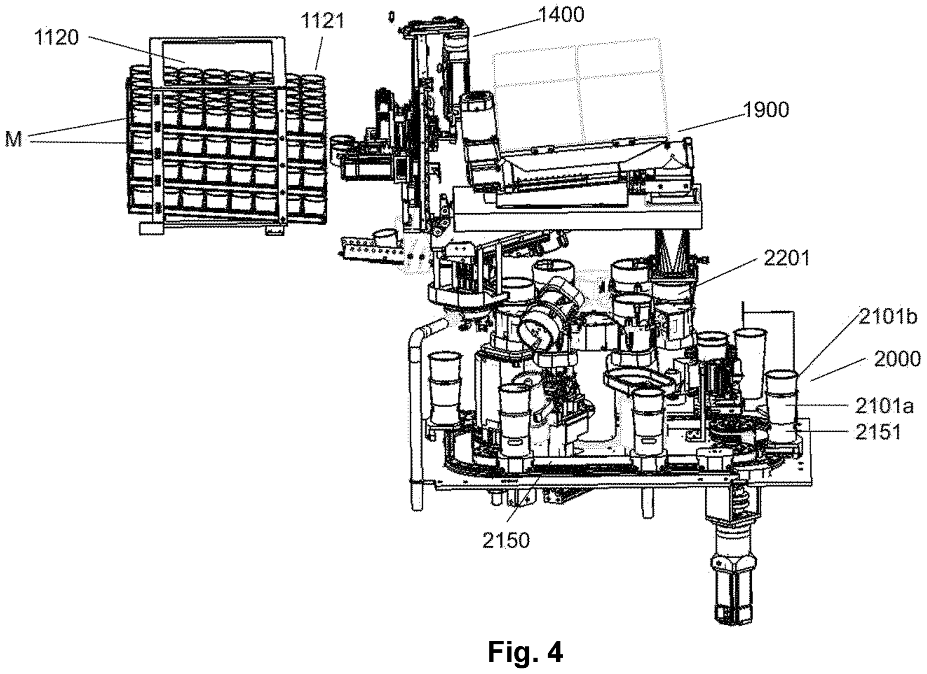

In some embodiments, the intelligent beverage robot may comprise a multi-station dual-revolving module 2000 and 3000, as shown in Figs. 4, 6, 39-43, 48, 52-54, and 72, which is configured to produce beverages at different stations, and in some embodiments, operations of different stations may be performed simultaneously as long as mutual interference does not occur.

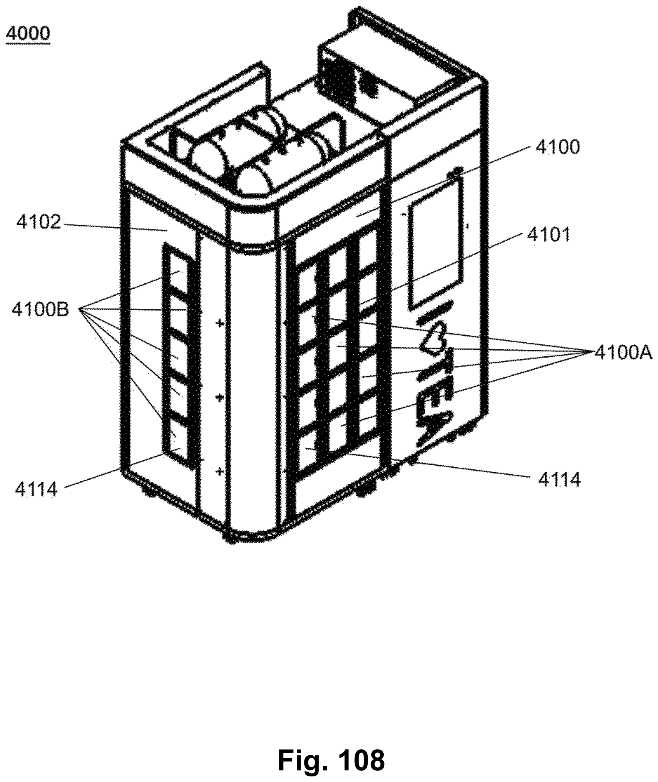

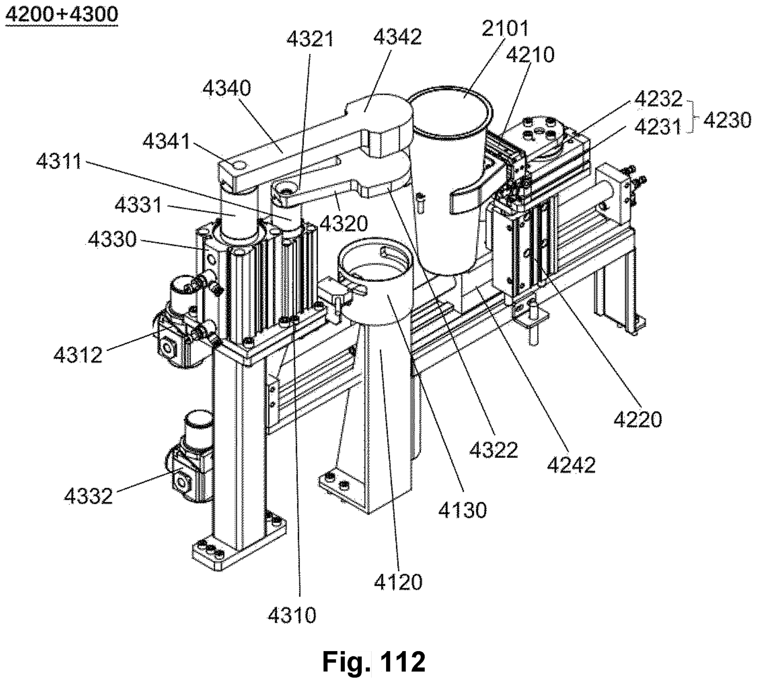

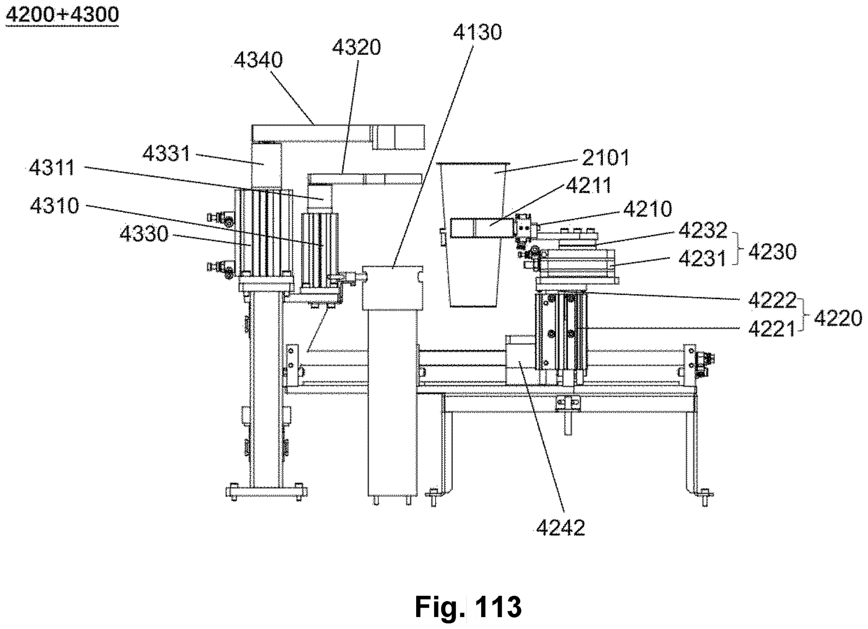

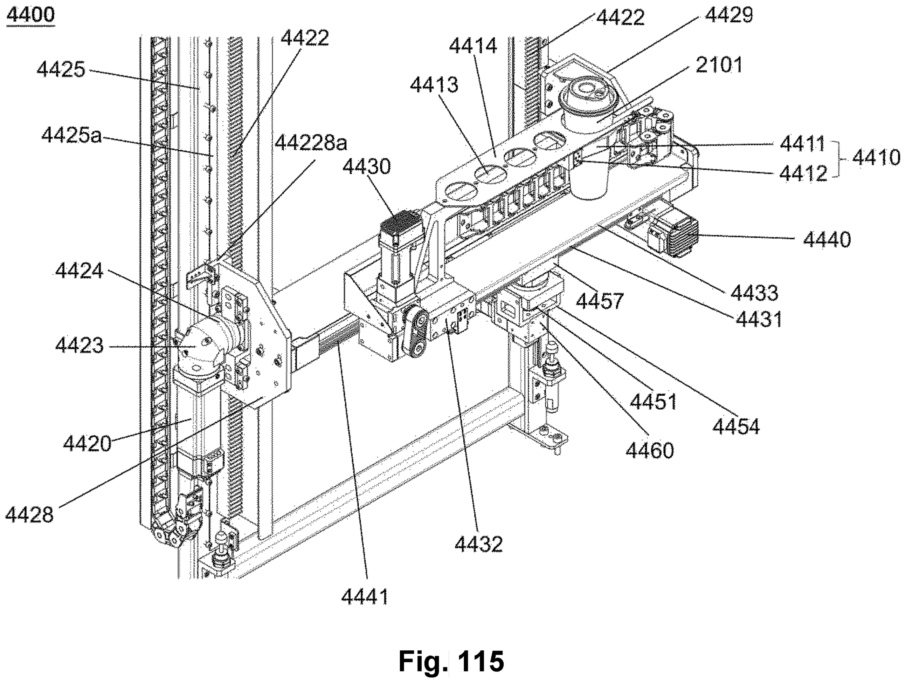

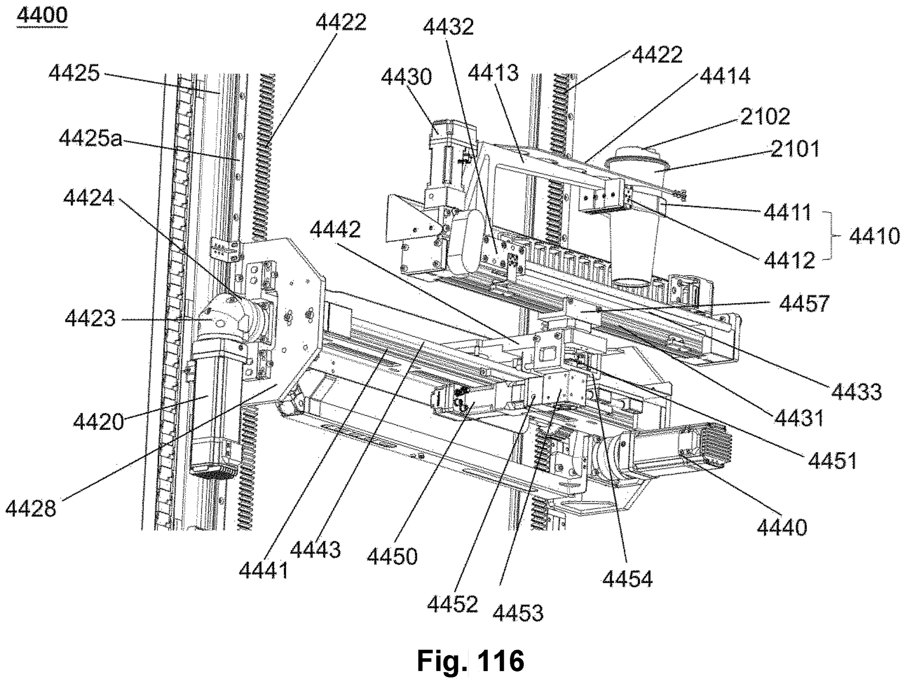

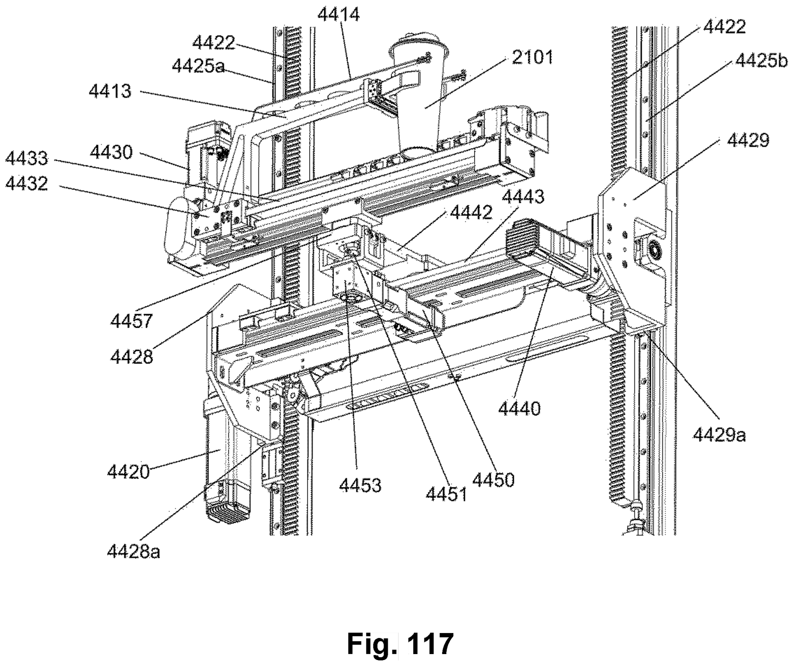

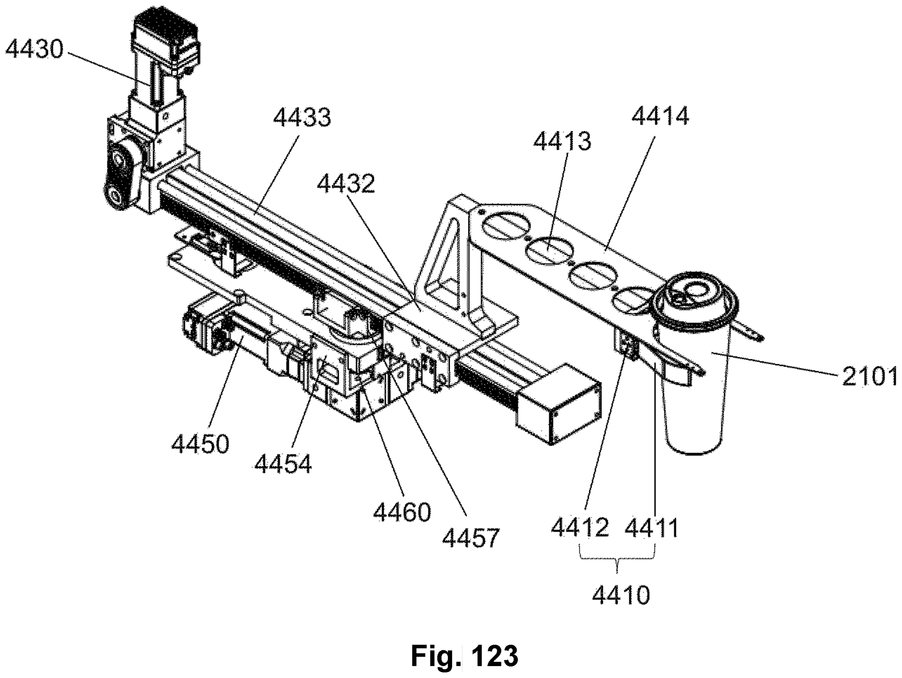

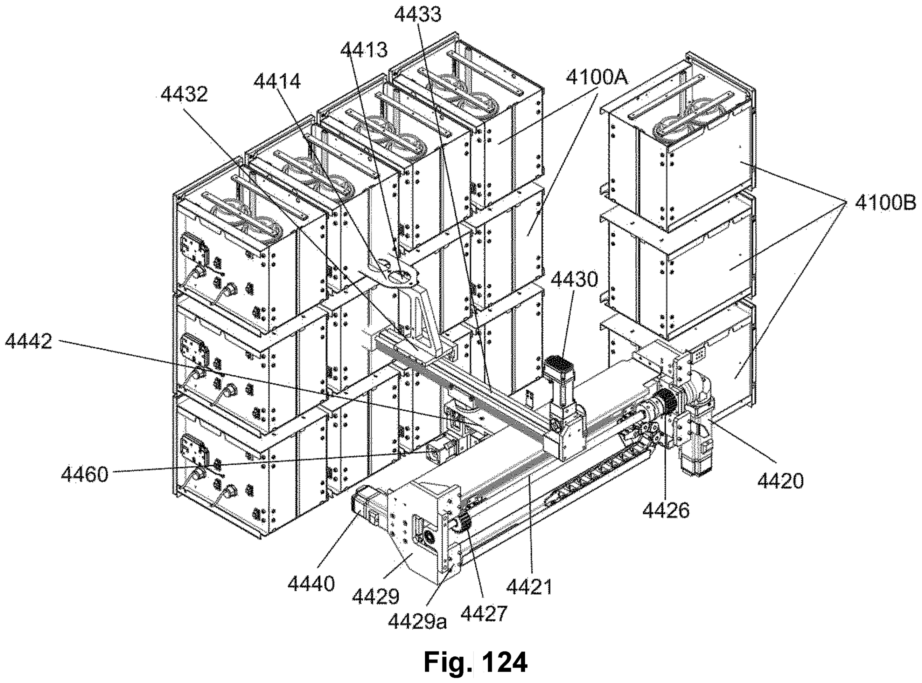

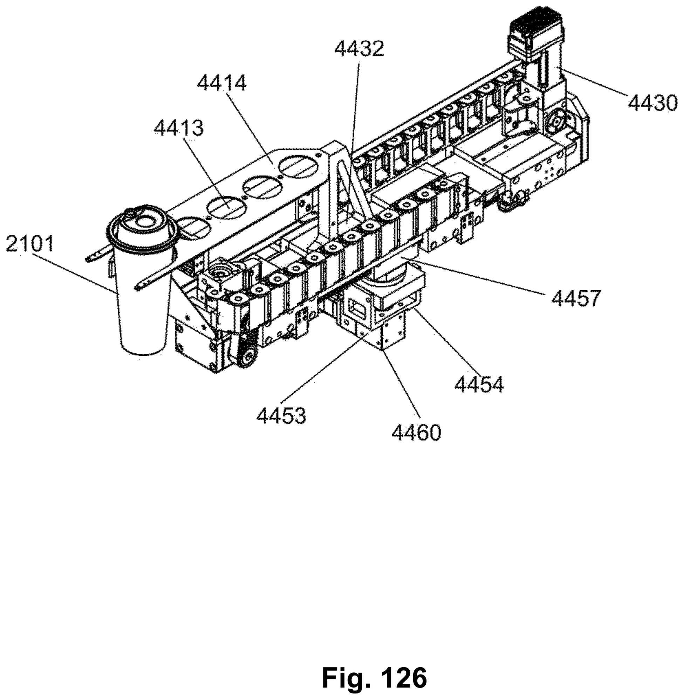

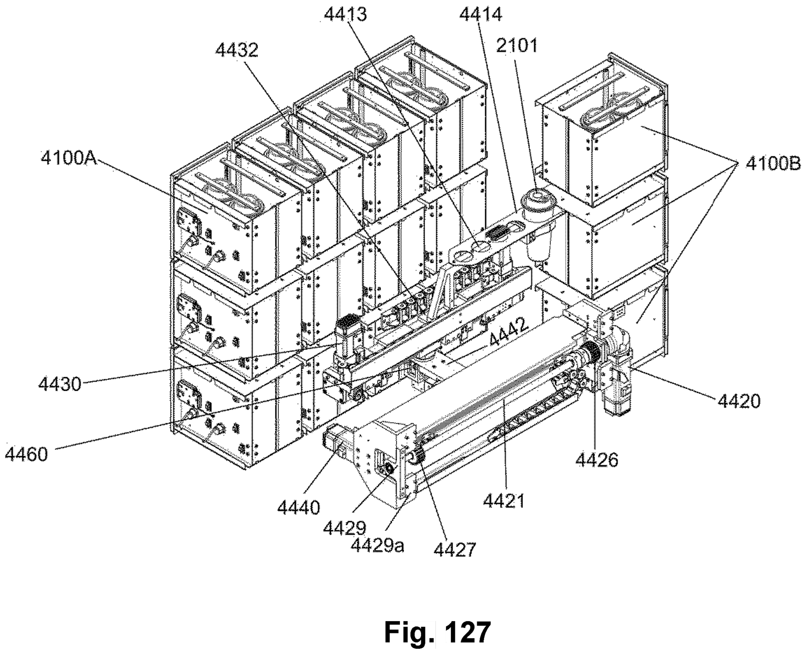

In some embodiments, as shown in Figs. 108-127, the intelligent beverage robot may include an intelligent cabinet module 4000 configured to automatically transfer the prepared beverage, that is, the finished-product cup 2101, from the multi-station dual-turn module 2000, 3000 to a respective compartment 4110A, 4110B of the cabinet 4100 of the intelligent cabinet module 4000.

In some embodiments, the intelligent beverage robot may include an automated cleaning module which is triggered to work with a button to fully automatically clean components involved in the entire intelligent beverage robot that need to be cleaned regularly, and shutdown by itself when completing the cleaning work.

In some embodiments, the intelligent beverage robot may further include a main control module including a programmable logic controller and configured to be capable of controlling actions and operations of various operating mechanisms, components, and members in the material storage and supply module 1000 and/or the multi-station dual-revolving modules 2000, 3000 and/or the intelligent cabinet module 4000 and/or the automated cleaning module.

### 1. Material Storage and Supply Module 1000

According to some embodiments, the material storage and supply module 1000 is configured to store various materials for automated beverage making and supply the respective materials to, for example, the multi-station dual-revolving module 2000, which will be described in detail below, for automated beverage making.

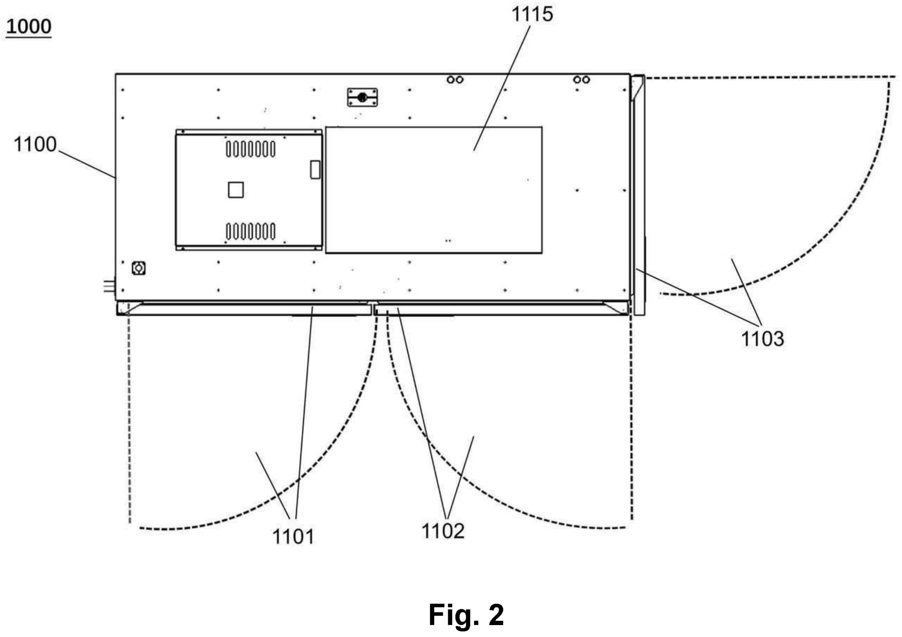

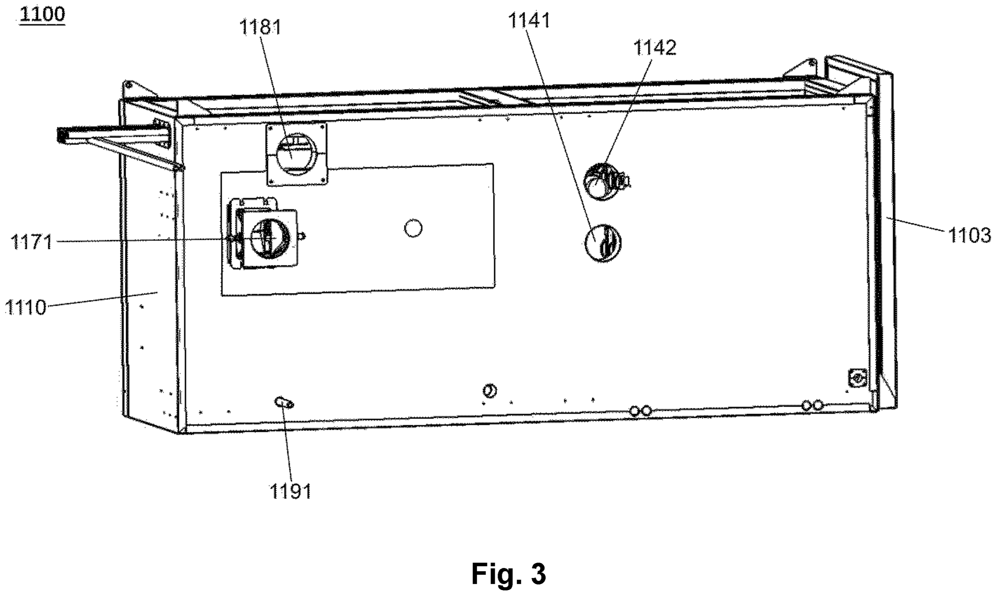

According to one embodiment, as shown in Figs. 1-3, the material storage and supply module 1000 includes a material storage device 1100, which may be configured to have functions such as refrigeration or heat preservation and/or freshness preservation. More specifically, the material storage device 1100 may include a housing 1110 defining an interior space that may include one or more chambers for storing one or more materials. More specifically, the one or more materials may include various liquid materials, various fresh materials, various semi-finished solid materials (the solid materials herein refer to semi-finished solid materials), ice cubes, milk covers, and the like. More specifically, the material storage device 1100 may include material buckets for storing liquid materials or a cream milk caps, i.e., the material buckets may further include liquid material buckets for storing various liquid materials and milk cap buckets for storing cream milk caps. The material storage device 1100 may also be provided with a refrigeration unit 1115 (shown in Figs. 1 and 2) located outside the housing 1110 for refrigeration or heat preservation of a respective material chamber of the material storage device 1100. According to some embodiments, the material storage device 1100 may be provided with one or more doors, such as shown in Figs. 2 and 3 as being provided on a first side with two doors that can close the first side, namely a first door 1101 and a second door 1102, and one door, namely a third door 1103, on a second side adjacent to the first side.

### 1.1 Storage and supply of material containers

As shown in Figs. 1, 4-8, the one or more chambers of the material storage device 1100 may comprise one or more material-container chambers 1120 for storing and supplying respective material containers M, which may then contain respective fresh or semi-finished solid materials. The fresh materials may include fresh fruits such as grape bits, diced strawberries, mango chunks, grapefruit slices, lemon slices, and other fresh fruit particles, purees, cubes, or slices. Fresh materials can be used to make cold or hot fruit tea beverages, smoothies, etc. Solid materials may include pearls, crunchy boba, taro balls, pudding (custard type), jelly cubes, etc., and the solid materials may be suitable for milk tea or fruit tea beverages. Obviously, the types of fresh and solid materials listed herein are merely illustrative, and any other reasonable fresh fruit materials and solid materials should be included within the scope of protection of the present invention.

As shown in Figs. 1, 4-8, each material container chamber 1120 is then provided with a supply portion 1121, a material container guide 1130 arranged in respective material container chamber 1120 and configured to support the material containers M and guide the same to the supply portion 1121, and a bottom wall 1140 on which at least one material container outlet 1141, 1142 (shown in Fig. 3) is provided.

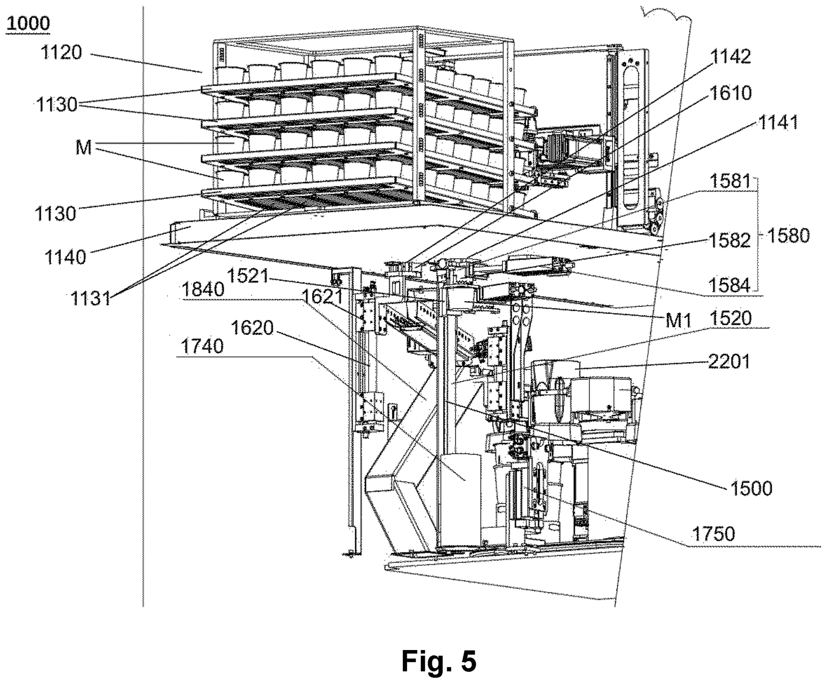

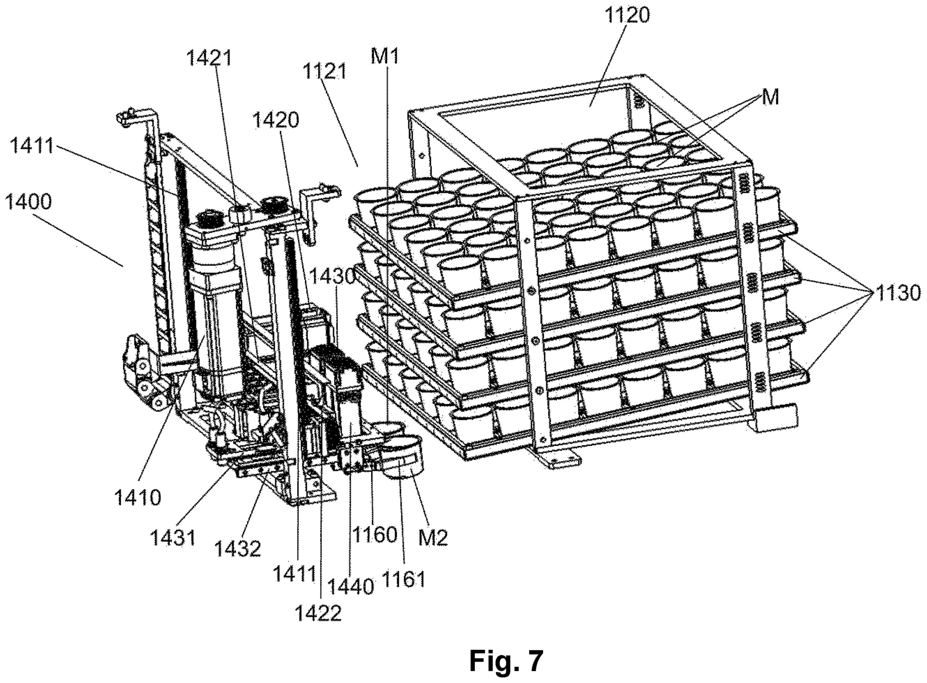

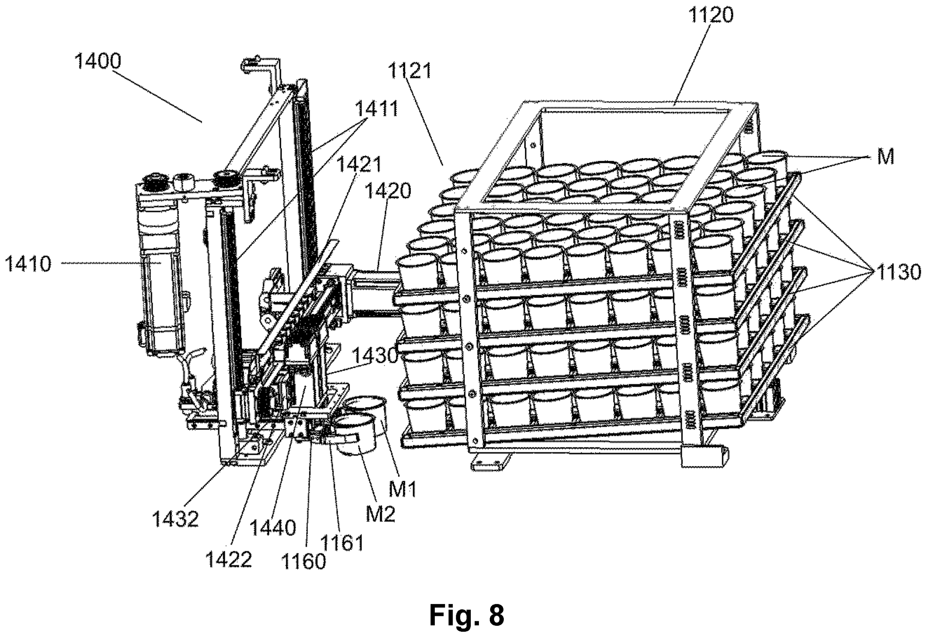

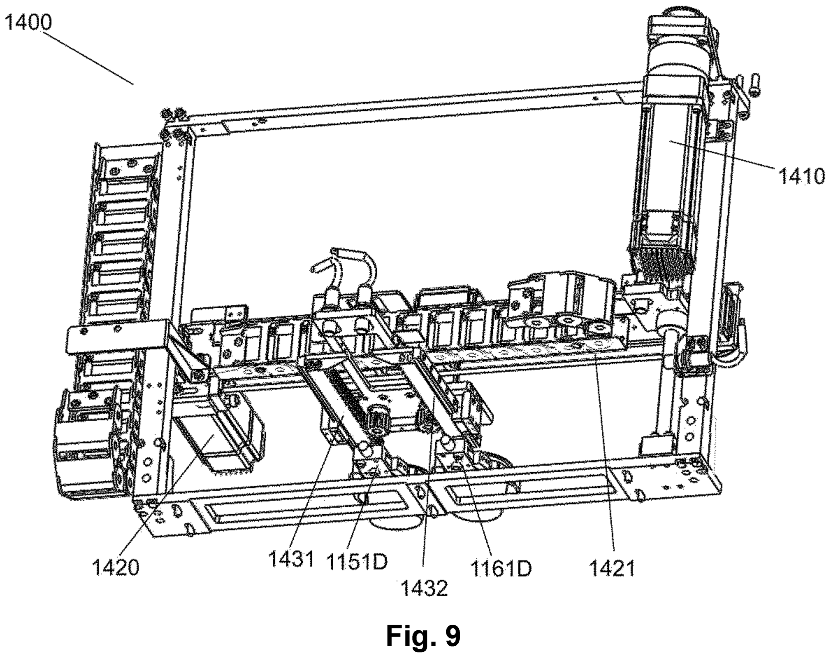

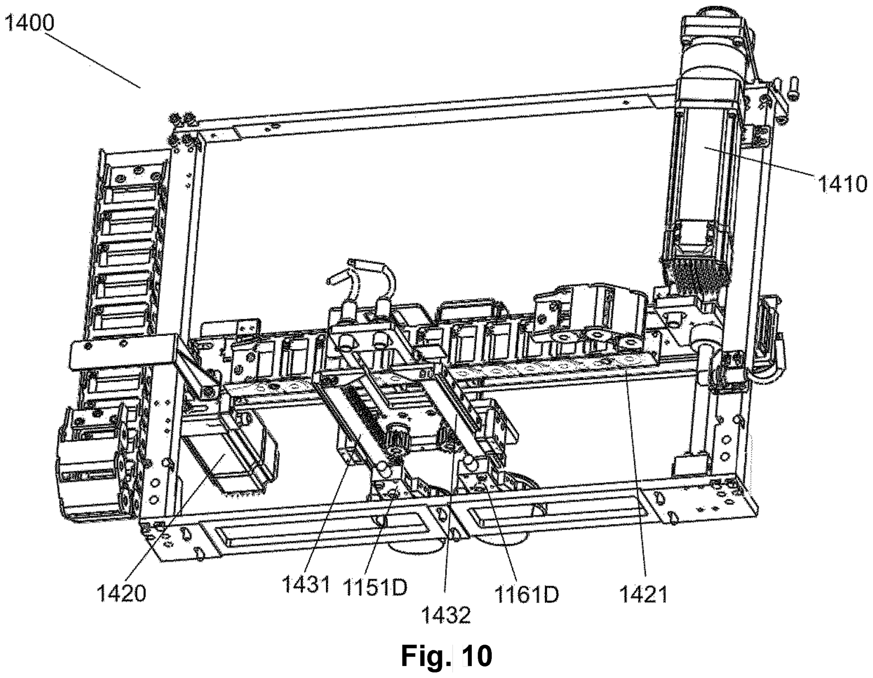

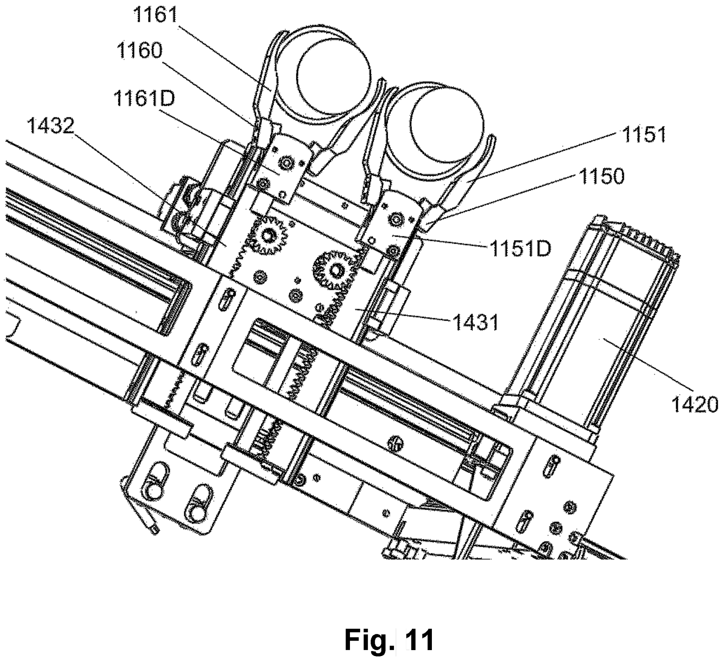

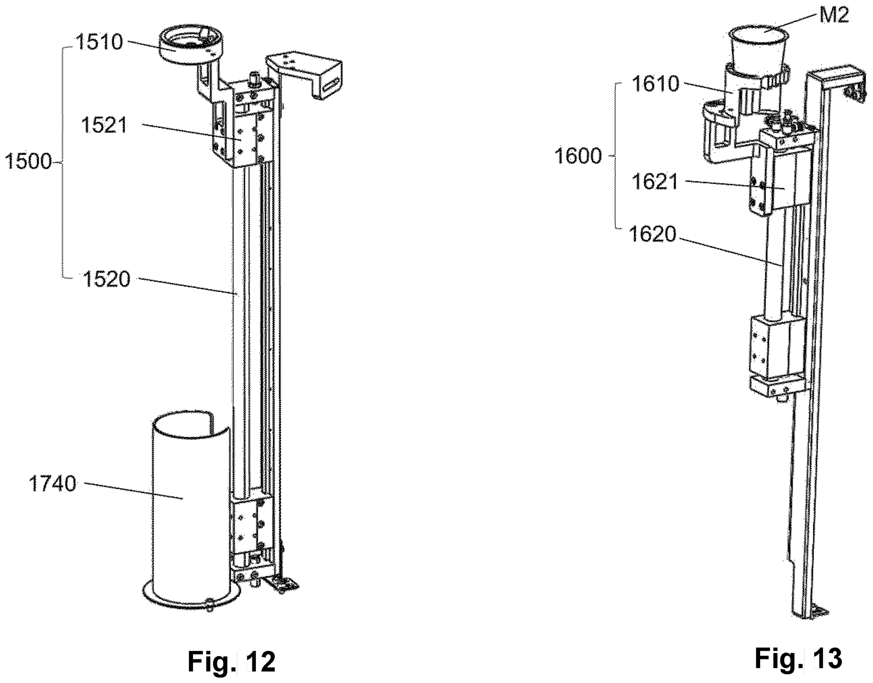

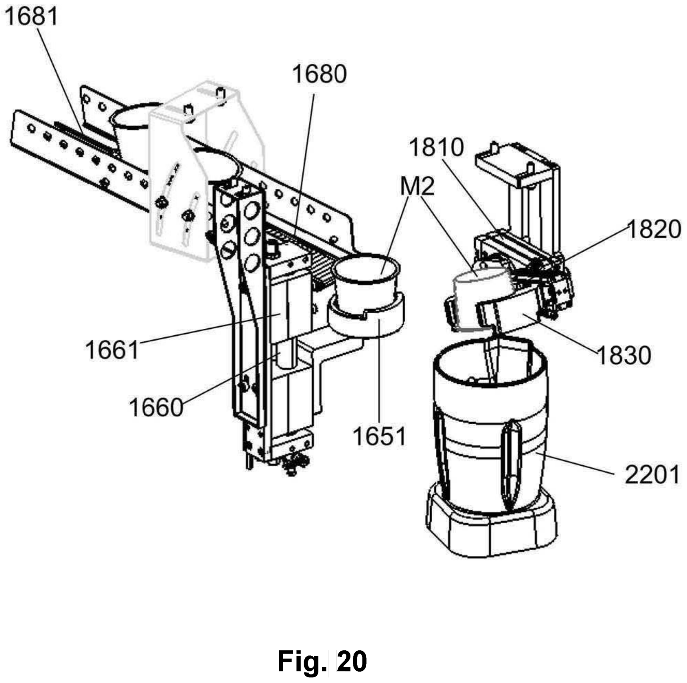

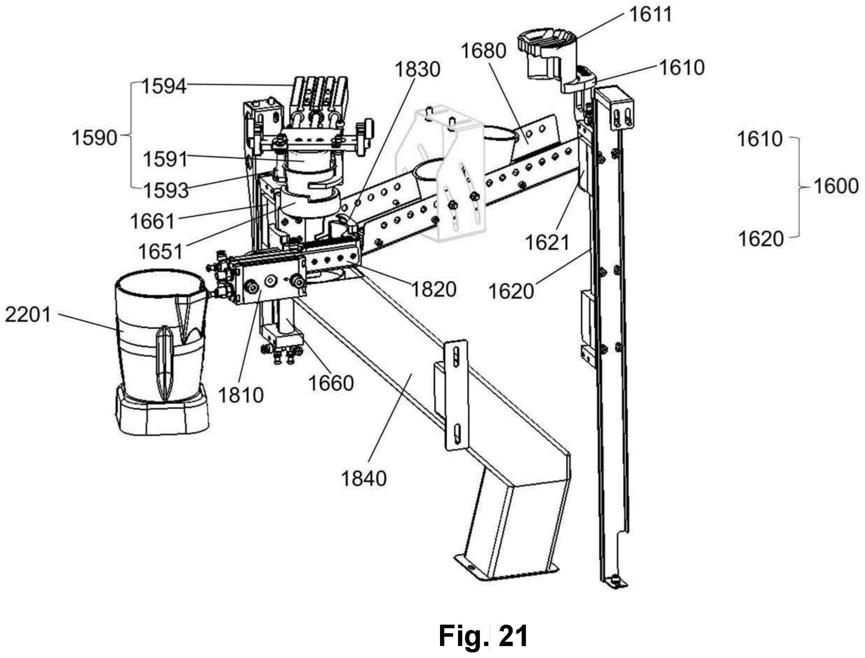

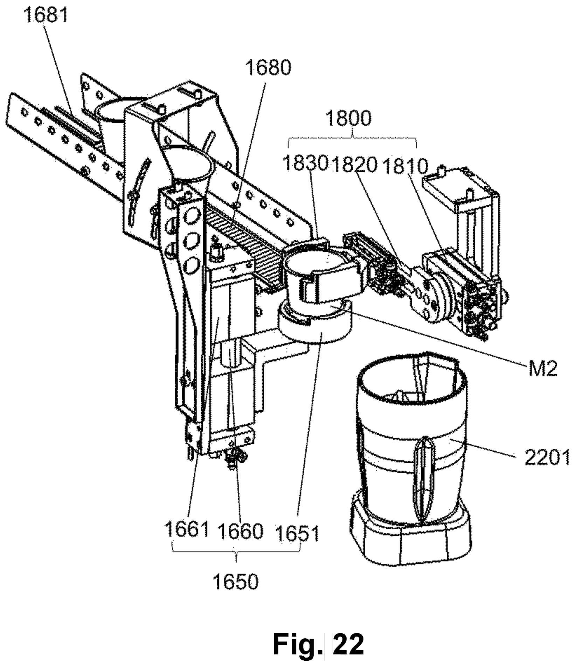

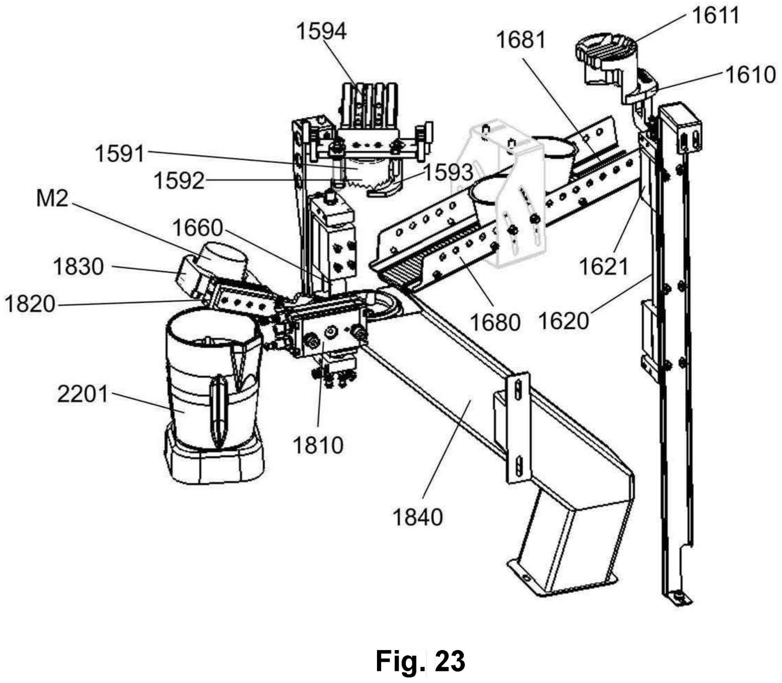

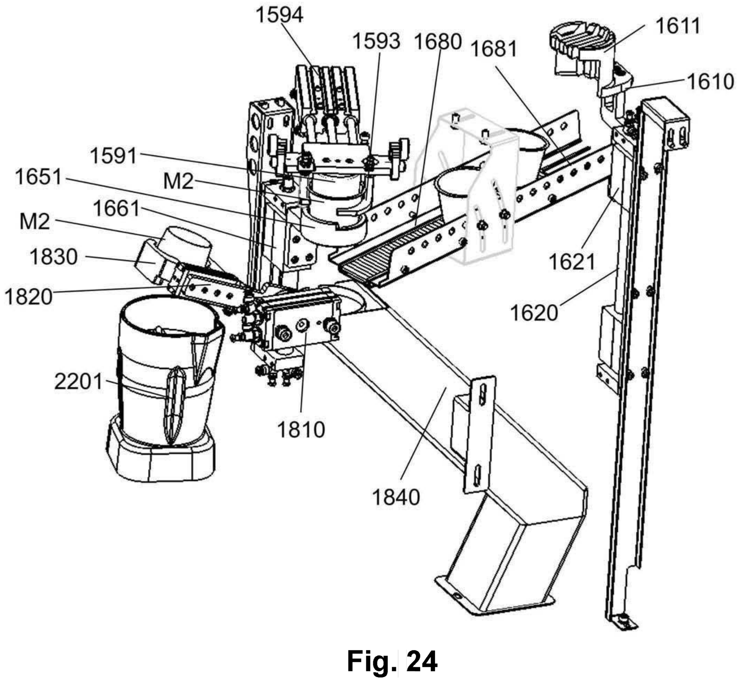

As shown in Figs. 7-11, the material storage and supply module 1000 further includes at least one manipulator 1150, 1160, a manipulator drive mechanism 1400, and at least one transfer device 1500, 1600 (as shown in Figs. 5-6 and 12-25). Each manipulator 1150, 1160 includes material container gripping jaws 1151, 1161 that can be tightened and opened to allow the grasping and placement of the respective material container M1, M2. More specifically, each manipulator 1150, 1160 is configured with its material container jaws 1151, 1161 capable of grasping a respective material container M1, M2 at the supply portion 1121 of the material container chamber 1120, more specifically a respective material container M1, M2 located on the material container guide 1130 at the supply portion 1121, and moving this material container M1, M2 to a respective material container outlet 1141, 1142 (shown in Fig. 3) of the material container chamber 1120. More specifically, the tightening and opening of each material container jaw 1151, 1161 is driven by a respective gripping jaw cylinder 1151D, 1161D (best shown in Fig. 11). The manipulator drive mechanism 1400 (best shown in Figs. 8-9) is then configured to drive the manipulators 1150, 1160 to move so as to move the respective material containers M1, M2 from the supply portion 1121 of the material container chamber 1120 to the respective material container outlet 1141, 1142. As shown in Figs. 12-16, each transfer device 1500, 1600 may comprise a tray 1510, 1610 configured to receive a material container M1, M2 placed by a respective manipulator 1150, 1160 at a respective material container outlet 1141, 1142 and a transfer drive mechanism 1520, 1620 configured to drive the movement of the respective transfer device 1500, 1600, and thus to drive the movement of the respective tray 1510, 1610 to transfer the material container M1, M2 to a desired position, thereby allowing for transfer of the material container to, for example, the finished-product cup 2101 and the blending cup 2201 at a respective station on the first and second revolving members 2150, 3150 and 2250, 3250. In a more specific embodiment, as shown in Figs. 12-16, the transfer drive mechanism 1520, 1620 is a transfer rodless cylinder comprising a slidable transfer slider 1521, 1621, each tray 1510, 1610 is coupled to, and more specifically fixed to, a respective transfer slider 1521, 1621. As a result, the trays 1510, 1610 can be driven by the transfer sliders 1521, 1621 to reach a respective material feeding mechanism 1700, 1800, which will be described below, from the respective material container outlet 1141, 1142. The finished-product cup is, for example, a paper cup or a plastic cup for holding the beverage; the blending cup is, for example, a smoothie cup commonly used in making a beverage.

In some embodiments, as shown in Figs. 1, 5-8, the material container guiding device 1130 includes a plurality of fluency-strip slide rails 1131 disposed in an inclined way, more specifically, each fluency-strip slide rail 1131 is inclined downward toward the supply portion 1121, and a plurality of material containers M are placed on each fluency-strip slide rail 1131, whereby the material containers M can automatically slide on the fluency-strip slide rail 1131 toward the supply portion 1121. More specifically, each time the manipulators 1150, 1160 grasp one of the material containers M on a respective fluency-strip slide rail 1131 at the supply portion 1121, the remaining material containers M on the fluency-strip slide rail 1131 slide along the fluency-strip slide rail 1131 toward the supply portion 1121 in preparation for later grabbing by the manipulators 1150, 1160 as needed. More specifically, each fluency-strip slide rail 1131 is provided to be adjustable in inclination. More specifically, the plurality of fluency-strip slide rails 1131 are arranged in layers and/or in different columns, thereby allowing the material containers 24 to be arranged in layers and/or columns. Preferably, the material containers M placed on the same fluency-strip slide rail 1131 are all the same kind of material containers, that is, the material contained in the material containers M is of the same kind; within the scope of the present application, " same kind " may be understood to mean that the raw material is the same. More specifically, different kinds of material containers 24 may be placed in different layers and/or different columns. In this case, when a particular material container 24 needs to be grasped, for example, the main control module controls the manipulator drive mechanism 1400 to drive the respective manipulators 1150, 1160 to move to positions corresponding to the respective layers and columns.

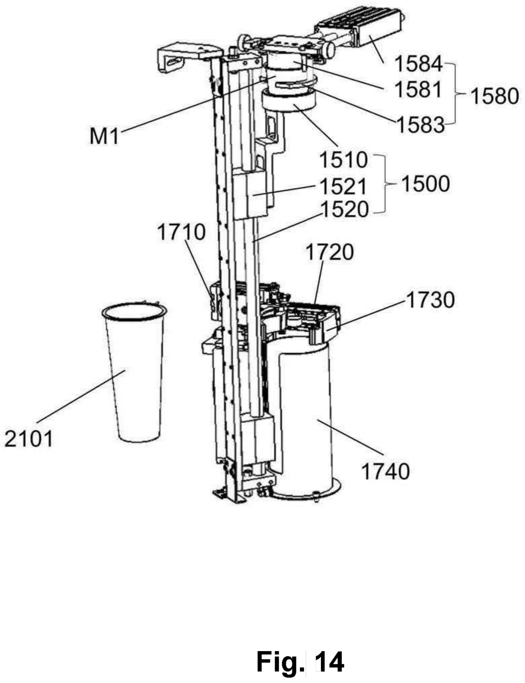

In some embodiments, as shown in Figs. 14-17 and 19-24, the material storage and supply module 1000 may further include at least one material feeding mechanism 1700, 1800 via which the material containers M1, M2 from the material container chamber 1120 are transferred to the respective material feeding mechanism 1700, 1800 via the at least one transfer device 1500, 1600. It should be noted that the at least one material feeding mechanism 1700, 1800 is configured to feed the materials from the material containers M1, M2 to the finished-product cup 2101 on the first revolving member 2150, 3150 and/or to the blending cup 2201 on the second revolving member 2250, 3250 of the multi-station dual-revolving module 2000, 3000, which will be described in detail below.

In a specific embodiment, the bottom wall 1140 of each material container chamber 1120 may be provided with two material container outlets, namely a first material container outlet 1141 and a second material container outlet 1142 (shown in Fig. 3). More specifically, the material container M1 for supplying the finished-product cup 2101 mentioned above may be taken out of the material container chamber 1120 via the first material container outlet 1141, and the material container M2 for supplying the blending cup 2201 mentioned above may be taken out of the material container chamber 1120 via the second material container outlet 1142. More specifically, as shown in Figs. 7-11, the material storage and supply module 1000 may further include two manipulators, namely, a first manipulator 1150, which may be provided with a first material container jaw 1151 and a first grasping jaw cylinder 1151D that drives the first material container jaw 1151, and a second manipulator 1160, which may be provided with a second material container jaw 1161 and a second grasping jaw cylinder 1161D that drives the second material container jaw 1161; for example, the first manipulator 1150 may move the first material container M1 from the supply portion 1121 of the material container chamber 1120 to the first material container outlet 1141, and the second manipulator 1160 may move the second material container M2 from the supply portion 1121 of the material container chamber 1120 to the second material container outlet 1142.

More specifically, as shown in Figs. 5-6 and 12-25, the material storage and supply module 1000 may include two transfer devices, namely, a first transfer device 1500 and a second transfer device 1600, the tray of the first transfer device 1500 being referred to as a first tray 1510, the transfer drive mechanism of the first transfer device 1500 being referred to as a first transfer drive mechanism 1520, while the tray of the second transfer device 1600 being referred to as a second tray 1610, and the transfer drive mechanism of the second transfer device 1600 being referred to as a second transfer drive mechanism 1620. More specifically, as shown in Figs. 14-17 and 19-24, the material storage and supply module 1000 may further include two material feeding mechanisms, namely, the first material feeding mechanism 1700 and the second material feeding mechanism 1800. More specifically, according to actual needs, the first tray 1510 of the first transfer device 1500 may receive, at the first material container outlet 1141, the first material container M1 placed by the first manipulator 1150, and then the first transfer drive mechanism 1520 drives the first transfer device 1500, more specifically the first tray 1510 carrying the first material container M1, to move from the first material container outlet 1141 to the first material feeding mechanism 1700; and/or the second tray 1610 of the second transfer device 1600 may receive, at the second material container outlet 1142, the second material container M2 placed by the second manipulator 1160, and then the second transfer drive mechanism 1620 drives the second transfer device 1600, more specifically the second tray 1610 carrying the second material container M2, to move from the second material container outlet 1142 to the second material feeding mechanism 1800. More specifically, as will be described in detail below in the multi-station dual-revolving modules 2000, 3000, the first material feeding mechanism 1700 may be configured to feed the respective material to the finished-product cup 2101 on the first revolving member 2150, 3150, and the second material feeding mechanism 1800 may be configured to feed the respective material to the blending cup 2201 on the second revolving member 2250, 3250.

In such an embodiment, it can be considered that the first manipulator 1150, the first transfer device 1500, and the first material feeding mechanism 1700 constitute a first supply line, more specifically, the first supply line is used to supply the first material container M1 to the finished-product cup 2101 on the first revolving member 2150, 3150 of the multi-station dual-revolving module 2000, 3000; the second manipulator 1160, the second transfer device 1600 and the second material feeding mechanism 1800 constitute a second supply line for supplying the second material container M2 to the blending cup 2201 on the second revolving member 2250, 3250 of the multi-station dual-revolving module 2000, 3000. It should be noted that the first supply line and the second supply line may also include other mechanisms as may be described hereinafter, such as corresponding film opening mechanisms, intermediate transfer devices, inclined slide rails and the like. Depending on the category of beverage to be made, one or both of the first supply line and the second supply line may be activated, for example, to feed the desired material(s) only into the finished-product cup 2101 or only into the blending cup 2201 or into the finished-product cup and the blending cup 2201 at the same time. In a more specific embodiment, when the first supply line and the second supply line are simultaneously activated, the first material container M1 grasped by the first manipulator 1150 and the second material container M2 grasped by the second manipulator 1160 may be the same kind of material container, that is, material containers containing the same kind of material. More specifically, the first material container M1 is used for supplying the finished-product cup 2101; the second material container M2 is used to supply the blending cup 2201 for, for example, further blending and refining operations - such as processing materials into fine particles - to meet texture requirements.

In some embodiments, as shown in Figs. 7-11, the manipulator s 1150, 1160 are of type of XYZ coordinate axis. In a specific embodiment, the manipulator drive mechanism 1400 may include: a Z-axis servomotor 1410 that drives the at least one manipulator 1150, 1160 to move in the Z-axis to reach the material container layers of different material container chambers 1120, more specifically, the Z-axis servomotor 1410 may drive the at least one manipulator 1150, 1160 via a ball screw; an X-axis servomotor 1420 that drives the at least one manipulator 1150, 1160 to move in the X-axis to reach different material container columns, more specifically, the X-axis servomotor 1420 drives the at least one manipulator 1150, 1160 via a synchronous belt; and Y-axis motors 1430, 1440 that drives a respective one of the at least one manipulator 1150, 1160 to move in the Y-axis to grasp the material container, more specifically, each of the Y-axis motors 1430, 1440 drives a respective manipulator 1150, 1160 via a rack and pinion. More specifically, the Y-axis motors 1430, 1440 are capable of driving a respective one of the at least one manipulator 1150, 1160 to move towards the material container M at the supply portion 1121 of the material container chamber 1120 after it reaches a position corresponding to the desired material container layer and the desired material container column of the material container chamber 1120 to enable the respective material container jaws 1151, 1161 to grasp the material container.

In a more specific embodiment, as shown in Figs. 7-11, in the case where the material storage and supply module 1000 includes a first manipulator 1150 and a second manipulator 1160, the Z-axis servomotor 1410 and the X-axis servomotor 1420 may be provided to simultaneously drive the first manipulator 1150 and the second manipulator 1160 in synchronous motion along the Z-axis and the X-axis, respectively, while a first Y-axis motor 1430 and a second Y-axis motor 1440 that drive the first manipulator 1150 and the second manipulator 1160, respectively, are provided to respectively drive one or both of the first manipulator 1150 and the second manipulator 1160 in the Y-axis. More specifically, with only the first supply line activated, only the first Y-axis motor 1430 needs to be operated to drive the first manipulator 1150 to take action along the Y-axis; In the event that only the second supply line is activated, only the second Y-axis motor 1440 needs to be operated to drive the second robot 1160 to take action along the Y-axis; when the first supply line and the second supply line are simultaneously activated, the first Y-axis motor 1430 and the second Y-axis motor 1440 are simultaneously operated to simultaneously drive the first manipulator 1150 and the second manipulator 1160 to take actions along the Y-axis.

In a more specific embodiment, as shown in Figs. 7-11, the manipulator drive mechanism 1400 may further include: a Z-axis guide rail 1411 provided along the Z-axis for guiding the movement of at least one manipulator 1150, 1160 in the Z-axis; more specifically, two Z-axis guide rails 1411 parallel to each other are provided along the Z-axis; an X-axis guide rail 1421 arranged along the X-axis for guiding the movement of the at least one manipulator 1150, 1160 in the X-axis; more specifically, the X-axis guide rail 1421 is arranged to move in synchronization with the at least one manipulator 1150, 1160 in the Z-axis; Y-axis guide rails 1431, 1432 are provided along the Y-axis for guiding the movement of the respective manipulators 1150, 1160 in the Y-axis, i.e. a respective Y-axis guide rail 1431, 1432 is provided for one of the manipulators 1150, 1160. More specifically, in a case where the material storage and supply module 1000 includes a first manipulator 1150 and a second manipulator 1160, the manipulator drive mechanism 1400 includes a first Y-axis guide rail 1431 for guiding the first manipulator 1150 to move in the Y-axis and a second Y-axis guide rail 1432 for guiding the second manipulator 1160 to move in the Y-axis.

In a specific embodiment, the robot drive mechanism 1400 may include a first Z-axis slider and a second Z-axis slider, each being arranged to slide along one of the Z-axis guide rails 1411; a X guide rail 1421 provided to be coupled at one end to the first Z-axis slider and at the other end to the second Z-axis slider. Further, as shown in Figs. 7-10, the manipulator drive mechanism 1400 may further include an X-axis slider 1422 disposed to slide along the X-axis guide rail 1421, and the Y-axis guide rails 1431, 1432 are each coupled to the X-axis slider 1422. Furthermore, each manipulator 1150, 1160 is configured to be supported by and slidable along a respective Y-axis guide rail 1431, 1432, the respective material container jaw 1151, 1161 being coupled, for example, at one end of the respective manipulator 1150, 1160. Thus, when the Z-axis servomotor is operated, the first Z-axis slider and the second Z-axis slider can move along the Z-axis, so that the X-axis guide rail 1421 and even the X-axis servomotor 1420 can be driven along the Z-axis by the first Z-axis slider and the second Z-axis slider, meanwhile the Y-axis guide rails 1431, 1432 coupled to the X-axis slider 1422 can move along the Z-axis, and thus the manipulators 1150, 1160 supported by the Y-axis guide rails 1431, 1432 can move along the Y-axis; when the X-axis servomotor 1420 is operated, the X-axis slider 1422 can move along the X-axis guide rail 1421, and thus, the Y-axis guide rails 1431, 1432 coupled with the X-axis slider 1422 can move along the X-axis, and thus the manipulators 1150, 1160 supported by the Y-axis guide rails 1431, 1432 can move along the X-axis; when the respective Y-axis motor 1430, 1440 is operated, the respective manipulator 1150, 1160 is capable of moving along the Y-axis guide rails 1431, 1432. As a result, the positioning of the manipulators 1150, 1160 and thus the material container jaws 1151, 1161 on the Z-axis, X-axis and Y-axis is achieved.

In some embodiments, the material container 24 includes a material container body and a sealing film disposed to seal a material container opening of the material container body. As shown in Figs. 14-16, 19, 21, 23-25, the material storage and supply module 1000 may then further include at least one film opening mechanism 1580, 1590 configured to open the sealing film before the material containers M1, M2 are transferred to the respective material feeding mechanism 1700, 1800 to allow the materials in the material containers M1, M2 to be poured out.

More specifically, as shown in Figs. 14-16, 19, 21, 23-25, the material storage and supply module 1000 may include two film opening mechanisms, namely, a first film opening mechanism 1580 and a second film opening mechanism 1590, for example, the first film opening mechanism 1580 may be provided for opening the sealing film of the first material container M1, and the second film opening mechanism 1590 may be provided for opening the sealing film of the second material container M2.

In some embodiments, as shown in Figs. 14-16, 19, 21, 23-25, each film opening mechanism 1580, 1590 may include a film opening cutter 1581, 1591 configured to at least partially cut open the sealing film. More specifically, the film opening cutters 1581, 1591 are configured to have cutting portions 1582, 1592 capable of cutting into the sealing films of the respective material containers M1, M2, the cutting portions 1582, 1592 being arranged to cut open a portion of the sealing films, thereby ensuring that the sealing films are opened so that the materials in the material containers M1, M2 can be taken out or poured out, while the sealing films which have been cut open remain secured to the material containers M1, M2, preventing uncontrolled detachment, falling, or scattering of the sealing films. More specifically, the cut portion 1582, 1592 of the film cutter 1581, 1591 is configured as a cylindrical piece with a toothed edge in which a notch is provided, which causes the sealing film to be cut open in a portion aligned with a portion of the toothed edge that does not include the notch, thereby allowing the sealing film not to be detached from the material containers M1, M2.

More specifically, as shown in Figs. 14-16, 19, 21, 23-25, each film opening mechanism 1580, 1590 may further comprise an elastic member called a first elastic member 1583, 1593 disposed around the cutting portion 1582, 1592 and configured to abut against a periphery of the material container opening of the corresponding material container M1, M2 when the latter reaches the cutting portion 1582, 1592, so as to enable the first elastic member 1583, 1593 to compress and store elastic potential energy, and then to be able to extend to release the elastic potential energy to push the material container M1, M2 away from the cutting portion 1582, 1592.

In a more specific embodiment, as shown in Figs. 14-16, 19, 21, 23-25, each of the film opening mechanisms 1580, 1590 may further include a film opening drive mechanism capable of driving the film opening cutters 1581, 1591 to move between a stowed position and a working position, the film opening cutters 1581, 1591 being configured to open the sealing films of the respective material containers M1, M2 in the working position. More specifically, the film cutters 1581, 1591 do not block the movement of other mechanisms when in the stowed position. In a specific embodiment, the film opening drive mechanism is a film opening cylinder 1584, 1594 that includes a film opening cylinder movable member, to which the film opening cutters 1581, 1591 are coupled to be driven to move between the stowed position and the working position. Fig. 14 shows the film opening mechanism 1580 in the working position, and Figs. 15 and 16 both show the film opening mechanism 1580 in the stowed position.

In some embodiments, the respective material containers M1, M2 are transferred by the respective transfer drive mechanisms 1520, 1620 to the respective film opening mechanisms 1580, 1590, more specifically to the film opening cutters 1581, 1591 of the film opening mechanisms 1580, 1590 for operations of cutting open the sealing film. More specifically, the first material container M1 is transferred to the film opening cutter 1581 of the film opening mechanism 1580, more specifically, to the film opening cutter 1581 of the first film opening mechanism 1580, via the first transfer drive mechanism 1520 of the first transfer device 1500. In this embodiment, the first material container M1 may be grasped via the first material container jaw 1151 of the first manipulator 1150 and placed in the first tray 1510 of the first transfer device 1500 located at the first material container outlet 1141, the first tray 1510 being driven by the first transfer drive mechanism 1520 to move from the first material container outlet 1141 of the material container chamber 1120 in a first vertical direction (e.g. vertically downward) to a feeding height position corresponding to the operating position of the first material container feeding mechanism 1700; the first film opening drive mechanism, more specifically the first film opening cylinder 1584, then drives the film opening cutter 1581 to extend from the stowed position to the working position; simultaneously or subsequently, the first transfer drive mechanism 1520 drives the first tray 1510 carrying the first material container M1 to move from the feeding height position in a second vertical direction opposite to the first vertical direction (for example, vertically upward) to a film cutting height position at which the film cutting cutter 1511 can cut the sealing film of the first material container M1; after the film cutting operation, the first film cutting drive mechanism 1584 drives the film cutting cutter 1581 to move back from the working position to the stowed position, and at the same time, the first transfer drive mechanism 1520 drives the first tray 1510 carrying the first material container M1 with the sealing film opened to move back from the film cutting height position to the feeding height position in the first vertical direction, so that the first material container M1 can be handled by the first material feeding mechanism 1700 to feed the material in the first material container M1 into the finished-product cup 2101, for example, located at the first revolving member 2150 of the multi-station dual-revolving module 2000. Of course, in a similar manner, the second material container M2 may also be transferred to the film opening cutter 1591 of the second film opening mechanism 1590 via the second transfer drive mechanism 1620 of the second transfer device 1600, and the description thereof will not be repeated here.

However, in some embodiments, the material storage and supply module 1000 may further include a first intermediate transfer device (not shown) disposed between the first c transfer device 1500 and the first film opening mechanism 1580. The first intermediate transfer device may include a first intermediate tray and a first intermediate drive mechanism configured to drive the first intermediate transfer device in motion. The first material container M1 can be transferred from the first transfer device 1500 to the first intermediate tray of the first intermediate transfer device, which can then transfer the first material container M1 to the first film opening mechanism 1580 and the first material feeding mechanism 1700. In such an embodiment, the first material container M1 may be grasped via a material container jaw 1151 of the first manipulator 1150 and placed in a first tray 1510 of the first transfer device 1500, the first tray 1510 being driven by the first transfer drive mechanism 1520 to reach the first intermediate tray of the first intermediate transfer device from the first material container outlet 1141 of the material container chamber 1120. Thereafter, if the film cutting operation is required, the first film opening driving mechanism 1584 of the first film opening mechanism 1580 can drive the film opening cutter 1581 to extend from the stowed position to the working position. Simultaneously or subsequently, the first intermediate drive mechanism may drive the first intermediate tray carrying the first material container M1 to move to the film cutting height position in the second vertical direction to perform the film cutting operation. After the film cutting operation is completed, the first film opening drive mechanism 1584 of the first film opening mechanism 1580 can drive the film opening cutter 1581 to return from the working position to the stowed position, while the first intermediate drive mechanism drives the first intermediate tray carrying the first material container M1 with the sealing film cut open to return from the film cutting height position to the feeding height position in the first vertical direction. In a specific embodiment, the first intermediate drive mechanism is a first intermediate rodless cylinder, which may include a slidable first intermediate transfer slider to which the first intermediate tray is coupled, and more specifically fixed, whereby the first intermediate tray can be driven by the first intermediate transfer slider to the first film opening mechanism 1580 and the first material feeding mechanism 1700.

In a specific embodiment, the material storage and supply module 1000 may further comprise a first inclined slideway (not shown) via which the first material container M1 can be transferred from the first tray 1510 of the first transfer device 1500 to the first intermediate tray of the first intermediate transfer device. More specifically, the first inclined slideway is configured to include a first receiving end with a comb-teeth structure, and the first tray 1510 is configured to include a comb-teeth structure complementary to the shape of the first receiving end, so that the first tray 1510 can be brought and inserted into the first receiving end by the first transfer device, more specifically, the comb teeth of the first receiving end of the first inclined slideway is inserted into the gap between the comb teeth of the first tray 1510 or vice versa, so that the first material container M1 can be transferred from the first tray 1510 to the first receiving end and then slid into the first intermediate tray via the first slideway. More specifically, in such an embodiment, the first transfer drive mechanism 1520 of the first transfer device 1500 can drive the first tray 1510 to vertically move downward from the first material container outlet 1141 to the first receiving end of the first inclined slideway, and continue to move downward so that the comb teeth of the first tray 1510 are inserted into the gap between the comb teeth of the first receiving end until the bottom of the first material container M1 falls down on the first receiving end, so that the first material container M1 is transferred from the first tray 1510 to the first inclined slideway, and then the first material container M1 can be slid along the first inclined slideway to the first intermediate tray. More specifically, the first inclined slideway comprises fluency strips, which facilitate the sliding of the first material container M1 along the first inclined slideway.

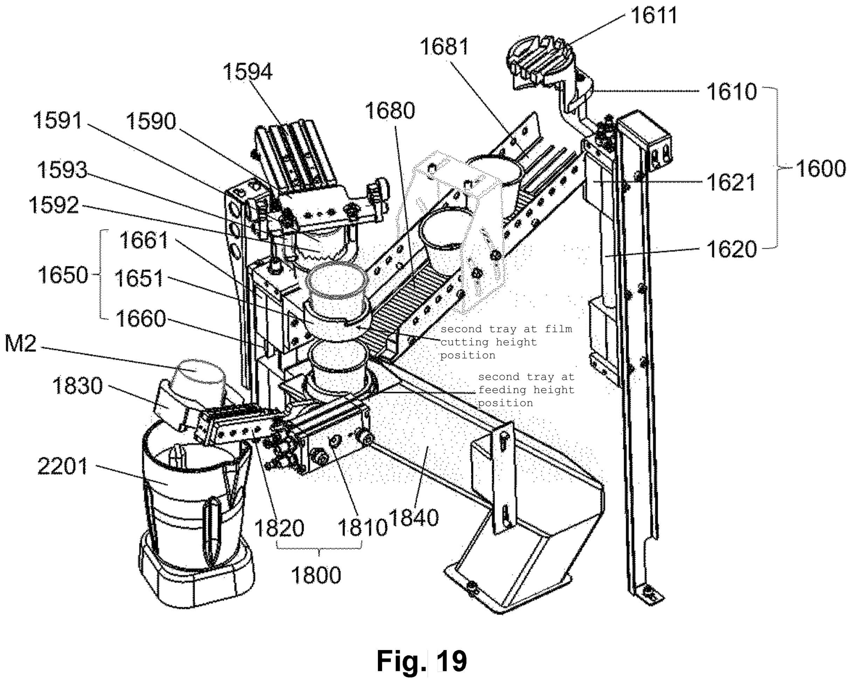

Similarly, in some embodiments, as shown in Figs. 19, 22, and 25, the material storage and supply module 1000 may further include a second intermediate transfer device 1650 disposed between the second transfer device 1600 and the second film opening mechanism, the second intermediate transfer device 1650 including a second intermediate tray 1651 and a second intermediate drive mechanism 1660 configured to drive the movement of the second intermediate transfer device 1650; the second material container M2 can be transferred from the second transfer device 1600 to the second intermediate tray 1651 of the second intermediate transfer device 1650, and the second intermediate transfer device 1650 can then transfer the second material container M2 to the second film opening mechanism 1590 and the second material feeding mechanism 1800. In such an embodiment, the second material container jaw 1161 of the second manipulator 1160 may grasp the second material container M2 from the supply portion 1121 of the material container chamber 1120 and place it in the second tray 1610 of the second transfer device 1600 positioned at the second material container outlet 1142 of the material container chamber 1120, the second tray 1610 being driven by the second transfer drive mechanism 1620 to reach the second intermediate tray 1651 of the second intermediate transfer device 1650 from the second material container outlet 1142 of the material container chamber 1120. Thereafter, if the film cutting operation is required, the second film opening driving mechanism 1594 of the second film opening mechanism 1590 can drive the film opening cutter 1591 to extend from the stowed position to the working position. At the same time or after that, the second intermediate drive mechanism 1660 may drive the second intermediate tray 1651 carrying the second material container M2 to move to the film cutting height position in the second vertical direction to perform the film cutting operation. After the film cutting operation is completed, the second film opening drive mechanism 1594 of the second film opening mechanism 1590 can drive the film opening cutter 1591 to return from the working position to the stowed position, while the second intermediate drive mechanism 1660 drives the second intermediate tray 1651 carrying the second material container M2 with the sealing film cut open to return from the film cutting height position to the feeding height position in the first vertical direction. In a specific embodiment, the second intermediate drive mechanism 1660 is a second intermediate rodless cylinder that may include a slidable second intermediate transfer slider 1661 to which the second intermediate tray 1651 is coupled, whereby the second intermediate tray 1651 can be driven by the second intermediate transfer slider 1661 to the second film opening mechanism 1590 and the second material feeding mechanism 1800.

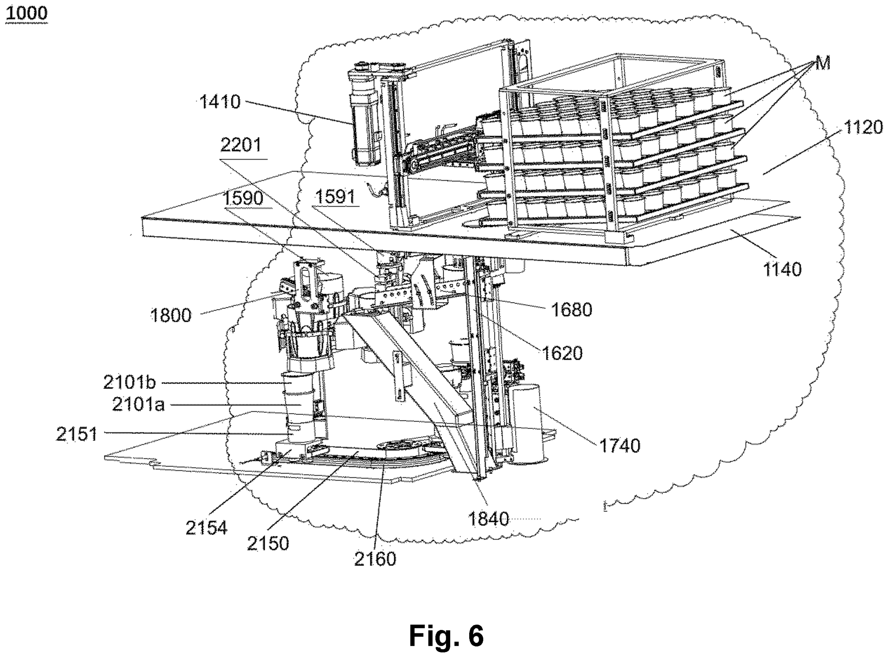

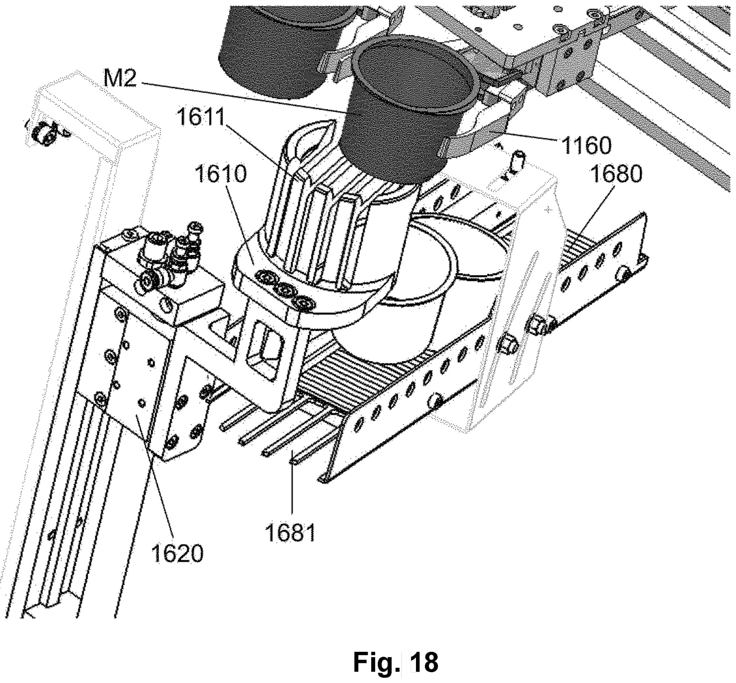

In a specific embodiment, as shown in Figs. 6, 17-25, the material storage and supply module 1000 may further include a second inclined slideway 1680 via which the second material container M2 can be transferred from the second tray 1610 of the second transfer device 1600 to the second intermediate tray 1651 of the second intermediate transfer device 1650. More specifically, as best shown in Fig. 18, the second inclined slideway 1680 is configured to include a second receiving end 1681 with a comb-teeth structure and the second tray 1610 is configured to include a comb-teeth structure 1611 complementary to the shape of the second receiving end 1681, so that the second tray 1610 can be brought and inserted into the second receiving end 1681 via the second transfer device 1600, more specifically the comb teeth of the second inclined slideway 1680 are inserted into the gap between the comb teeth of the second tray 1610 or vice versa, thereby enabling the transfer of the second material container M2 from the second tray 1610 to the second receiving end 1681. More specifically, in such an embodiment, the second transfer drive mechanism 1620 of the second transfer device 1600 is capable of driving the second tray 1610 to move vertically downward from the second material container outlet 1142 of the material container chamber 1120 to the second receiving end 1681 of the second inclined slide 1680, and continue to move downward so that the comb teeth of the second tray 1610 are inserted into the gap between the comb teeth of the second receiving end 1681 until the bottom of the second material container M2 falls down on the second receiving end 1681, thereby transferring the second material container M2 from the second tray 1610 to the second inclined slideway 1680. More specifically, the second inclined slideway 1680 includes fluency strips, which facilitate sliding of the second material container M2 along the second inclined slideway 1680.

As mentioned above, the material storage device 1100 may be configured to have functions such as refrigeration or heat preservation and/or freshness preservation, and correspondingly, the material container compartments 1120 may also be configured to have functions such as refrigeration or heat preservation and/or freshness preservation. In some embodiments, the trays 1510, 1610 of each of the transfer devices 1500, 1600 (e.g., the first tray 1510 of the first transfer device 1500 and the second tray 1610 of the second transfer device 1600 described above) are arranged to be inserted into the respective material container outlets 1141, 1142 of the material container compartment 1120 before the transfer devices 1500, 1600 starts to operate, so that the trays 1510, 1610 can block the material container outlets 1141, 1142 when they are not operating, thereby ensuring the refrigeration or insulation and/or preservation functions of the material container compartments 1120.

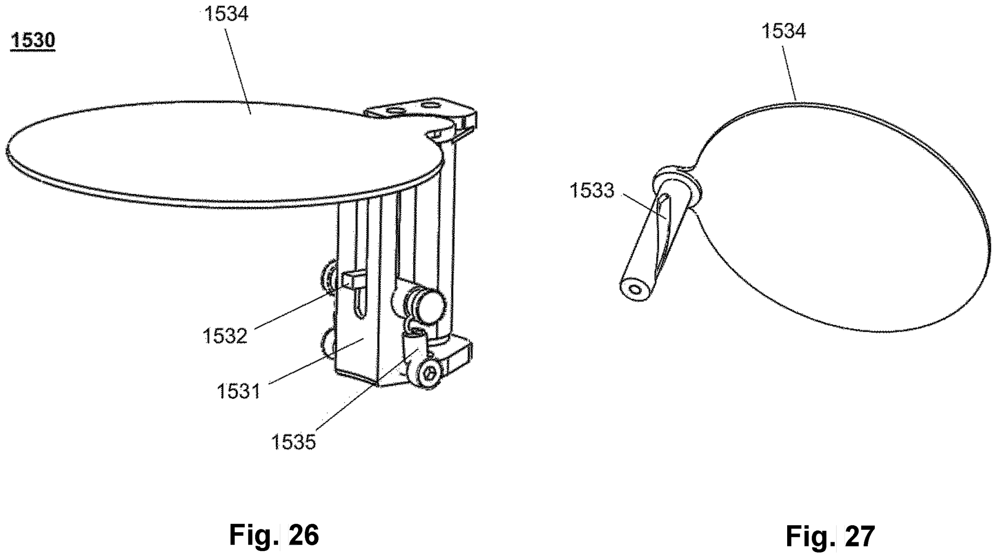

In a more specific embodiment, as shown in Figs. 26-27, the material storage and supply module 1000 may further include motion-interrelating mechanisms that each interrelates in motion with the tray 1510, 1610 of each of the transfer devices 1500, 1600. Each of the motion-interrelating mechanism is identically constructed, and therefore only one, more specifically the motion-interrelating mechanism 1530 associated with the first material container outlet 1141 and the first tray 1510, is specifically described here, the description here of course applies to other motion-interrelating mechanisms, more specifically also to the motion-interrelating mechanism associated with the second material container outlet 1142 and the second tray 1610. As shown in Figs. 26-27, the motion-interrelating mechanism 1530 is configured to: block the first material container outlet 1141 when the first tray 1510 moves away from the first material container outlet 1141 with the first transfer drive mechanism 1520, thereby ensuring functions such as refrigeration or heat preservation and/or freshness preservation of the material container chamber 1120; and move away from the first material container outlet 1141 when the first tray 1510 returns to the first material container outlet 1141 with the first transfer drive mechanism 1520, thereby allowing the first tray 1510 to be re-inserted into the first material container outlet 1141 upon return, thereby ensuring proper operation of the entire machine.

In a specific embodiment, as shown in Figs. 26-27, each motion-interrelating mechanism 1530 may include: a body 1531 fixedly disposed relative to the material container chamber 1120, for example, may be fixedly disposed in a side wall or a bottom wall of the material container chamber 1120; a drive bar 1532 movable between a first drive bar position and a second drive bar position; a cylindrical cam 1533 into which the drive bar 1532 is inserted so as to be able to drive the cylindrical cam 1533 to rotate; a cover plate 1534 coupled with the cylindrical cam 1533 to be rotatable with the cylindrical cam 1533 between a closed position in which the cover plate 1534 closes the material container outlet 1141 and an avoided position in which the cover plate 1534 no longer closes the first material container outlet 1141; a second elastic member 1535 connected between the body 1531 and the drive bar 1532. In such an embodiment, the motion-interrelating mechanism 1530 may be arranged such that, during the insertion of the first tray 1510 into the first material container outlet 1141, the first tray 1510 drives the drive bar 1532 to move from the first drive bar position to the second drive bar position to cause the second elastic member 1535 to store potential energy and cause the cylindrical cam 1533 to rotate, so that the cover plate 1534 rotates from the closed position to the avoided position; when the first tray 1510 is located in the first material container outlet 1141, the first tray 1510 blocks the movement of the drive bar 1532; when the first tray 1510 moves away from the first material container outlet 1141, the second elastic member 1535 releases energy to move the drive bar 1532 from the second drive bar position back to the first drive bar position, and thus rotates the cylindrical cam 1533, thereby rotating the cover plate 1534 from the avoided position to the closed position. In the illustrated embodiment, during insertion of the first tray 1510 into the first material container outlet 1141, the first tray 1510 pushes the drive bar 1532 upward to push the drive bar 1532 from the lower first drive bar position to the higher second drive bar position, while the second elastic member 1535 is stretched to store potential energy and the cover plate 1534 rotates from the closed position to the avoided position with the cylindrical cam 1533 driven by the drive bar 1532. After the first tray 1510 is fully inserted into the first material container outlet 1141, the first tray 1510 blocks the return of the drive bar 1532 from the second drive bar position toward the first drive bar position; after the first tray 1510 is withdrawn from the first material container outlet 1141 again, the second elastic member 1535 recovers and releases potential energy to drive the drive bar 1532 from the second drive bar position to the first drive bar position, while the cover plate 1534 rotates from the avoided position to the closed position with the cylindrical cam 1533 driven by the drive bar 1532. This arrangement ensures that the material container chamber 1120 is well closed at all times without affecting the cooling or heat preservation and/or freshness preservation effects due to the opening of the material container outlets 1141, 1142.

In some embodiments, as shown in Figs. 14-17, the first material feeding mechanism 1700 includes a first swing cylinder 1710, a first swing arm 1720 driven by the first swing cylinder 1710, and a first feeding jaw 1730 coupled with the first swing arm 1720. The first swing cylinder 1710 is configured to drive the first swing arm 1720 to swing between a first swing arm position and a second swing arm position. The first feeding jaw 1730 is configured to grasp the first material container M1 when the first swing arm 1720 is in the first swing arm position and invert the first material container M1 when rotated from the first swing arm position to the second swing arm position, so as to be able to pour the material in the first material container M1 into a correspond material receiver, more specifically, into the finished-product cup 2101 on the first revolving member 2150, 3150 of the multi-station dual-revolving module 2000, 3000 which will be described in detail below. More specifically, after the material in the first material container M1 is poured out, the first swing arm 1720 is returned to the initial position, and after returning to the original position, the first charging jaw 1730 releases the first material container M1 to place it into a first waste material container collector 1740. More specifically, the original position corresponds to the first swing arm position. More specifically, in a case where the material storage and supply module 1000 does not include the first intermediate transfer device, the first swing arm 1710 in the first swing arm position enables the first feeding jaw 1730 to grasp the first material container M1 on the first tray 1510 of the first transfer device 1500 at the feeding height position; In the case where the material storage and supply module 1000 comprises a first intermediate transfer device, the first swing arm 1720 in the first swing arm position enables the first feeding jaw 1730 to grasp the first material container M1 on the first intermediate tray of the first intermediate transfer device at the feeding height position.

In a specific embodiment, the first swing arm 1720 is rotated by an angle of 180° between the first swing arm position and the second swing arm position, and the first swing arm 1720 is oriented horizontally in both the first swing arm position and the second swing arm position. As a result, when the first swing arm 1720 is rotated from the first swing arm position to the second swing arm position, the first material container M1 can be inverted by an angle of 180°, and the material therein can be completely poured out.

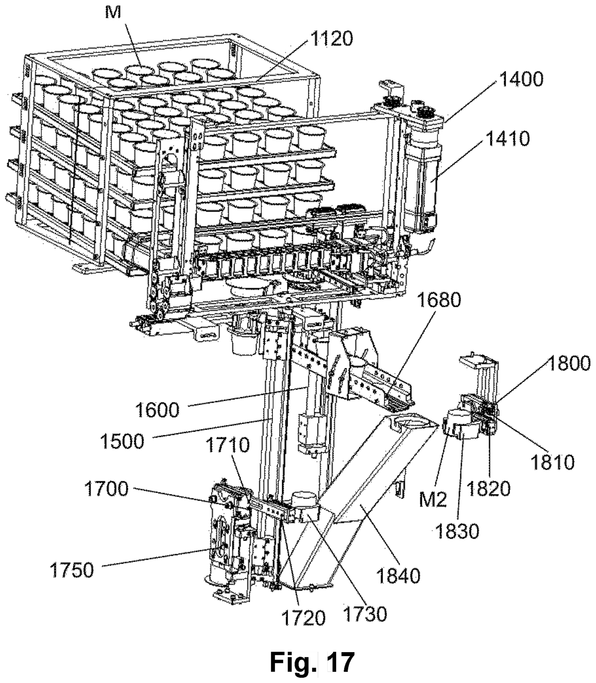

In some embodiments, as shown in Figs. 17 and 19-25, the second material feeding mechanism 1800 includes a second swing cylinder 1810, a second swing arm driven by the second swing cylinder 1810 and a second feeding jaw 1830 coupled with the second swing arm 1820. The second swing cylinder 1810 is configured to drive the second swing arm 1820 to pivot between a third swing arm position and a fourth swing arm position. The second feeding jaw 1830 is configured to grasp the second material container M2 when the second swing arm 1820 is in the third swing arm position and invert the second material container M2 when pivoting from the third swing arm position to the fourth swing arm position to enable pouring of material in the second material container M2 into a corresponding material receiver, more specifically into the blending cup 2201 on the second revolving member 2250, 3250 of the multi-station dual-revolving module 2000, 3000. More specifically, after the material in the second material container M2 is poured out, the second swing arm 1820 is returned to the original position, and after returning to the original position, the second feeding jaw 1830 releases the second material container M2 to place it into a second waste material container collector 1840. More specifically, the original position corresponds to the third swing arm position. More specifically, in the case where the material storage and supply module 1000 does not include the second intermediate transfer device 1650, the second swing arm 1820 in the third swing arm position enables the second feeding jaw 1830 to grasp the second material container M2 on the second tray 1610 of the second transfer device 1600 at the feeding height position. In the case where the material storage and supply module 1000 comprises the second intermediate transfer device 1650, the second swing arm 1820 in the second swing arm position enables the second feeding jaw 1830 to grasp the second material container M2 on the second intermediate tray 1651 of the second intermediate transfer device 1650 at the feeding height position.

In a specific embodiment, the second swing arm 1820 is rotated by an angle of 180° between the third swing arm position and the fourth swing arm position, and the second swing arm 1820 is oriented horizontally in both the third swing arm position and the fourth swing arm position. As a result, when the second swing arm 1820 is rotated from the third swing arm position to the fourth swing arm position, the second material container M2 can be inverted by an angle of180°, so that the material therein can be completely poured out.

It should be noted that in the present application, although it is described the material storage and supply module 1000 may include the at least one material feeding mechanism, more specifically the first material feeding mechanism 1700 and the second material feeding mechanism 1800, the first material feeding mechanism and the second material feeding mechanism may also be regarded as constituent components of the multi-station dual-revolving module to be described in detail below.

In some embodiments, as shown in Figs. 5, 15-17, the material storage and supply module 1000 may further include a slide table cylinder 1750 that comprises a slide table cylinder movable member to which at least one of the at least one material feeding mechanism 1700, 1800 is coupled so as to be driven by the slide table cylinder movable member to move between an extended position and a retracted position. More specifically, the at least one of said material feeding mechanisms coupled to the slide table cylinder movable member is used for pouring materials in the material containers into material receivers at different heights. For example, the slide table cylinder movable member is arranged to drive the at least one of said material feeding mechanisms to move in a vertical direction between a higher extended position and a lower retracted position, thereby allowing the respective material feeding mechanisms to reach the material receivers at different heights. More specifically, the lower retracted position corresponds to the feeding height position described above, and the material feeding mechanism is located at a higher extended position when the slide table cylinder 1750 is operated, i.e. allowing material to be fed into a material receiver at a higher height when the slide table cylinder 1750 is operated. It is further noted that the slide table cylinder 1750 is operated when the respective material container has been transferred to the material feeding mechanism, and more specifically when the respective feeding jaws have grasped the respective material container.

More specifically, as will be described in the multi-station dual-revolving module 2000 below, the material receivers may comprise a first type of finished-product cup and a second type of finished-product cup having different heights, the first type of finished-product cup being for example a paper cup having a smaller height, and the second type of finished-product cup being for example a plastic cup having a larger height. In this case, the slide table cylinder movable member of the slide table cylinder 1750 may be coupled to the first material feeding mechanism 1700 to allow the first material feeding mechanism 1700, and more specifically the first feeding jaw 1730 of the first material feeding mechanism 1700 to access the first type of finished-product cup and the second type of finished-product cup having different heights located on the first revolving member 2150 of the multi-station dual-revolving module 2000. More specifically, a cylinder body of the first swing cylinder 1710 of the first material feeding mechanism 1700 may be arranged to be coupled to the slide table cylinder movable member, so that the first swing arm 1720 and the first feeding jaw 1730 connected to the first swing arm 1720 can move up and down with the slide table cylinder movable member.

In a specific embodiment, the material storage device 1100 of the present application is configured to include two material container chambers, namely, a first material container chamber for storing material containers containing fresh materials therein and a second material container chamber for storing material containers containing solid materials therein.

In some embodiments, the first material container chamber includes the first supply line and the second supply line mentioned above, and only the first supply line or the second supply line may be activated, or both the first supply line and the second supply line may be activated, as necessary. More specifically, fresh materials may be fed only into the finished-product cup 2101 on the first revolving member 2150, 3150 or the blending cup 2201 on the second revolving member 2250, 3250 of the multi-station dual-revolving module 2000, 3000 to be described hereinafter, or simultaneously to the finished-product cup 2101 and the blending cup 2201. Of course, depending on the type of beverage to be prepared, the materials in the first material container chamber may not be required, so neither the first supply line nor the second supply line is activated. More specifically, the first material container chamber needs to have refrigeration and freshness preservation functions.

In some embodiments, the second material container chamber may comprise only the first supply line mentioned above. More specifically, the solid materials may be only fed into the finished-product cup 2101 or 2101 and but not to the blending cup 2201, for example, when making a milk tea beverage. Of course, depending on the kind of beverage to be prepared, the materials in the second material container chamber may not be required. More specifically, the second material container chamber needs to have heat preservation and freshness preservation functions.

In some embodiments, the first material container chamber and the second material container chamber may each include one or both of the first and second supply lines mentioned above. More specifically, depending on the kind of beverage to be made, the materials in the first and second material container chambers may be needed simultaneously, and thus the respective supply lines of the respective material container chambers may be activated simultaneously or in stages.

Of course, the present application is not limited to the number and types of material container chambers described above, and any related feasible technical solutions should be regarded as being within the scope of protection of the present application.

It should be understood that the operation of all the movement mechanisms mentioned above, including the manipulators, the manipulator drive mechanisms, the transfer devices, the intermediate transfer devices, the film opening mechanisms, the slide table cylinder, and the like, are controlled by the main control module and can be reset after the corresponding operation is completed. More specifically, these movable mechanisms can be reset after completing one operation so as to successively perform the next operation, and the operations of different movable mechanisms can be performed simultaneously, for example, a material feeding operation for a previous beverage and a film cutting operation for a subsequent beverage can be performed simultaneously, as long as the movements of these movable mechanisms do not interfere with each other.

### 1.2 Storage and supply of ice cubes

In some embodiments, as shown in Fig. 1, the interior space of the material storage device 1100 may further include at least one ice discharge chamber 1170 in which an ice discharge mechanism 1900 is disposed, and the ice discharge mechanism 1900 may be configured to store ice cubes and output ice cubes, for example, for supplying ice cubes to a multi-station dual-revolving module 2000, 3000 to be described below, more specifically to the blending cup 2201 on the second revolving member 2250, 3250 of the multi-station dual-revolving module 2000, 3000.

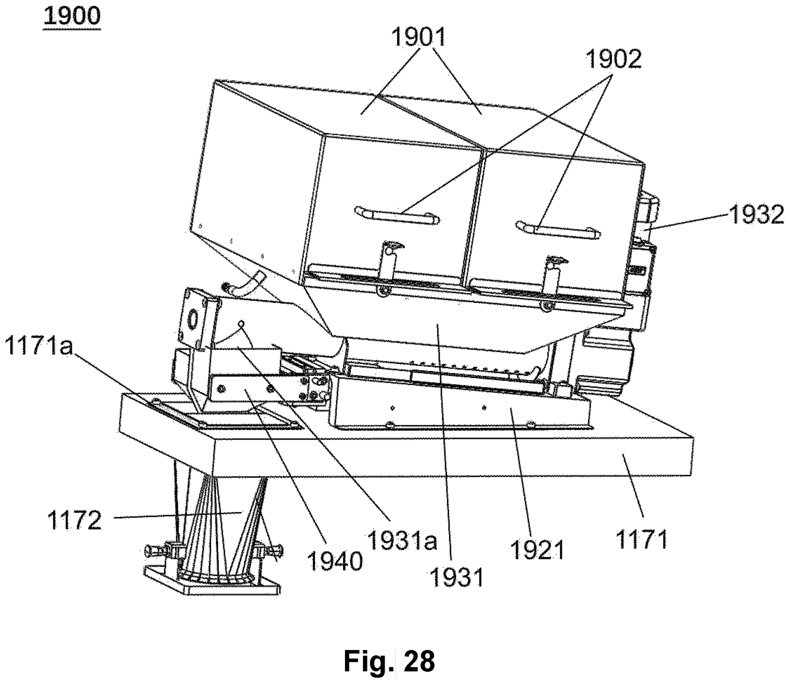

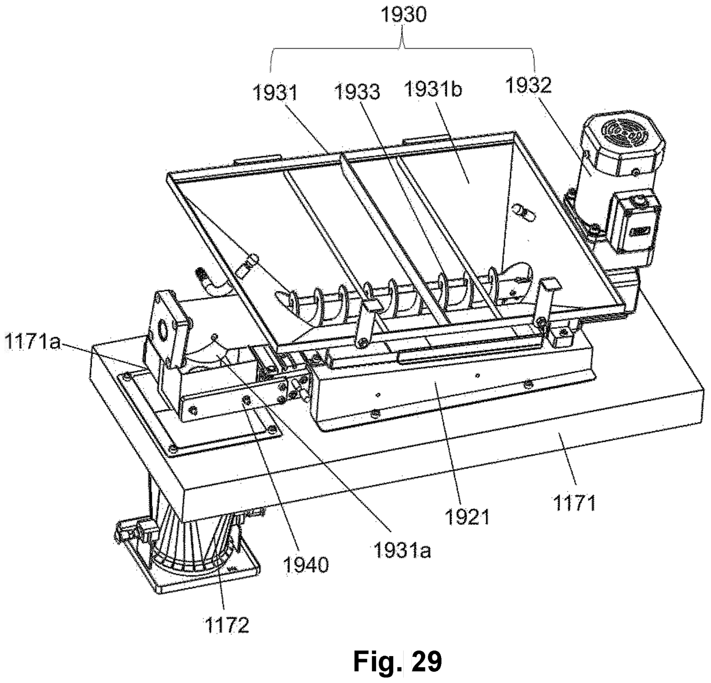

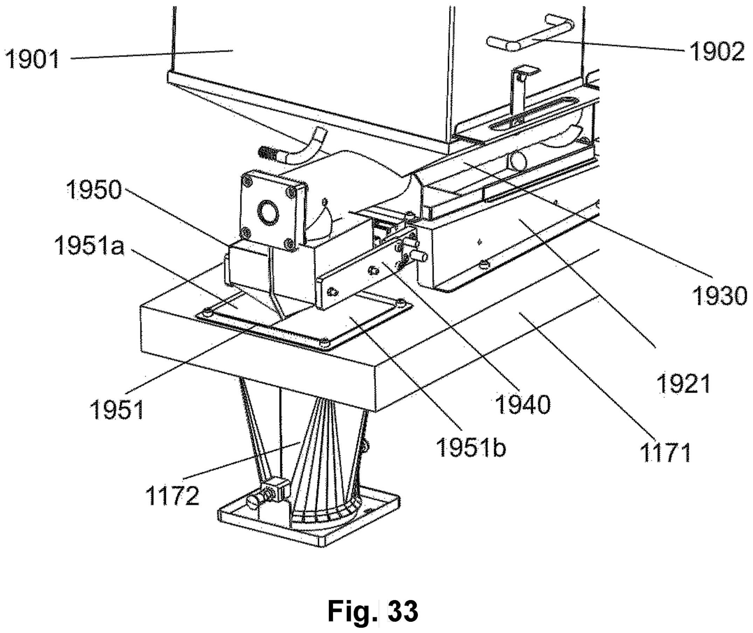

In some embodiments, as shown in Figs. 28-29, 32-33, and 36-38, the ice discharge mechanism 1900 may include a base 1921, an ice cube delivery assembly 1930, an ice cube output assembly 1940, a weighing sensor 1922, and a programmable logic controller.

The base 1921 may be provided to be stationary; in a specific embodiment, the base 1921 may be fixed to the ice chamber floor 1171 of the ice discharge chamber 1170, as shown in Figs. 28-29, 31, 33.

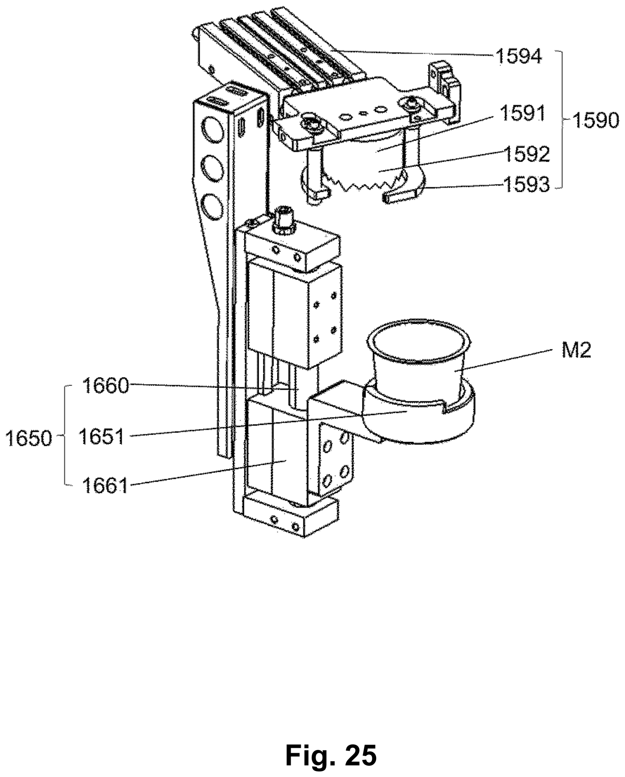

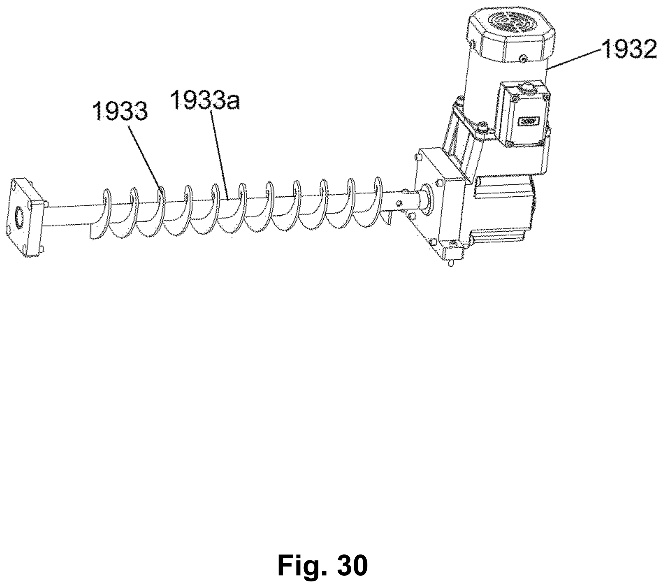

As shown in Figs. 25-26 and 33, the ice cube delivery assembly 1930 may be mounted on the base 1921 and may comprise a delivery housing 1931, a delivery drive member 1932, and an ice cube delivery member 1933. The delivery housing 1931 defines a delivering space and may define an ice cube delivery outlet 1931a. The ice cube delivery member 1933 is at least partially disposed in the conveying space and is configured to be driven by the delivery drive member 1932 to deliver ice cubes toward the ice cube delivery outlet 1931a. In a specific embodiment, the ice cube delivery member 1933 may be a screw conveyor 1933, and the delivery drive mechanism 1932 may be a motor 1932, as shown in Fig. 30. More specifically, the screw conveyor 1933 is arranged to be detachably coupled with a motor shaft of the motor 1932 as the delivery drive mechanism 1932. More specifically, the motor 1932 may employ a variable-frequency and variable-speed motor to allow the rotational speed of the screw conveyor 1933 to be automatically reduced when the amount of the ice cubes have been output approaches a target value.

In a specific embodiment, as shown in Fig. 28, the ice cube delivery member 1933 is disposed in an inclined rather than horizontal fashion. More specifically, when the ice cube delivery member 1933 is a screw conveyor, an angle between a screw shaft 1933a of the screw conveyor 1933 and a horizontal plane is provided to be 10° to 30°, for example, 15°. This allows for better control of the amount of ice cubes to be output. Further, in order to be able to conveniently adjust the inclination angle of the screw conveyor 1933, a jacking device may be provided on the base 1921 to allow an end of the screw conveyor 1933 close to the ice cube delivery outlet 1931a to be raised and lowered by the jacking device to change the inclination angle. The jacking device may more particularly be a hydraulic or pneumatic cylinder arranged in an upright position, and may also be a screw nut mechanism.

In some embodiments, as shown in Fig. 28, the ice discharge mechanism 1900 further includes ice cube storage tanks 1901 disposed above the delivery housing 1931, for example, two or more ice cube storage tanks disposed side by side. Ice cubes are stored in each ice cube storage tank 1901, and an ice cube receiving port 1931b is provided at the top of the delivery housing 1931, and an ice cube supply port which aligns with the ice cube receiving port 1931b is provided at the bottom of the ice cube storage tank 1901, thereby allowing ice cubes stored in the ice cube storage tank 1901 to enter the delivering space of the delivery housing 1931. In a specific embodiment, in order to facilitate the entry of ice cubes from the ice cube storage tank 1901 into the delivery housing 1931, the floor of the ice cube storage tank 1901 may be provided as a pull-out type plate to allow the plate to be withdrawn when needed to drop ice cubes in the ice cube storage tank 1901 into the delivery housing 1931. Further, in order to facilitate carrying of the ice cube storage tanks 1901, a handle may be provided on the top or side portion of the ice cube storage tank 1901. In addition, in order to facilitate placement of the ice cube storage tank 1901, a slide rail may also be provided on the top of the delivery housing 1931, and the ice cube storage tank 1901 only needs to be gently pushed to a designated position when placing it on the delivery housing 1931. In addition, a pull handle 1902 may also be provided on the side of the ice cube storage tank 1901 to allow the ice cube storage tank 1901 to be pulled out along the slide rail.

As shown in Figs. 28-29 and 30-38, the ice cube output assembly 1940 may be mounted on the base 1921 and configured to output ice cubes. In one embodiment, the ice cube output assembly 1940 includes a main box 1950 and an auxiliary box 1960 configured to receive ice cubes delivered by the ice cube delivery member 1933 from the ice cube delivery outlet 1931a of the delivery housing 1931. In addition, the ice cube output assembly 1940 may further include an output drive assembly configured to drive the main box 1950 and the auxiliary box 1960 to output ice cubes.

As shown in Figs. 28-29, 32, 36-37, the weighing sensor 1922 is arranged to be associated with the main box 1950 and the auxiliary box 1960 to be able to detect the weights of the main box 1950 and the auxiliary box 1960, i.e. the weight detected by the weighing sensor 1922 is the sum of the weight of the main box 1950 and the weight of the auxiliary box 1960. The programmable logic controller, for example, is part of the main control module of the integrated intelligent beverage robot and is configured to communicate with the weighing sensor 1922 and the output drive assembly to control the output drive assembly to drive the main box 1950 and the auxiliary box 1960 to output ice cubes when the detected weight is within a predetermined threshold range, and to control the output drive assembly to drive only the main box 1950 to output ice cubes when the detected weight is greater than the predetermined threshold range.

As such, the ice discharge mechanism 1900 proposed in the present application can better ensure accurate control of the amount of the ice cubes that are output. More specifically, the delivery drive member 1932 is also configured to be able to communicate with the programmable logic controller. More specifically, the programmable logic controller is provided to receive the weight data from the weighing sensor 1922 in real time when the ice discharge mechanism 1900 is operated, and when the received weight data begins to enter the predetermined threshold range, the programmable logic controller controls the delivery drive member 1932 to stop operation. However, during the stoppage of the delivery drive member 1932 controlled by the programmable logic controller, particularly when the ice delivery member 1933 is a screw conveyor, ice cubes - including relatively large ones - may still fall from the ice cube delivery outlet 1931a into the main box 1950 or the auxiliary box 1960. This could cause the weighing sensor 1922 to register a weight exceeding the expected value. In such cases, we may selectively output ice either from the main box 1950 alone or from both the main box 1950 and auxiliary box 1960, ensuring the total discharged ice quantity better meets the expected weight requirement.

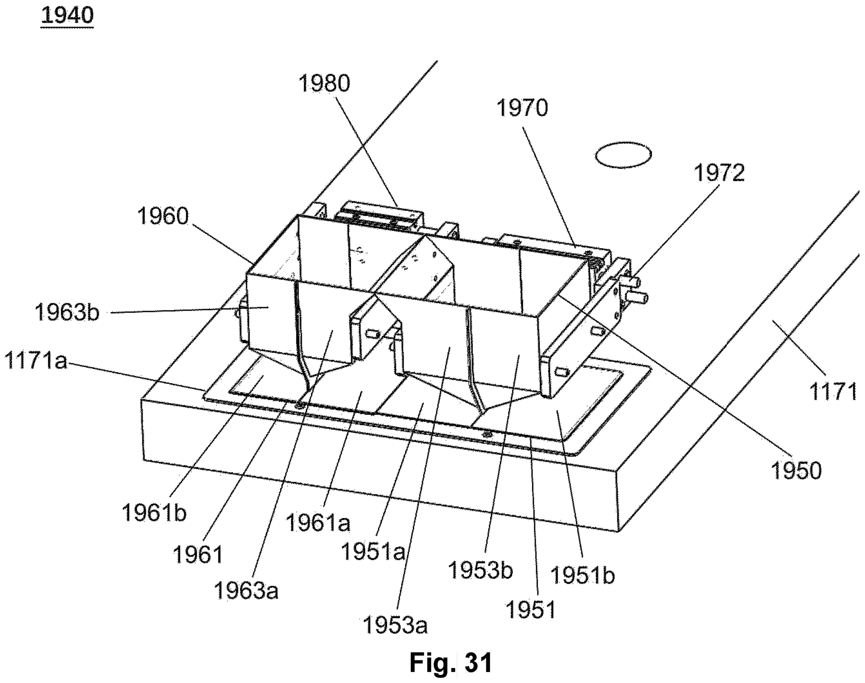

More specifically, as shown in Figs. 31-32 and 36-38, the volume of the main box 1950 is greater than the volume of the auxiliary box 1960. In a specific embodiment, the auxiliary box 1960 has an ice cube capacity in the range of 5 to 10 grams. It should be noted that the predetermined threshold range described above is different depending on the application context.

More specifically, the auxiliary box 1960 may be located within or above or at the outside of the main box 1950.

In some embodiments, as shown in Figs. 31-36a, the main box 1950 includes a main box floor 1951 that is openable. Specifically, at least a portion of the main box floor 1951 can be driven by the output drive assembly to switch the main box floor 1951 between a main box floor closed state in which the main box floor 1951 closes the bottom of the main box 1950 so that ice cubes in the main box 1950 cannot come out through the bottom thereof, and a main box floor open state in which the main box floor 1951 opens the bottom of the main box 1950 so that ice cubes in the main box 1950 can come out through the bottom thereof.

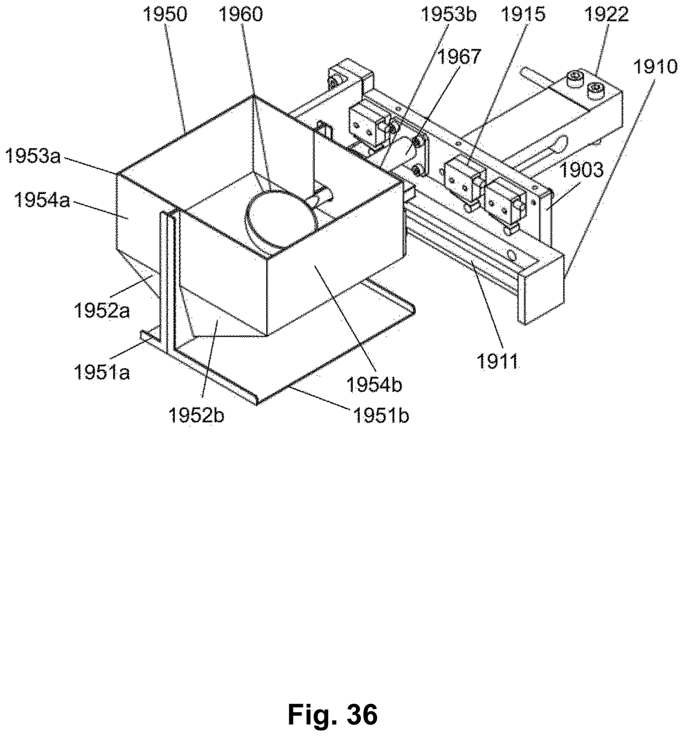

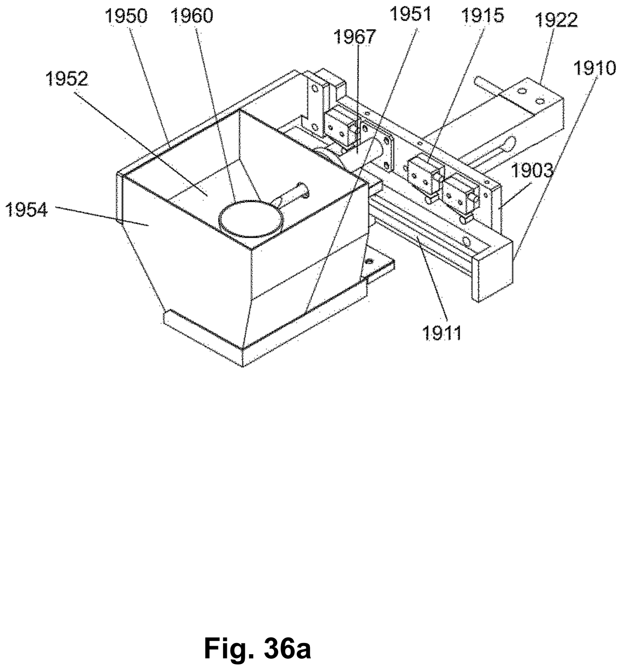

In a specific embodiment, as shown in Fig. 36a, the main box 1950 is configured such that its entire main box floor 1951 can be driven by an output drive assembly to switch between the main box floor closed state and the main box floor open state. That is, in this embodiment, when ice cubes in the main box 1950 need to be output via the bottom, the entire main box floor 1951 may be driven via the output drive assembly to move from the closed state to the open state; schematically, the entire main box floor 1951 can then be driven to move downward to the right in the drawings to open the bottom of the main box 1950. It should be noted that, in this case, portions of the main box 1950 other than the main box floor 1951 may be kept stationary, for example, the peripheral wall 1954 of the main box 1950 may be kept stationary. In a more specific embodiment, it may also be provided that the peripheral wall 1954 of the main box 1950 includes a main box inclined guide potion 1952 extending obliquely inward to the main box floor 1951 to facilitate quick and smooth sliding of ice cubes in the main box 1950 under the guidance of the main box inclined guide potion 1952 when the main box floor 1951 is opened.

In another specific embodiment, as shown in Figs. 31-36, the main box floor 1951 may include a first main half 1951a and a second main half 1951b, at least one of which can be driven by the output drive assembly to enable the main box floor 1951 to be switched between the main box floor closed state and the main box floor open state, wherein: in the main box floor closed state, the first main half 1951a and the second main half 1951b are joined with each other such that the main box floor 1951 cannot open the bottom of the main box 1950, and thus ice cubes cannot be output via the bottom of the main box 1950; while in the main box floor open state, the first main half 1951a and the second main half 1951b are separated from each other so that the main box floor 1951 opens the bottom portion of the main box 1950, so that ice cubes can be output via the bottom portion of the main box 1950. More specifically, the peripheral wall of the main box 1950 may further include a first inclined guide portion 1952a connected to the first main half 1951a of the main box floor 1951 and a second inclined guide portion 1952b connected to the second main half 1951b, more specifically, the first inclined guide portion 1952a and the second inclined guide portion 1952b are arranged to converge towards each other in a downward direction and can be joined with each other when the first main half 1951a and the second main half 1951b are joined with each other. Such a configuration allows the main box floor 1951 to ensure complete ice discharge when in the open state.

According to a specific embodiment, the auxiliary box 1960 includes an auxiliary box floor 1961 that is openable. Specifically, at least a portion of the auxiliary box floor 1961 can be driven by the output drive assembly to switch the auxiliary box floor 1961 between an auxiliary box floor closed state in which the auxiliary box floor 1961 closes the bottom of the auxiliary box 1960 so that ice cubes in the auxiliary box 1960 cannot come out through its bottom, and an auxiliary box floor open state in which the auxiliary box floor 1961 opens the bottom of the auxiliary box 1960 so that ice cubes in the auxiliary box 1960 can come out through its bottom.

In a specific embodiment which is not shown, the auxiliary box 1960 is configured such that the entire auxiliary box floor 1961 can be driven by the output drive assembly to switch between the auxiliary box floor closed state and the auxiliary box floor open state. That is, in this embodiment, when ice cubes in the auxiliary box 1960 need to be output via the bottom, the entire auxiliary box floor 1960 may be driven via the output drive assembly to move from the closed state to the open state. It should be noted that, in this case, portions of the auxiliary box 1960 other than the auxiliary box floor 1961 may remain stationary, for example, the peripheral wall of the auxiliary box 1960 may remain stationary. In a more specific embodiment, it may also be provided that the peripheral wall of the auxiliary box 1960 includes an auxiliary box inclined guide portion extending obliquely inward to the auxiliary box floor 1961 to facilitate the ice cubes in the auxiliary box 1960 to quickly and smoothly slide out under the guidance of the auxiliary box inclined guide portion in the open state of the auxiliary box floor.

In another specific embodiment, as shown in Fig. 31, the auxiliary box floor 1961 may include a first auxiliary half 1961a and a second auxiliary half 1961b, at least one of which can be driven by the output drive assembly to enable the auxiliary box floor 1961 to switch between the auxiliary box floor closed state and the auxiliary box floor open state, wherein: in the auxiliary box floor closed state, the first auxiliary half 1961a and the second auxiliary half 1961b are joined with each other such that the auxiliary box floor 1961 cannot open the bottom of the auxiliary box 1960, and thus ice cubes cannot be discharged via the bottom of the auxiliary box 1960; in the auxiliary box floor open state, the first auxiliary half 1961a and the second auxiliary half 1961b are separated from each other so that the auxiliary box floor 1961 opens the bottom of the auxiliary box 1960, and thus ice cubes can be output via the bottom of the auxiliary box 1960. More specifically, the peripheral wall of the auxiliary box 1960 may further include a third inclined guide portion 1962a connected to the first auxiliary half 1961a of the auxiliary box floor 1961 and a fourth inclined guide portion 1962b connected to the second auxiliary half 1961b, more specifically, the third inclined guide portion 1962a and the fourth inclined guide portion 1962b are provided to converge towards each other in a downward direction and can be joined with each other when the first auxiliary half portion 1961a and the second auxiliary half portion 1961b are joined with each other. Such a configuration allows the auxiliary box floor 1961to facilitate the complete discharge of ice cubes when in the open state.

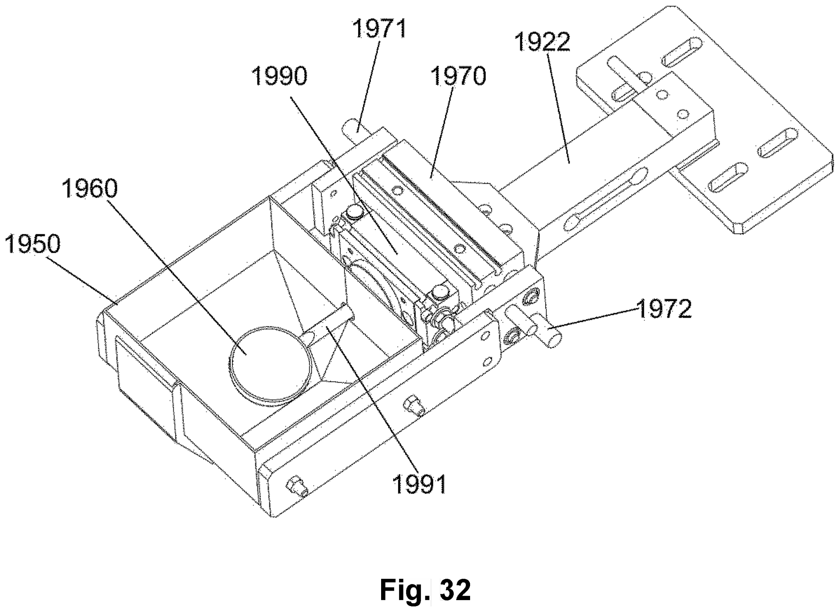

According to another embodiment, as shown in Figs. 32 and 36-38, the auxiliary box 1960 is rotatable. Specifically, the main box 1950 and the auxiliary box 1960 are both open at the top, and the output drive assembly is capable of driving the auxiliary box 1960 to rotate to allow ice cubes in the auxiliary box 1960 to be poured out.

### First specific embodiment of ice discharge mechanism

As shown in Fig. 31, in this first embodiment, the main box floor 1951 of the main box 1950 is openable, meanwhile the auxiliary box floor 1961 of the auxiliary box 1960 is openable.

In this case, the output drive assembly may include a first finger gripper cylinder 1970 configured to drive at least a portion of the main box floor 1951 to move. More specifically, the first finger gripper cylinder 1970 may include a first translational movement portion 1971 and a second translational movement portion 1972 capable of simultaneously translating in opposite directions.

In some embodiments, the first finger gripper cylinder 1970 may be provided to drive movement of the entire main box floor 1951. More specifically, the main box is configured as shown in Fig. 36a, and the main box may include an integral main box floor 1951 and a peripheral wall 1954, the entire main box floor 1951 being disposed to be movable relative to the peripheral wall 1954. In these embodiments, one of the first translational movement portion 1971 and the second translational movement portion 1972 of the first finger gripper cylinder 1970 may be coupled to the main box floor 1951 such that the first finger gripper cylinder 1970 can drive the main box floor 1951 to switch between the main box floor closed state and the main box floor open state.

Whereas in embodiments in which the main box floor 1951 includes the first main half 1951a and the second main half 1951b that can be joined with and separated from each other, the first finger gripper cylinder 1970 can be provided to drive at least one of the first main half 1951a and the second main half 1951b to move.

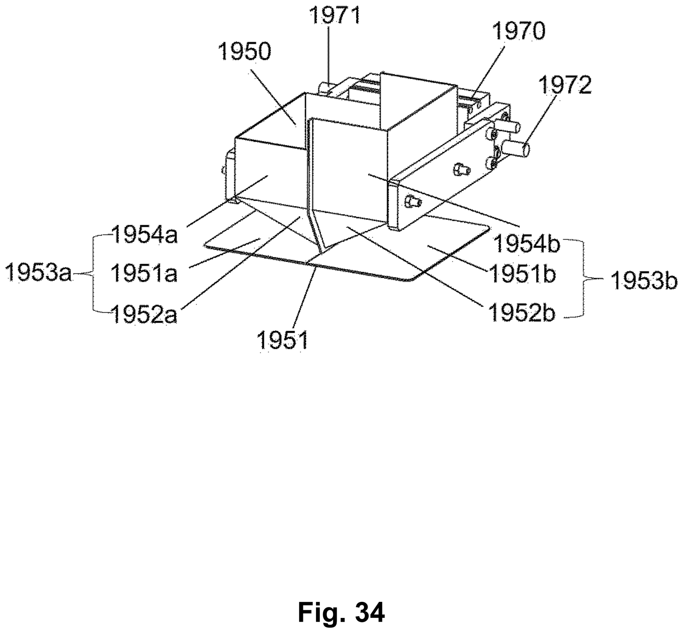

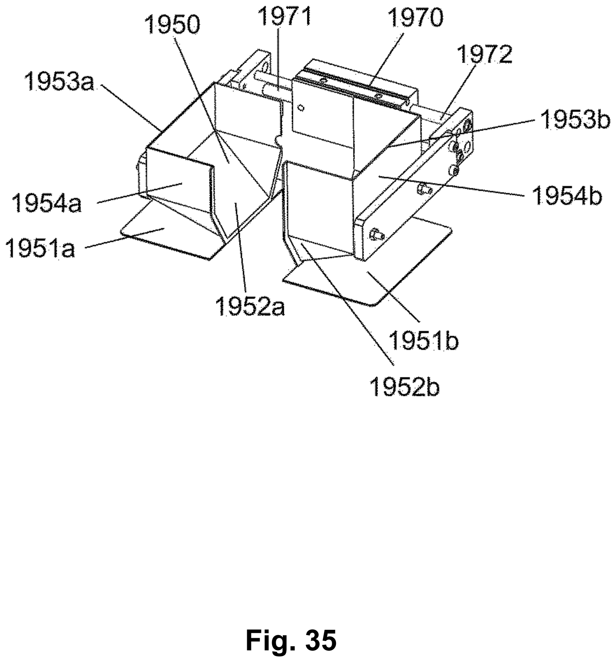

In a specific embodiment, as shown in Figs. 34 and 35, the main box 1950 may include a first main box portion 1953a with the first main half 1951a of the main box floor 1951 and a second main box portion 1953b with the second main half 1951b of the main box floor 1951, the first and second main box portions 1953a and 1953b each being provided with a respective peripheral wall 1954a, 1954b of the main box 1950. When the main box floor 1951 is switched between the main box floor closed state and the main box floor open state, the first main box portion 1953a or the second main box portion 1953b is arranged to be movable with the first main half 1951a or the second main half 1951b accordingly. More specifically, the first translational movement portion 1971 of the first finger gripper cylinder 1970 may be coupled with the first main half 1951a, and/or the second translational movement portion 1972 may be coupled with the second main half 1951b.

Furthermore, the output drive assembly may further include a second finger gripper cylinder 1980 configured to drive at least a portion of the auxiliary box floor 1961 to move. More specifically, the second finger gripper cylinder 1980 includes a third translational movement portion 1981 and a fourth translational movement portion 1982 capable of simultaneously translating in opposite directions.

In some embodiments, the second finger gripper cylinder 1980 may be provided to drive movement of the entire auxiliary box floor 1961. More specifically, the auxiliary box is configured to include an integral auxiliary box floor 1961 and a peripheral wall, wherein the entire auxiliary box floor 1961 is disposed to be movable relative to the peripheral wall. In these embodiments, one of the third translational movement portion 1981 and the fourth translational movement portion 1982 of the second finger gripper cylinder 1980 may be coupled to the auxiliary box floor 1961 to enable the first finger gripper cylinder 1980 to drive the auxiliary box floor 1961 to switch between the auxiliary box floor closed state and the auxiliary box floor open state.

In embodiments in which the auxiliary box floor 1961 includes the first auxiliary half 1961a and the second auxiliary half 1961b that can be engaged and separated from each other, the second finger gripper cylinder 1980 may be provided to be able to drive at least one of the first auxiliary half 1961a and the second auxiliary half 1961b to move.

In a specific embodiment, the auxiliary box 1960 may comprise a first auxiliary box portion 1963a with the first auxiliary half 1961a of the auxiliary box floor 1961 and a second auxiliary box portion 1963b with the second auxiliary half 1961b of the auxiliary box floor 1961, the first auxiliary box portion 1963a and the second auxiliary box portion 1963b each being provided with a respective peripheral wall 1964a, 1964b of the auxiliary box 1960. When the auxiliary box floor 1961 is switched between the auxiliary box floor closed state and the auxiliary box floor open state, the first auxiliary box portion 1963a or the second auxiliary box portion 1963b is arranged to be movable with the first auxiliary half 1961a or the second auxiliary half 1961b accordingly. More specifically, the third translational movement portion 1981 of the second finger gripper cylinder 1980 may be coupled with the first auxiliary half 1961a, and/or the fourth translational movement portion 1982 may be coupled with the second auxiliary half 1962b.

In an embodiment as schematically shown in Fig. 31, the main box 1950 and the auxiliary box 1960 may be disposed side by side and adjacent to each other. More specifically, the first main box portion 1953a of the main box 1950 is disposed adjacent to the first auxiliary box portion 1963a of the auxiliary box 1960. In this case, the second main half 1951b of the main box floor 1951 is provided to be coupled to the second translational movement portion 1972 of the first finger gripper cylinder 1970 so as to be driven by the latter to perform translational movement, while the first main half 1951a of the main floor 1951 is not coupled to the first translational movement portion 1971 of the first finger gripper cylinder 1970, that is, in this case only the second main half 1951b of the main floor 1951 can be moved to engage with and disengage from the first main half 1951a, thereby causing the main floor 1951 to be switched between the main floor closed state and the main floor open state. Furthermore, in this case, the second auxiliary half 1961b of the auxiliary box floor 1961 is provided to be coupled to the fourth translational movement portion 1982 of the second finger gripper cylinder 1980 so as to be driven by the latter to perform translational movement, while the first auxiliary half 1961a of the auxiliary box floor 1961 is not coupled to the third translational movement portion 1981 of the second finger gripper cylinder 1980, that is, in this case only the second auxiliary half 1961b of the auxiliary box floor 1961 can be moved to engage with and disengage from the first auxiliary half 1961a, so that the auxiliary box floor 1961 can be switched between the auxiliary box closed state and the auxiliary box open state.

In one embodiment not shown in the drawings, the auxiliary box 1960 may be positioned above or inside the main box 1950 so that ice cubes in the auxiliary box 1960 can first fall into the main box 1950 below when the auxiliary box floor 1961 is in its open state and can be discharged via the main box floor 1951 in its open state. In another embodiment not shown in the drawings, the main box 1950 and the auxiliary box 1960 may also be arranged in a row separate from each other. In these embodiments, it may be provided that the first main half 1951a of the main box floor 1951 is coupled to the first translational movement portion 1971 of the first finger gripper cylinder 1970 so as to be translationally driven by the latter, and the second main half 1951b of the main floor 1951 is coupled to the second translational movement portion 1972 of the first finger gripper cylinder 1970 so as to be translationally driven by the latter, so that the main box floor 1951 is switched between the main floor closed state and the main floor open state. In addition, the first auxiliary half 1961a of the auxiliary box floor 1961 may be coupled to the third translational movement portion 1981 of the second finger gripper cylinder 1980 so as to be translationally driven by the latter, and the second auxiliary half 1961b of the auxiliary floor 1961 may be coupled to the fourth translational movement portion 1982 of the second finger gripper cylinder 1980 so as to be translationally driven by the latter, so that the auxiliary floor 1962 is switched between the auxiliary floor closed state and the auxiliary floor open state.

### Second specific embodiment of ice discharge mechanism

In this second embodiment, as shown in Fig. 32, the main box floor 1951 of the main box 1950 is openable, while the auxiliary box 1960 is rotatable.

In this case, the output drive assembly may include a first finger gripper cylinder 1970 configured to drive at least a portion of the main box floor 1951 to move. Furthermore, the output drive assembly may further include an auxiliary box rotary cylinder 1990 configured to drive the auxiliary box 1960 to rotate.

In this second embodiment, similar to the above-described first embodiment, the first finger gripper cylinder 1970 may include a first translational movement portion 1971 and a second translational movement portion 1972 capable of simultaneously translating in opposite directions. In a case where the main box 1950 includes an integral main box floor 1951 and a peripheral wall 1954, one of the first translational movement portion 1971 and the second translational movement portion 1972 of the first finger gripper cylinder 1970 may be coupled to the main box floor 1951 so that the first finger gripper cylinder 1970 can drive the main box floor 1951 to switch between the main box floor closed state and the main box floor open state. In embodiments in which the main box floor 1951 includes the first main half 1951a and the second main half 1951b that can be engaged with and separated from each other, as shown in Figs. 34 and 35, the main box 1950 may include the first main box portion 1953a with the first main half 1951a of the main box floor 1951 and the second main box portion 1953b with the second main half 1951b of the main box floor 1951, the first and second main box portions 1953a and 1953b also each being provided with a respective peripheral wall 1954a, 1954b of the main box 1953. When the main box floor 1951 is switched between the main box floor closed state and the main box floor open state, the first main box portion 1953a or the second main box portion 1953b is arranged to be movable with the first main half 1951a or the second main half 1951b accordingly. More specifically, the first translational movement portion 1971 may be coupled to the first main half 1951a, and/or the second translational movement portion 1972 may be coupled to the second main half 1951b.

More specifically, the auxiliary box rotary cylinder 1990 includes a rotating shaft 1991 arranged to rotate in an angular range of, for example, 180°. The rotating shaft 1991 is provided to be coupled to the auxiliary box 1960 so as to be able to rotate the auxiliary box 1960. More specifically, the top opening of the auxiliary box 1960 is upward when ice cubes are not needed to be discharged; when ice cubes are needed to be discharged, the rotating shaft 1991 of the auxiliary box rotary cylinder 1990 rotates the auxiliary box 1960 by an angle of 180 ° so that the top opening thereof is downward, thereby allowing ice cubes to be poured out.

In the specific embodiment shown in Fig. 32, the auxiliary box 1960 may be positioned inside the main box 1950 such that ice cubes in the auxiliary box 1960 can first fall into the main box 1950 below after the auxiliary box 1960 is rotated and can be output via the main box floor 1951 in its open state. In one embodiment not shown in the figures, the auxiliary box 1960 may be otherwise positioned relative to the main box 1950, for example, may also be positioned above or next to the main box 1950.

### Third specific embodiment of ice discharge mechanism

In this third embodiment, as shown in Figs. 36-38, the main box floor 1951 of the main box 1950 is openable, while the auxiliary box 1960 is rotatable. The third embodiment mainly differs from the second embodiment in the configuration and arrangement of the output drive assembly.

In the specific embodiment shown in Figs. 36-38, the auxiliary box 1960 may be located inside the main box 1950 so that ice cubes in the auxiliary box 1960 can first fall into the main box 1950 below after the auxiliary box 1960 rotates and can be output via the main box floor 1951 in its open state. In one embodiment not shown in the drawings, the auxiliary box 1960 may be otherwise positioned relative to the main box 1950, for example, may also be positioned above or next to the main box 1950.

In this third specific embodiment, when the weight detected by the weighing sensor 1922 is greater than a predetermined threshold range, the output drive assembly is configured to drive at least a portion of the main box floor 1951 to move with a first stroke to enable the main box floor 1951 to switch between the main box floor closed state and the main box floor open state; when the weight detected by the weighing sensor 1922 is within the predetermined threshold range, at least a portion of the main box floor 1951 can be driven to move with a second stroke greater than the first stroke to enable the main box floor 1951 to switch between the main box floor closed state and the main box floor open state. The output drive assembly is further configured not to drive the auxiliary box 1960 to rotate during the first stroke, and to be able to drive the auxiliary box 1960 to rotate during the remaining stroke portion of the second stroke beyond the first stroke.

In some embodiments, the main box 1950 is configured as shown in Fig. 36a, and the main box 1950 may include an integral main box floor 1951 and a peripheral wall 1954, wherein the entire main box floor 1951 is disposed to be movable relative to the peripheral wall 1954. More specifically, in this case, when the weight detected by the weighing sensor 1922 is greater than a predetermined threshold range, the output driving assembly is configured to drive the main box floor 1951 to move with the first stroke to enable the main box floor 1951 to be switched between the main box floor closed state and the main box floor open state; when the weight detected by the weighing sensor 1922 is within a predetermined threshold range, the main box floor 1951 can be driven to move with a second stroke greater than the first stroke to enable the main box floor 1951 to be switched between the main box floor closed state and the main box floor open state. The output drive assembly is further configured not to drive the auxiliary box 1960 to rotate during the first stroke, and to be able to drive the auxiliary box 1960 to rotate during the remaining stroke portion of the second stroke beyond the first stroke.

In embodiments in which the main box floor 1951 includes the first main half 1951a and the second main half 1951b that can be engaged with and separated from each other, as shown in Figs. 36, 37 and 38, when the weight detected by the weighing sensor 1922 is greater than the predetermined threshold range, the output drive assembly is configured to drive the second main half 1951b to move with a first stroke, more specifically drive the second main half 1951b to move away from or close to the first main half 1951a with a first stroke, so that the main floor 1951 is switched between the main floor closed state and the main floor open state; when the weight detected the weighing sensor 1922 is within a predetermined threshold range, the second main half 1951b can be driven to move with a second stroke, more specifically, the second main half 1951b of the main box floor 1951 can be driven to move away from or close to the first main half 1951a with the second stroke, so that the main box floor 1951 can be switched between its closed state and open state; wherein the second stroke is greater than the first stroke and the output drive assembly is configured not to drive the auxiliary box 1960 to rotate during the first stroke and to be able to drive the auxiliary box 1960 to rotate during the remaining stroke portion of the second stroke beyond the first stroke.

In a specific embodiment, as shown in Figs. 36-38, the output drive assembly is a linear motor module 1910 comprising a fixed slide rail 1911 and a movable slider 1912 which is slidable along the fixed slide rail 1911 and coupled to at least a portion of the main box floor 1951 (e.g., the entire main box floor or the second main half 1951b of the main box floor) and capable of rotating the auxiliary box 1960 during the remaining stroke portion of the second stroke beyond the first stroke. More specifically, the ice discharge mechanism 1900 includes a fixedly mounted support plate 1903 with respect to which the fixed slide rail 1911 is fixedly disposed.

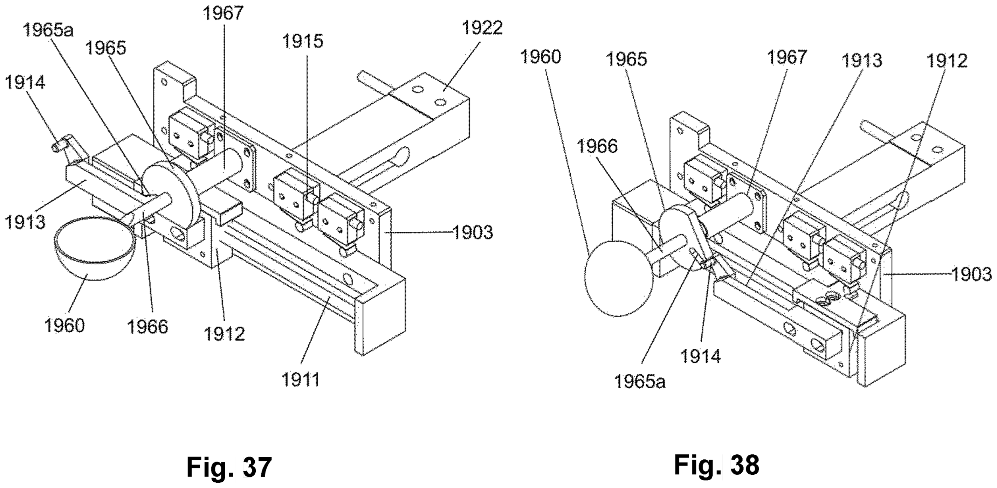

More specifically, as shown in Figs. 36-38, the linear motor module 1910 includes a linkage rod 1913 coupled to the movable slider 1912, the linkage rod 1913 being for example fixed to the movable slider 1912. The linkage rod 1913 includes a drive pin 1914, while the auxiliary box 1960 correspondingly includes a driven plate 1965 with a slot 1965a. During the above-described remaining stroke portion of the second stroke beyond the first stroke, the drive pin 1914 of the linkage rod 1914 can enter the slot 1965a of the driven plate 1965 to be able to drive the auxiliary box 1960 to rotate. More specifically, the auxiliary box 1960 includes a rotatable shank 1966, the driven plate 1965 is disposed to be coupled to the shank 1966 of the auxiliary box 1960, and the slot 1965a is disposed as a radial slot. More specifically, the shank 1966 may be arranged to be inserted into and rotatable in a sleeve 1967 which is fixedly arranged on the support plate 1903. In the specific embodiment shown in Figs. 37-38, the driven plate 1965 is disposed to be at least partially circular, and the slot 1965a is disposed to extend radially from the peripheral edge of the driven plate 1965 toward the shank 1966. When the drive pin 1914 enters the slot 1965a, as the drive pin 1914 moves with the movable slider 1912, the drive pin 1914 will apply force to a slot sidewall of the driven plate 1965 surround the slot 1965a, thereby causing the shank 1966, and thus the auxiliary box 1960 to rotate, for example, within an angular range of 180 °.

More specifically, in this particular embodiment, as shown in Figs. 36 and 37, the ice discharge mechanism 1900 may further include a fixedly disposed sensing assembly 1915, such as fixedly disposed on the support plate 1903, which is capable of communicating with the programmable logic controller such that if the weight sensed by the weighing sensor 1922 is greater than the predetermined threshold range, the presence of the movable slider 1912 can be sensed when the movable slider 1912 is at the end of the first stroke and the sensing can be transmitted to the programmable logic controller to allow the latter to control the movable slider 1912 to stop there without further movement.

The ice discharge chamber 1170 is configured to allow the ice discharge mechanism 1900 to discharge ice cubes to, for example, the blending cup 2201 on the second revolving member 2250, 3250 of the multi-station dual-revolving module 2000, 3000 to be described below. In some embodiments, the ice discharge chamber 1170 includes an ice discharge chamber floor 1171 in which an ice outlet 1171a (shown in Figs. 3, 28, 29, 31) allowing the passage of ice cubes is provided, the ice outlet 1171a being configured to be closed and openable by the main box 1950 and/or the auxiliary box 1960.

More specifically, as shown in Figs. 28-29, 31, and 33, when the auxiliary box 1960 is located above or inside the main box 1950, the ice outlet 1171a in the ice discharge chamber floor 1171 may be closed or opened by the main box floor 1951, that is, closed or opened as the main box floor 1951 is in its closed or open state. When the auxiliary box 1960 is positioned next to the main box 1950, the ice outlet 1171a in the ice discharge chamber floor 1171 may be closed or opened by the main box floor 1951 and the auxiliary box floor 1961, that is, closed or opened as the main box floor 1951 and the auxiliary box floor 1961 are in the closed or open state. This ensures that the temperature of the ice discharge chamber 1170 is not affected at any time.

More specifically, as shown in Figs. 28-29 and 33, a funnel-shaped guide portion 1172 aligned with the ice outlet 1171a is provided below the ice discharge chamber floor 1171 of the ice discharge chamber 1170, and will align with the blending cup 2201 on the second revolving member 2250, 3250 of the multi-station dual-revolving module 2000, 3000, which will be described in detail below, to guide the ice cubes into the blending cup 2201 when the ice cubes coming out of the ice outlet 1171a falls into the blending cup 2201.

### 1.3 Storage and supply of liquid materials and milk caps

### 1.3. 1 Material bucket

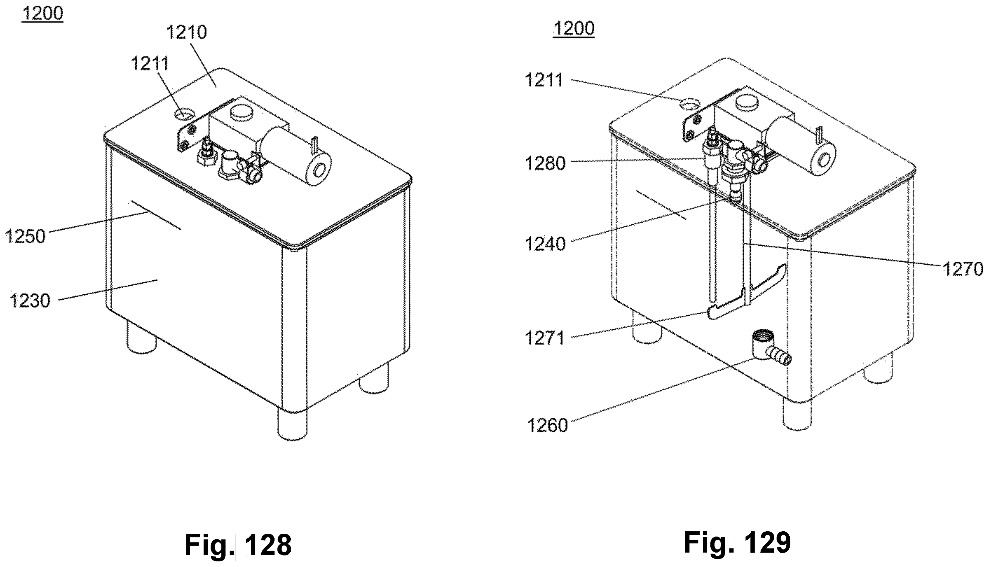

As mentioned above, the material storage device 1100 may include liquid material buckets for storing various liquid materials and milk cap buckets for storing milk caps, collectively referred to as material bucket 1200, as shown in Figs. 128-131. It should be noted that the size and volume of the material buckets can vary according to actual needs.

In some embodiments, as shown in Figs. 128-131, each material bucket 1200 includes a top lid 1210, a bottom 1220 disposed opposite the top lid 1210, and a peripheral wall 1230 extending between the top lid 1210 and the bottom 1220, the top lid 1210, the bottom 1220 together with the peripheral wall 1230 defining an accommodation space of the material bucket 1200 that can receive and store corresponding liquids or cream milk caps. In addition, a cleaning spray ball 1240 for cleaning the material bucket 1200, which is, for example, a 360° self-rotating high-pressure cleaning spray ball, may be provided in the material bucket 1200. In a specific embodiment, the cleaning spray ball 1240 is disposed adjacent to the top lid 1210, i.e. slightly below the top lid 1210, which ensures no dead zone exists within the material bucket 1200 which the cleaning spray ball 1240 cannot clean. More specifically, the cleaning spray ball 1240 is secured to the top lid 1210. More specifically, to prevent the cleaning spray ball 1240 from being submerged by the liquid material, a maximum liquid level marker 1250may be provided on the material bucket 1200 below the cleaning spray ball 1240, such as an engraved line on the peripheral wall 1230, to remind the operator not to exceed the maximum liquid level marker 1250 when adding material to the material bucket 1200. Further, the material bucket 1200 further includes an inlet pipe disposed in fluid communication with the cleaning spray ball 1240 such that a cleaning fluid can be delivered to the cleaning spray ball 1240 via the inlet pipe. The material bucket 1200 is further provided with a discharge port 1260 in the bottom 1220 that can be used to discharge residual material or cleaning fluid out of the material bucket 1200.

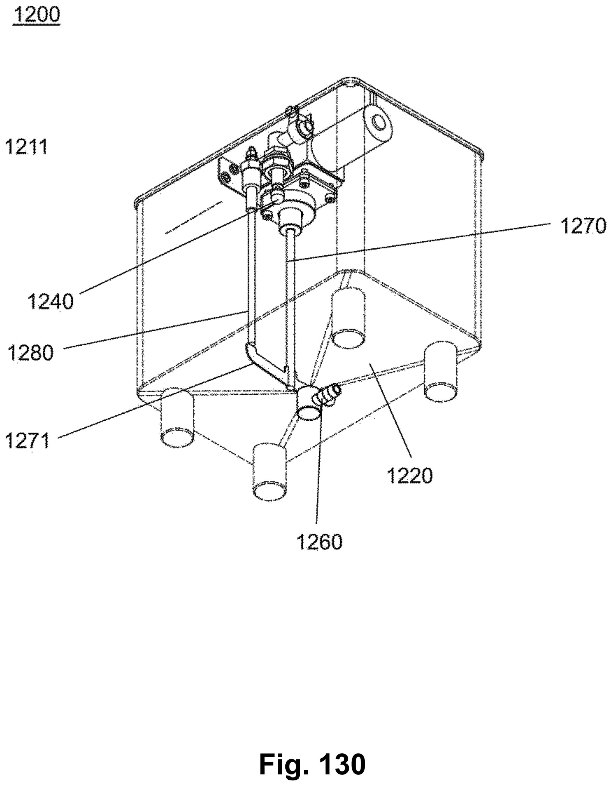

In a specific embodiment, as shown in Fig. 130, the bottom 1220 of the material bucket 1200 is configured to be tapered toward the discharge port 1260, which is located at a bottommost part of the entire material bucket 1200, which can ensure that the materials, residues and cleaning fluids in the material bucket 1200 can be smoothly and completely discharged through the discharge port 1260, thereby preventing residual liquid or milk and contamination caused by its deterioration, and preventing residual cleaning fluids that may be harmful to the human body to ensure safety and hygiene. More specifically, as shown in Fig. 130, the bottom 1220 of the material bucket 1200 may be configured in a tapered shape, and the discharge port 1260 may be disposed at the apex of the tapered shape.

In some embodiments, as shown in Figs. 128 and 129, the top lid 1210 of the material bucket 1260 is provided with a feed port 1211 through which material can be added into the material bucket 1260. Optionally, a stirrer 1270 may be provided in the material bucket, and a stirring head 1271 of the stirrer is positioned close to the bottom 1220 of the material bucket 1200 to allow the material in the material bucket 1200 to be stirred, ensuring uniform product quality throughout the material bucket. More specifically, the stirrer 1270 may be driven by a motor to operate. Furthermore, in order to be able to indicate when material needs to be added, the material bucket 1260 further includes at least one level probe 1280 disposed in the accommodation space near the bottom 1220. More particularly, the level probe may be in the form of an electrode probe. Without the stirrer 1270, two level probes 1280 may be provided; while in the case where the stirrer 1270 is provided, only one level probe 1280 may be provided, and the stirrer 1270 may act as another level probe, it should be noted that the stirring head 1271 of the stirrer 1270 may be disposed lower than the level probe 1280 in this case to avoid interference with the stirring operation. Accordingly, when the level in the material bucket 1200 is below either level probe 1280, there is no electrical conduction between the two level probes, allowing a material-lacking alarm to be issued to alert the operator to add material. More specifically, the level probe 1280 and/or the stirrer 1270 are disposed on the top lid 1210 of the material bucket 1200.

In a specific embodiment, the feeding port 1211 of the material bucket 1200 is disposed close to the periphery of the top lid 1210. This allows material to be poured into the material bucket 1260 via the feed port 1211 without moving the material bucket 1200 in case wherein a plurality of material buckets 1200 arranged in rows, as shown in Figs. 128 and 129.

### 1.3. 2 Storage and supply of liquid materials

In some embodiments, as shown in Fig. 1, the material storage device 1100 of the material storage and supply module 1000 further includes at least one liquid material chamber 1180 for storing and supplying various liquid materials, and a plurality of liquid material buckets in the form of the material buckets described above may be provided in the liquid material chamber 1180, and a specific kind of liquid material is stored in the corresponding liquid material bucket.

In some embodiments, the liquid materials may include one or more of oolong tea, fruit-infused green tea, grape juice, strawberry juice, mango juice, grapefruit juice, cranberry juice, cranberry wine, lemon juice, green milk tea, fresh milk, cherish every drop, room temperature water, hot water, sucrose syrup, erythrose syrup, etc., or other liquid materials not listed herein but which can be used to make a beverage. Each liquid material is individually placed in the corresponding liquid material bucket. In a specific embodiment, the at least one liquid material chamber 1180 includes a thermostatic liquid material chamber, and different liquid materials can be placed in the corresponding thermostatic liquid material chambers according to different temperature control requirements.

In some embodiments, the beverages include smoothie beverages, non-smoothie fruit tea beverages (including cold fruit tea beverages and hot fruit tea beverages), and milk tea beverages (including cold milk tea beverages and hot milk tea beverages). The oolong tea, green tea fruit-infused green tea, grape juice, strawberry juice, mango juice, grapefruit juice, cranberry juice, lemon juice and the like among the liquid materials can be used to make smoothie beverages and non-smoothie fruit tea beverages, the green milk tea, fresh milk and cherish every drop among the liquid materials can be used to make milk tea beverages, and the room temperature water, hot water, sucrose syrup and erythrose syrup among the liquid materials can be used to make any kind of beverages according to actual needs.

In some embodiments, the material storage and supply module 1000 further includes respective peristaltic pumps for supplying respective liquid materials, the peristaltic pumps being arranged in fluid communication with a respective liquid material bucket to supply the liquid material to the liquid material feeding mechanism 2350 of the multi-station dual-revolving module 2000, 3000, which will be described in detail below, according to the amount of the liquid material required for the current beverage.

In a specific embodiment, a hot path and a cold path for supplying a liquid material from the peristaltic pump to the liquid material feeding mechanism 2350 are provided between the respective peristaltic pump and the liquid material feeding mechanism 2350, and an instantaneous heating rod is provided in the hot path for heating the respective liquid material when making a hot beverage. Examples of the hot beverages include fruit-infused green tea, green milk tea, oolong tea, and the like. The respective liquid guide tubes forming the hot path and the cold path are arranged to pass through the liquid guide tube outlet 1181 provided in the bottom wall of the liquid chamber 1180 of the material storage device 1100, preferably in a sealed manner, in order to ensure the freshness preservation and heat preservation and/or cooling effect of the liquid material chamber 1180.

### 1.3. 3 Storage and supply of milk caps

In some embodiments, as shown in Fig. 1, the material storage device 1100 of the material storage and supply module 1000 further includes at least one milk cap chamber 1190 for storing and supplying milk caps, in which at least one milk cap bucket 1192 in the form of the material bucket described above can be placed. The cream milk cap base liquids are stored in the milk cap buckets 1192. More specifically, the material storage and supply module 1000 further includes a whipping pump in fluid communication with the milk cap buckets 1192, and arranged to draw the cream milk cap base liquids from the milk cap buckets 1192 and whip the cream milk cap base liquids as needed for feeding the milk cap feeding mechanism 2450 of the multi-station dual-revolving modules 2000, 3000, which will be described in detail below. More specifically, the material storage and supply module 1000 further includes a milk cap guide tube disposed between the whipping pump and the milk cap feeding mechanism, which can pass through a milk cap guide tube outlet 1191 disposed in the bottom wall of the milk cap chamber 1190 of the material storage device 1100, preferably in a sealed manner, so as to ensure fresh-keeping and heat-preserving and/or cooling effects of the milk cap chamber 1190.

### 2. Multi-station dual-revolving module

The multi-station dual-revolving module 2000, 3000 is configured to make beverages in different stations. More specifically, different stations may perform respective operations simultaneously.

According to one embodiment, as shown in Figs. 4, 39-43, 48, 52-54, 72, the multi-station dual-revolving module 2000, 3000 for fully automatic beverage preparation includes a first revolving assembly 2100, 3100 and a second revolving assembly 2200, 3200. The first revolving assembly 2100, 3100 includes a first drive mechanism 3110 and a first revolving member 2150, 3150 configured to carry the finished-product cup 2101 and drivable by the first drive mechanism 3110 to move along a first trajectory passing through a plurality of first type stations. That is, the first revolving member 2150, 3150 can move along the first trajectory carrying the finished-product cup 2101 under the drive provided by the first drive mechanism 3110, so as to be able to pass through the plurality of first type stations at which a corresponding beverage making operation related to the finished-product cup 2101 is to be performed. It should be understood that the finished-product cup 2101 is a container used to hold the final beverage product, although the finished-product cup will also hold the beverage material(s) during the beverage making process. In a specific embodiment, the first revolving member 2150, 3150 are provided with cup holders 2151, 3151, and the finished-product cup 2101 is placed in the respective cup holders 2151, 3151 to move with the first revolving member 2150, 3150. The second revolving assembly 2200, 3200 includes a second drive mechanism 2210 and a second revolving member 2250, 3250 configured to carry the blending cup 2201 and drivable by the second drive mechanism 2210 to move along a second trajectory passing through a plurality of second type stations. That is, the second revolving member 2250, 3250 can move along the second trajectory carrying the blending cup 2201 under the drive provided by the second drive mechanism 2210, so as to be able to pass through the plurality of second type stations at which a corresponding beverage-making operation related to the blending cup 2201 is to be performed. It should be understood that the blending cup 2201 is a container used to temporarily hold or handle related materials during the preparation of a beverage.

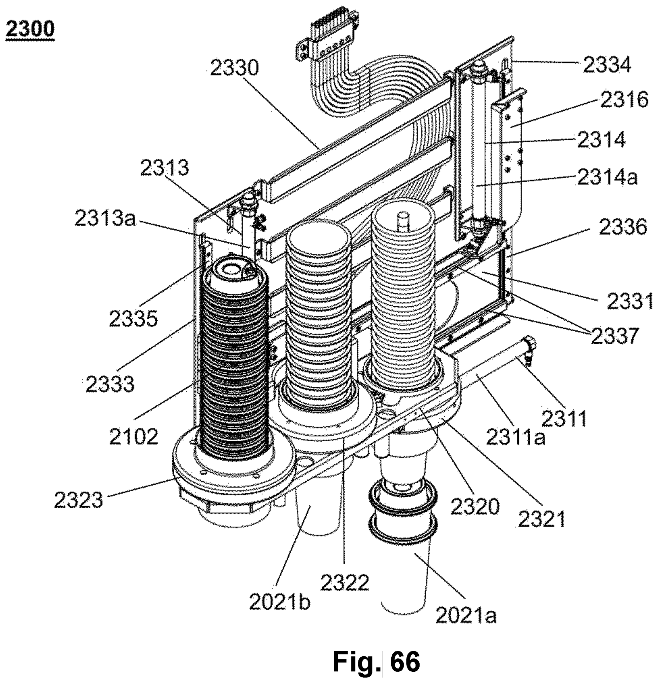

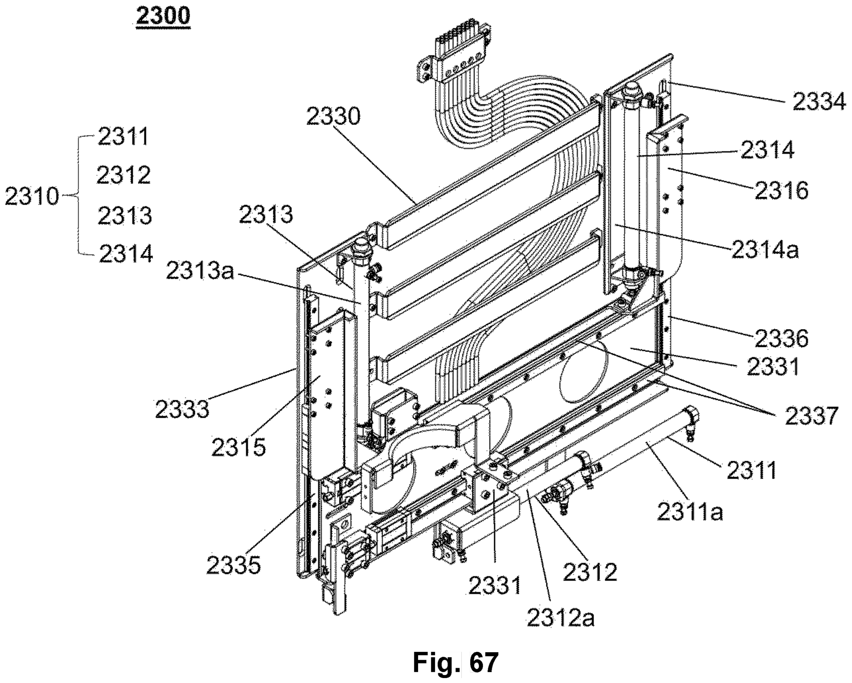

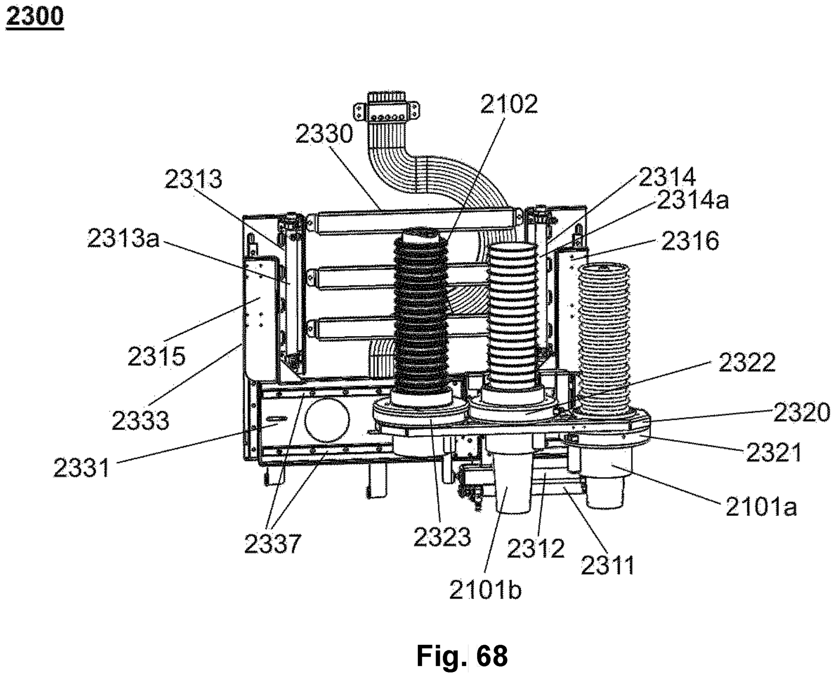

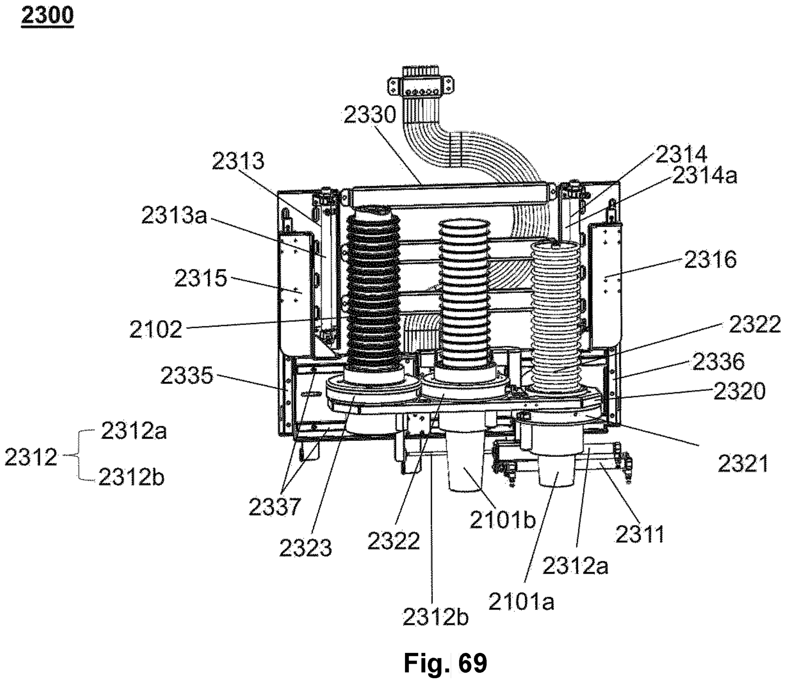

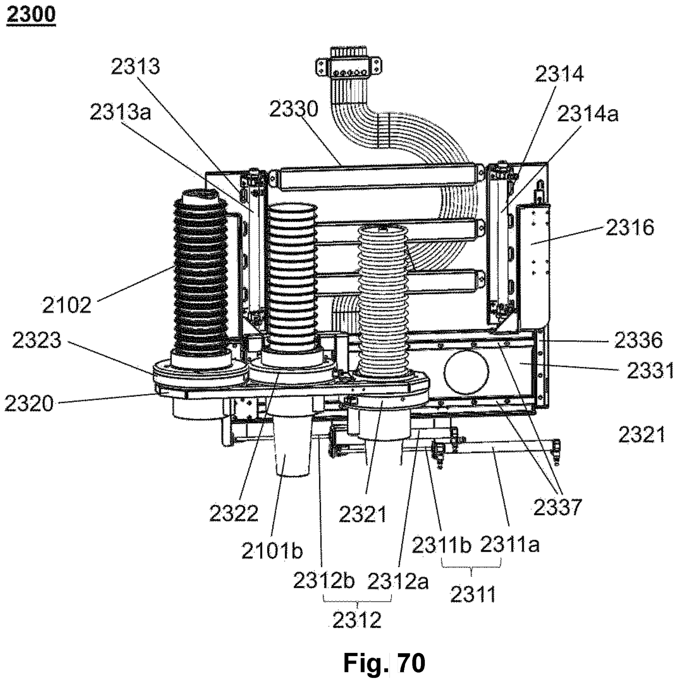

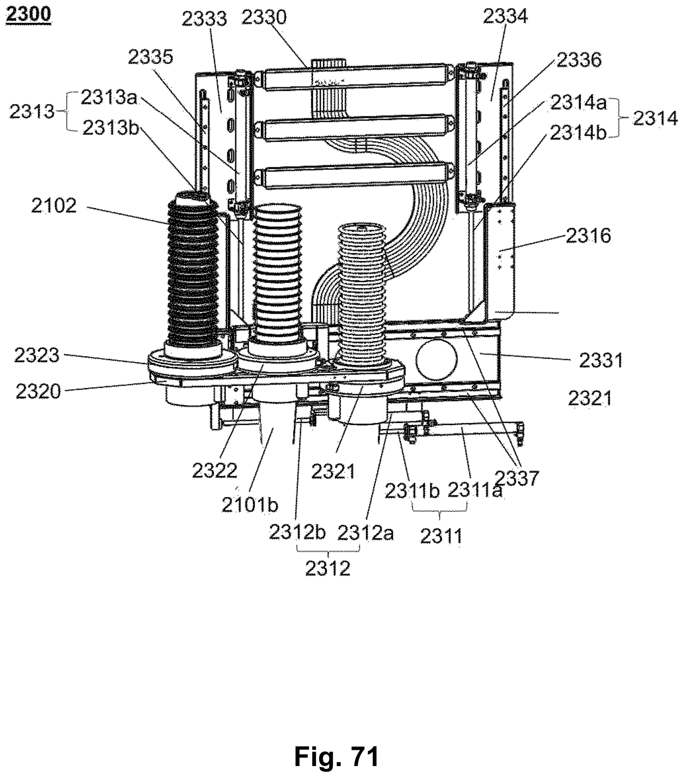

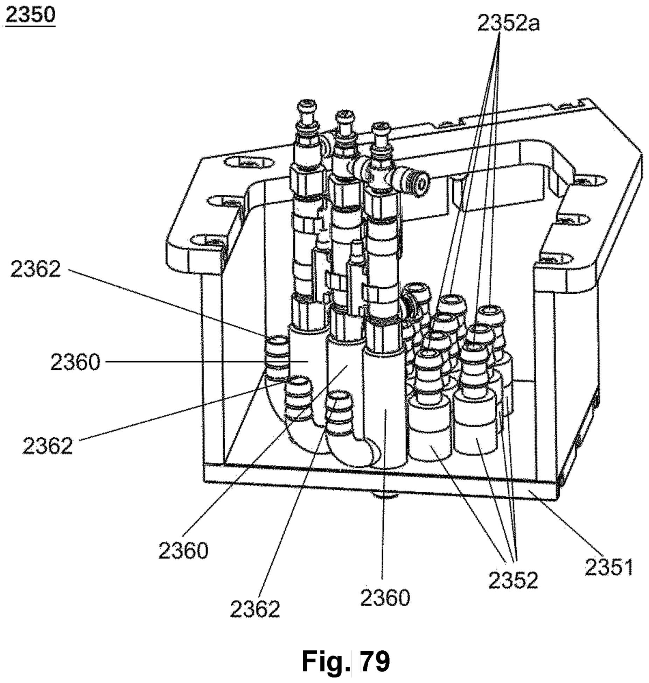

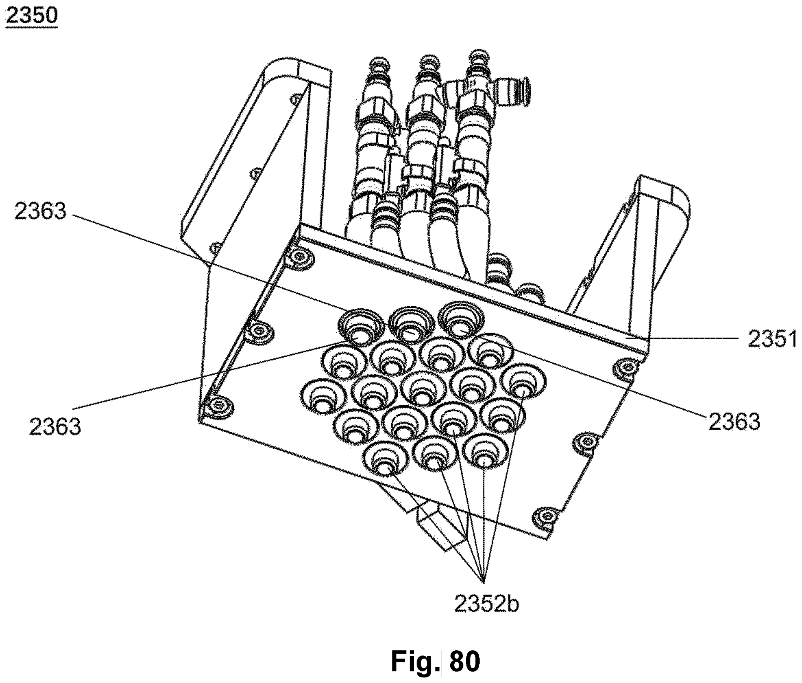

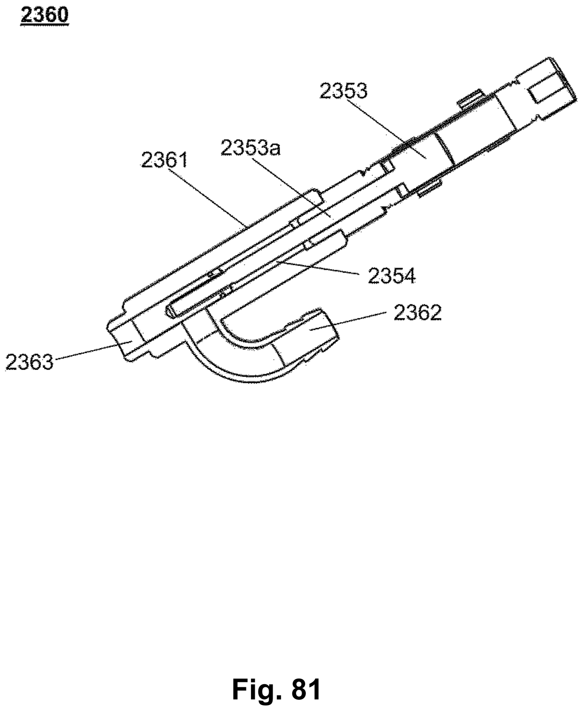

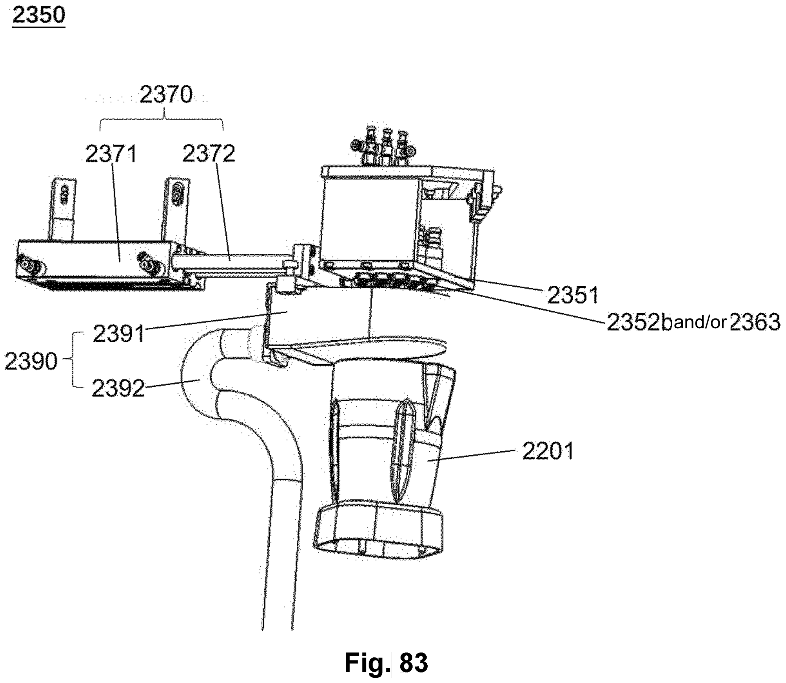

In order to realize beverage making, the plurality of first type stations include at least a container dropping station and a first pouring station. Here, the container refers to the finished-product cup 2101 and/or the finished-product cup lid 2102. It should be noted that the finished-product cups 2101 may include different kinds of finished-product cups, which are different, for example, in material and/or height. It should also be noted that the finished-product cup lid 2102 may include different kinds of finished-product cup lids to, for example, fit different kinds of finished-product cups. The plurality of second type stations comprise at least a liquid material feeding station and a second pouring station. Correspondingly, the multi-station dual-revolving modules 2000, 3000 further include a container dropping mechanism 2300, 3300 (shown in Figs. 66-71 and 103) and a liquid material feeding mechanism 2350 (shown in Figs. 79-84). The container dropping mechanism 2300, 3300 is configured at least to drop the finished-product cups onto the first revolving member 2150, 3150, more specifically into the respective cup holders 2251, 3251 fixed on the first revolving member 2150, 3150 at the container dropping station. The liquid material feeding mechanism 2350 is configured to perform at least liquid material feeding operation of feeding liquid material into the blending cup 2201 at the liquid material feeding station. Various mechanisms are described in detail below.

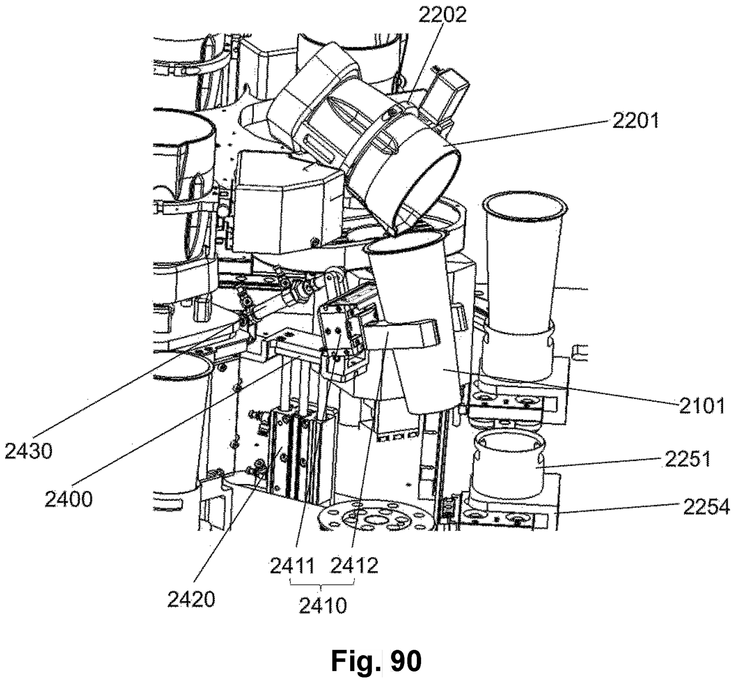

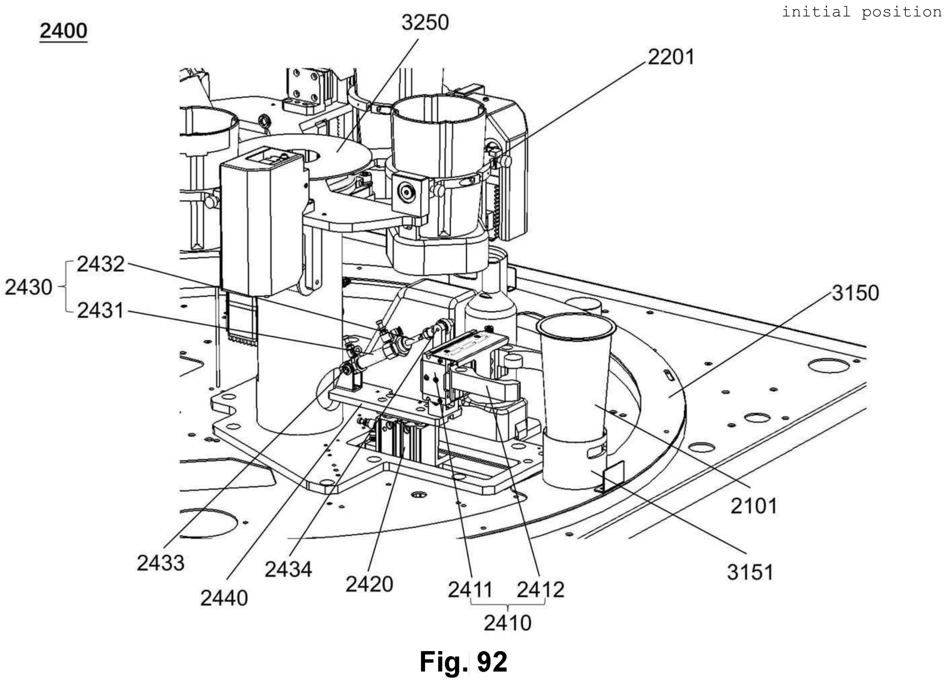

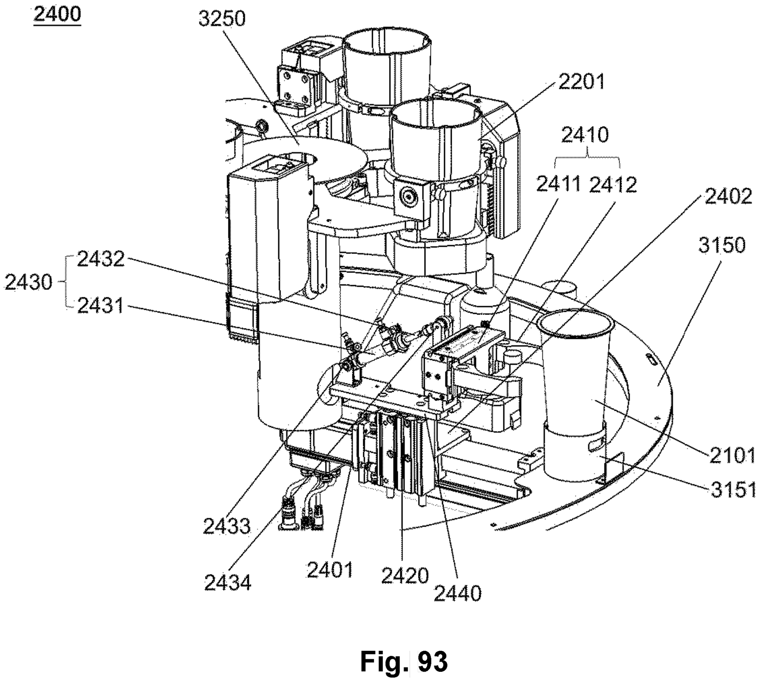

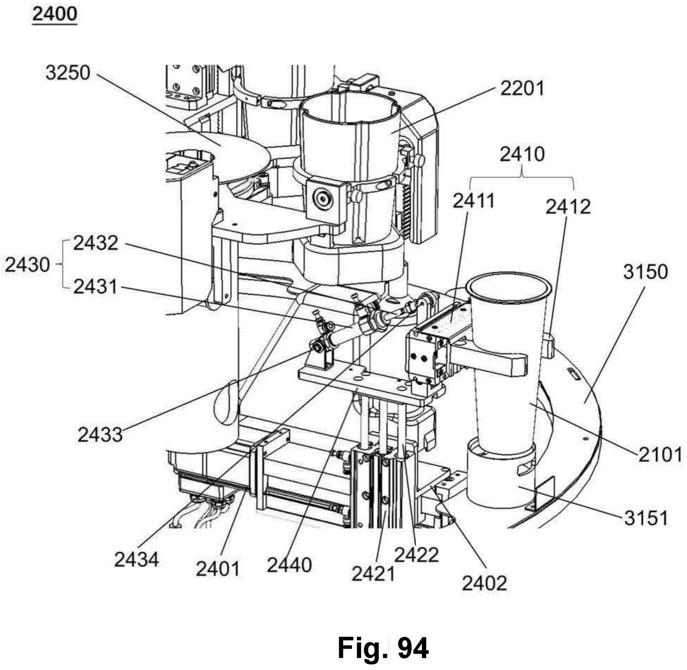

Further, the multi-station dual-revolving module 2000, 3000 is configured such that the first pouring station on the first revolving member 2150, 3150 corresponds to the second pouring station on the second revolving member 2250, 3250, and when the finished-product cup 2101 is located at the first pouring station during operation, the corresponding blending cup 2201 should be located at the second pouring station to enable pouring operation between the blending cup 2201 and the finished-product cup 2101, as shown in Figs. 90 and 92-96. Accordingly, the multi-station dual-revolving module 2000, 3000 further includes a pouring mechanism 2400 that performs a pouring operation at the first pouring station and the second pouring station, and the pouring operation includes pouring the material in the blending cup 2201 into the finished-product cup 2101. For example, some beverage materials may require some preliminary processing in the blending cup 2201 and therefore need to be first poured into the blending cup 2201 and then poured from the blending cup 2201 to the finished-product cup 2101. The pouring mechanism 2400 will be described in detail below.

As such, in the multi-station dual-revolving module 2000, 3000 proposed by the present invention, the first revolving assembly 2100, 3100 and the second revolving assembly 2200, 3200 can operate independently and cooperatively, more specifically, the first revolving member 2150, 3150 and the second revolving member 2250, 3250 are driven by the first drive mechanism 3110 and the second drive mechanism 2210, respectively to perform independent movements, while allowing the operations at stations other than the first and second pouring stations to be performed independently of each other, and also ensuring the coordinated operations of the first and second pouring stations to achieve fully automated beverage making in an efficient way.

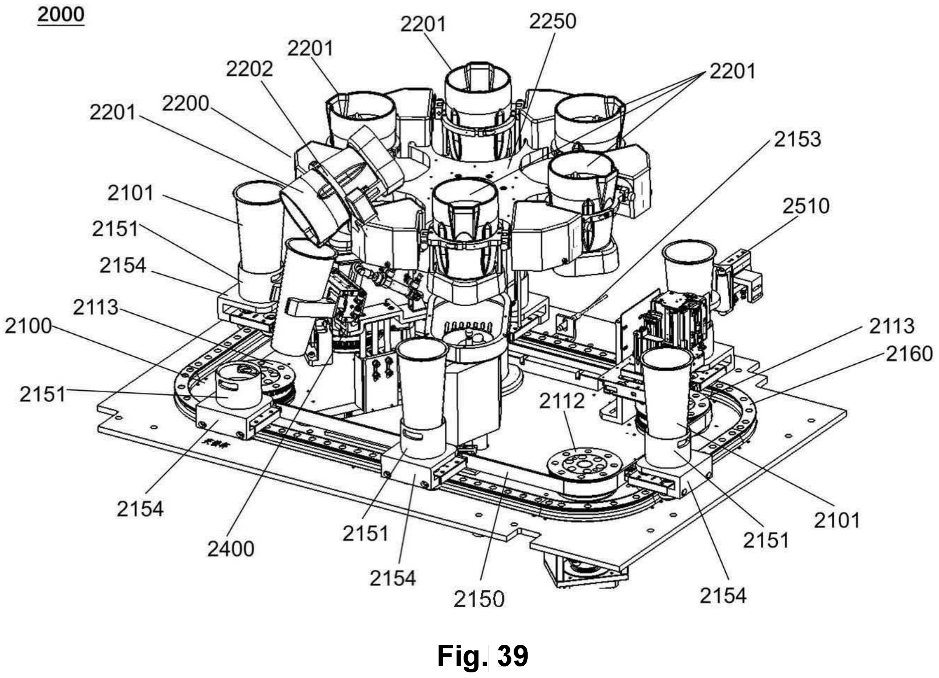

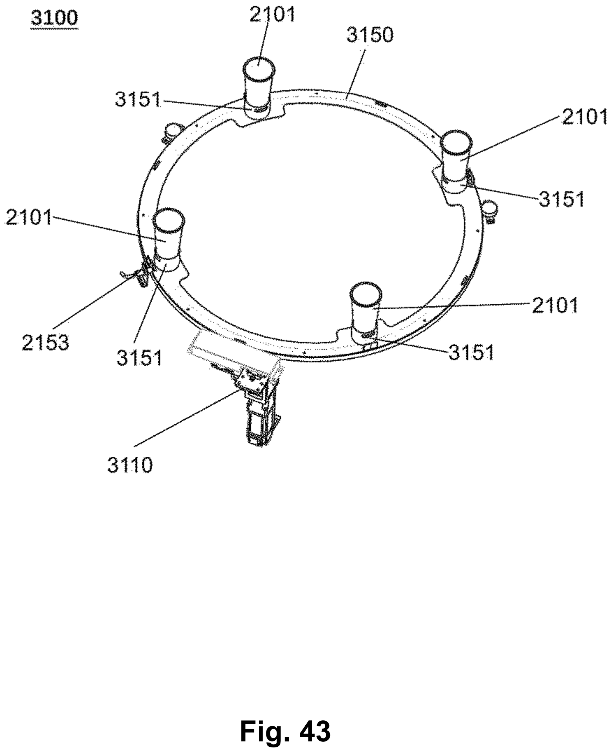

In some specific embodiments, the first revolving member 3150 may be in the form of a turntable, referred to as a first turntable 3150, as shown in Figs. 43-44 and 92-96. In some specific embodiments, the first revolving member 2150 may be in the form of a revolving belt, referred to as a first revolving belt 2150, as shown in Figs. 39-41, 48, and 72. According to different embodiments, the first revolving members 2150, 3150 may carry a different number of finished-product cups, such as four to six finished-product cups. More specifically, the first revolving members 2150, 3150 may operate continuously to simultaneously carry four to six finished-product cups 2101 and simultaneously perform respective operations associated with respective finished-product cups 2101 at respective first type stations.

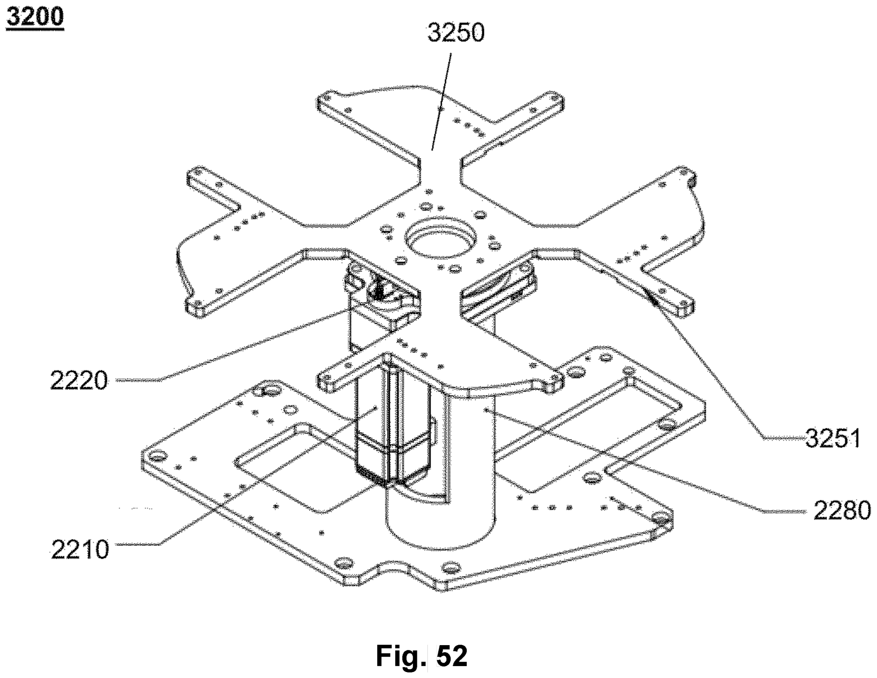

In a specific embodiment, as shown in Figs. 52, 53-54, 65, and 72, the second revolving assembly 2200, 3200 is supported by a support column 2280 disposed within a region surrounded by the first revolving member 2150, 3150. More specifically, the support column 2280 may be located at or near the center of the region.

In some embodiments, as shown in Figs. 2, 39-42, 52-54, 64-65, 92-96, the second revolving member 2250, 3250 may be in the form of a turntable, referred to as a second turntable. As shown in Fig. 52, the second turntable may comprise a plurality of circumferentially distributed branch portions 3251, each for carrying one respective blending cup 2201, for example 4-6 branch portions, preferably circumferentially uniformly distributed. More specifically, the second revolving members 2250, 3250 may be supported by the support column 2280 to be further from the bottom of the support column 2280 than the first revolving members 2150, 3150; of course, such an embodiment is merely exemplary and not exclusive, and the relative height positions between the first and second revolving members 2150, 3150 and 2250, 3250 can be adjusted according to actual needs. Further, in the radial direction, the second revolving member 2250, 3250 may be disposed at least partially within the first revolving member 2150, 3150; of course, this embodiment is merely exemplary and not exclusive, and the relative radial positions between the first revolving members 2150, 3150 and the second revolving members 2250, 3250 can be adjusted according to the actual needs. According to different embodiments, the second revolving members 2250, 3250 may carry a different number of blending cups 2201, for example four to six blending cups 2201. More specifically, the second revolving members 2250, 3250 may simultaneously carry four to six blending cups 2201 and operate continuously to simultaneously perform respective operations associated with respective blending cups 2201 at respective second type stations.

The multi-station dual-revolving modules 2000, 3000 proposed by the present invention may comprise respective origin detection assemblies for determining the origin of some movable parts, components, mechanisms, assemblies, elements, etc. to help ensure proper operation of the multi-station dual-revolving module. It should be noted that, herein, "origin" may be understood as a position or state in which a corresponding component, member, mechanism, assembly, element, etc. is ready for operation, but has not yet begun operation. More specifically, these movable parts, members, mechanisms, assemblies, elements are ideally at their origin prior to each operation.

In some embodiments, the multi-station dual-revolving module 2000, 3000 may include a first origin detection assembly for determining an origin of the first revolving member 2150, 3150. Specifically, as shown in Figs. 39-40, 43, 48, the first origin detection assembly may include a first metal piece disposed on the first revolving member 2150, 3150, and a first sensor 2153 disposed near the first trajectory along which the first revolving member 2150, 3150 moves, and capable of detecting the first metal piece; more specifically, the first sensor 2153 is a proximity sensor capable of detecting the proximity or presence of the first metal piece. Further, the first sensor 2153 is arranged to be able to communicate with a main control module (e.g., a PLC) to send a detection signal to the main control module upon detection of the first metal piece, so that the main control module can provide an indication that the first revolving member 2150, 3150 has been at the origin.

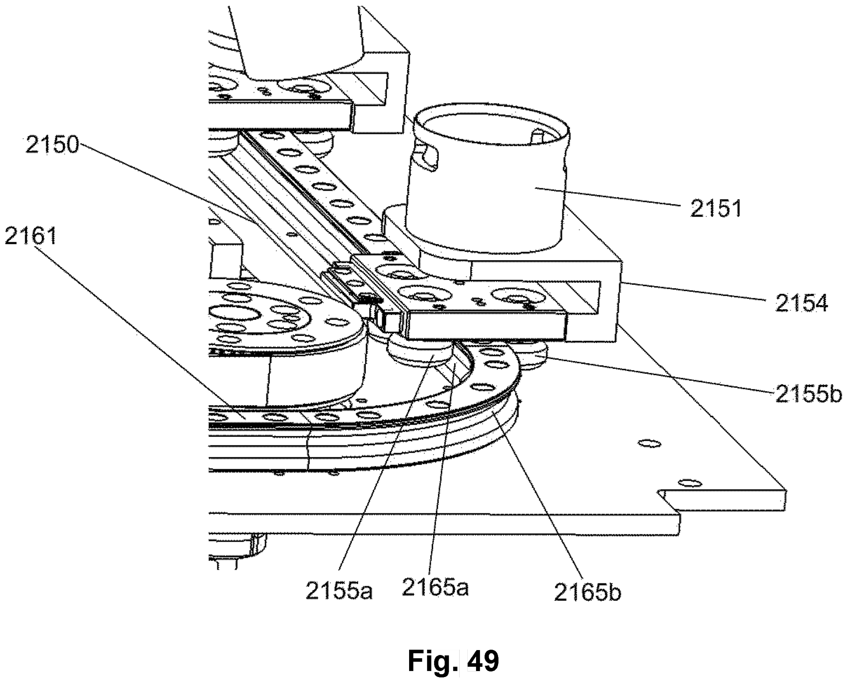

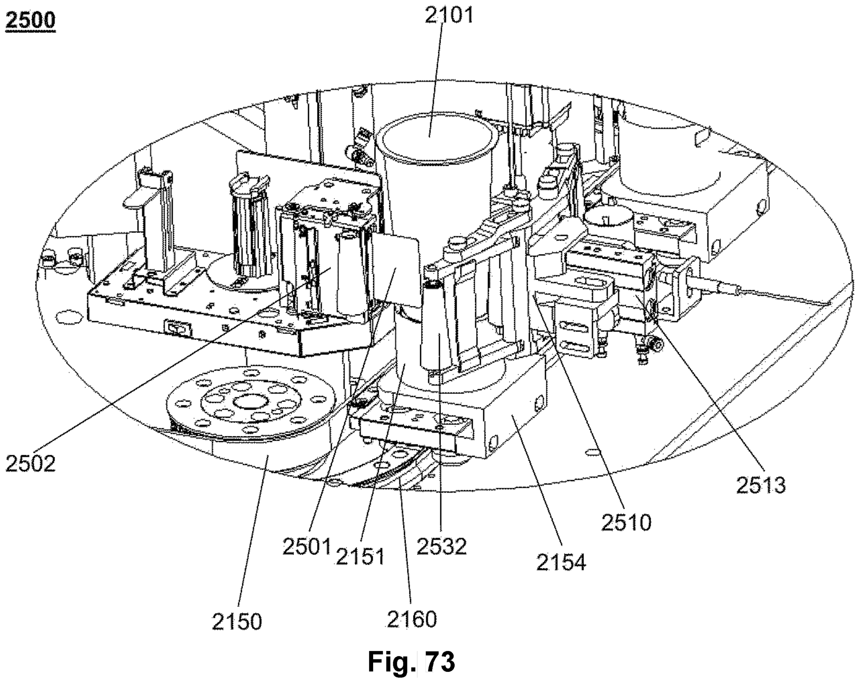

In some specific embodiments, as shown in Figs. 4, 6, 39-40, 48-49, 72-73, the first revolving member 2150, 3150 is provided with cup holders 2151, 3151, for example, a plurality of cup holders 2151, 3151, for example, 3-6 cup holders 2151, 3151, and in each cup holder 2151, 3151 the finished-product cup 2101 can be placed so that the cup holder can carry the finished-product cup 2101 to move, that is, as many or fewer finished-product cups 2101 than the number of the cup holders 2151, 3151 can be present on the first revolving member 2150, 3150 at the same time. In this case, the first metal piece of the first origin detection assembly may be provided in each cup holder 2151, 3151. Accordingly, the first sensor 2153 can detect the first metal piece in each cup holder 2151, 3151, and regardless of which of which cup holder's first metal piece is detected by the first sensor 2153, it indicates that the first revolving member 2150, 3150 is at the origin.

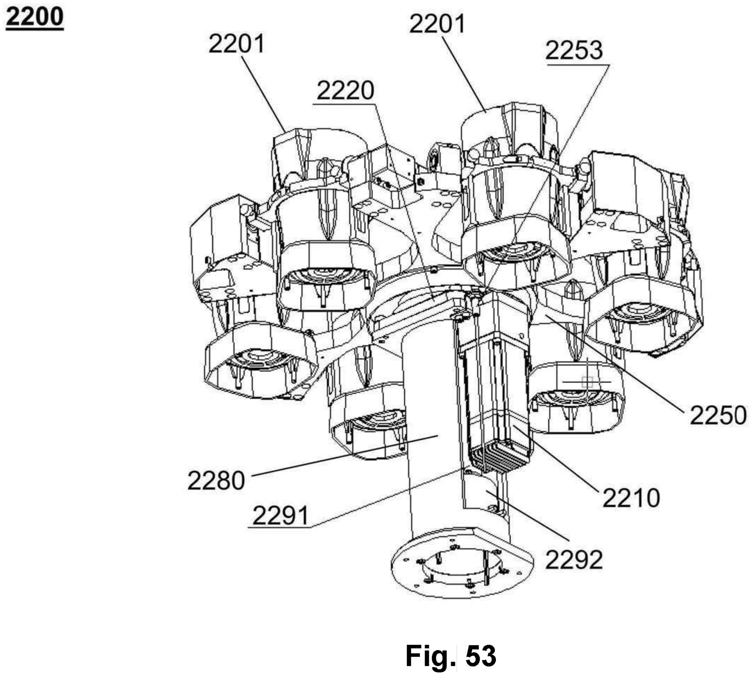

In some embodiments, the multi-station dual-revolving module 2000, 3000 may further include a second origin detection assembly for determining an origin of the second revolving member 2250, 3250. Specifically, as shown in Fig. 53, the second origin detection assembly may include a second metal piece disposed on the second revolving member 2250, 3250, and a second sensor 2253 fixedly disposed with respect to the support column 2280 supporting the second revolving member 2250, 3250, and capable of detecting the second metal piece; more specifically, the second sensor 2253 is a proximity sensor capable of detecting the proximity or presence of the second metal piece. Further, the second sensor 2253 is arranged to be able to communicate with the main control module to send a detection signal to the main control module when the second metal piece is detected, so that the main control module can provide an indication that the second revolving members 2250, 3250 have been at the origin.

### The first drive mechanism when the first revolving member is the first turntable

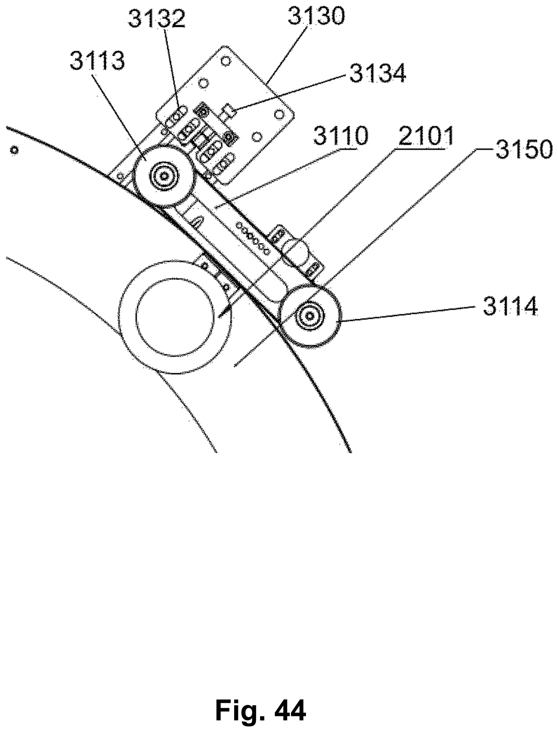

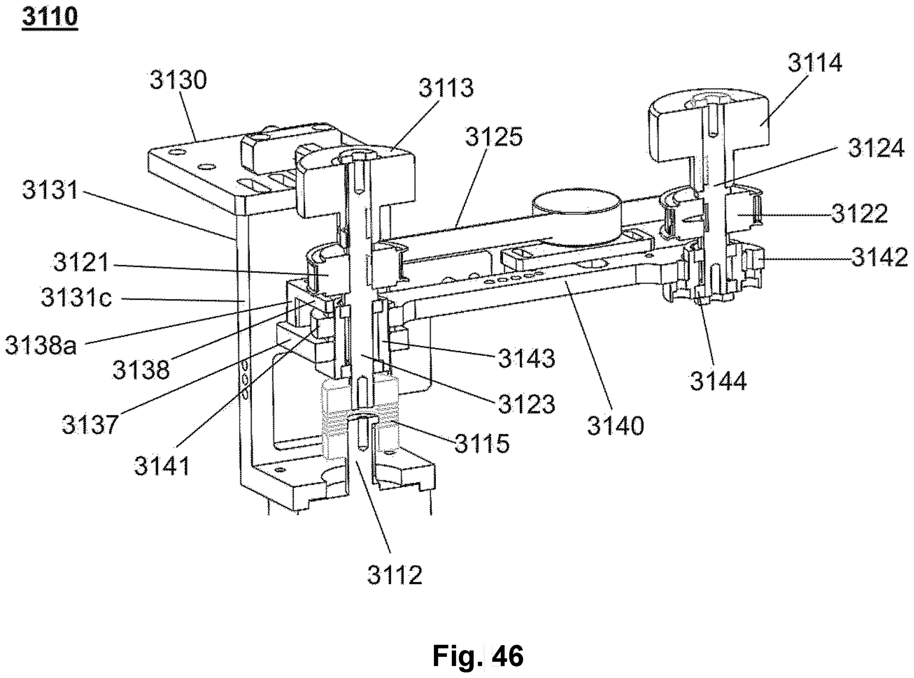

As described above, in some embodiments, as shown in Figs. 43-44 and 92-96, the first revolving member 3150 is a first turntable. In such an embodiment, as shown in Figs. 44-47, the first drive mechanism 3110 for driving the first revolving member 3150 to move may then be configured to include a first motor 3111, a first transmission assembly, and at least one roller 3113, 3114. The first transmission assembly is configured to be driven by the first motor 3111, and the at least one roller 3113, 3114 is configured to be driven to rotate by the first transmission assembly, and the at least one roller 3113, 3114 is arranged to abut against the outer edge of the first turntable 3150 so as to be able to rotate the first turntable 3150 by friction between the outer peripheral surface of the first roller 3113, 3114 and the outer peripheral surface of the first turntable 3150 during rotation. In a more specific embodiment, the at least one roller 3113, 3114 is an embossed rubber-covered roller.

In a specific embodiment, as shown in Figs. 44-47, the first drive mechanism 3110 includes two rollers, namely a first roller 3113 and a second roller 3114. The first transmission assembly is configured to include a first driving shaft 3123 coupled to a first roller 3113, and a first driven shaft 3124 coupled to a second roller 3114, wherein the first driving shaft 3123 is driven to rotate by the first motor 3111 and thus able to drive the first roller 3113 to rotate, and the first driven shaft 3124 is rotatable with the first driving shaft 3123 and thus able to drive the second roller 3114 to rotate. More specifically, the first motor 3111 includes a first motor shaft 3112, and the first driving shaft 3123 is configured to be coupled to the first motor shaft 3112 to be rotatable with the first motor shaft 3112; for example, the first driving shaft 3123 may be rotationally coupled to the first motor shaft 3112 by a first coupling 3115. The first transmission assembly may further comprise: a first drive wheel 3121 configured to be coupled to the first driving shaft 3123 to be rotatable with the first driving shaft 3123, the first drive wheel 3121 being, for example, interference fitted, riveted, splined or even welded to the first driving shaft 3123; a first driven wheel 3122 configured to be coupled to the first driven shaft 3124 so as to be rotatable with the first driven shaft 3124, the first driven wheel 3122 being, for example, interference fitted, riveted, splined or even welded to the first driven shaft 3124; a first synchronous belt 3125 provided so as to be driven to rotate by the first driving wheel 3121 and by the first driven wheel 3122 at the same time. As such, the first motor 3111 can simultaneously drive the first roller 3113 and the second roller 3114 to rotate through the first transmission assembly.

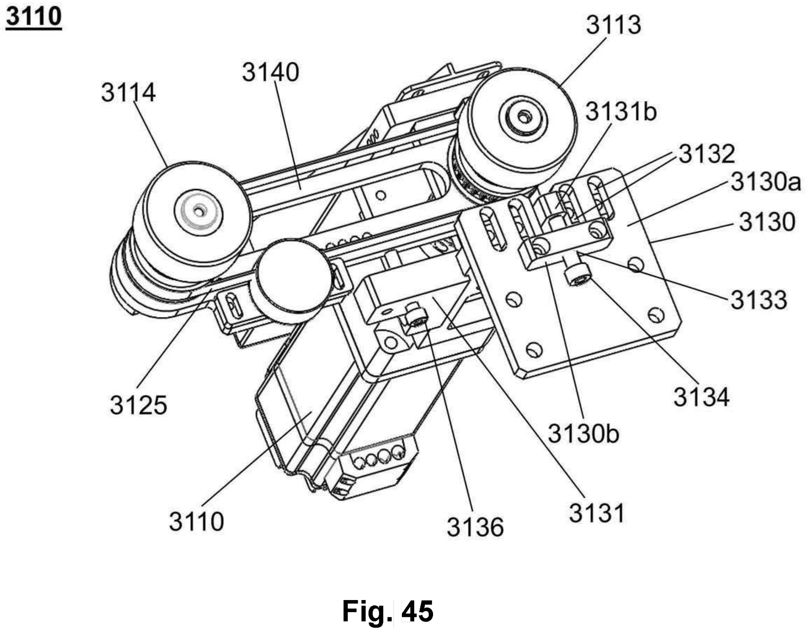

In some specific embodiments, as shown in Figs. 45-47, the first drive mechanism 3110 is further configured to include a first mounting plate 3130 fixedly disposed, which is more specifically fixed to a frame, and a first mounting seat 3131 mounted on the first mounting plate 3130 for supporting the first motor 3111 and the first transmission assembly. In order to be able to adjust the fitness of the at least one roller 3113, 3114 with respect to the outer peripheral surface of the first turntable 3150 as needed to generate a desired frictional force between the rollers 3113, 3114 and the first turntable 3150, the first mounting seat 3131 is mounted such that its distance with respect to the outer peripheral surface of the first turntable 3150 is adjustable. In a more specific embodiment, to achieve this adjustability, one or more elongated holes 3132 are provided in the first mounting plate 3130 through which bolts can be threaded and thus can be threaded into the first mounting seat 3131 to mount the first mounting seat 3131 to the first mounting plate 3130. In such an embodiment, more specifically, the first drive mechanism 3110 may further include a first pressing screw 3314 disposed through a first threaded hole 3133 in the first mounting seat 3131 and having a free end capable of abutting the first mounting seat 3131 to allow adjustment of the distance of the first mounting seat 3131 with respect to the outer peripheral surface of the first turntable 3150 by screwing the first pressing screw 3134, thereby allowing adjustment of the fitness between the rollers 3113, 3114 and the outer peripheral surface of the first turntable 3150. For example, as shown in Fig. 45, in order to facilitate a compact configuration, the first threaded hole 3133 is provided in a protruding plate 3130b of the first mounting plate 3130 protruding with respect to a main body plate 3130a thereof, and the first mounting seat 3131 is provided with a protrusion 3131b corresponding to the protruding plate 3130b, and the first pressing screw 3134 can pass through the protruding plate 3130b and abut the protrusion 3231b.

In some specific embodiments, as shown in Figs. 45-47, the first transmission assembly further includes a transmission assembly mounting plate 3140 mounted to a first mounting seat 3131, and including a first plate end 3141 and a second plate end 3142 opposite to each other, a first bearing housing supporting a first bearing 3143 for the first driven shaft 3123 being provided at the first plate end 3141, while a second bearing housing supporting a second bearing 3144 for the first driven shaft 3124 being provided at the second plate end 3142, the transmission assembly mounting plate 3140 being arranged to be rotatable over an angular range about the first driven shaft 3123. Thus, the rotatability of the transmission assembly mounting plate 3140 ensures that both the first roller 3113 and the second roller 3114 can produce a desired fitness with the outer peripheral surface of the first turntable 3150 during operation of the multi-station dual-revolving module 3000. Further, the first drive mechanism 3110 may further include a second pressing screw 3136 disposed through a second threaded hole 3135 of the first mounting seat 3131, and a free end of the second pressing screw 3136 is disposed to be able to abut the transmission assembly mounting plate 3140 to allow the angular position of the transmission assembly mounting plate 3140 about the first driving shaft 3123 to be adjusted by screwing the second pressing screw 3136. This allows the rotation angle of the transmission assembly mounting plate 3140 about the first driving shaft 3123 to be adjusted according to actual needs, thereby adjusting the degree of fitness of the first roller 3113 and the second roller 3114 against the outer peripheral surface of the first turntable 3150.

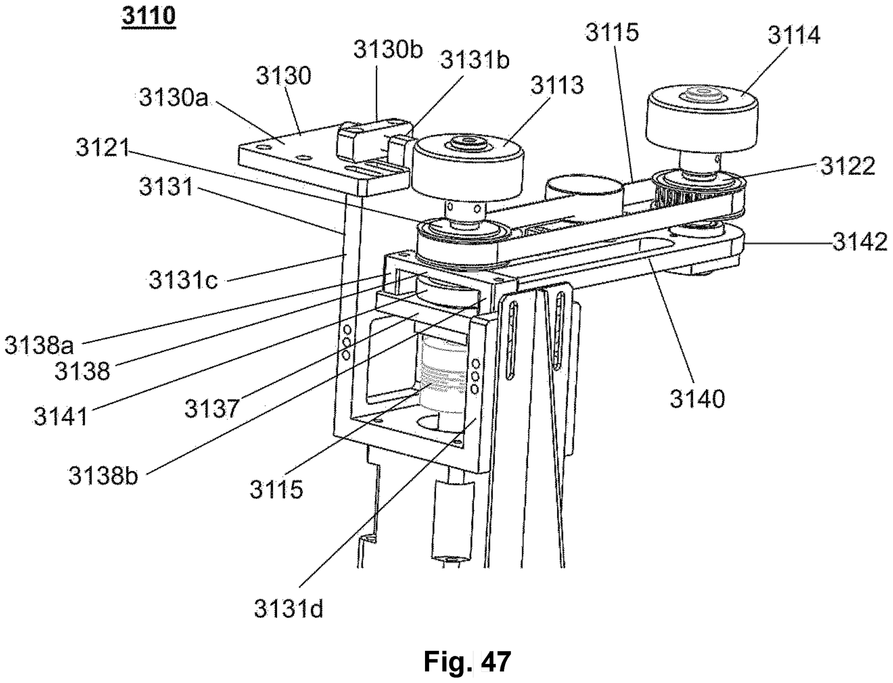

In some specific embodiments, as shown in Figs. 45-47, the first transmission assembly may further include a first connecting plate 3137 and a pressing block 3138 fixed to the first mounting seat 3131, between which the first plate end 3141 of the transmission assembly mounting plate 3140 is disposed to define a height position of the first transmission assembly and prevent position shifting of the first transmission assembly in the height direction. More specifically, as shown in Fig. 47, the first mounting seat 3131 has a U-shaped portion including a first branch plate 3131c and a second branch plate 3131d disposed in parallel to each other, the first connecting plate 3137 being fixed between the first branch plate 3131c and the second branch plate 3131d, and the press block 3138 is provided in a U-shape and includes a first leg 3138a and a second leg 3138b that can be fixed to the first connecting plate 3137.

### The first drive mechanism when the first revolving member is a first revolving belt

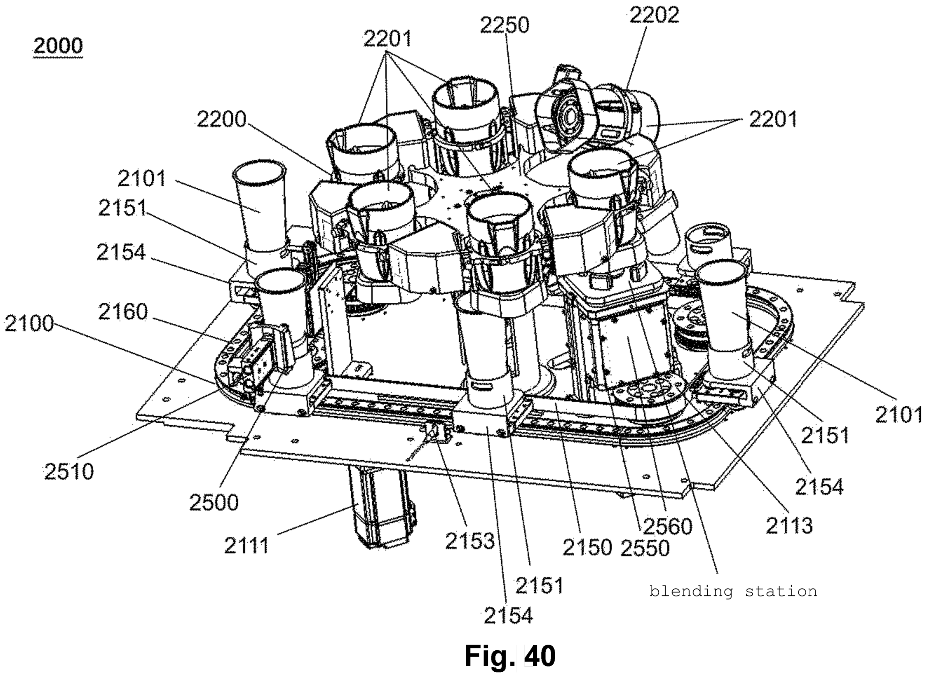

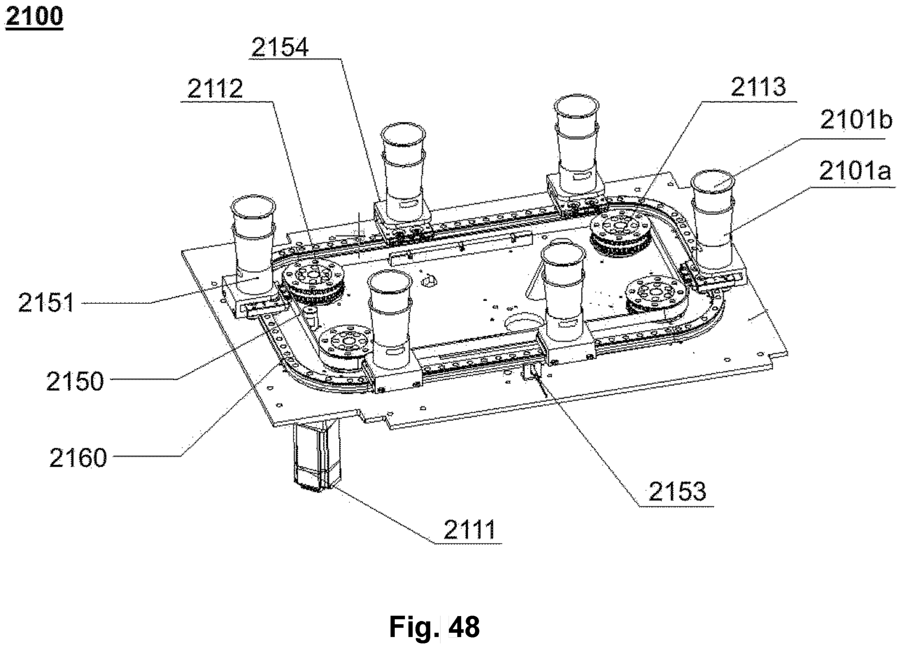

As described above, in some embodiments, as shown in Figs. 39-41, 48, and 72, the first revolving member 2150 is a first revolving belt. In such an embodiment, the first drive mechanism may be configured to include a second motor 2111 capable of driving the first revolving belt 2150 to perform revolving motion, as shown in Figs. 40 and 48. For example, the second motor 2111 may be a stepper motor. More specifically, the first drive mechanism may further include a second driving wheel 2112 configured to be driven by the second motor 2111 and to be able to rotate the first revolving belt 2150.

In a more specific embodiment, as shown in Figs. 40 and 48, the first drive mechanism further includes at least two second driven wheels 2113, and the first revolving belt 2150 is looped over the second driving wheel 2112 and the at least two second driven wheels 2113, so that the at least two second driven wheels 2113 can be driven to rotate by the first revolving belt 2150 and simultaneously play a role in guiding the revolving motion of the first revolving belt 2150.

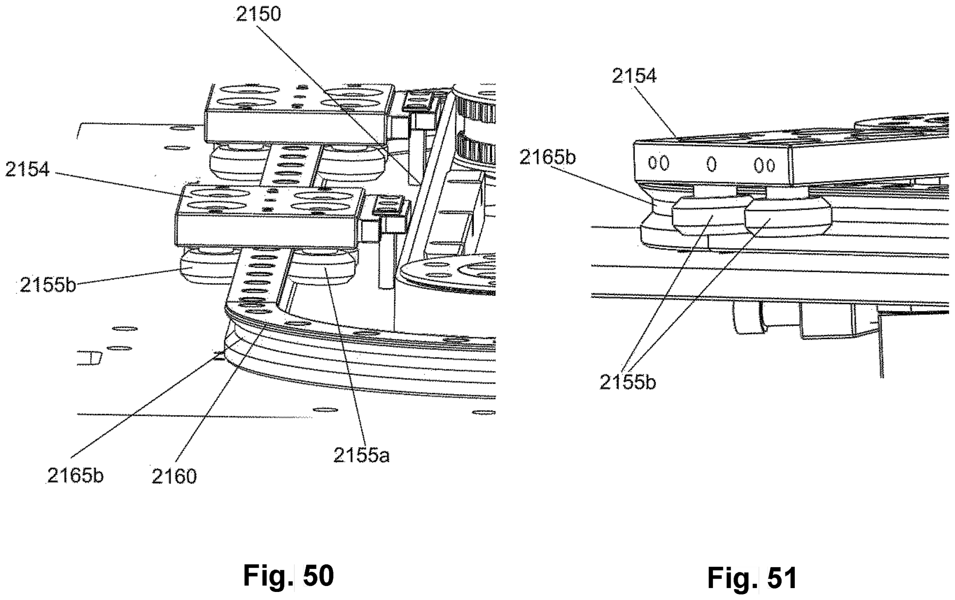

Further, more specifically, as shown in Figs. 48-51, the first revolving assembly 2100 may further include at least one carrier 2154 for carrying the finished-product cup 2101 and coupled to the first revolving belt 2150 so as to be able to move with the first revolving belt 2150, whereby the carrier 2154 is able to carry the finished-product cup 2101 along the second trajectory and thus pass through the plurality of first type stations described above. The carrier 2154 may be directly threaded or riveted to the first revolving belt 2150, for example. More specifically, the first revolving assembly 2100 may be configured to include a plurality of carriers 2154, each of which carrying one finished-product cup 2101. More specifically, a cup holder 2151 for holding the finished-product cup 2101 is provided on each carrier 2154.

More specifically, as shown in Fig. 48, the first revolving belt 2150 may be configured to have rectangle shape as a whole, with rounded corners, and the first drive mechanism includes three second driven wheels 2113, and the second driving wheel 2112 and the three second driven wheels 2113 being respectively provided at each of four corners of the rectangle shape.

In some embodiments, as shown in Figs. 48-51, the first revolving assembly 2100 may further include a first track 2160 arranged to surround each other with the first revolving belt 2150 and arranged to support the carrier and guide the movement of the carrier 2154. More specifically, the first track 2160 may surround the first revolving belt 2150. In a specific embodiment, a groove 2165a, 2165b is provided on at least one of the inner and outer sides of the first track 2160, and the first drive mechanism may further include guide wheels 2155a, 2155b coupled to the carrier 2154, and are able to roll in the groove 2165a, 2165b to guide the carrier 2154 to slide along the first track 2160. More specifically, both the inner side and the outer side of the first track 2160 are provided with a groove, respectively referred to as inner groove 2165a and outer groove 2165b, and each carrier 2154 is coupled with two inner guide wheels 2155a for rolling in the inner groove 2165a and two outer guide wheels 2155b for rolling in the outer groove 2165b. Smooth sliding of the carriers 2154 on the first track 2160 is thereby achieved.

### Second drive mechanism

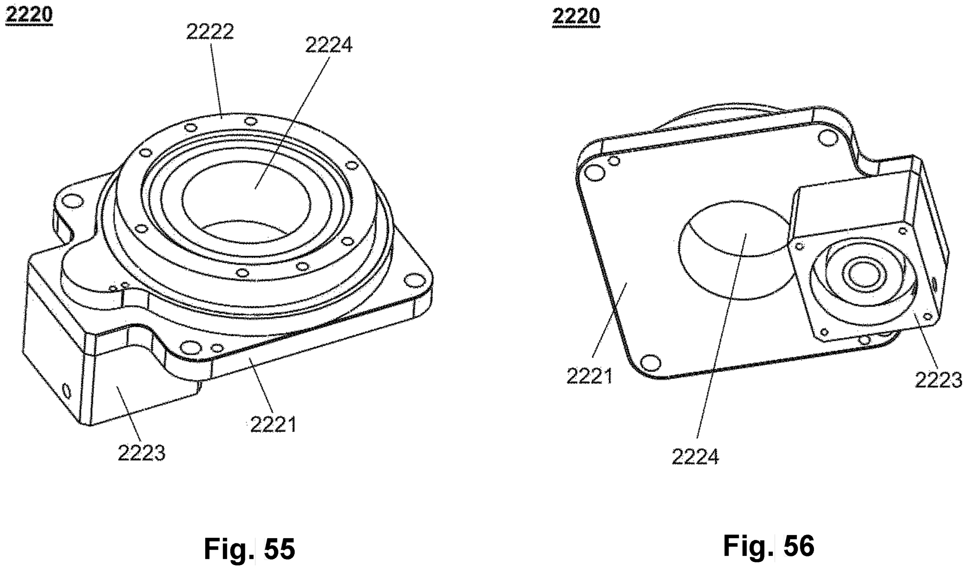

As mentioned above, in one particular embodiment, the second revolving assembly 2200, 3200 is supported by the support column 2280. In such embodiments, as shown in Figs. 53-54, the second drive mechanism 2210 may be configured to comprise a third motor 2211 that comprises a third motor shaft. Further, as shown in Figs. 52-56 and 65, the second drive mechanism 2210 further includes a rotary table 2220 mounted on the support column 2280, more specifically at the top end of the support column 2280. The rotary table 2220 is arranged to include a lower fixed plate 2221 coupled to the support column 2280, and an upper rotating flange 2222 driven to rotate by the third motor 2211, and to which the second revolving member 2250, 3250 is coupled to rotate with the upper rotating flange 2222. In some specific embodiments, the second drive mechanism 2210 further includes a gear mechanism (shown) for transmitting power from the third motor shaft to the upper rotary flange 2222. As shown in Figs. 55-56, in some specific embodiments, a motor mounting seat 2223 is provided on the lower fixed plate 2221, and the motor mounting seat 2223 can be fixed, for example, to a lower surface of the lower fixed plate 2221, and the third motor 2211 is mounted in the motor mounting seat 2223.

Of course, the second drive mechanism 2210 described herein is merely illustrative and not exclusive, and other mechanisms capable of driving the second revolving member 2250, 3250 are also within the scope of the present invention.

### Material-blending cup holding mechanism

As described above, the second revolving member 2250, 3250 moves along a second trajectory while carrying the blending cups 2201 to pass through the plurality of second type stations and perform beverage making operations associated with the blending cup 2201 at each second type station.

To this end, the second revolving assembly 2200, 3200 then further comprises one or more blending cup holding mechanisms, each of which is configured to rotatably hold a respective blending cup 2201 on the second revolving member 2250, 3250. That is, the blending cup 2201 is not immovably fixed to the second revolving member 2250, 3250, but is capable of rotating while being held on the second revolving member 2250, 3250; more specifically, the blending cup 2201 includes an upper end and a lower end, and can be rotated about a horizontal axis located between the upper end and the lower end thereof, so that the blending cup can be tilted or even turned over to enable corresponding operation.

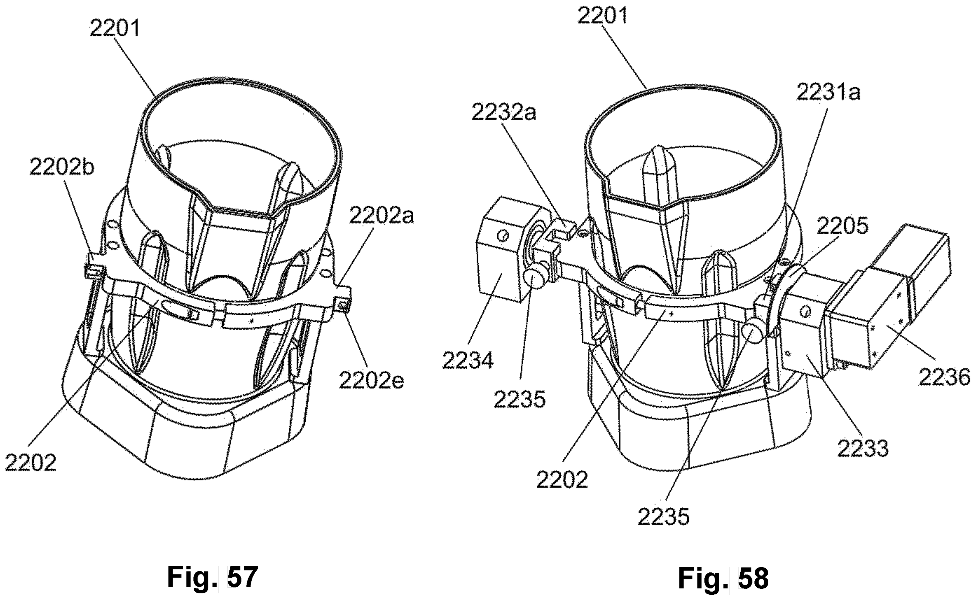

In a specific embodiment, as shown in particular in Fig. 57, each blending cup 2201 is provided with a clamping collar 2202 fixedly disposed relative to the blending cup 2201, the clamping collar 2202 more specifically gripping the blending cup 2201 in a circumferentially encircling manner such that relative sliding will not occur between the clamping collar 2202 and the blending cup 2201. The clamping collar 2202 may include a first clamping collar protrusion 2202a and a second clamping collar protrusion 2202b disposed diametrically opposite each other, more specifically, the first clamping collar protrusion 2202a and the second clamping collar protrusion 2202b are protrusions extending radially outward with respect to the blending cup 2201, more specifically, both of the first clamping collar protrusion 2202a and the second clamping collar protrusion 2202b are integrally formed with the clamping collar 2202, that is, the clamping collar 2202 is a single piece; of course, in other embodiments, the first clamping collar protrusion 2202a and the second clamping collar protrusion 2202b may also be separate members fixed to the clamping collar 2202.

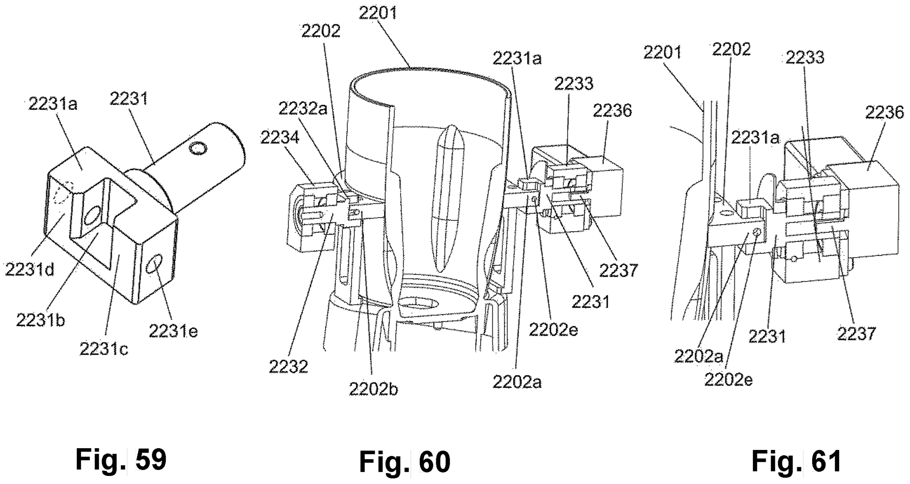

As shown in Figs. 58-62, each blending cup holding mechanism may include: a blending cup drive mechanism for driving the respective blending cup 2201 to rotate; a driving shaft called a second driving shaft 2231 coupled between the blending cup drive mechanism and the first clamping collar protrusion 2202a so that the second driving shaft 2231 can transmit power from the blending cup drive mechanism to the first clamping collar protrusion 2202a, and since the first clamping collar protrusion 2202a is either integrally formed with the clamping collar 2202 or is a separate piece fixed to the clamping collar 2202 while the clamping collar 2202 is fixedly disposed relative to the blending cup 2201, the power may continue to be transmitted to the blending cup 2201 via the clamping collar 2202 to enable the blending cup 2201 to rotate with the rotation of the second driving shaft 2231. In order to be able to achieve the rotational movement of the blending cup 2201 in a more smooth manner, the blending cup holding mechanism may further include a second driven shaft 2232 coupled to the second clamping collar protrusion 2202b so as to be driven by the second driving shaft 2231 to rotate. In addition, the blending cup holding mechanism may further include a first support seat 2233 and a second support seat 2234 fixed to the second revolving members 2250, 3250 for supporting the second driving shaft 2231 and the second driven shaft 2232 and allowing rotation of the second driving shaft 2231 and the second driven shaft 2232, respectively. As a result, the blending cup 2201 is rotatably held on the second revolving members 2250, 3250.

In a more specific embodiment, as shown in Figs. 58-59, in order to allow for quick installation and removal of the blending cup 2201, the first and second clamping collar protrusions 2202a, 2202b are arranged to be coupled to the second driving shaft 2231 and the second driven shaft 2232, respectively, by a quick release pin 2235. More specifically, a first coupling end 2231a of the second driving shaft 2231 is provided with a first receiving slot 2231b for receiving the first clamping collar protrusion 2202a, which is defined at least by two opposite walls 2231c, 2231d, holes 2231e, 2202e aligned with each other being provided in the walls 2231c, 2231d and in the first clamping collar protrusion 2202a, the quick release pin 2235 being able to be inserted into or pulled out from the holes 2231e, 2202e to achieve quick coupling or disassembly between the clamping collar 2202 and the second driving shaft 2231. In the embodiment shown in the drawings, the first coupling end 2231a is a generally U-shaped portion, the two walls 2231c and 2231d are two branches of the U-shaped portion, and the middle of the U-shaped portion is the first receiving slot 2231b. Similarly, a second coupling end 2232a of the second driven shaft 2232 is also provided with a second receiving slot for receiving the second clamping collar protrusion 2202b, which is defined at least by two opposite walls, holes aligned with each other are provided in the two opposite walls and in the second collar protrusion, the quick release pin 2235 being able to be inserted into or pulled out from to enable quick coupling and disassembly between the clamping collar 2202 and the second driven shaft 2232. Similarly, in the embodiment shown in the drawings, the second coupling end 2232 a is generally a U-shaped portion, the two walls are two branches of the U-shaped portion, and the middle of the U-shaped portion is the second receiving slot.

The blending cup drive mechanism may be embodied in different configurations, as described below.

In a first variation, as shown in Figs. 58-61, the blending cup drive mechanism includes a motor referred to as a fourth motor 2236 having a fourth motor shaft 2237. In a specific embodiment, the fourth motor shaft 2237 and the second driving shaft 2231 are directly coupled to each other by a coupling structure including a hole and a shaft. Of course, such direct coupling and corresponding coupling methods are merely illustrative and not exclusive, and other structures or methods capable of achieving the same function are also within the scope of protection of the present invention. More specifically, the fourth motor 2236 is a stepper motor. In a specific embodiment, the fourth motor 2236 is directly mounted to and fixed relative to the second revolving members 2250, 3250. More specifically, a motor shield 2238 for at least partially surrounding the fourth motor 2236 is also provided to protect the fourth motor.

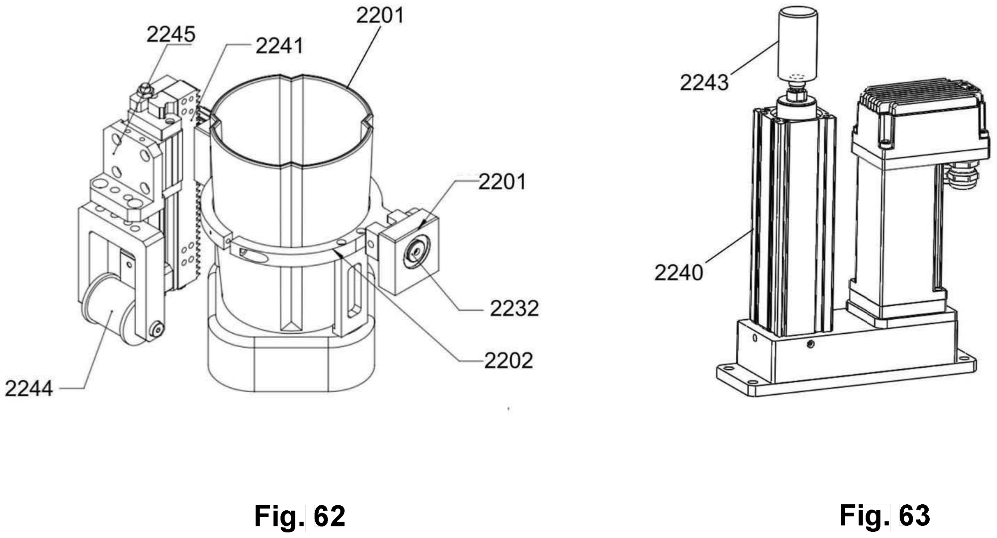

In a second variation, as shown in Figs. 62-64, the blending cup drive mechanism includes a first electric cylinder 2240 and a first rack-and-pinion assembly disposed between the first electric cylinder 2240 and the second driving shaft 2231 for transmitting power from the first electric cylinder 2240 to the second driving shaft 2231. In a specific embodiment, the first rack-and-pinion assembly includes a first rack 2241 driven by the first electric cylinder 2231 to move and a first gear 2242 driven to rotate by the first rack 2241, for example, the first gear 2242 may be tightly fitted on the second driving shaft 2231 to be able to drive the second driving shaft 2231 to rotate. Further, the blending cup drive mechanism may further include a push rod 2243 disposed between the first electric cylinder 2240 and the first rack 2241, so that the first electric cylinder 2240 can drive the first rack 2241 to move via the push rod 2243. In the illustrated embodiment, the push rod 2243 is positioned between the first electric cylinder 2240 and the first rack 2241 in the vertical direction, and can apply an upward pushing force to the first rack 2241 to enable the first rack 2241 to move upward. In a more specific embodiment, the blending cup drive mechanism may further include a first elastic return member 2244 connected between the second revolving member 2250, 3250 and the first rack 2241 to be able to urge the first rack 2241 to return when the first electric cylinder 2240 stops working, that is, to urge the first rack 2241 to move downward to the original position, thereby driving the blending cup 2201 to return. More specifically, the first elastic return member 2244 may be a constant force spring. More specifically, the first elastic return member is connected between the first rack 2241 and a mounting plate 2245 on which the first rack 2241 is movably disposed and which fixedly disposed with respect to the second revolving member 2250, 3250.

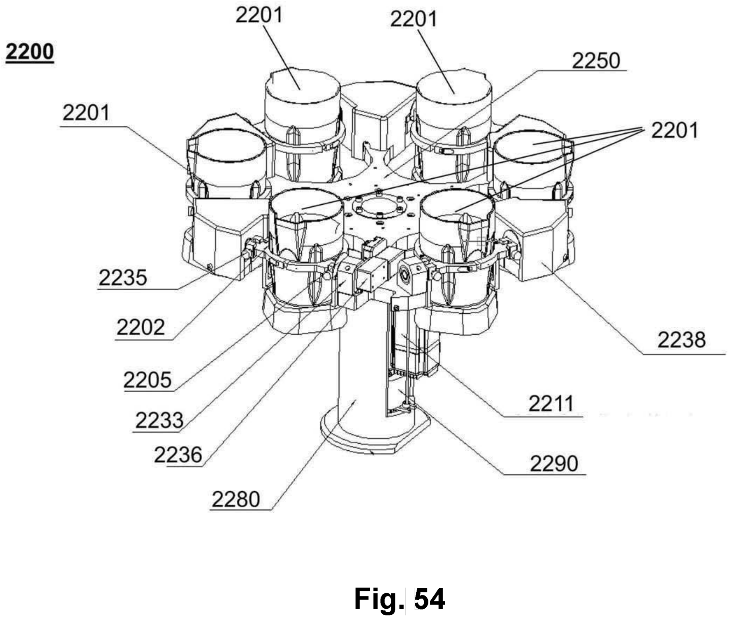

In some embodiments, as shown in Figs. 54 and 58, the multi-station dual-revolving module 2000, 3000 further includes third origin detection assemblies for determining the origin of each of the blending cups 2201, each third origin detection assembly may include a third origin detection piece 2205 that may be fixedly disposed on the second driving shaft 2231 to be able to rotate with the second driving shaft 2231, and a third sensor that may be disposed on the first support seat 2233 and configured to determine the angular position of the respective blending cup 2201 by detecting the angular position of the third origin detection piece 2205. It should be understood that the third sensor may be in communication with the main control module.

### Electric slip ring mechanism

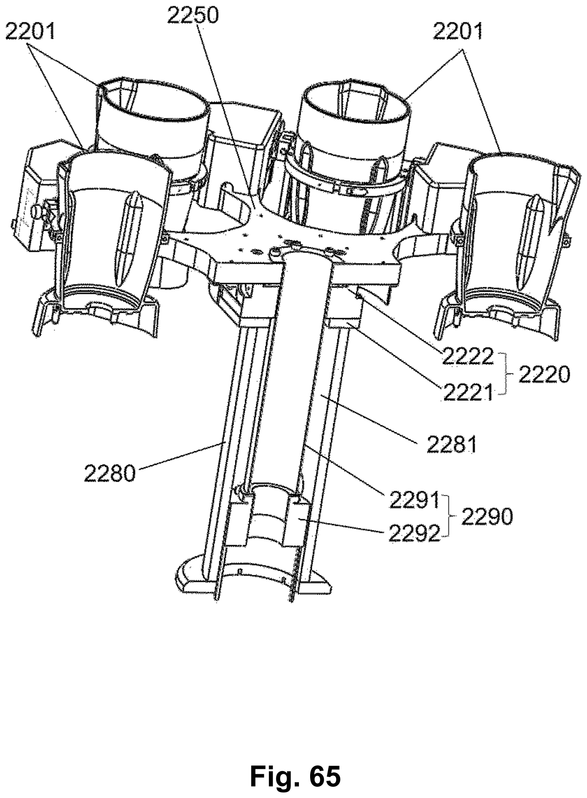

As mentioned above, the second revolving member 2250, 3250 may carry a plurality of blending cups 2201 simultaneously, and each blending cup 2201 is rotatably disposed on the second revolving member 2250, 3250 by the blending cup drive mechanism. In this case, in some embodiments, as shown in Figs. 54 and 65, the multi-station dual-revolving module 2000, 3000 may further include an electric slip ring mechanism 2290 including an input line connected to the blending cup drive mechanism and an output line connected to the main control module to enable the transfer of power and control signals between the blending cup drive mechanism and the main control module, the blending cup drive mechanism being more specifically the fourth motor 2236 in the first variation or the first electric cylinder 2240 in the second variation. In this way, the communication between the blending cup drive mechanism and the main control module is realized by providing the electric slip ring mechanism, and the problems that the lines are mixed and entangled with each other and easy to fault can be avoided.

In a specific embodiment, as shown in Fig. 65, the support column 2280 for supporting the second revolving member 2250, 3250 is configured to have a hollow portion 2281 in which the electric slip ring mechanism 2290 may be disposed, thereby facilitating a compact configuration. More specifically, the electric slip ring mechanism 2290 includes an electric slip ring driving portion 2291 and a rotating member 2292 driven by the electric slip ring driving portion 2291. The electric slip ring driving portion 2291 extends in the hollow portion 2281 of the support column 2280, an upper end thereof being provided to be coupled to the second revolving member 2250, 3250 so that the electric slip ring driving portion 2291 can be driven to rotate by the second revolving member 2250, 3250, while a lower end thereof being coupled to the rotating member 2292 so that the electric slip ring driving portion 2291 can drive the rotating member 2292 to rotate. More specifically, the upper end of the electric slip ring driving portion 2291 is provided so as to pass through a center hole 2224 of the rotary table 2220 described above and be fixed in the center hole of the second revolving member 2250, 3250, that is, in this case, the rotary table 2220 may be provided below the second revolving member 2250, 3250. Fig. 65 shows an example in which the upper end of the electric slip ring driving portion 2291 is provided so as to pass through the central hole of the rotary table 2220 and is fixed in the central hole of the second revolving member 2250.

### 2.1 Multi-station dual-revolving module 2000 according to first embodiment

Hereinafter, a first embodiment of the multi-station dual-revolving module 2000 will be described. In this first embodiment, as mentioned above, the first drive mechanism of the first revolving assembly 2100 of the multi-station dual-revolving module 2000 may drive the first revolving member 2150 to move along the first trajectory passing through a plurality of first type stations, the plurality of first type stations including at least a container dropping station and a first pouring station. As shown in Figs. 66-71, the multi-station dual-revolving module 2000 includes a container dropping mechanism 2300 configured to perform at least dropping the finished-product cup 2101 onto the first revolving member 2150, more specifically into a respective cup holder 2151 secured to the first revolving member 2150, at the container dropping station. More specifically, in the first embodiment of the multi-station dual-revolving module 2000, the first revolving member 2150 is a first revolving belt, as shown in Figs. 39-41, 48, and 72.

In some embodiments, the plurality of first type stations may further include a base-material feeding station disposed after the container dropping station and before the first pouring station, and the multi-station dual-revolving module further includes a first material feeding mechanism 1700 (as shown in Figs. 15-16) configured to perform finished-product cup fresh-material feeding operation and/or finished-product cup solid-material feeding operation for feeding fresh and/or solid materials into the finished-product cup 2101 at the base-material feeding station. This first material feeding mechanism 1700 has been described in detail in the material storage and supply module 1000 and will not be repeated here.

It should be noted that the terms "before" and "after" used in describing the interrelationship between the respective stations indicate the sequence of stations undergone by the first revolving member 2150 carrying the finished-product cup 2101 when operated.

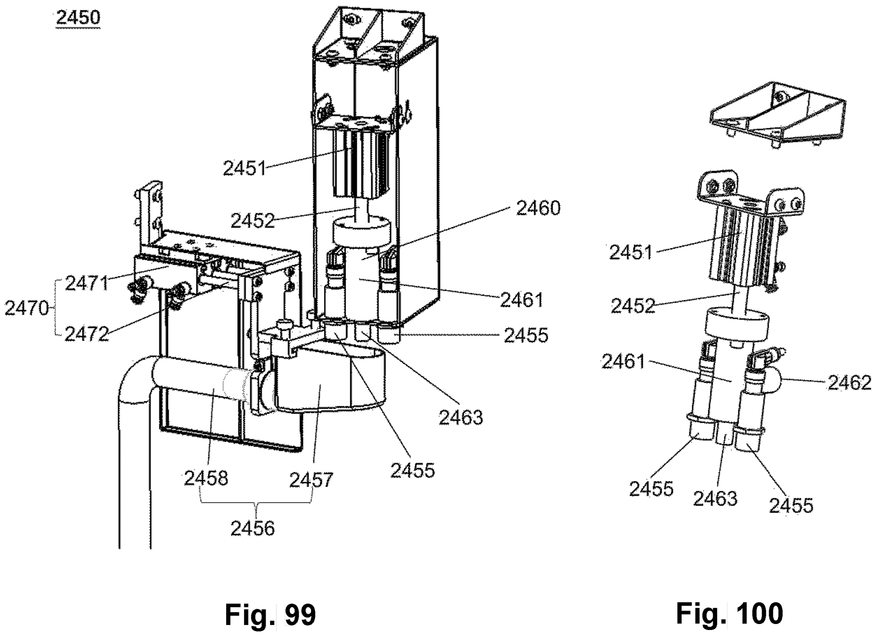

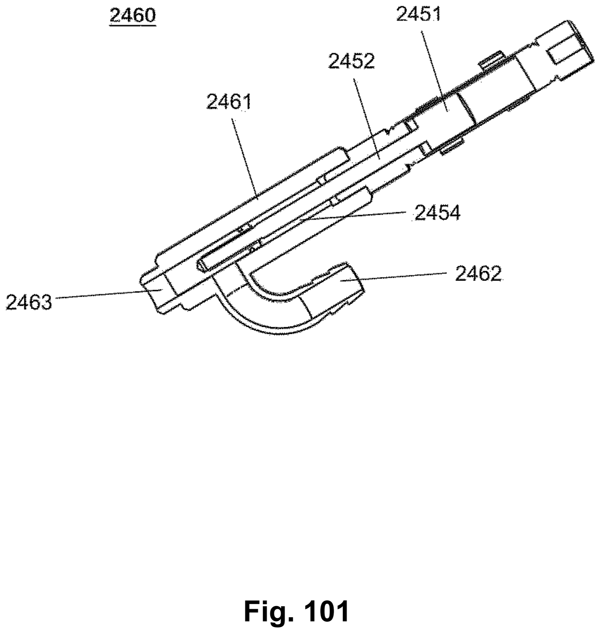

In some embodiments, the plurality of first type stations further include a milk cap feeding station disposed after the first pouring station, and the multi-station dual-revolving module may correspondingly further include a milk cap feeding mechanism 2450 configured to perform a milk cap feeding operation of feeding a milk cap to the finished-product cup 2101 at the milk cap feeding station, as shown in Figs. 99-102.

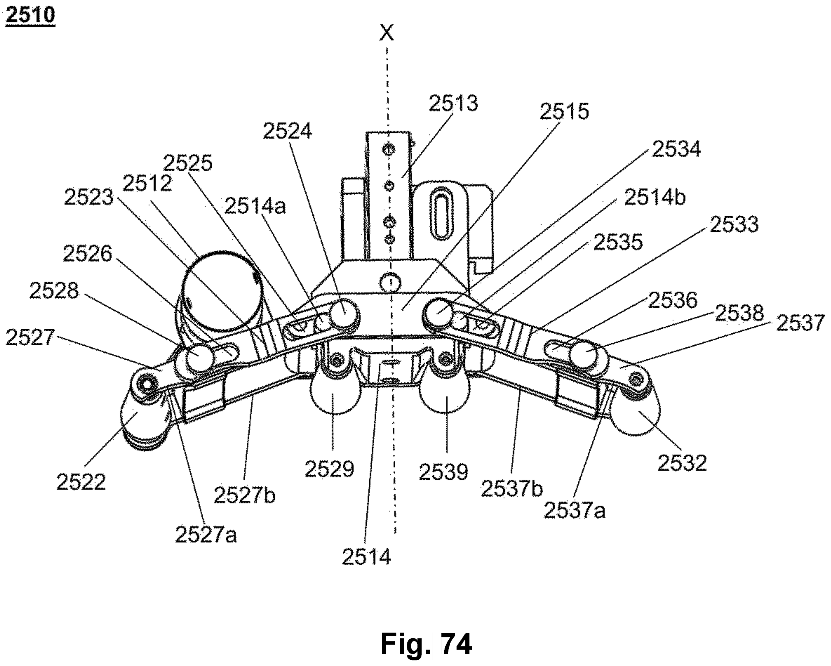

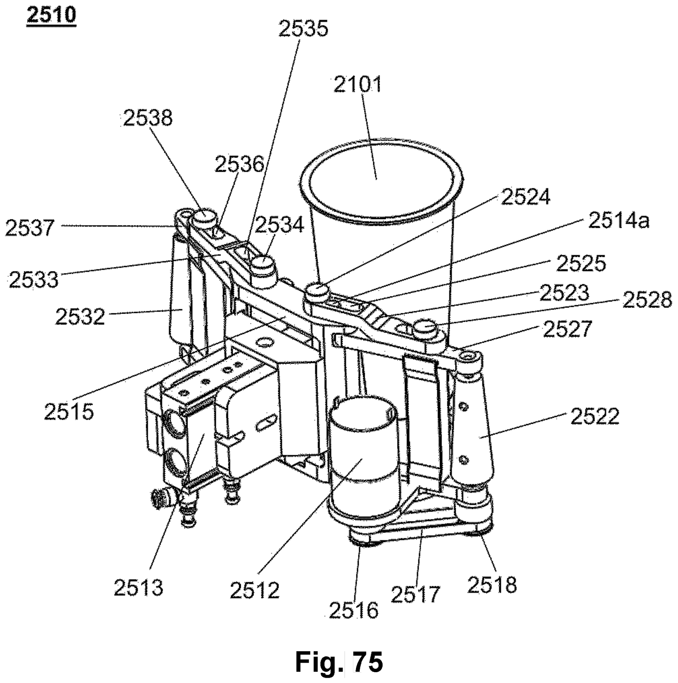

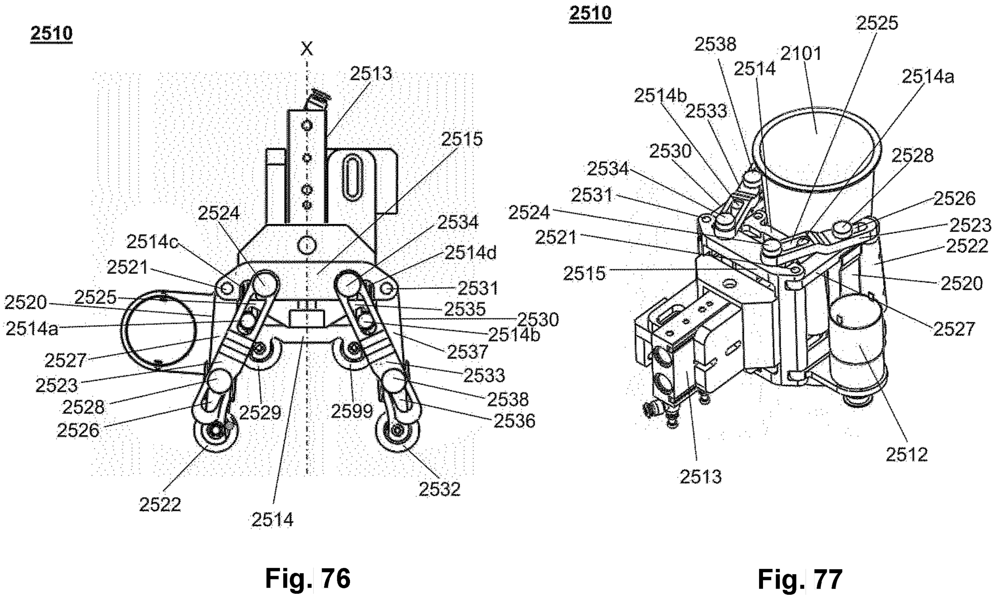

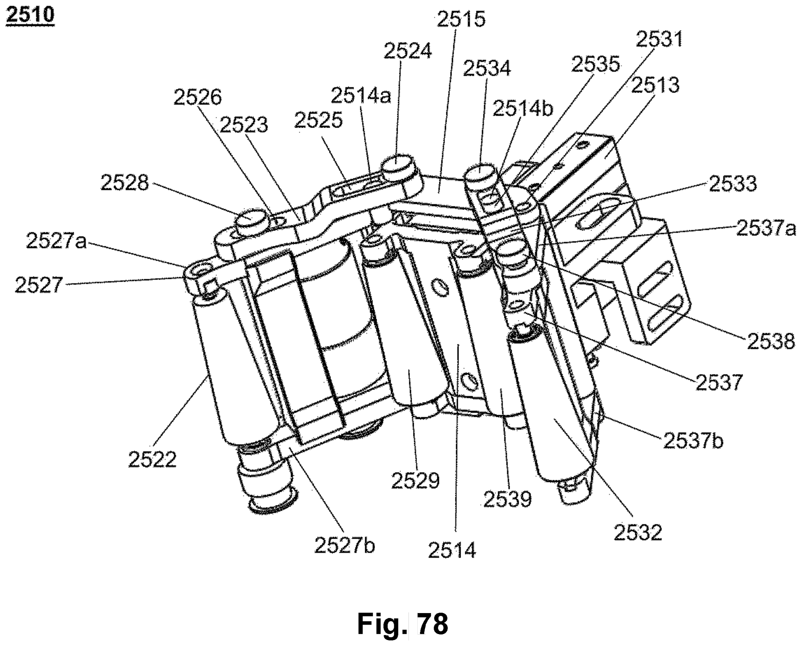

In some embodiments, the plurality of first type stations further comprises a labeling station disposed after the container dropping station, and accordingly, as shown in Figs. 40, 72-78, the multi-station dual-revolving module may further comprise a labeling mechanism 2500 configured to perform a labeling operation of applying a label to the finished-product cup 2101 at the labeling station. More specifically, the label may have at least one of the following information: a two-dimensional code; customer name; kind of beverage; amount of ice added therein; amount of sugar added therein etc.

In some embodiments, as shown in Figs. 66-71, the container dropping mechanism 2300 is further configured to perform a lid dropping operation of dropping a finished-product cup lid 2102 onto the finished-product cup 2101 at the container dropping station, more specifically, dropping the finished-product cup lid 2102 onto the finished-product cup 2101 that has passed through the plurality of first type stations or other stations other than the labeling station along the first trajectory and returned to the container dropping station, that is, at this time, the finished-product cup 2101 has been substantially completed for various beverage making operations.

In this first embodiment, as mentioned above, the second drive mechanism 2210 of the second revolving assembly 2200 of the multi-station dual-revolving module 2000 may drive the second revolving member 2250 to move along the second trajectory passing through a plurality of second type stations, at least including the liquid material feeding station and the second pouring station. The multi-station dual-revolving module 2000 includes a liquid material feeding mechanism 2350 configured to perform at least liquid material feeding operation of feeding liquid material into the blending cup 2201 at the liquid material feeding station, as shown in Figs. 79-84.

In some embodiments, the plurality of second type stations further comprises a blending cup fresh material feeding station disposed before the second pouring station, and the multi-station dual-revolving module 2000 correspondingly further comprises a second material feeding mechanism 1800 configured to perform blending cup fresh material feeding operation of feeding fresh material into the blending cup 2101 at the blending cup fresh material feeding station. This second material feeding mechanism 1800 has been described in detail in the material storage and supply module and will not be repeated here.

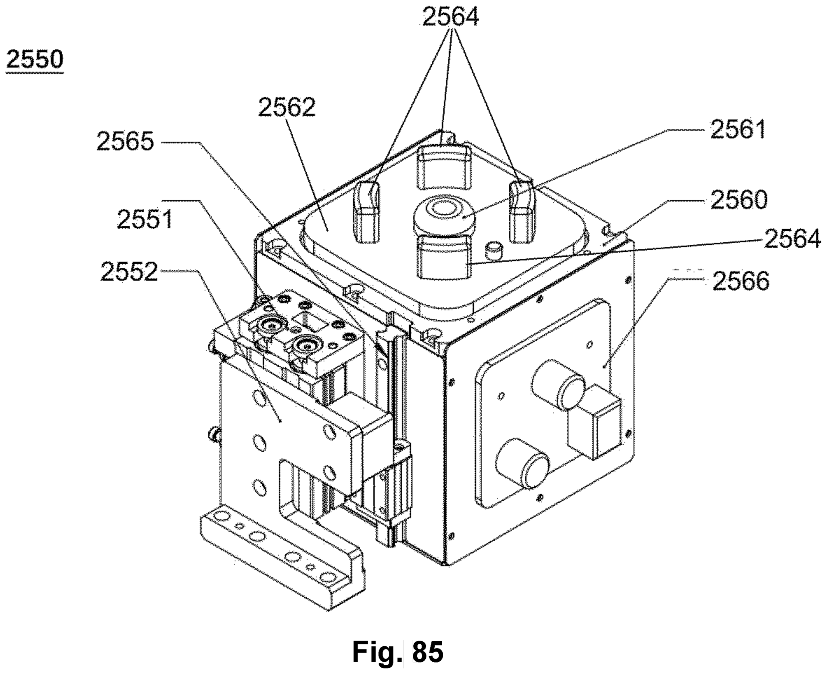

In some embodiments, the plurality of second type stations further comprises a blending station disposed after the blending cup fresh material feeding station and before the second pouring station, and the multi-station dual-revolving module 2000 accordingly further comprises a blending mechanism 2550 configured to perform blending operations of blending the materials in the blending cup 2102 at the blending station, as shown in Figs. 40 and 85. More specifically, in the blending station, the materials in the blending cup (which may include one or more of fresh materials, liquid materials, and ice cubes) may be blended more uniformly or the various materials may be mixed more uniformly, or the individual materials may be further refined to, for example, better blend with the liquid material, further providing an improved taste.

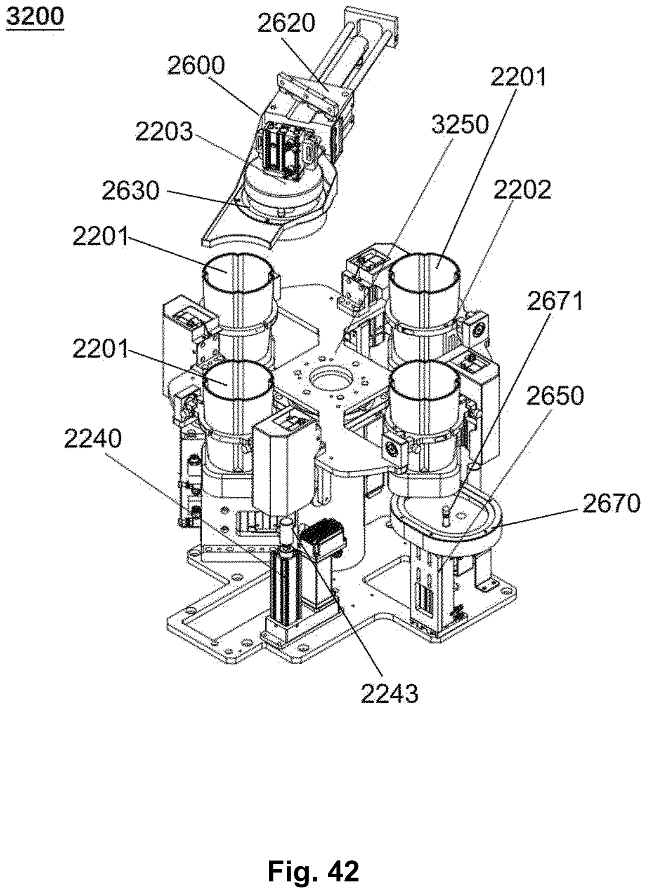

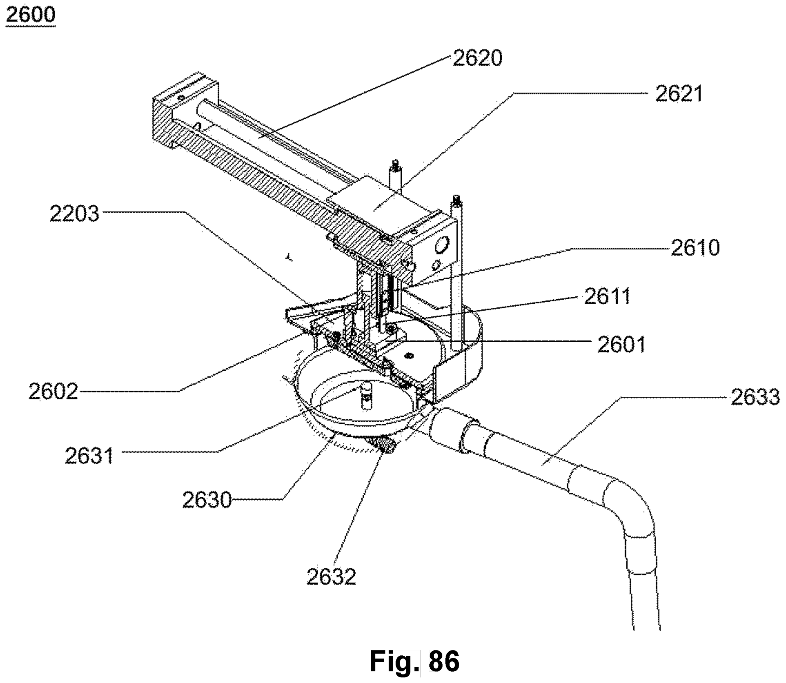

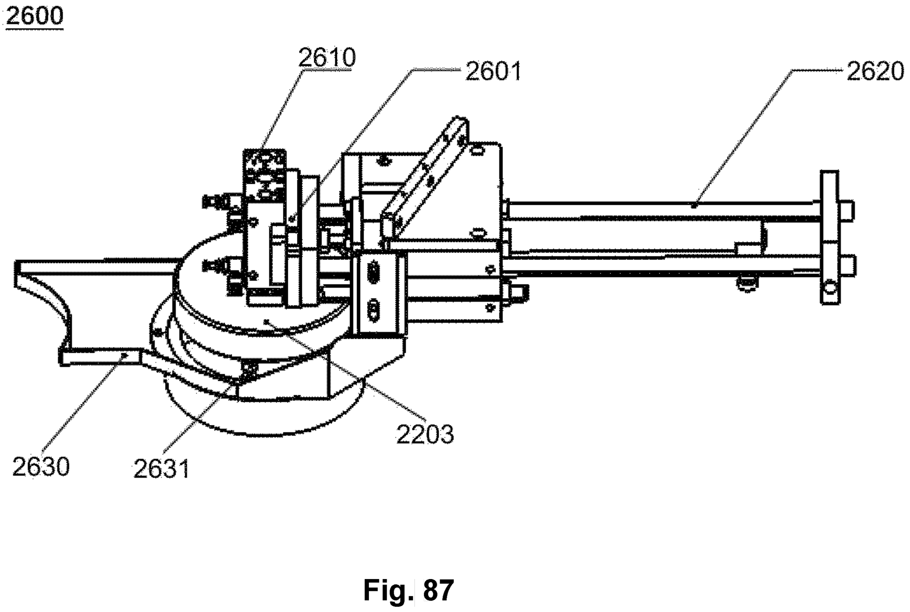

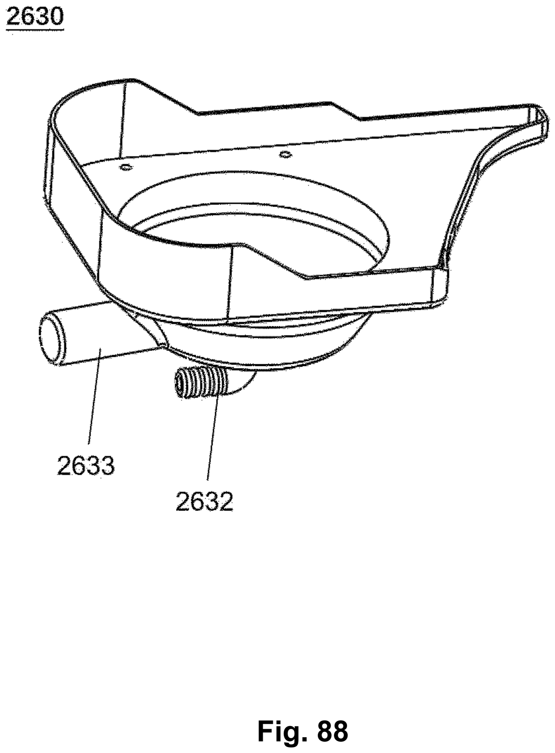

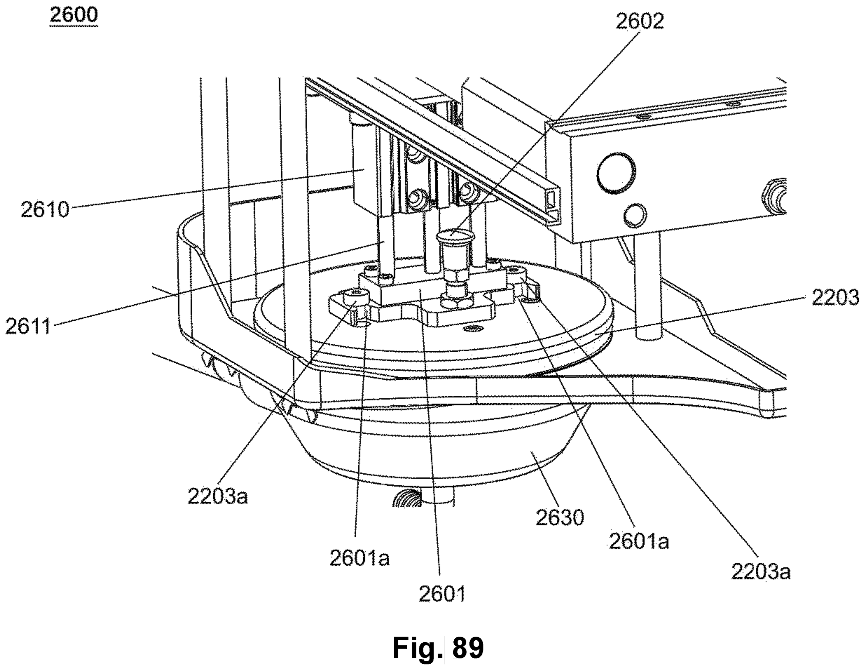

In some embodiments, as shown in Figs. 42, 86-89, the multi-station dual-revolving module 2000 further includes a blending cup lid covering and cleaning mechanism 2600 configured to perform blending cup lid covering operation of covering a blending cup lid 2203 on the blending cup 2201 before the blending operation is performed by the blending mechanism 2550 in the blending station. This can prevent the materials in the blending cup 2201 from being spilled out of the blending cup due to being subjected to the blending vibrations during the blending operation.

In a more specific embodiment, the blending cup lid covering and cleaning mechanism 2600 is further configured to perform a blending cup lid cleaning operation of cleaning the blending cup lid 2203 in the blending station after the blending operation is performed by the blending mechanism 2550. On the one hand, the materials between two adjacent blending cups 2201 may differ because the kinds of beverages are different, and cleaning the blending cup lid 2203 after the blending operations prevents compromised taste due to adulteration of unwanted materials. On the other hand, this ensures the cleanliness and hygiene of the blending cup lid 2203, thus maintaining beverage hygiene standards.

In some embodiments, the plurality of second type stations further include an ice feeding station disposed before the second pouring station, and the ice feeding operation of feeding ice cubes to the blending cup 2201 is performed at the ice feeding station. The ice feeding operation may be performed by the ice discharge mechanism 1900 mentioned above in the material storage and supply module. More specifically, the ice feeding station is provided before the blending station, so that the blending operations including a smoothie operation can be performed at the blending station as necessary for making a smoothie beverage or fruit tea beverage.

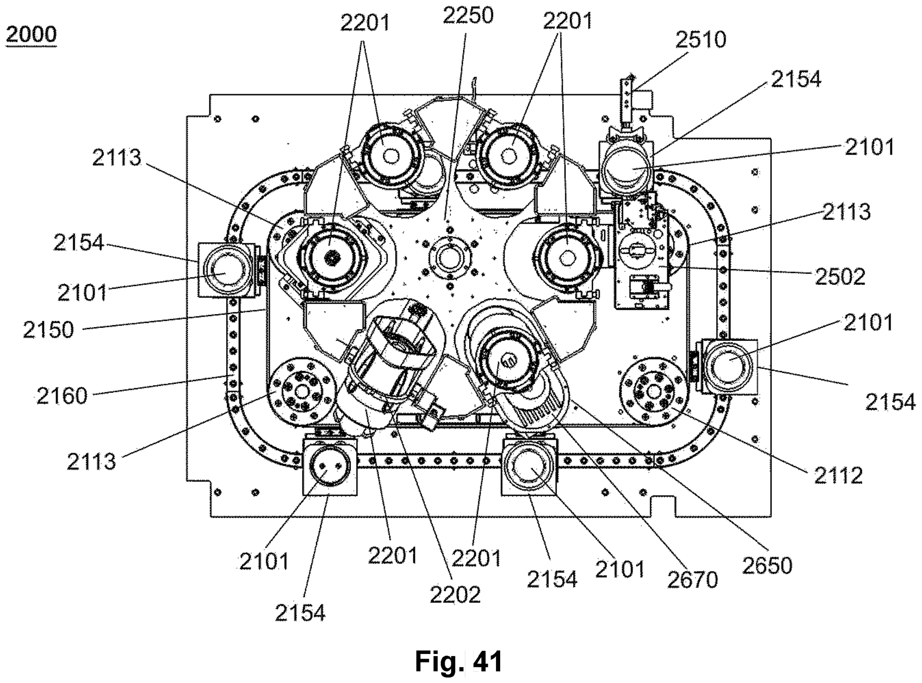

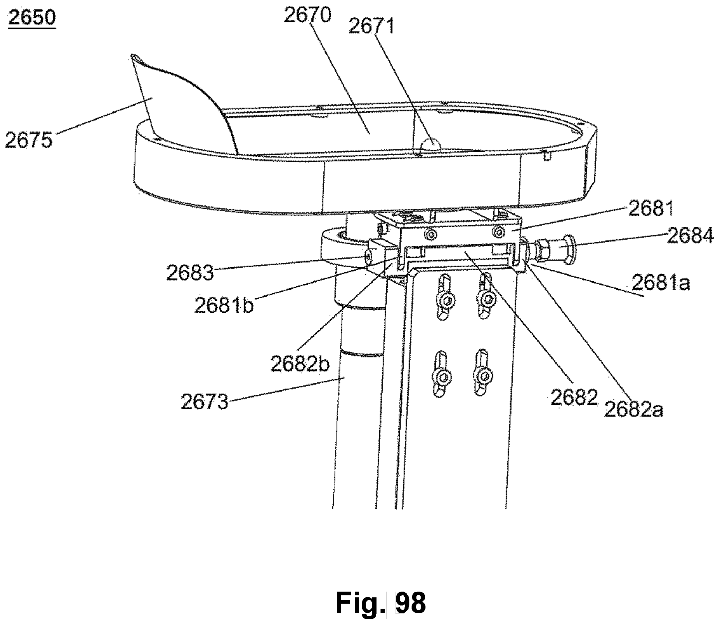

In some embodiments, the plurality of second type stations further includes a cup washing station disposed after the second pouring station, and as shown in Figs. 41-42 and 97-98, the multi-station dual-revolving module 2000 further includes a cup washing mechanism 2650 configured to perform a cup washing operation of washing the blending cup 2201 at the cup washing station. Thus, this allows the blending cup 2201 to be washed after each pouring operation to ensure the purity of the beverage and to ensure hygiene.

In a specific exemplary embodiment, the plurality of first type stations are sequentially arranged in the following sequence: the container dropping station; the labeling station; the base-material feeding station; the first pouring station; the milk cap feeding station.

Accordingly, in a specific exemplary embodiment, the respective operations at the plurality of first type stations may be sequentially performed in the following sequence: the cup dropping operation; the labeling operation; the finished-product cup fresh-material feeding operation and/or the finished-product cup solid-material feeding operation; the pouring operation; the milk cap feeding operation; the lid dropping operation.

In a specific exemplary embodiment, the plurality of second type stations are sequentially arranged in the following order: the ice feeding station; the liquid material feeding station; the blending cup fresh-material feeding station; the blending station; the second pouring station; and the cup washing station.

Accordingly, in a specific exemplary embodiment, the respective operations at the plurality of second type stations are sequentially performed in the following sequence: the ice feeding operation; the liquid material feeding operation; the blending cup fresh-material feeding operation; the blending cup lid covering operation; the blending operation; the blending cup lid cleaning operation; the pouring operation; the cup washing operation.

More specifically, the multi-station dual-revolving module 2000 proposed in the present application can be used to simultaneously make a plurality of beverages, in which case, the corresponding operations at the plurality of first type stations and the corresponding operations at the plurality of second type stations can be performed simultaneously.

More specifically, when making the smoothie beverage, the following operations may be sequentially performed at the plurality of first type stations: the cup dropping operation; the operation of feeding fresh materials to the finished-product cup; the pouring operation; the lid dropping operation; optionally, the labeling operation may also be performed; optionally, the milk cap feeding operation may also be performed before the lid dropping operation. Meanwhile, at the plurality of second type stations, the following operations may be sequentially performed: the ice feeding operation; the liquid material feeding operation; blending cup fresh-material feeding operation; blending operation (including smoothie operations); the pouring operation; optionally, the blending cup lid covering operation and the blending cup lid cleaning operation may be performed respectively before and after the blending operation; optionally, the cup washing operation may also be performed at the end.

More specifically, when making a non-smoothie fruit tea beverage, including the cold fruit-tea beverage and the hot fruit-tea beverage, the following operations may be sequentially performed at the plurality of first type stations: the cup dropping operation; the operation of feeding fresh materials to the finished-product cup; the pouring operation; the lid dropping operation; alternatively, the milk cap feeding operation may be performed before the lid dropping operation; optionally, the labeling operation may also be performed. At the same time, at the plurality of second type stations, the following operations may be sequentially performed: the liquid material feeding operation; blending cup fresh-material feeding operation; the blending operations; the pouring operation; optionally, the blending cup lid covering operation and the blending cup lid cleaning operation may be performed respectively before and after the blending operations; optionally, the cup washing operation may also be performed at the end.

More specifically, when making a milk tea beverage, including the cold milk tea beverage and the hot milk tea beverage, the following operations may be sequentially performed at the plurality of first type stations: the cup dropping operation; the finished-product cup solid-material feeding operation; the pouring operation; the lid dropping operation. Optionally, the labeling operation may also be performed; optionally, the milk cap feeding operation may also be performed before the lid dropping operation. At the same time, at the plurality of second type stations, the following operations may be sequentially performed: the liquid material feeding; the pouring operation; the cup washing operation; optionally, the cup washing operation may also be performed at the end.

### Container dropping mechanism 2300

As mentioned above, in some embodiments, the container dropping mechanism 2300 is configured to perform the cup dropping operation at a container dropping station. In some embodiments, the container dropping mechanism 2300 is further configured to perform the lid dropping operation at the container dropping station. Various embodiments of the container dropping mechanism 2300 will be described in detail below.

In some embodiments, as shown in Figs. 66-71, the container dropping mechanism 2300 is configured to include a third drive mechanism 2310, a carrier plate 2320, and a cup dropping motor (not shown). The carrier plate 2320 is configured to carry at least one cup dropper 2321, 2322, and the third drive mechanism 2300 is configured to drive the carrier plate 2320 to move to enable the carrier plate 2320 to be positioned above the first revolving member 2150 when a container dropping operation is desired, thereby allowing the finished-product cup 2101 to be dropped from the respective cup dropper 2321, 2322. The cup dropping motor is then arranged to operate the at least one cup dropper 2321, 2322 to be able to drop the finished-product cup 2101 onto the first revolving member 2150, more specifically into the respective cup holder 2151 on the first revolving member 2150. In a more specific embodiment, each cup dropper 2321, 2322 is configured to be capable of holding a plurality of finished-product cups 2101 stacked up and down together, and comprises a holding portion for holding an upper edge, such as in the form of a flange, of the lowermost finished-product cup 2101 of the plurality of finished-product cups 2101. A through hole is provided at the holding portion that can lead to the upper edge of the lowermost finished-product cup 2101. When the cup droppers 2321, 2322 perform the cup dropping operation, air may be blown toward the upper edge of the finished-product cup 2101 via the through hole to facilitate the dropping of the lowermost finished-product cup 2101. More specifically, the machine correspondingly comprises a gas tank, an airflow duct connected between the gas tank and the through-hole, and a first solenoid valve that controls the air supply or cut-off of the airflow duct, so that airflow can be blown towards the upper edge of the finished-product cup 2101 via the through-hole as desired.

In some embodiments, as shown in Figs. 66-71, the carrier plate 2320 is further configured to carry a lid dropper 2323, and the container dropping mechanism 2300 further includes a lid dropper motor (not shown) configured to drop the finished-product cup lid 2102 onto the corresponding finished-product cup 2101. That is, in these embodiments, both the cup dropping operation and the lid dropping operation of the finished-product cup 2101 can be performed at the container dropping station.

In some embodiments, as shown in Figs. 66-71, the third drive mechanism 2310 is configured to include at least one carrier plate lifting cylinder 2313, 2314 configured to drive the carrier plate 2320 in a vertical direction and at least one carrier plate horizontal cylinder 2311, 2312 configured to drive the carrier plate 2320 in a horizontal direction.

In a more specific embodiment, as shown in Figs. 66-71, the container dropping mechanism 2300 includes a first cup dropper 2321 for a first type of finished-product cup 2101a and a second cup dropper 2322 for a second type of finished-product cup 2101b. More specifically, the height of the first type of finished-product cup 2101a and the second type of finished-product cup 2101b is different; for example, the first type of finished-product cup 2101a may be a paper cup having a smaller height, and the second type of finished-product cup 2101b may be a plastic cup having a larger height. In this case, the third drive mechanism 2310 may be configured to include two carrier plate horizontal cylinders, namely a first carrier plate horizontal cylinder 2311 and a second carrier plate horizontal cylinder 2312. The first carrier plate horizontal cylinder 2311 includes a first carrier plate horizontal cylinder body 2311a and a first horizontal movable member 2311b which is movable relative to the first carrier plate horizontal cylinder body, the second carrier plate horizontal cylinder 2312 includes a second carrier plate horizontal cylinder body 2312a and a second horizontal movable member 2312b which is movable relative to the second carrier plate horizontal cylinder body 2312b, the second carrier plate horizontal cylinder body 2312b being coupled to the first horizontal movable member 2311b, while the second horizontal movable member 2312b being coupled to the carrier plate 2320, so that the second carrier plate horizontal cylinder 2312 can be driven by the first horizontal movable member 2311b, while the carrier plate is driven by the first horizontal movable member 2311b and/or the second horizontal movable member 2312b.

More specifically, as shown in Figs. 66-71, the first carrier plate horizontal cylinder 2311 and the second carrier plate horizontal cylinder 2312 may be configured to operate with either one of them or both simultaneously to horizontally displace the carrier plate 2320 by a desired distance according to actual needs, thereby dropping a desired finished-product cup onto the first revolving member. And due to the above arrangement, that is, because the second carrier plate horizontal cylinder body 2312a is coupled to the first horizontal movable member 2311b and the second horizontal movable member 2312b is coupled to the carrier plate 2320, when the second carrier plate horizontal cylinder 2312 is operated, the first carrier plate horizontal cylinder 2311 can remain stationary, the carrier plate 2320 moves horizontally with the second horizontal movable member 2312b, and the horizontal movement distance is the horizontal extension distance of the second horizontal movable member 2312b; when the first carrier plate horizontal cylinder 2311 is operated, the second carrier plate horizontal cylinder 2312 is also pushed by the first horizontal movable member 2311b to perform a driven horizontal movement, and thus the carrier plate 2320 coupled to the second horizontal movable member 2312b also performs a corresponding horizontal movement, and the moving distance is the horizontal extension distance of the first horizontal movable member 2311b; further, when the first carrier plate horizontal cylinder 2311 and the second carrier plate horizontal cylinder 2312 operate simultaneously, the carrier plate 2320 performs a driven horizontal movement, and the movement distance is the sum of the horizontal extension distance of the first horizontal movable member 2311b and the horizontal extension distance of the second horizontal movable member 2312b.

In a specific embodiment, as shown in Figs. 66-71, in order that the container dropping mechanism 2300 does not obstruct the normal operation of the first and second revolving members 2150, 2250 when not operating, the lid dropper 2323, the first cup dropper 2321, and the second cup dropper 2322 are arranged on the carrier plate 2320 such that:
when the finished-product cup lid 2102 is dropped onto the finished-product cup 2101a, 2101b, the first carrier plate horizontal cylinder 2311 and the second carrier plate horizontal cylinder 1312 are not operated, and the at least one carrier plate lifting cylinder 2313, 2314 is operated; that is, when the lid dropping operation is performed, the lid dropper 2323 is arranged so that it does not need to be horizontally displaced, but only needs to perform a lifting and lowering movement, that is, in such an embodiment, the lid dropper 2323 is positioned above the finished-product cup on the first revolving member 2150 before the lid dropping operation is started;
when the second type of finished-product cup 2101b is dropped onto the first revolving member 2150, the second carrier plate horizontal cylinder 2312 and the at least one carrier plate lifting cylinder 2313, 2314 operate while the first carrier plate horizontal cylinder 2311 does not operate; that is, the first cup dropper 2321 is offset from the finished-product cup on the first revolving member 2150 in the horizontal direction before starting to perform the cup dropping operation, more specifically by the horizontal extension distance of the second horizontal movable member 2312b;
when the first type of finished-product cup 2101a is dropped onto the first revolving member 2150, the first carrier plate horizontal cylinder 2311, the second carrier plate horizontal cylinder 2312 and the at least one carrier plate lifting cylinder 2313, 2314 all operate; that is, the second cup dropper 2322 is also offset from the finished-product cup on the first revolving member 2150 in the horizontal direction before starting to perform the cup dropping operation, more specifically by the sum of the horizontal extension distance of the first horizontal movable member 2311b and the horizontal extension distance of the second horizontal movable member 2312b.

In a specific embodiment, as shown in Figs. 66-71, the at least one carrier plate lifting cylinder 2313 and 2314 includes a first carrier plate lifting cylinder 2313 and a second carrier plate lifting cylinder 2314 which are arranged in parallel, the first carrier plate lifting cylinder 2313 comprising a first carrier plate lifting cylinder body 2313a and a first vertical movable member 2313b movable relative to the first carrier plate lifting cylinder body 2313a, while the second carrier plate lifting cylinder 2314 comprising a second carrier plate lifting cylinder body 2314a and a second vertical movable member 2314b which is movable relative to the second carrier plate lifting cylinder body 2314a. More specifically, the third drive mechanism 2310 may further include a support plate frame 2330 disposed on the frame of the machine, which may be configured to support the third drive mechanism 2310 and may be configured to include a first vertical side portion 2333 and a second vertical side portion 2334 disposed oppositely, and a transverse side portion 2331. The first carrier plate lifting cylinder 2313 may be disposed at the first vertical side portion 2333, correspondingly, the second carrier plate lifting cylinder 2314 may be disposed at the second vertical side portion 2334, and the carrier plate 2320 may be disposed on the transverse side portion 2331. The first vertical movable member 2313b of the first carrier plate lifting cylinder 2313 and the second vertical movable member 2314b of the second carrier plate lifting cylinder 2314 are then configured to be coupled to the transverse side portion 2331, more specifically, a lower end of the first vertical movable member 2313b and a lower end of the second vertical movable member 2314b are coupled to the transverse side portion 2331, so as to be able to drive the transverse side portion 2331 to move up and down, and thus to drive the carrier plate 2320 provided on the transverse side portion 2331 and the at least cup dropper 2321, 2322 and the lid dropper to move up and down.

More specifically, as shown in Figs. 66-71, the first vertical movable member 2313b and the second vertical movable member 2314b are coupled to the transverse side portion 2331 via a first vertical slider 2315 and a second vertical slider 2316, respectively. In this case, the first vertical slider 2315 is coupled to the first vertical movable member 2313b so as to be able to move vertically therewith, and the second vertical slider 2316 is coupled to the second vertical movable member 2314b so as to be able to move vertically therewith. More specifically, in this case, the first vertical side portion 2333 of the support plate frame 2330 may be provided with a first slide rail 2335 for guiding the first vertical slider 2315 to move up and down; accordingly, the second vertical side portion 2334 of the support plate frame 2330 may also be provided with a second slide rail 2336 for guiding the second vertical slider 2316 to move up and down. More specifically, the second horizontal movable member 2312b of the second carrier plate horizontal cylinder 2312 may be coupled to the carrier plate 2320 via a horizontal slider 2317; in this case, a horizontal rail 2337 for guiding the horizontal movement of the horizontal slider 2317 may be provided on the transverse side portion 2331 of the support plate frame 2330.

More specifically, as shown in Figs. 66-71, the first carrier plate horizontal cylinder 2311 and/or the second carrier plate horizontal cylinder 2312 and/or the first carrier plate lifting cylinder 2313 and the second carrier plate lifting cylinder 2314 may be rod cylinders, and accordingly, the first horizontal movable member 2311b and/or the second horizontal movable member 2312b and/or the first vertical movable member 2313b and the second vertical movable member 2314b may be respective cylinder rods.

### Labeling mechanism 2500

As mentioned above, the labeling mechanism 2500 is configured to perform the labeling operation at the labeling station, that is, to apply the label 2501 to the finished-product cup 2101. The label includes, for example, information such as a two-dimensional code, a customer name, a kind of beverage, an amount of ice, and an amount of sugar. Various embodiments of the labeling mechanism will be described in detail below.

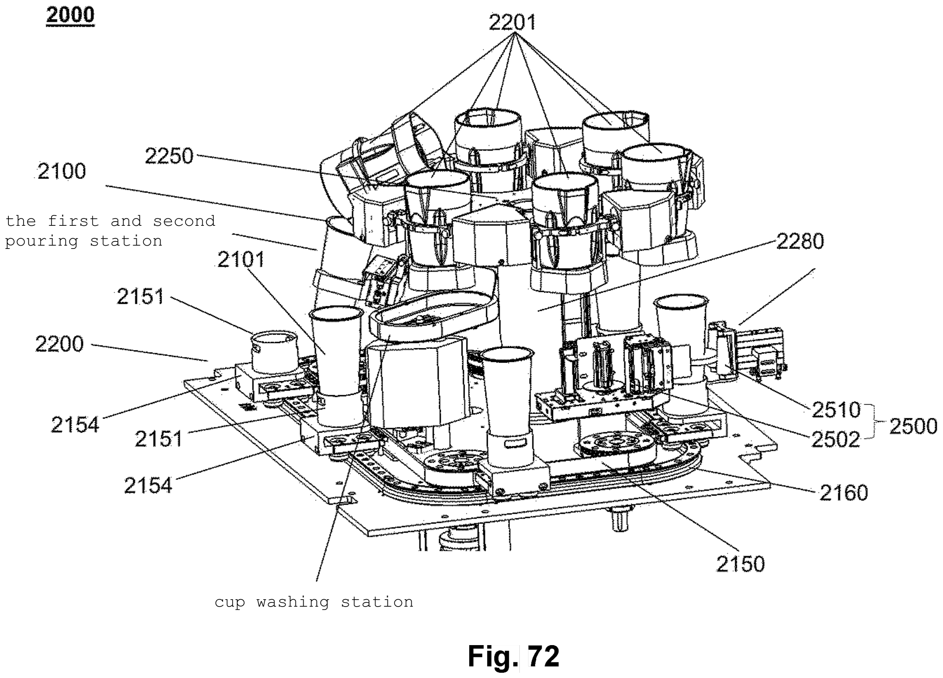

In some embodiments, as shown in Figs. 72-78, the labeling mechanism 2500 includes a label printer 2502 and a labeling roller mechanism 2510. The label printer 2502 is configured to print, discharge and preliminarily adhere the label 2501 to the finished-product cup 2101, i.e. the label 2501 is a label with an adhesive surface, the label printer 2502 is configured to be able to directly discharge the label onto the finished-product cup 2101, and the label 2501 discharged from, i.e. printed by, the label printer 2502 can be preliminarily adhered to the finished-product cup 2101. The labeling roller mechanism 2510 is arranged to press the label 2501 firmly against the finished-product cup 2101. The labeling roller mechanism 2510 may include a driving roller 2522 capable of rotating in a way of abutting against the finished-product cup 2101 and a labeling motor 2512 capable of driving the driving roller 2522 to rotate. In a more specific embodiment, the driving roller 2522 is configured to be at least partially complementary to the profile of the finished-product cup 2101, more specifically to the profile of a labeling area of the finished-product cup 2101. Accordingly, when the driving roller 2522 rotates in the way of abutting against the finished-product cup 2101, the label 2501 on the finished-product cup 2101 can be pressed tightly.

In some embodiments, as shown in Figs. 72-78, the labeling roller mechanism 2510 further includes a labeling cylinder 2513, a driving plate 2514 driven by the labeling cylinder 2513, and a first lateral assembly 2520 and a second lateral assembly 2530 driven by the driving plate 2514. The labeling cylinder 2513 includes a movable labeling cylinder rod. The driving plate 2514 is then coupled with the labeling cylinder rod to be movable with the labeling cylinder rod between an initial retracted position and a final extended position, and the driving plate 2514 includes a first driving plate side and a second driving plate side opposite the first driving plate side. The first lateral assembly 2520 is disposed on the first driving plate side and is disposed so as to be able to rotate about a first fixed shaft 2521 as the driving plate 2514 moves, and the first lateral assembly 2520 includes the driving roller 2522 described above. The second lateral assembly 2530 is disposed on the second driving plate side and is disposed to be able to rotate about a second fixed shaft 2531 as the driving plate 2514 moves, and a first follower roller 2532 capable of abutting against the finished-product cup 2101 is disposed on the second lateral assembly 2530, and the first follower roller 2532 is disposed to be able to rotate as the driving roller 2522 rotates. In such embodiments, during the driving plate 2514 moves under the drive of the labeling cylinder rod from the initial retracted position to the final extended position, the first lateral assembly 2520 and the second lateral assembly 2530 can rotate to gather with each other such that the drive roller 2522 and the first follower roller 2532 abut the finished-product cup 2101; during the driving plate 2514 moves under the drive of the labeling cylinder rod from the final extended position to the initial retracted position, the first and second lateral assemblies 2520 and 2530 can rotate to diverge from each other such that the drive roller 2522 and the first follower roller 2532 moves away from the finished-product cup 2101.

That is, when the labeling roller mechanism 2510 needs to operate, the labeling cylinder 2513 is operated, and the labeling cylinder rod is extended, thereby driving the driving plate 2514 to move from the initial retracted position to the final extended position, during which, the first lateral assembly 2520 and the second lateral assembly 2530 rotate about the first fixed shaft 2521 and the second fixed shaft 2531, respectively, as the driving plate 2514 moves to cause the first lateral assembly 2520 and the second lateral assembly 2530 to gather with each other, thereby enabling the driving roller 2522 and the first follower roller 2532 of the first lateral assembly 2520 to abut against the finished-product cup 2101. At this time, the labeling motor 2512 is operable to drive the driving roller 2522 to rotate, and due to the frictional force between the finished-product cup 2101 and the driving roller 2522 abutting against the finished-product cup 2101 generated by the rotation of the driving roller 2522, the finished-product cup 2101 can also rotate; and then due to the frictional force between the first follower roller 2532 and the finished-product cup 2101 abutting against the first follower roller 2532 generated by the rotation of the finished-product cup 2101, the first follower roller 2532 can also rotate; as a result, the driving roller 2522 and the first follower roller 2532 can roll over the label 2501 on the finished-product cup 2101, thereby pressing the label 2501 against the finished-product cup 2101 tightly. At the end of the labeling operation, the labeling motor 2512 may stop operation and the labeling cylinder rod may be retracted, thereby driving the driving plate 2514 from the final extended position back to the initial retracted position; during which, the first lateral assembly 2520 and the second lateral assembly 2530 rotate about the first fixed shaft 2521 and the second fixed shaft 2531, respectively, as the driving plate 2514 moves, so as to diverge from each other, thereby enabling the driving roller 2522 and the first follower roller 2532 of the first lateral assembly 2520 to move away from the finished-product cup 2101 and thus ensuring that the revolving movement of the first revolving member 2150 is not hindered.

In a specific embodiment, as shown in Figs. 72-78, the first lateral assembly 2520 includes a first transmission lever 2523 configured to be rotatable about a third fixed shaft 2524, and in which a first elongated transmission hole 2525 is provided. The second lateral assembly 2530 includes a second transmission lever 2533 arranged to be rotatable about a fourth fixed shaft 2534, in which a second elongated transmission hole 2535 is provided. The driving plate 2514 is provided with a first protruding pin 2514a extending into the first elongated transmission hole 2525 and a second protruding pin 2514 b extending into the second elongated transmission hole 2535. More specifically, the third fixed shaft 2524 and the fourth fixed shaft 2534 are provided symmetrically with respect to the central symmetry axis X of the labeling roller mechanism 2510, the first fixed shaft 2521 and the second fixed shaft 2531 are also provided symmetrically with respect to the central symmetry axis X, and the third fixed shaft 2524 and the fourth fixed shaft 2534 are provided closer to the central symmetry axis X than the first fixed shaft 2521 and the second fixed shaft 2531. In such embodiments, as the driving plate 2514 moves under the drive of the labeling cylinder rod between the initial retracted position and the final extended position, the driving plate 2514 applies a driving force to an inner wall of the first elongated transmission hole 2525 via the first protruding pin 2514a to drive the first transmission lever 2523 to rotate, and applies a driving force to an inner wall of the second elongated transmission hole 2535 via the second protruding pin 2514b to drive the second transmission lever 2533 to rotate, thereby driving the first lateral assembly 2520 and the second lateral assembly 2530 to rotate. In a more specific embodiment, the first lateral assembly 2520 and the second lateral assembly 2530 are disposed substantially symmetrically about the central symmetry axis X of the labeling roller mechanism 2510.

In a specific embodiment, as shown in Figs. 72-78, the first transmission lever 2523 is further provided with a third elongated transmission hole 2526 which is further away from the third fixed shaft 2524 than the first elongated transmission hole 2525. The second transmission lever 2533 is further provided with a fourth elongated transmission hole 2536 which is further away from the fourth fixed shaft 2534 than the second elongated transmission hole 2535. The first lateral assembly 2520 further includes first driven levers 2527 disposed so as to be rotatable about the first fixed shaft 2521, the first driven levers 2527 being provided with a first protrusion 2528 inserted into the third elongated transmission hole 2526. The second lateral assembly 2530 further includes second driven levers 2537 disposed so as to be rotatable about the second fixed shaft 2531, the second driven levers 2537 being provided with a second protrusion 2538 inserted into the fourth elongated transmission hole 2536. In such embodiments, when the driving plate 2514 moves with the labeling cylinder rod between the initial retracted position and the final extended position, the first transmission lever 2523 applies a driving force to the first protrusion 2528 via the inner wall of the third elongated transmission hole 2526 to rotate the first driven levers 2527, and the second transmission lever 2533 applies a driving force to the second post 2538 via the inner wall of the fourth elongated transmission hole 2536 to rotate the second driven levers 2537.

In some specific embodiments, as shown in Figs. 72-78, the labeling roller mechanism 2510 further includes a first fixed plate 2515 fixedly disposed relative to the frame of the machine, and the first fixed shaft 2521, the second fixed shaft 2531, the third fixed shaft 2524, and the fourth fixed shaft 2534 may be disposed on the first fixed plate 2515. In a more specific embodiment, in order to enable the first lateral assembly 2520 and the second lateral assembly 2530 to be as far away from the first revolving member 2150, 3150 as possible when the labeling mechanism 2500 is not operating so as not to interfere with the revolving movement of the first revolving member 2150, 3150, the first lateral assembly 2520 and the second lateral assembly 2530 may be provided to be maximally dispersed from each other in the initial retracted position. In this case, a first receiving groove 2514c and a second receiving groove 2514d for receiving the first and second protruding pins 2514a and 2514b may also be provided in the first fixing plate 2515 to allow the driving plate 2514 to be retracted as far as possible from the first revolving member 2150, 3150 in the initial retracted position, so that the entire labeling mechanism 2500 is as far away from the first revolving member 2150, 3150 as possible when not operating.

In some specific embodiments, as shown in Figs. 72-78, the first driven levers 2527 includes a first upper driven lever 2527a and a first lower driven lever 2527b between which the driving roller 2522 is rotatably disposed. The second driven levers 2537 includes a second upper driven lever 2537a and a second lower driven lever 2537b, between which the first follower roller 2532 is disposed, more specifically rotatably disposed. More specifically, the driving roller 2522 and the first follower roller 2532 are provided symmetrically with respect to the central symmetry axis X.

In a more specific embodiment, as shown in Figs. 72-78, a second follower roller 2529 and a third follower roller 2539 are provided on the side of the driving plate 2514 facing the finished-product cup 2101, and the second follower roller 2529 and the third follower roller 2539 are capable of abutting against the finished-product cup 2101 when the labeling cylinder 2513 is in the final extended position. More specifically, the contours of the first follower roller 2532, the second follower roller 2529, and the third follower roller 2539 are at least partially complementary to the contours of the finished-product cup 2101. More specifically, when the driving roller 2522 abuts against the finished-product cup 2101, the rotation of the driving roller 2522 generates a frictional force between the driving roller 2522 and the finished-product cup 2101, which can drive the finished-product cup 2101 to rotate; the rotation of the finished-product cup 2101 in turn generates a frictional force between the finished-product cup 2101 and the first, second and third follower rollers 2532, 2529 and 2539 that abut against the finished-product cup 2101, so that the finished-product cup 2101 in turn can drive the first, second and third follower rollers 2532, 2529 and 2539 to rotate. As a result, the driving roller 2522, the first follower roller 2532, the second follower roller 2529, and the third follower roller 2539 can all roll over the label 2501 on the finished-product cup 2101, thereby further facilitating the tight pressing of the label 2501 on the finished-product cup 2101.

In a more specific embodiment, as shown in Figs. 72-78, the labeling roller mechanism 2510 further includes a driving wheel referred to as a third driving wheel 2516, a synchronous belt referred to as a third synchronous belt 2517, and a driven wheel referred to as a third driven wheel 2518. The third driving wheel 2518 is provided to be coupled to the motor shaft of the labeling motor 2512 so as to be driven rotationally by the labeling motor 2512. The third synchronous belt 2517 is looped around the third driving wheel 2516 and the third driven wheel 2518, so that the third synchronous belt 2517 can rotate by the third driving wheel 2516, and the third synchronous belt 2517 in turn can drive the third driven wheel 2518 to rotate. The third driven wheel 2518 is provided so as to be coupled to a rotating shaft of the driving roller 2522, and thus can drive the driving roller 2522 to rotate.

### Liquid material feeding mechanism 2350

As described above, the liquid material feeding mechanism 2350 is configured to perform the liquid material feeding operation of feeding liquid materials into the blending cup 2201 at the charging station. Various embodiments of the liquid material feeding mechanism 2350 will be described in detail below.

In some embodiments, as shown in Figs. 79-84, the liquid material feeding mechanism 2350 includes a liquid material nozzle carrier plate 2351 configured to support at least one liquid material feeding nozzle 2352, each liquid material feeding nozzle 2352 including a liquid material inlet 2352a capable of fluid communication with a liquid material source via a liquid material guide tube, and a liquid material outlet 2352b disposed to align with a respective blending cup 2102. It should be noted that the liquid material source may be a liquid material bucket disposed in the liquid material chamber 1180 of the material storage device 1100, as mentioned when describing the material storage and supply module 1000 for automatic beverage preparation.

In some embodiments, as shown in Figs. 79-84, some of the liquid material feeding nozzles are in the form of filling valves referred to as first filling valves 2360, each of which includes a first valve body 2361 and a liquid material inlet nozzle 2362 and a liquid material outlet nozzle 2363 disposed on the first valve body 2361. The liquid material feeding mechanism 2350 further includes a first filling valve cylinder 2353 and a first plugging portion 2354. The first filling valve cylinder 2353 includes a first movable rod of filling valve cylinder 2353a disposed to project into the first valve body 2361 of the respective first filling valve 2360. The first plugging portion 2354 is provided to be coupled to the first movable rod of filling valve cylinder 2353a so as to be movable with it, being able to block or open the liquid material inlet nozzle 2362 accordingly. More specifically, when the first movable rod of filling valve cylinder 2353a extends, i.e. moves further toward the inside of the first valve body 2361, the first plugging portion 2354 blocks the liquid material inlet nozzle 2362, thereby preventing the liquid material from the liquid material source from entering the first valve body 2361, and thereby preventing or interrupting the execution of the liquid material feeding operation; when the first movable rod of filling valve cylinder 2353a is retracted, i.e. moved toward the outside of the first valve body 2361, the first plugging portion 2354 no longer plugs the liquid material inlet nozzle 2362, thereby allowing liquid material from the liquid material source to enter the first valve body 2361, and thereby allowing the execution of the liquid material feeding operation.

More specifically, the liquid material may include a first type of liquid material, and a second type of liquid material, wherein the second type of liquid material is more viscous than the first type of liquid material, and the first filling valve 1360 may be used for the second type of liquid material.

More specifically, the at least one liquid material feeding nozzle includes 3 to 19 liquid material feeding nozzles 2352. More specifically, each liquid material feeding nozzle 2352 is for a particular kind of liquid material.

In a specific embodiment, the liquid material nozzle carrier plate 2351 is disposed such that the at least one liquid material feeding nozzle 2352 is positioned above and aligned with the blending cup 2201. Alternatively, the liquid material nozzle carrier plate 2351 may be arranged such that the at least one liquid material feeding nozzle 2352 to misalign with the blending cup 2201 when not in operation, and to be moved to a position aligned with the blending cup 2201 under the drive of an associated drive member when in operation.

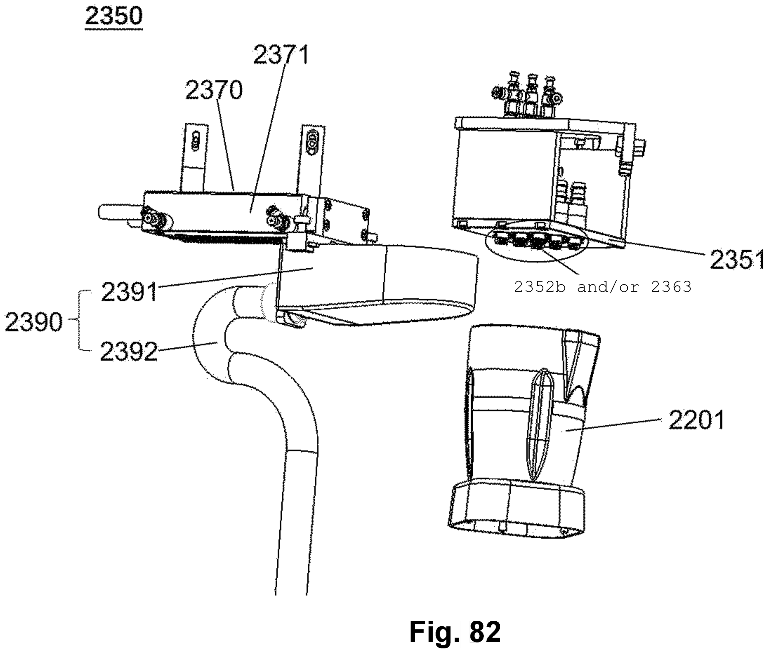

In a specific embodiment, as shown in Figs. 82-84, the liquid material feeding mechanism 2350 further includes a first receiving member 2390 including for receiving liquid material residue which comprises a receiving tray 2391 and a discharge pipe 2392 in fluid communication with the receiving tray 2391 for transporting liquid material residue dripping into the receiving tray 2391 to, for example, a drain pump. The receiving tray 2391 is disposed below the liquid material nozzle carrier plate 2351, more specifically below the liquid material outlet 2352b and/or the liquid material outlet nozzle 2363, when the liquid material feeding mechanism 2350 is not operating, so as to be able to receive the liquid material residue dripping therefrom to prevent contamination, ensure hygiene, and safety of use of the machine.

More specifically, the liquid material feeding mechanism 2350 further includes liquid material feeding horizontal cylinders 2370, 2380 including horizontal cylinder bodies 2371, 2381 and third horizontally movable members 2372, 2382 movable relative to the horizontal cylinder bodies 2371, 2381.

In one variation, as shown in Figs. 82-83, the liquid material feeding mechanism 2350 is arranged such that the at least one liquid material feeding nozzle 2352 is positioned above and aligned with the blending cup 2201. At this time, the third horizontal movable member 2372 of the liquid material feeding horizontal cylinder 2370 may be coupled to the receiving tray 2391 to be able to drive the receiving tray 2391 to move between a non-receiving position and a receiving position. When the liquid material feeding mechanism 2350 is operated, the receiving tray 2391 is in the non-receiving position, and the receiving tray 2391 is offset from the at least one liquid material feeding nozzle 2352 to allow the liquid material discharged from the at least one liquid material feeding nozzle 2352 to be fed into the blending cup 2201 below; when the liquid material feeding mechanism 2350 is not operated, the receiving tray 2391 is in the receiving position, and the receiving tray 2391 is aligned with the at least one liquid material feeding nozzle 2352 to be able to receive the liquid material residue dripping from the liquid material outlet 2352b and/or the liquid material outlet nozzle 2363.

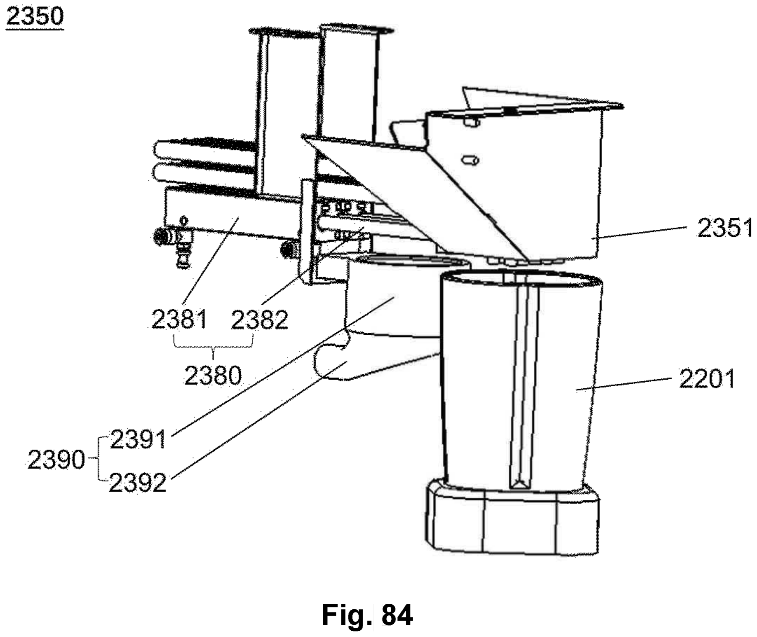

In another variation, as shown in Fig. 84, the third horizontally movable member 2382 of the liquid material feeding horizontal cylinder 2380 is coupled to the liquid material nozzle carrier plate 2351 to be able to drive the latter to move between a non-feeding position and a feeding position. In the non-feeding position, the liquid material outlet 2352b and/or the liquid material outlet nozzle 2363 is aligned with the receiving tray 2391, but not aligned with the blending cup 2201 at the liquid material feeding station located on the second revolving member 2250, 3250, so that the receiving tray 2391 can receive the liquid material residual dripping from the liquid material outlet 2352b and/or the liquid material outlet nozzle 2363; in the feeding position, the liquid material outlet 2352b and/or the liquid material outlet nozzle 2363 is aligned with the blending cup 2201 at the liquid material feed station on the second revolving member 2250, 3250 to enable feeding of liquid material into the blending cup 2201.

### Blending mechanism 2550

As described above, the blending mechanism 2550 is configured to perform the blending operation of blending the materials in the blending cup 2201 at the blending station. Hereinafter, various embodiments of the blending mechanism 2550 will be described.

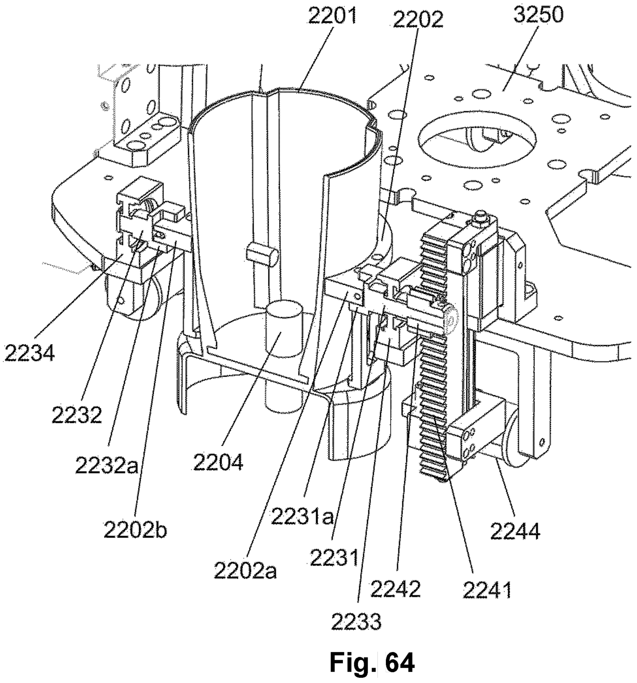

In some embodiments, as shown in Fig. 64, in order to realize the blending operation of the materials in the blending cup 2201, the bottom of the blending cup 2201 is provided with a blending rotating shaft 2204 extending outside the blending cup 2201 and a blending member disposed within the blending cup 2201, and the blending member is coupled to the blending rotating shaft 2204. More specifically, the blending member may be a smoothie knife, which allows the ice cubes added to the blending cup 2201 to be broken up, i.e. allows the smoothie operation to be performed.

In some embodiments, as shown in Figs. 40 and 85, the blending mechanism 2550 includes a blending motor 2560 having a blending motor shaft 2561 that can be coupled to the blending rotating shaft 2204 of the blending cup 2201 when the blending operation is performed. The blending mechanism 2550 further includes a blending cylinder 2551 configured to drive the blending motor 2560 to move between a first rest position in which the blending motor shaft 2561 is away from the blending rotating shaft 2204 of the blending cup 2201 and a first operating position in which the blending motor shaft 2561 is coupled to the blending rotating shaft 2204, the coupling being more specifically a splined coupling. As such, it is possible to ensure that the blending motor 2560 does not affect the rotary movement of the second revolving member 2250 when the blending operation is not performed. In a specific embodiment, the blending motor 2560 is provided with a motor housing, which can protect the blending motor from moisture, impact, and the like. The motor housing may include a top plate 2562 and a floor disposed oppositely, and a plurality of sidewalls 2563 extending therebetween. The blending motor shaft 2561 is disposed such that its coupling end with the blending rotating shaft 2204 of the blending cup 2201 extends beyond the top plate 2562. In addition, one or more stopping members and/or cushioning members 2564 may be provided on the top plate 2562 for stopping and/or cushioning the blending motor 2560 when the blending motor 2560 is moved from the first rest position to the first operating position, so as to prevent large impact on the blending cup 2201 and protect the blending mechanism 2550. More specifically, the stopping members and/or cushioning members 2564 may be made of an elastic material.

In a specific embodiment, as shown in Fig. 85, the blending mechanism 2550 further includes a blending cylinder mount 2552 fixedly disposed relative to the frame of the machine, and on which the blending cylinder 2551 is mounted. In addition, motor guiding portions that cooperate with each other may be provided on a side wall 2563 of the motor housing and on the blending cylinder mount 2552 to guide the blending motor 2560 to move between the first rest position and the first operating position. More specifically, a linear guide rail 2565 may be provided on one side wall 2563 of the motor housing for guiding the up-down movement of the blending motor 2560. More specifically, a motor control panel 2566 may be further provided on the other side wall of the motor housing, and various operation buttons may be provided on the motor control panel 2566.

### Mixing cup lid covering and cleaning mechanism 2600

As described above, the blending cup covering and cleaning mechanism 2600 may be configured to perform the blending cup covering operation of placing the blending cup lid 2203 onto the blending cup 2201 at the blending station prior to the blending operation. Further, the blending cup covering and cleaning mechanism 2600 may be further configured to perform the blending cup lid cleaning operation of cleaning the blending cup lid 2203 at the blending station after the blending operation. Various embodiments of the blending cup covering and cleaning mechanism 2600 will be described below.

In some embodiments, as shown in Figs. 42 and 86-89, the blending cup lid covering and cleaning mechanism 2600 includes a lid-covering lifting cylinder 2610 including a cylinder body 2612 and a first lifting movable member 2611 movable relative to the cylinder body 2612, and the blending cup lid 2203 is disposed to be coupled to the first lifting movable member 2611 to be movable between a first height position and a second height position with the first lifting movable member 2611. In the first height position, the blending cup lid 2203 is positioned above and away from the blending cup 2201; at the second height position, the blending cup lid 2203 is placed on the blending cup 2201. The lid-covering lifting cylinder 2610 may be a rod cylinder. More specifically, the blending cup lid 2203 may be coupled to the first lifting movable member 2611 via a blending cup lid mounting plate 2601, and the blending cup lid 2203 is coupled to the blending cup lid mounting plate 2601 via fastening means 2602, which may include bolts, anchors, pins, adhesive means, and the like. More specifically, the blending cup lid 2203 can be mounted to the blending cup lid mounting plate 2601 in a manner that allows for quick mounting and removal. In addition, a positioning hole 2601a may be provided in the blending cup lid mounting plate 2601, and a positioning pin 2203a cooperating with the positioning hole 2601a may be provided on the blending cup lid 2203 to allow quick and accurate positioning of the blending cup lid 2203 when the blending cup lid 2203 is mounted on the blending cup lid mounting plate 2601, thereby allowing quick installation.

In some embodiments, as shown in Figs. 42 and 86-89, the blending cup lid covering and cleaning mechanism 2600 may further include a blending cup lid cleaning tray 2630 in which the cleaning operation of cleaning the blending cup lid 2203 is performed. In such an embodiment, the blending cup lid covering and cleaning mechanism 2600 may further include a cleaning horizontal cylinder 2620 including a cleaning horizontal cylinder body 2622 and a first horizontal movable member 2621 movable relative to the cleaning horizontal cylinder body 2622, and coupled to the lid-covering lifting cylinder body 2612 to be able to simultaneously drive the lid-covering lifting cylinder 2610 and the blending cup lid 2203 to move between a first horizontal position and a second horizontal position. The first horizontal position is the same position as the first height position, while in the second horizontal position, the blending cup lid 2203 is above the blending cup lid cleaning tray 2630. More specifically, the cleaning horizontal cylinder 2620 is a rodless cylinder.

In a more specific embodiment, as shown in Figs. 42 and 86-89, the blending cup lid covering and cleaning mechanism 2600 further includes a blending cup lid cleaning sprayer 2631 disposed in the blending cup lid cleaning tray 2630, and arranged in fluid communication with a cleaning water source so that, in the second horizontal position, the blending cup lid cleaning sprayer 2631 can spray cleaning water toward the blending cup lid 2203 to clean it. More specifically, the blending cup lid cleaning sprayer 2631 is a high pressure rotary sprayer. More specifically, the blending cup lid covering and cleaning mechanism 2600 further includes a blending cup lid cleaning inlet pipe 2632 provided to guide the cleaning water from the cleaning water source to the blending cup lid cleaning sprayer 2631, and a blending cup lid cleaning drain pipe 2633 provided in fluid communication with the blending cup lid cleaning tray 2630 to discharge wastewater after cleaning from the blending cup lid cleaning tray 2630.

### Transfer mechanism 2400

As described above, the pouring mechanism 2400 is configured to perform the pouring operation at the first pouring station and the second pouring station, which includes pouring the materials from the blending cup 2201 into the finished-product cup 2101. Hereinafter, various embodiments of the pouring mechanism 2400 will be described.

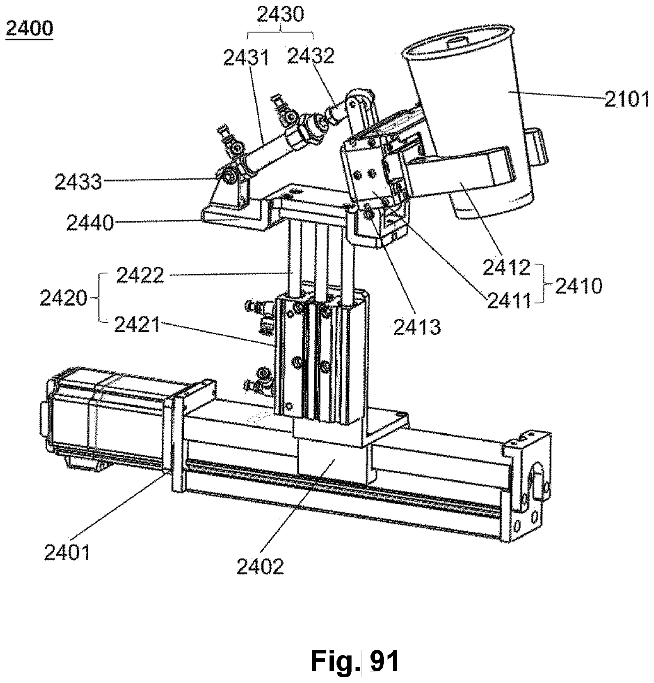

In some embodiments, as shown in Figs. 90-96, the pouring mechanism 2400 includes a first linear module 2401 and a pouring jaw assembly 2410. The first linear module 2401 includes a first movable slider 2402. The pouring jaw assembly 2410 is used to grasp the finished-product cup 2101 and includes pouring jaws 2412 and a pouring jaw cylinder 2411 configured to drive tightening and loosening of the pouring jaws 2412. The pouring jaw assembly 2410 is arranged to be driven by the first movable slider 2402 of the first linear module 2401 to move with the first movable slider 2402. The pouring jaws 2412 are configured to grasp the finished-product cup 2101 at a grasping height position. In the grasp height position, the pouring jaw assembly 2410 can be driven by the first movable slider 2402 to move between a initial position and a jaw operating position. In the initial position, the pouring jaws 2412 are away from the finished-product cup 2101 to ensure that normal rotation of the first revolving member 2150 is not hindered; in the jaw operation position, the pouring jaws 2412 surround the finished-product cup 2101, and the jaw cylinder 2411 is capable of driving the pouring jaws 2412 to tighten so as to grasp the finished-product cup 2101.

In a more specific embodiment, as shown in Figs. 90-96, the blending cup 2201 and the finished-product cup 2101 are at different height positions and/or the finished-product cup 2101 is located in the cup holder 2151 of the first revolving member 2150, and the pouring mechanism 2400 may be further configured to raise the finished-product cup 2101 to a position suitable for performing the pouring operation with the blending cup 2201 in order to enable the pouring operation. In this case, the pouring mechanism 2400 may further include a pouring lifting cylinder 2420 which comprises a pouring lifting cylinder body 2421 coupled to the first movable slider 2402 of the first linear module 2401 and a second lifting movable member 2422 that is movable relative to the pouring lifting cylinder body 2421, and the pouring jaw assembly 2410 is connected to the second lifting movable member 2422 to be driven by the latter so as to move between a grasping height position and a pouring height position in which the materials in the blending cup 2201 is poured into the finished-product cup 2101. In a specific embodiment, the pouring lifting cylinder 2420 is a rod cylinder, and the second lifting movable member 2422 is a cylinder rod.

In a more specific embodiment, as shown in Figs. 90-96, the pouring jaw assembly 2410 is connected to the second lifting movable member 2422 while rotatable about the first rotational axis 2413. The pouring mechanism 2400 may also include a pitch cylinder 2430 including a pitch cylinder body 2431 and a pitch cylinder rod 2432 movable relative to the pitch cylinder body 2431. The pitch cylinder rod 2432, more specifically a distal end of the pitch cylinder rod 2432 relative to the pitch cylinder body 2431, is connected to the pouring jaw assembly 2410, more specifically to the pouring jaw cylinder body 2411, to be able to move the pouring jaw assembly 2410 between a tilted-back state and an upright state about the first axis of rotation 2413 when the pitch cylinder rod 2432 moves - specifically extends or retracts relative to the pitch cylinder body 2431. More specifically, in the upright state, the pouring jaws 2412 remain substantially horizontal, i.e. their angle relative to the horizontal plane is approximately zero, and the finished-product cup 2101 in the pouring jaws 2412 (if the finished-product cup has been grasped) is generally untilted, i.e. remains upright; in the tilted-back state, the angle between the pouring jaws 2412 and the horizontal plane is non-zero, and the finished-product cup 2101 in the pouring jaws 2412 (if the finished-product cup has been grasped) is tilted back.

More specifically, as shown in Figs. 90-96, the pitch cylinder rod 2432 of the pitch cylinder 2430 is configured to be connected to the second lifting movable member 2422 of the pouring lifting cylinder 2420 in a way rotatable about a second rotating shaft 2433 parallel to the first rotating shaft 2413, the second rotating shaft 2433 being more specifically spaced apart from the first rotating shaft 2413. More specifically, the pouring mechanism 2400 may further be configured to include an intermediate mounting plate 2440 disposed to be coupled to the second lifting movable member 2422 of the pouring lifting cylinder 2420 so as to be able to move up and down with the second lifting movable member 2422. Each of the pouring jaw cylinder 2411 and the pitch cylinder body 2431 is rotatably mounted on the intermediate mounting plate 2440 so as to be able to also move up and down with the second lifting movable member 2422. More specifically, the first rotating shaft 2413 and the second rotating shaft 2433 are each disposed on the intermediate mounting plate 2440, for example, at each longitudinal end of the intermediate mounting plate 2440.

In a more specific embodiment, as shown in Figs. 90-96, the pitch cylinder 2430 is disposed such that the distal end of its pitch cylinder rod 2432 is rotatably connected to the body of the pouring jaw cylinder 2411 of the pouring jaw assembly 2410, and more specifically rotatable about a third rotational shaft 2434, which is, for example, disposed on the body of the pouring jaw cylinder 2411.

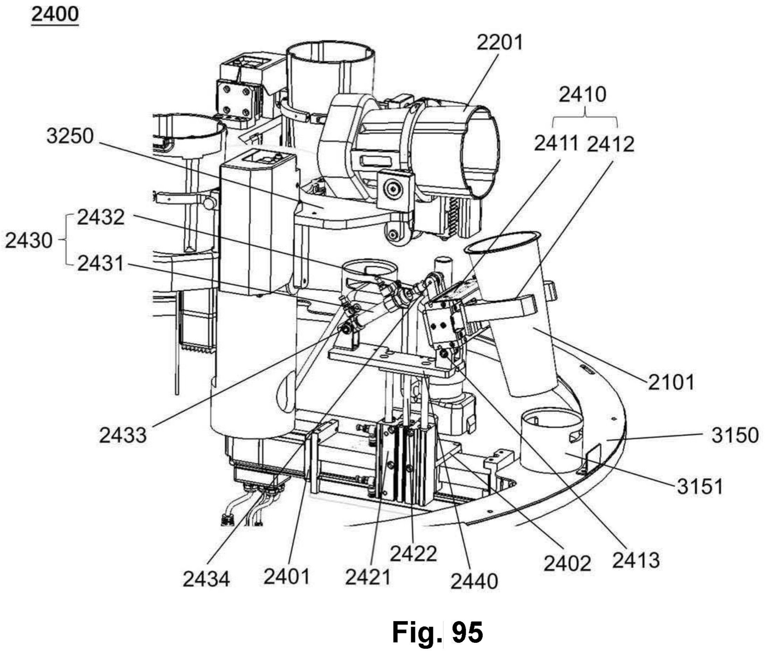

In some embodiments, as shown in Fig. 95, when in the pouring height position, the pouring jaw assembly 2410 is movable with the first movable slider 2402 of the first linear module 2401 between at least a first horizontal position and a second horizontal position. The first horizontal position is a position vertically aligned with the jaw operation position. In the second horizontal position, the blending cup drive mechanism as described above and located at the second pouring station can then drive the blending cup 2201 to turn by a first angle in a second turning direction so that the materials in the blending cup 2201 can be poured into the finished-product cup 2101. More specifically, at the second horizontal position, in a radial direction, more specifically, in a direction radially outward from the support column 2280, the blending cup 2201 is aligned with the finished-product cup 2101, and at this time the blending cup 2201, which was originally held vertically, needs to be turned toward the finished-product cup 2101 by an angle, i.e. the first angle, to enable the materials in the blending cup 2201 to be poured into the finished-product cup 2101. It should be understood that in this case, the blending cup 2201 is at a higher height position than the finished-product cup 2101. This can be referred to as the first stage of material pouring operation.

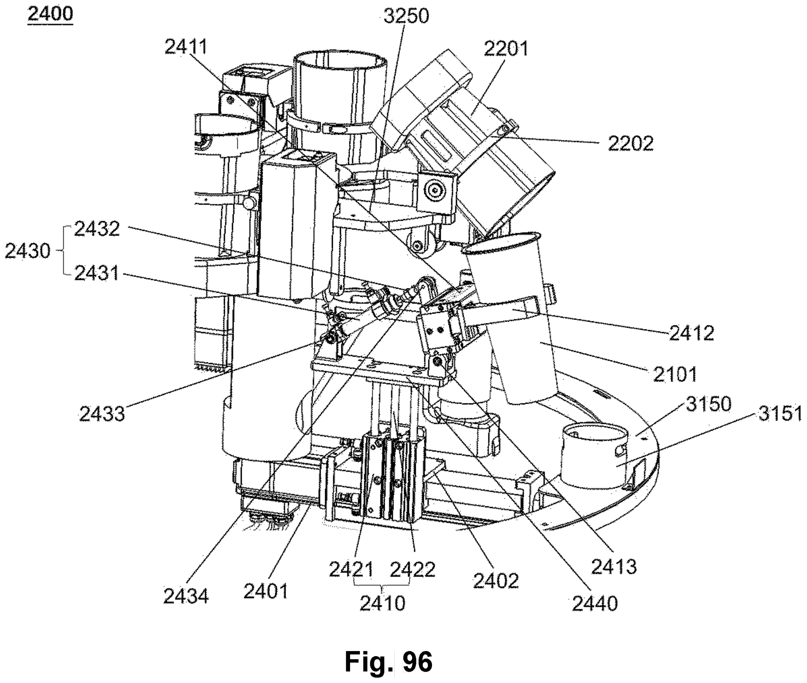

In a more specific embodiment, as shown in Fig. 96, the pouring operation further includes a second stage of material pouring operation. To this end, in the pouring height position, the pouring jaw assembly 2410, and thus the finished-product cup 2101 grasped by it, can also be moved with the first movable slider 2402 of the first linear module 2401 between the second horizontal position and a third horizontal position, the third horizontal position being further away from the first horizontal position than the second horizontal position. In the third horizontal position, the blending cup drive mechanism drives the blending cup 2201 to continue to turn in the second turning direction, i.e. toward the finished-product cup 2101, to a second angle greater than the first angle, so that the remaining materials in the blending cup 2201 can be poured into the finished-product cup 2101. Therefore, it is ensured that all the materials in the blending cup 2201 can be poured into the finished-product cup 2101 without residue, so as to ensure the quality of the beverage.

More specifically, as shown in Figs. 90-96, in the second horizontal position, the pouring jaw assembly 2410 is in the tilted-back state such that the finished-product cup 2101 that it grasps is inclined toward the blending cup 2201 to facilitate pouring of the materials in the blending cup 2201 into the finished-product cup 2101. More specifically, in the third horizontal position, the pouring jaw assembly 2410 is also in the tilted-back state. More specifically, in the first horizontal position, the pouring jaw assembly 2410 changes from the upright state to the tilted-back state, correspondingly the finished-product cup 2101 changes from an untilted position to a tilted position, i.e. from a vertical position to a tilted-back position, and the pouring jaw assembly 2410 and the finished-product cup 2101 move from the first horizontal position to the second horizontal position in such state; and optionally moving from the second horizontal position to the third horizontal position in such state.

More specifically, in an initial position, the pouring jaw assembly 2410 is in a tilted-back state; when the pouring mechanism 2400 starts to operate, the pouring jaw assembly 2410 switches from the tilted-back state to the upright state, and then moves horizontally from the initial position to the jaw operation position under the drive of the first movable slider 2402 of the first linear module 2401 to be able to grasp the finished-product cup 2101.

More specifically, before the blending cup drive mechanism drives the blending cup 2201 to turn by the first angle in the second direction, the blending cup drive mechanism first drives the blending cup 2201 to rotate back and forth with a shaking angle for 1 to 3 times, more specifically, to shake back and forth several times in the second direction and a first direction opposite to the second direction. It should be understood that the shaking angle is much smaller than the first angle. By first shaking several times in situ, the materials in the blending cup 2201 can be prevented from suspending at high level in the blending cup, so that the materials in the blending cup 2201 can fall down to the lower portion in the blending cup 2201 so as to prevent the materials in the blending cup 2201 from being thrown out when the blending cup 2201 is subsequently turned over.

More specifically, after the second stage of material pouring operation is completed, the pouring jaw assembly 2410 carrying the finished-product cup 2101 is returned from the third horizontal position or the second horizontal position to the first horizontal position under the drive by the first movable slider 2402, and is in the vertical state at the first horizontal position. Then, the pouring jaw assembly 2410 carrying the finished-product cup 2101 is returned from the pouring height position to the grasping height position under the drive of the second lifting movable member 2422 of the pouring lifting cylinder rod 2420. After the pouring lifting cylinder movable member 2422 drives the pouring jaw assembly 2410 and the finished-product cup 2101 from the pouring height position back to the grasping height position, and before the pouring jaw assembly 2410 places the finished-product cup 2101 in the respective cup holder 2151 on the first revolving member 2150 and the pouring jaw 2412 releases the finished-product cup 2101, the pouring lifting cylinder rod 2420 drives the finished-product cup 2101 to jolt up and down in the respective cup holder 2151 for 1 to 3 times. Thus, it is possible to ensure that the materials in the finished-product cup 2101 can sink into the bottom thereof, thereby ensuring that the finished-product cup 2101 leaves sufficient space for possible subsequent material feeding, such as the feeding of a milk cap.

### Milk can feeding mechanism 2450

As described above, the milk cap feeding mechanism 2450 is configured to perform the milk cap feeding operation of feeding a milk cap to the finished-product cup 2101 at the milk cap feeding station. Various embodiments of the milk cap feeding mechanism 2450 will be described below.

In some embodiments, as shown in Figs. 99-102, the milk cap feeding mechanism 2450 includes a second filling valve 2460, a second filling valve cylinder 2451, and a second plugging portion 2454. The second filling valve 2460 includes a second valve body 2461, a milk cap inlet 2462 and a milk cap outlet 2463 provided on the second valve body 2461, the milk cap inlet 2462 being configured to be in fluid communication with the milk cap bucket 1192 storing the milk cap, for example placed in the milk cap chamber 1190 of a material storage device 1100, which has been described in detail in the material storage and supply module 1000 for automated beverage preparation, while the milk cap outlet 2463 being configured to enable the feeding of the milk cap into the finished-product cup 2101. The second filling valve cylinder 2451 includes a second movable rod 2452 disposed to project into the second valve body 2461. The second plugging portion 2454 is provided to be coupled with the second movable rod 2452 to be movable with the latter so as to be able to block or open the milk cap inlet 2462. More specifically, as the second movable rod 2452 moves toward the inside of the second valve body 2461, the second plugging portion 2454 plugs the milk cap inlet 2462, thereby preventing the milk cap from the milk cap bucket 1192 from entering the second valve body 2461 via the milk cap inlet 2462, and thus preventing or interrupting the execution of the milk cap feeding operation; when the second movable rod 2452 moves toward the outside of the second valve body 2461, the second plugging portion 2454 opens the milk cap inlet 2462, thereby allowing the milk cap in the milk cap bucket 1192 to enter the second valve body 2461 via the milk cap inlet 2462, and thus allowing the execution of the milk cap feeding operation.

In a specific embodiment, the milk cap inlet 2462 of the second filling valve 2460 is in fluid communication with the milk cap bucket 1192 located in the milk cap chamber 1190 of the material storage device 1100 of the material storage and supply module 1000 via the above-mentioned whipping pump described above. The whipping pump is more specifically configured to draw the cream milk cap base liquids from milk cap buckets 1192, whip the cream milk cap base liquids, and pump the whipped milk cap into the second valve body 2461 of the second filling valve 2460 via the milk cap inlet 2462.

More specifically, as shown in Figs. 99-102, the milk cap feeding mechanism 2450 further includes an ultrasonic liquid level sensor 2455 for detecting the liquid level of the milk cap fed to the finished-product cup 2101. More specifically, when the liquid level in the finished-product cup 2101 reaches a predetermined threshold, the second filling valve cylinder 2451 operates such that the second movable rod 2452 drives the second plugging portion 2454 to move so as to plug the milk cap inlet 2462. More specifically, when the liquid level in the finished-product cup 2101 reaches the predetermined threshold, the above-mentioned whipping pump is stopped and the milk cap inlet 2462 is blocked.

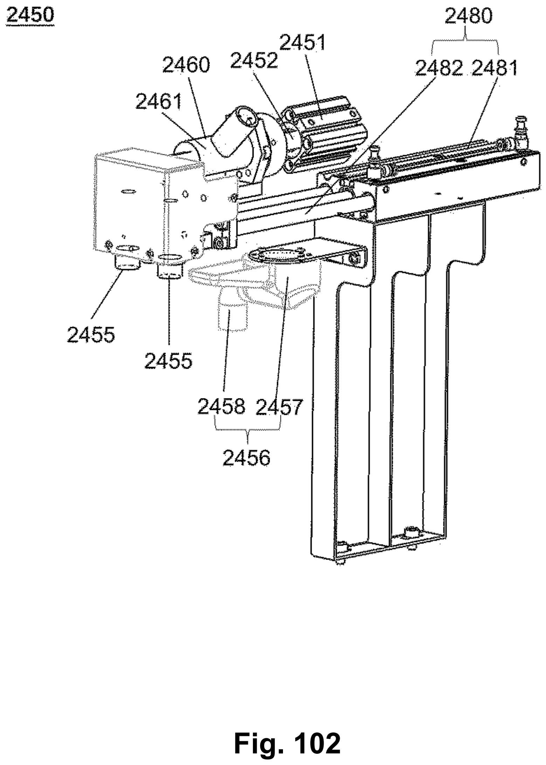

In a specific embodiment, as shown in Figs. 99 and 102, the milk cap feeding mechanism 2450 further includes a second receiving member 2456 for receiving residue of mike cap which comprises a receiving tray 2457 and a discharge pipe 2458 for discharging the residue of milk cap in fluid communication with the receiving tray 2457 for transporting the milk cap residue dripped into the receiving tray 2457, for example, to a drain pump of the machine. The receiving tray 2457 is disposed below the milk cap outlet 2463 when the milk cap feeding mechanism 2450 is not operating, thereby allowing the milk cap residue dripping from the milk cap outlet 2463 to be received so as to prevent contamination, ensure hygiene, and safety us of the machine.

More specifically, as shown in Figs. 99 and 102, the milk cap feeding mechanism 2450 further includes milk cap feeding horizontal cylinders 2470, 2480 including milk cap feeding horizontal cylinder bodies 2471, 2481 and second horizontal movable members 2472, 2482 movable relative to the milk cap feeding horizontal cylinder bodies 2471, 2481.

In one variation, as shown in Fig. 99, the second filling valve 2460 is provided with the milk cap outlet 2463 positioned above the finished-product cup 2101 on the first revolving member 2150 at the milk cap feeding station. At this time, the second horizontal movable member 2472 of the milk cap feeding horizontal cylinder 2470 may be coupled to the receiving tray 2457 to be able to drive the receiving tray 2457 to move between a non-feeding position and a feeding position. When the second filling valve 2460 is operated, the receiving tray 2457 is in a non-receiving position, and the receiving tray 2457 is offset from the milk cap outlet 2463 to allow the milk cap flowing out of the milk cap outlet 2463 to be fed into the finished-product cup 2101 below; when the second filling valve 2460 is not operated, the receiving tray 2457 is in a receiving position, and the receiving tray 2457 is aligned with the milk cap outlet 2463 to be able to receive the milk cap residue dripping from the milk cap outlet 2463.

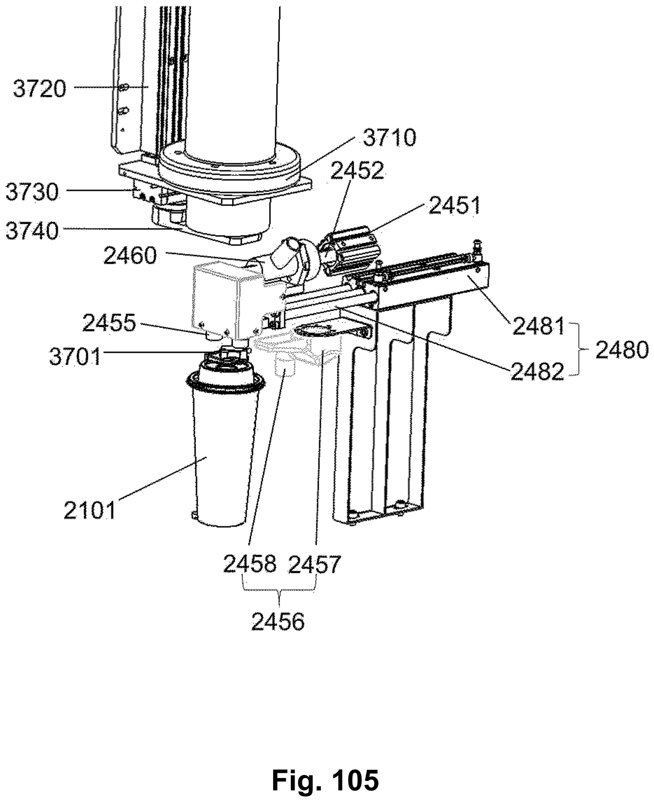

In another variation, as shown in Figs. 102 and 105, the second horizontal movable member 2482 of the milk cap feeding horizontal cylinder 2480 is coupled to the second fill valve 2460 to be able to drive the second fill valve 2460 to move between a non-milk cap feeding position and a milk cap feeding position. In the non-milk cap feeding position, the milk cap outlet 2463 is aligned with the receiving tray 2457 so that the latter can receive the milk cap residue dripping from the milk cap outlet 2463; tn the milk cap feeding position, the milk cap outlet 2463 is aligned with the finished-product cup 2101 on the first revolving member 2150 at the milk cap feeding station to enable the feeding of the milk cap into the finished-product cup 2101.

### 2.2 Multi-station dual-revolving module 3000 according to second embodiment

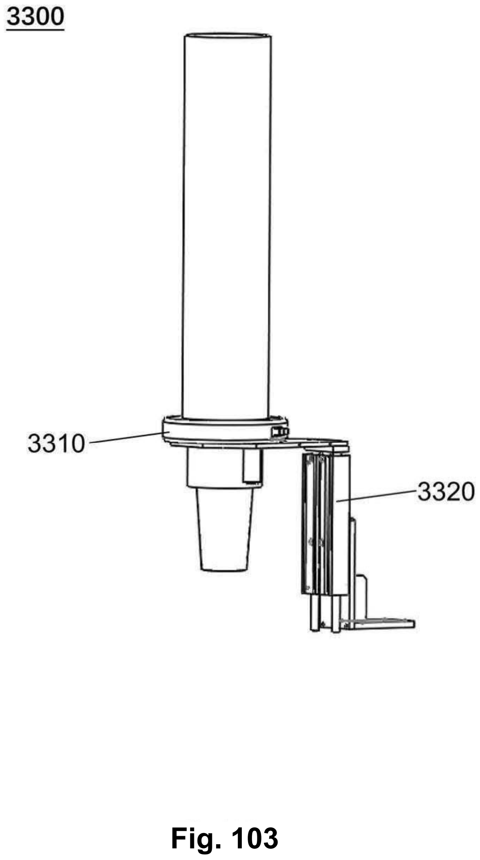

Hereinafter, a second embodiment of the multi-station dual-revolving module 3000 will be described. In this second embodiment, as mentioned above, the first drive mechanism 3110 of the first revolving assembly 3100 of the multi-station dual-revolving module 3000 is capable of driving the first revolving member 3150 to move along a first trajectory passing through a plurality of first type stations including at least a container dropping station and a first pouring station. As shown in Fig. 103, the multi-station dual-revolving module 3000 includes a container dropping mechanism 3300 configured to perform at least dropping the finished-product cup 2101 onto the first revolving member 3150, more specifically into a respective cup holder 3151 fixed on the first revolving member 3150, at the container dropping station. More specifically, in the second embodiment of the multi-station dual-revolving module 3000, the first revolving member 3150 is a first turntable, as shown in Figs. 43-44 and 92-96.

In some embodiments, the plurality of first type stations may further include a base-material feeding station after the container dropping station and before the first pouring station, and the multi-station dual-revolving module further includes a first material feeding mechanism 1700 configured to perform a finished-product cup fresh-material feeding operation and/or a finished-product cup solid-material feeding operation of feeding fresh materials and/or solid materials to the finished-product cup 2101 at the base-material feeding station. This first material feeding mechanism 1700 has been described in detail in the material storage and supply module 1000.

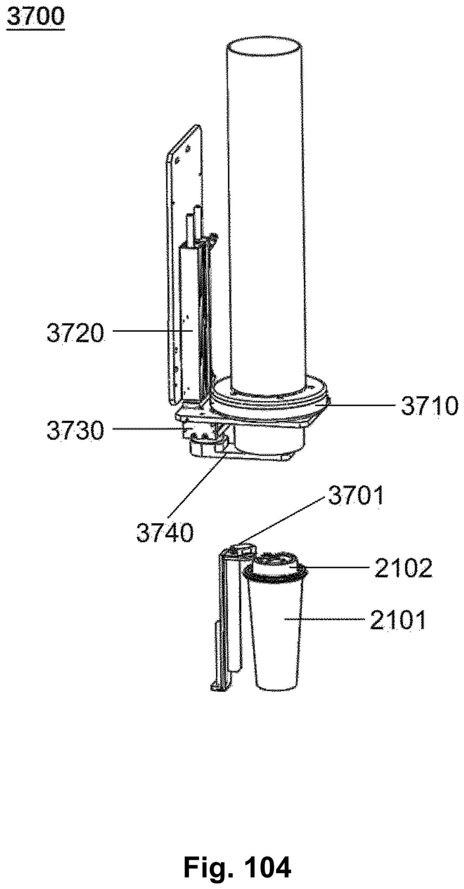

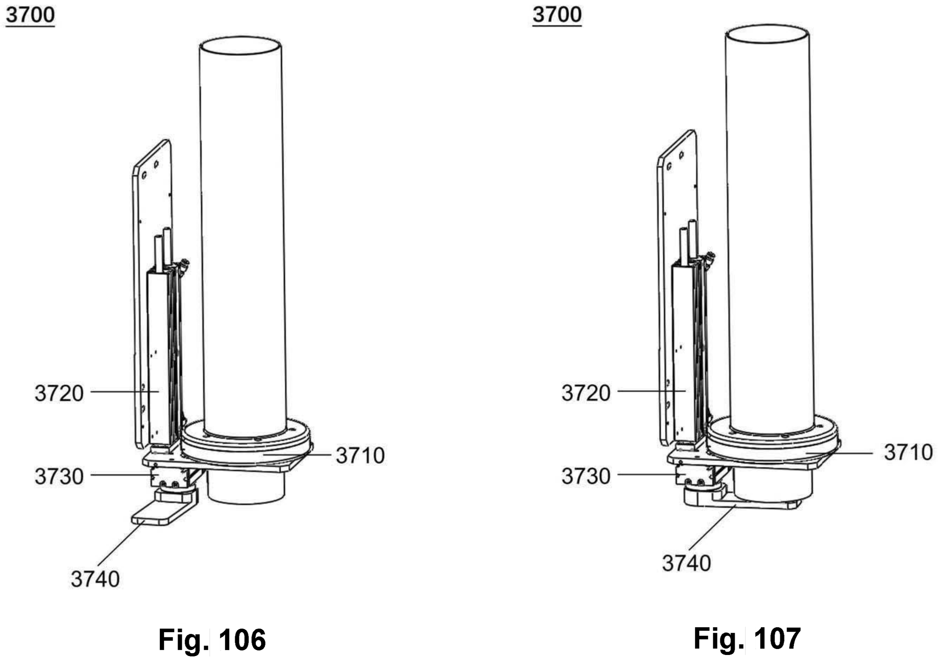

In some embodiments, as shown in Figs. 104-107, the plurality of first type stations further includes a finishing station provided after the first pouring station, and the multi-station dual-revolving module further includes a lid dropping and pressing mechanism 3700 configured to perform at least a lid dropping operation of dropping the finished-product cup lid 2102 onto the finished-product cup 2101 at the finishing station, more specifically, dropping the finished-product cup lid 2102 onto the finished-product cup 2101 that has passed through the stations in the plurality of first type stations other than the finishing station or other than the labeling station and the finishing station along the first trajectory.

In some embodiments, the multi-station dual-revolving module 3000 further includes a milk cap feeding mechanism 2450 configured to perform a milk cap feeding operation of feeding a milk cap into the finished-product cup 2101 at the finishing station prior to the lid dropping operation, as shown in Fig. 105. That is, in this case, the milk cap feeding mechanism 2450 is a milk cap feeding mechanism according to "another variation" of the milk cap feeding mechanism described above, in which the second horizontal movable member 2482 of the milk cap feeding horizontal cylinder 2480 is coupled to the second filling valve 2460 so as to be able to drive the second filling valve 2460 to move between a non-milk cap feeding position and a milk cap feeding position, as shown in Fig. 102. Accordingly, when it is necessary to perform the lid dropping operation, the second horizontal movable member 2482 of the milk cap feeding horizontal cylinder 2480 can push the second filling valve 2460 to the non-milk cap feeding position, that is, a position deviated from the finished-product cup 2101 on the first revolving member 3150, so as not to hinder the execution of the lid dropping operation.

In some embodiments, the lid dropping and pressing mechanism 3700 is further configured to perform a lid-pressing operation of pressing the finished-product cup lid 2102 against the finished-product cup 2101 after the lid dropping operation is performed at the finishing station.

In this second embodiment, as mentioned above, the second drive mechanism 3210 of the second revolving assembly 3200 of the multi-station dual-revolving module 3000 can drive the second revolving member 3250 to move along a second trajectory passing through a plurality of second type stations, including at least a liquid material feeding station and a second pouring station. The multi-station dual-revolving module 3000 includes a liquid material feeding mechanism 2350 configured to perform at least a liquid material feeding operation of feeding liquid material into the blending cup 2201 at the liquid material feeding station.

In some embodiments, the plurality of second type stations further includes a blending station disposed after the liquid material feeding station and before the second pouring station, and the multi-station dual-revolving module 3000 further includes a second material feeding mechanism 1800 configured to perform a blending cup fresh-material feeding operation of feeding fresh material into the blending cup 2201 at the blending station. The second material feeding mechanism 1800 has been described in detail in the material storage and supply module 1000.

In some embodiments, the multi-station dual-revolving module 3000 further includes a blending mechanism 2550 configured to perform, at the blending station, a blending operation of blending the materials in the blending cup 2201 after the blending cup fresh-material feeding operation is performed. More specifically, by performing the blending operation, the materials (which may include one or more of fresh materials, liquid materials, and ice cubes) in the blending cup 2201 can be blended more uniformly or various materials can be mixed more uniformly, and individual materials can also be further refined to better blend with the liquid materials, for example, to provide an improved taste.

In some embodiments, the multi-station dual-revolving module 3000 is further configured to perform an ice feeding operation of feeding ice cubes to the blending cup at the liquid material feeding station; specifically, the ice feeding operation may be performed by the ice discharge mechanism 1900 mentioned above in the material storage and supply module. In this case, the liquid material feeding mechanism 2350 is the one according to Fig. 84, that is, the liquid material feeding mechanism according to "another variation" of the liquid material feeding mechanism described above, wherein the third horizontal movable member 2382 of the liquid material feeding horizontal cylinder 2380 is coupled to the liquid material nozzle carrier plate 2351 so as to be able to drive the liquid material nozzle carrier plate 2351 to move between a non-liquid material-feeding position and a liquid material-feeding position, whereby the liquid material nozzle carrier plate 2351 can be driven away from the blending cup 2201 on the second revolving member 3250 as desired by the third horizontal movable member 2382 of the liquid material feeding horizontal cylinder 2380, without interfering with other operations of the blending cup. More specifically, the ice feeding operation is performed before the blending operation, so that the smoothie-making operation can be performed as needed for making a smoothie beverage or a fruit tea beverage.

In some embodiments, the plurality of second type stations further includes a cup washing station disposed after the second pouring station, and the multi-station dual-revolving module 3000 further includes a cup washing mechanism 2650 configured to perform a cup washing operation of washing the blending cup 2201 at the cup washing station. Thus, this allows the blending cup 2201 to be washed after each pouring operation to ensure the purity of the beverage and to ensure hygiene.

In a specific exemplary embodiment, the plurality of first type stations are sequentially arranged in the following sequence: the container dropping station; the base-material feeding station; the first pouring station; the finishing station. Accordingly, more specifically, the respective operations at the plurality of first type stations are sequentially performed in the following sequence: the cup dropping operation; the finished-product cup fresh-material feeding operation and/or finished-product cup solid-material feeding operation; the pouring operation; the milk cap feeding operation; the lid dropping operation; and the lid-pressing operation.

In a specific exemplary embodiment, the plurality of second type stations are sequentially arranged in the following sequence: the liquid material feeding station; the blending station; the second pouring station; the cup washing station. Accordingly, more specifically, the respective operations at the plurality of second type stations are sequentially performed in the following sequence: the liquid material feeding operation; the ice feeding operation; the blending cup fresh-material feeding operation; the blending operation; the pouring operation; the cup washing operation.

In the second embodiment of the multi-station dual-revolving module, the liquid material feeding mechanism, the blending mechanism, the pouring mechanism, the cup washing mechanism and the milk cap feeding mechanism are similar to the first embodiment of the multi-station dual-revolving module, and will not be repeated here. Hereinafter, various embodiments of the container dropping mechanism and the lid dropping and pressing mechanism different from the first embodiment of the multi-station dual-revolving module will be described.

More specifically, the multi-station dual-revolving module 3000 proposed in the present application can be used to simultaneously make multiple beverages, in which case, the corresponding operations at the plurality of first type stations and the corresponding operations at the plurality of second type stations can be performed simultaneously.

More specifically, when making a smoothie beverage, the following operations may be sequentially performed at the plurality of first type stations: a the cup dropping operation; the finished-product cup fresh-material feeding operation; the pouring operation; the lid dropping operation; alternatively, the milk cap feeding operation may be performed before the lid dropping operation; optionally, the lid-pressing operation may also be performed after the lid dropping operation. At the same time, at the plurality of second type stations, the following operations may be sequentially performed: the liquid material feeding operation; the ice feeding operation; the blending cup fresh-material feeding operation; the blending operation (including smoothie-making operation); pouring operations; optionally, the cup washing operation may also be performed at the end.

More specifically, when producing the fruit tea beverage, the following operations may be sequentially performed at the plurality of first type stations: the cup dropping operation; the finished-product cup fresh-material feeding operation; the pouring operation; the lid dropping operation; alternatively, the milk cap feeding operation may be performed before the lid dropping operation; optionally, the lid-pressing operation may also be performed after the lid dropping operation. At the same time, at the plurality of second type stations, the following operations may be sequentially performed: the liquid material feeding operation; blending cup fresh-material feeding operation; the blending operation; the pouring operation; optionally, the cup washing operation may also be performed at the end.

More specifically, when making a milk tea beverage, the following operations may be sequentially performed at the plurality of first type stations: the cup dropping operation; the finished-product cup solid-material feeding operation; the pouring operation; the lid dropping operation; alternatively, the milk cap feeding operation may be performed before the lid dropping operation; alternatively, the lid-pressing operation may also be performed after the lid dropping operation. At the same time, at the plurality of second type stations, the following operations may be sequentially performed: the liquid material feeding operation; the pouring operation; optionally, the cup washing operation may also be performed at the end.

### Container dropping mechanism 3300

In the multi-station dual-turn module 3000 according to the second embodiment, the container dropping mechanism 3300 is configured to perform the cup dropping operation at the container dropping station.

In some embodiments, as shown in Fig. 103, the container dropping mechanism 3300 may be configured to include a cup dropper 3310 and a cup dropping lifting cylinder 3320 configured to drive the cup dropper 3310 to move between a cup dropper rest position and a cup dropper operating position; wherein, in the cup dropper operating position, the cup dropper 3310 drops the finished-product cup 2101 in place on the first revolving member 3150, more specifically into the respective cup holder 3151 on the first revolving member 3150. More specifically, when the container dropping mechanism 3300 is not operating, the container dropping mechanism 3300 is configured such that the cup dropper 3310 is in the cup dropper rest position, thereby ensuring that the container dropping mechanism 3300 does not hinder free rotation of the first and second revolving members 3150, 3250.

In some embodiments, in the cup dropper 3310 operating position, the lowermost finished-product cup 2101 on the cup dropper 3310 partially extends into the respective cup holder 3151 on the first revolving member 3150 before the cup dropper 3310 is operated to drop the finished-product cup 2101, thereby ensuring that the finished-product cup 2101 can fall steadily into the cup holder 3151, thereby avoiding the risk of the finished-product cup 2101 tilting or even falling over during dropping.

### Lid dropping and pressing mechanism 3700

As described above, in some embodiments, lid dropping and pressing mechanism 3700 is configured to perform a lid dropping operation of dropping the finished-product cup lid 2102 onto the finished-product cup 2101 at the finishing station. In some embodiments, lid dropping and pressing mechanism 3700 is further configured to perform a lid-pressing operation of pressing the finished-product cup lid 2102 against the finished-product cup 2101 at the finishing station. Various embodiments of the lid dropping and pressing mechanism 3700 will be described in detail below.

In some embodiments, as shown in Figs. 104-107, the lid dropping and pressing mechanism 3700 may be configured to include a lid dropper 3710 and a lid dropper lifting cylinder 3720 configured to drive the lid dropper 3710 to move between a lid dropper rest position and a lid dropper operating position in which the lid dropper 3710 operates to drop the finished-product cup lid 2102 onto the corresponding finished-product cup 2101. More specifically, when the lid dropping and pressing mechanism 3700 is not operating, the lid dropper 3710 is in the lid dropper rest position, thereby ensuring that the lid dropping and pressing mechanism 3700 does not hinder the free rotation of the first and second revolving members 3150, 3250. More specifically, in the lid dropper operating position, the lowermost finished-product cup lid 2102 on the lid dropper 3710 has been partially covered on the corresponding finished-product cup 2101 before the lid dropper 3710 is operated, which may ensure accurate execution of the lid dropping operation.

In some embodiments, as shown in Figs. 104-107, the lid dropping and pressing mechanism 3700 may also be configured to perform the lid-pressing operation at the finishing station, and correspondingly include a lid-pressing swing cylinder 3730 and a lid-pressing plate 3740. The lid-pressing swing cylinder 3730 may be configured to include a lid-pressing swing cylinder body coupled to the cap dropper 3710 and a rotatable member, and the lid-pressing plate 3740 is configured to be coupled to the rotatable member to be driven by the rotatable member to pivot between a lid-pressing plate rest position and a lid-pressing plate operating position. In the lid-pressing operating position, the lid-pressing plate 3740 is positioned at the bottom of the lid dropper 3710, and in the lid-pressing rest position, the lid-pressing plate 3740 is offset from the bottom of the lid dropper 3710. In addition, the lid dropper lifting cylinder 3720 is also configured to drive the lid dropper 3710 and the lid-pressing plate 3740 to move up and down for several times to be able to apply pressure to the finished-product cup lid 2102 to press it against the finished-product cup 2101 each time the lid-pressing plate 3740 is moved down.

More specifically, as shown in Figs. 104-107, after the lid dropping and pressing mechanism 3700 has performed the lid dropping operation, the lid dropper lifting cylinder 3720 operates to bring the lid dropper 3710 back from the lid dropper operation position to the lid dropper rest position; then, the lid-pressing swing cylinder 3730 operates such that its rotatable member rotates the lid-pressing plate 3740 from the lid-pressing plate rest position to the lid-pressing plate operating position; then, the lid dropper lifting cylinder 3720 operates again to move the lid dropper 3710 from the lid dropper rest position to the lid dropper operation position; further, the lid dropper lifting cylinder 3720 is further operable to drive the lid dropper 3710 and the lid-pressing plate 3740 to move up and down so as to further press the finished-product cup lid 2102 against the finished-product cup 2101 at the end of each downward movement.

In some embodiments, as shown in Figs. 104-107, the lid dropping and pressing mechanism 3700 may also be configured to include a lid dropping detection sensor 3701 for detecting whether the lid is successfully dropped after performing the lid dropper operation. More specifically, the lid dropping detection sensor 3701 is disposed at a position at which it can detect the presence of the finished-product cup lid 2102 on the finished-product cup 2101. Accordingly, a corresponding detection piece may be provided in the finished-product cup lid 2102, which is able to be detected by the lid dropping detection sensor 3701.

### Cup washing mechanism 2650

As described above, the cup washing mechanism 2650 is configured to perform the cup washing operation of washing the blending cup 2201 at the cup washing station. Various embodiments of the cup wash mechanism 2650 will be described below.

In some embodiments, as shown in Figs. 41-42 and 97-98, the cup washing mechanism 2650 includes a cup washing cylinder 2660, a cup washing tray 2670 can be driven to displace by the cup washing cylinder 2660, a cup washing sprayer 2671 disposed in the cup washing tray 2670, and a cup washing inlet pipe 2672 and a cup washing outlet pipe 2673 in fluid communication with the cup washing tray 2670.

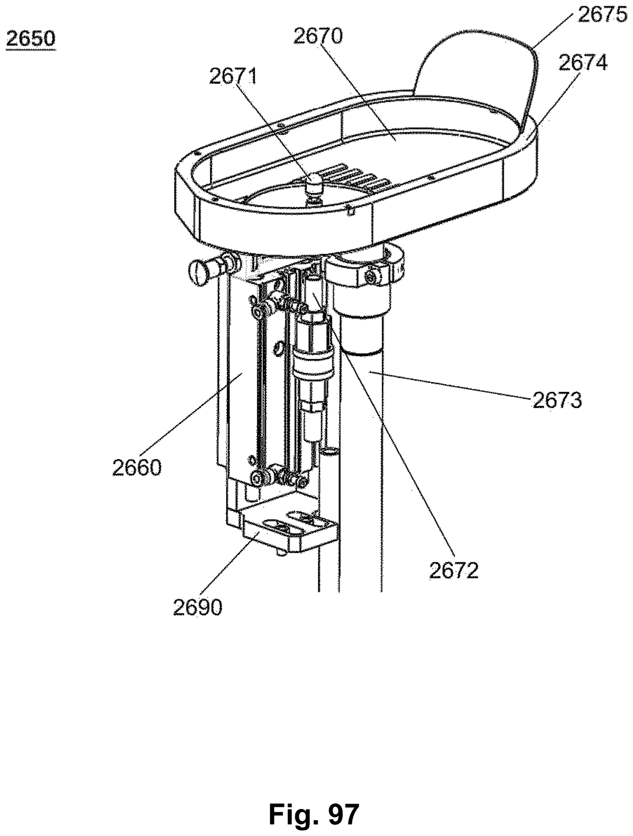

As shown in Figs. 97-98, the cup washing cylinder 2660 includes a cup washing cylinder body and a cup washing cylinder movable member. The cup washing tray 2670 is coupled to the cup washing cylinder movable member so as to be driven by the cup washing cylinder 2660 so as to be movable between a non-cup washing position in which the cup washing tray 2670 does not abut the cup mouth of the blending cup 2201 and a cup washing position in which the cup washing tray 2670 abuts the cup mouth of the blending cup 2201 so as to enable cleaning of the blending cup 2201. More specifically, in the non-cup washing position, the cup washing tray 2670 is located below the mix cup 2201; when the cup washing operation is required, the cup washing tray 2670 is moved from the non-cup washing position to the cup washing position under the drive of the movable member of the cup washing cylinder, during which the blending cup 2201 is turned over by 180° in a first turning direction via the blending cup drive mechanism so that the cup mouth of the blending cup 2201 can be upside down to abut the cup washing tray 2670 which is in the cup washing position. The first turning direction is more specifically a direction toward the radially inner side of the second revolving member 2150. More specifically, a protruding splash baffle 2675 is provided at a top edge portion 2674 of the cup washing tray 2670, more specifically at a portion of the top edge portion that is at the radially inner side of the cup washing tray 2670, for blocking the residual material that may be thrown out from the blending cup when the blending cup 2201 is turned over in the first turning direction, thereby avoiding contamination of the machine. It should be understood that after completion of the cup washing operation, the blending cup 2201 is again flipped by 180° via the blending cup drive mechanism in the second turning direction opposite the first turning direction to be reset.

As shown in Figs. 97-98, the cup washing sprayer 2671 disposed in the cup washing tray 2670 is then in fluid communication with the cleaning water source, more specifically, in fluid communication with the cleaning water source via the cup washing inlet pipe 2672 disposed to guide the cleaning water from the cleaning water source to the cup washing sprayer 2671, so as to be able to spray the cleaning water into the blending cup 2201 at the cup washing position to clean the blending cup 2201. In a specific embodiment, the cup washing sprayer 2671 is a high pressure rotary sprayer. The cup washing outlet pipe 2673 is provided in fluid communication with the cup washing tray 2670 to discharge wastewater from the cup washing tray 2670 after the cup washing operation.

In a specific embodiment, as shown in Figs. 97-98, the cup washing tray 2670 is coupled to the cup washing cylinder movable member via an intermediate mount, and more specifically in a manner that allows quick installation and removal. More specifically, the intermediate mount includes a first plate 2681 coupled to the bottom of the cup washing tray 2670 and a second plate 2682 coupled to the cup washing cylinder movable member. The first plate 2681 more specifically includes a first mounting tab 2681a and a second mounting tab 2681b facing each other, and is, for example, generally U-shaped. The second plate 2682 includes a first mounting portion 2682a and a second mounting portion 2682b opposite to each other and interfacing the first mounting tab 2681a and the second mounting tab 2681b, respectively, a first alignment holes being provided in first mounting tab 2681a and the first mounting portion 2682a into which an indexing pin 2683 can be inserted; second alignment holes being provided in the second mounting piece 2681b and the second mounting portion 2682b into which a spring portion of a knurled thumb screw 2684 can be inserted. As a result, quick installation and detachment of the cup washing tray 2670 with the movable member of the cup washing cylinder is achieved.

More specifically, as shown in Figs. 97-98, the cup washing mechanism 2650 further includes a cup washing cylinder mount 2690 that is fixedly disposed, for example, on a machine frame, and on which the cup washing cylinder 2660 is mounted.

### 2.3 Method for fully automated beverage making using multi-station dual-revolving module

The present application also relates to a method of fully automated beverage making using a multi-station dual-revolving module 2000, 3000. As described above, in some embodiments, the multi-station dual-revolving module 2000, 3000 includes a first revolving member 2150, 3150 and a second revolving member 2250, 3250. The first revolving member 2150, 3150 is configured to carry the finished-product cup 2101 and is movable along a first trajectory passing through a plurality of first type stations including at least a container dropping station and a first pouring station; at the container dropping station, at least a cup dropping operation of dropping the finished-product cup 2101 onto the first revolving member 2150, 3150 is performed. The second revolving member 2250, 3250 is configured to carry the blending cup 2201 and is movable along a second trajectory passing through a plurality of second type stations including at least a liquid material feeding station and a second pouring station; at the liquid material feeding station, at least a liquid material feeding operation of feeding a liquid material into the blending cup 2201 is performed. The first pouring station corresponds to the second pouring station, and when the finished-product cup 2101 is located at the first pouring station, the corresponding blending cup 2201 is located at the second pouring station to perform a pouring operation at the first pouring station and the second pouring station, and the pouring operation includes pouring the materials in the blending cup 2201 into the finished-product cup 2101.

In such an embodiment, the above method comprises at least the following steps:
an initiating step comprising detecting an origin of the first revolving member 2150, 3150 and detecting an origin of the second revolving member 2250, 3250;
a pouring step subsequent to the initiating step and comprising the pouring operation;
a first type intermediate step(s) performed at a respective first type station of the plurality of first type stations, the first type intermediate step(s) being performed after the initiating step and before the pouring step, comprising at least the cup dropping operation;
a second type intermediate step(s) performed at a respective second type station of the plurality of second type stations, the second type intermediate step(s) being performed after the initiating step and before the pouring step, comprising at least the liquid material feeding operation.

It should be noted that when describing various embodiments of the method of fully automated making of beverages using the multi-station dual-revolving modules 2000, 3000, the above description of the multi-station dual-revolving modules 2000, 3000, in particular the description of specific operations and related operating mechanisms, is equally applicable, and therefore the relevant details will not be repeated.

In some embodiments, the pouring operation includes sub-operation b1: turning the blending cup 2201 by the first angle to align with the finished-product cup 2101 to pour most of the materials in the blending cup 2201 into the finished-product cup 2101.

In a more specific embodiment, the pouring operation further includes a sub-operation b11 before the sub-operation b1: shaking the blending cup 2201 for 1 to 3 times;

In a more specific embodiment, the pouring operation further includes a sub-operation b12 prior to the sub-operation b1: lifting the finished-product cup 2101 from the first revolving member 2150 by a height to be able to align with the corresponding blending cup 2201.

In a more specific embodiment, the pouring operation further includes a sub-operation b13 after the sub-operation b12 and before the sub-operation b1: tilting the finished-product cup 2101 by an angle.

In a more specific embodiment, the pouring operation further includes a sub-operation b14 after the sub-operation b13 and before the sub-operation b1: horizontally moving the finished-product cup 2101 toward the blending cup 2201 by a first distance.

In a more specific embodiment, the pouring operation further includes a sub-operation b2 following the sub-operation b1: moving the finished-product cup 2101 horizontally further toward the blending cup 2201 by a second distance, and turning the blending cup 2201 further to a second angle greater than the first angle to pour the remaining materials in the blending cup 2201 into the finished-product cup 2101.

In a more specific embodiment, the pouring operation further includes a sub-step b3 following the sub-operation b2: bringing the finished-product cup back into position on the first revolving member 2150, 3150 and turning the blending cup 2201 back into the initial position.

In a more specific embodiment, the pouring operation further includes a sub-step b4 after the sub-operation b3: squatting the finished-product cup 2201 up and down on the first revolving member 2150, 3150 for 1 to 3 times.

In some embodiments, the method further comprises a first type finishing step(s) and/or a second type finishing step(s) after the pouring step, the first type finishing step(s) being performed at a respective first type station of the plurality of first type stations, and the second type finishing step(s) being performed at a respective second type station of the plurality of second type stations, respectively.

A first embodiment and a second embodiment of the method will be described below.

### First embodiment of the method

The first embodiment of the method corresponds to the first embodiment of the above-described multi-station dual-revolving module 2000.

In some embodiments, the first type finishing step(s) includes performing the lid dropping operation at the container dropping station of dropping the finished-product cup lid 2102 onto the finished-product cup 2101 that has passed through the plurality of first type stations and returns to the container dropping station.

In a more specific embodiment, the cup dropping operation and the lid dropping operation are performed by the container dropping mechanism 2300 included in the multi-station dual-revolving module 2000. More specifically, the finished-product cup 2101 may include a first type finished-product cup 2101a and a second type finished-product cup 2101b having different heights. The container dropping mechanism 2300 may then be configured to include a carrier plate 2320, and a first cup dropper 2321, a second cup dropper 2322 and a lid dropper 2323 carried by the carrier plate 2320. The first cup dropper 2321 is configured to perform the cup dropping operation of dropping the first type finished-product cup 2101a, the second cup dropper 2322 is configured to perform the cup dropping operation of dropping the second type finished-product cup 2101b, and the lid dropper 2323 is configured to perform the lid dropping operation. In such an embodiment, the first cup dropper 2321, the second cup dropper 2322, and the lid dropper 2323 may be provided on the carrier plate 2320 such that: when the cup dropping operation of the first type finished-product cup 2101a is performed using the first cup dropper 2321, the carrier plate 2320 is horizontally moved by a first horizontal distance and lowered by a height distance; when the cup dropping operation of the second type finished-product cup 2101b is performed using the second cup dropper 2322, the carrier plate 2320 is moved horizontally by a second horizontal distance greater than the first horizontal distance and lowered by the height distance, more specifically, the second horizontal distance may be twice the first horizontal distance; when the lid dropping operation is performed using the lid dropper 2323, the carrier plate 2320 is lowered by the height distance.

In a more specific embodiment, the cup dropping operation includes blowing an airflow toward the upper edge of the respective finished-product cup 2101 while operating the first cup dropper 2321 or the second cup dropper 2322 to drop the finished-product cup 2101, thereby enabling a steady drop of the finished-product cup 2101.

In a more specific embodiment, when the cup dropping operation is performed, the carrier plate 2320 is lowered by a height distance such that the lowermost first type finished-product cup 2101a or second type finished-product cup 2101b can partially extend into the respective cup holder 2151 on the first revolving member 2150, thereby ensuring that the finished-product cup 2101 can drop into place on the first revolving member 2150.

In a more specific embodiment, the plurality of first type stations further include a base-material feeding station arranged after the container dropping station and before the first pouring station, and the first type intermediate step(s) further includes performing the finished-product cup fresh-material feeding operation or the finished-product cup solid-material feeding operation in which fresh material or solid material is fed into the finished-product cup 2101 at the base-material feeding station after the cup dropping operation.

In a more specific embodiment, the finished-product cup fresh-material feeding operation or the finished-product cup solid-material feeding operation includes performing the following sub-operations using the first material feeding mechanism 1700 included in the multi-station dual-revolving module:
Sub-operation a1: the first material container M1 containing fresh material or solid material is taken out from the material container chamber 1120;
Sub-operation a2: delivering the first material container M1 from the material container chamber 1120 to the base-material feeding station of the first revolving member 2150;
Sub-operation a4: the fresh material or the solid material in the first material container M1 is poured into the finished-product cup 2101. More specifically, the sub-operation a4 comprises flipping the first material container M1 by 180 °.

More specifically, the first material container M1 is provided with a sealing film, and the operation of feeding fresh material to the finished-product cup or the operation of feeding solid material to the finished-product cup further includes a sub-operation a3 before the sub-operation a4: opening the sealing film.

More specifically, the finished-product cup fresh-material feeding operation or the finished-product cup solid-material feeding operation further includes a sub-operation a5 following the sub-operation a4: placing the first material container M1 into the first waste material container collector 1740.

In a more specific embodiment, the plurality of first type stations further include a milk cap feeding station provided after the first pouring station, and the first type finishing step(s) further includes performing the milk cap feeding operation of feeding a milk cap into the finished-product cup 2101 at the milk cap feeding station before the lid dropping operation.

In a more specific embodiment, the plurality of first type stations further comprises a labeling station, and the first type intermediate step(s) or the first type finishing step(s) further comprises a labeling operation of applying the label 2501 to the finished-product cup 2101 at the labeling station. That is, the labeling operation may be performed before or after the pouring step according to actual needs.

In a more specific embodiment, the multi-station dual-revolving module 2000 includes a label printer 2502 and a labeling roller mechanism 2510, and the labeling operation includes using the label printer 2502 to print and spit the label 2501 onto the finished-product cup 2101, and then using the labeling roller mechanism 2510 to adhere the label 2501 onto the finished-product cup 2101 tightly.

In a more specific embodiment, the method performs operations in the following first order: the cup dropping operation; the labeling operation; the finished-product cup fresh-material feeding operation or the finished-product cup solid-material feeding operation; the pouring operation; milk cap feeding operation; the lid dropping operation.

In a more specific embodiment, the method comprises repeatedly performing the respective operations in the first order described above.

In some embodiments, the plurality of second type stations further include a blending cup fresh-material feeding station disposed before the second pouring station, and the second type intermediate step(s) includes performing a blending cup fresh-material feeding operation of feeding fresh material to the blending cup at the blending cup fresh-material feeding station.

In a more specific embodiment, the blending cup fresh-material feeding operation includes performing the following sub-operations using the second material feeding mechanism 1800 included in the multi-station dual-revolving module 2000:
Sub-operation c1: taking the second material container M2 containing the fresh material out from the material container chamber 1120;
Sub-operation c2: delivering the second material container M2 from the material container chamber 1120 to the blending cup fresh-material feeding station of the second revolving member 2250;
Sub-operation c4: pouring the fresh material in the second material container M2 into the blending cup 2201; more specifically, the sub-operation c4 comprises turning the second material container M2 by 180 °.

In a more specific embodiment, the second material container M2 is provided with a sealing film, and the blending cup fresh-material feeding operation further comprises a sub-operation c3: opening the sealing film before the sub-operation c4.

In a more specific embodiment, the blending cup fresh-material feeding operation further includes a sub-operation c5 following sub-operation c4: placing the second material container M2 in the second waste material container collector 1840.

In a more specific embodiment, the plurality of second type stations further comprises a blending station disposed after the blending cup fresh-material feeding station and before the second pouring station, and the second type intermediate step(s) further comprises performing the blending operation of blending the materials in the blending cup 2201 at the blending station.

In a more specific embodiment, the plurality of second type stations further comprises the ice feeding station disposed before the blending station, and the second type intermediate step(s) further comprises performing the ice feeding operation of feeding ice cubes to the blending cup 2201 at the ice feeding station. In such an embodiment, the blending operation may include a smoothie operation, that is, an operation of breaking up ice cubes fed into the blending cup 2201.

In a more specific embodiment, the plurality of second type stations further includes the cup washing station disposed after the second pouring station, and the second type finishing step(s) further includes performing the cup washing operation of washing the blending cup 2201 at the cup washing station. More specifically, the cup washing operation includes flipping the blending cup 2201 by 180° for being washed, and restoring the blending cup 2201 when the washing operation is complete.

In a more specific embodiment, the second type intermediate step(s) further includes performing the blending cup lid covering operation of placing a blending cup lid 2203 on the blending cup 2201 prior to performing the blending operation at the blending station.

In a more specific embodiment, the second type intermediate step(s) further includes performing the blending cup lid cleaning operation of cleaning the blending cup lid 2203 after the blending operation is performed at the blending station.

In a more specific embodiment, the method further includes performing respective reset operations after performing the respective operations, the respective reset operations including returning the respective mechanisms performing the respective operations to an initial state.

In a more specific embodiment, the method performs the operations in the following second order: the ice feeding operation; the liquid material feeding operation; the blending cup fresh-material feeding operation; the blending cup lid covering operation; the blending operation; the blending cup lid cleaning operation; the pouring operations; the cup washing operation.

In a more specific embodiment, the method comprises repeatedly performing the respective operations in the second order.

More specifically, the above-described method proposed in the present application can be used to simultaneously make a plurality of cups of beverages, in which case the respective operations at the plurality of first type stations and the respective operations at the plurality of second type stations can be performed simultaneously.

### Second embodiment of the method

The second embodiment of the method corresponds to the second embodiment of the multi-station dual-revolving module 3000 described above.

In some embodiments, the plurality of first type stations further comprises a base-material feeding station disposed after the container dropping station and before the first pouring station, and the first type intermediate step(s) further comprises performing the finished-product cup fresh-material feeding operation or the finished-product cup solid-material feeding operation of feeding fresh or solid material to the finished-product cup 2201 at the base-material feeding station after the cup dropping operation. The respective embodiments of the finished-product cup fresh-material feeding operation or the finished-product cup solid-material feeding operation described above with respect to the first method embodiment are equally applicable to the second method embodiment.

In some embodiments, the plurality of first type stations further include a finishing station disposed after the first pouring station, and the first type finishing step(s) includes performing the lid dropping operation of dropping the finished-product cup lid 2102 onto the finished-product cup 2101 at the finishing station.

In a more specific embodiment, the first type finishing step(s) further includes performing the milk cap feeding operation of feeding the milk cap to the finished-product cup 2101 before the lid dropping operation is performed at the finishing station.

In a more specific embodiment, the first type finishing step(s) further includes performing the lid-pressing operation of pressing the finished-product cup lid 2102 against the finished-product cup 2101 after the lid dropping operation is performed at the finishing station.

In a more specific embodiment, the method performs the operations in the following third order: the cup dropping operation; the finished-product cup fresh-material feeding operation or the finished-product cup solid-material feeding operation; the pouring operation; the milk cap feeding operation; the lid dropping operation; the lid-pressing operation.

In a more specific embodiment, the method comprises repeatedly performing the respective operations in the third order.

In some embodiments, the plurality of second type stations further comprises a blending station disposed after the liquid material feeding station and before the second pouring station, and the second type intermediate step(s) further comprises performing the blending cup fresh-material feeding operation of feeding fresh material to the blending cup 2201 at the blending station.

In a more specific embodiment, the second type intermediate step(s) further includes performing, at the blending station, the blending operation of blending the materials in the blending cup 2201 after performing the blending cup fresh-material feeding operation.

In some embodiments, the second type intermediate step(s) further includes, at the liquid material feeding station, performing the ice feeding operation of feeding ice cubes into the blending cup 2201.

In some embodiments, the plurality of second type stations further includes the cup washing station disposed after the second pouring station, and the second type finishing step(s) further includes performing the cup washing operation of washing the blending cup 2201 at the cup washing station. More specifically, the cup washing operation includes flipping the blending cup 2201 by 180° for washing, and restoring the blending cup 2201 when the washing is complete.

In a more specific embodiment, the method performs the operations in the fourth order: the ice feeding operation; the liquid material feeding operation; the blending cup fresh-materials feeding operation; the blending operation; the pouring operation; the cup washing operation. It should be noted that the blending operation may include a smoothing operation, i.e. smoothing the ice cubes in the blending cup.

In a more specific embodiment, the method comprises repeatedly performing the respective operations in the fourth order.

More specifically, the above-described method proposed in the present application can be used to simultaneously make a plurality cups of beverages, in which case the respective operations at the plurality of first type stations and the respective operations at the plurality of second type stations can be performed simultaneously.

### 3. Intelligent cabinet module 4000

As shown in Fig. 108, the integrated intelligent beverage robot proposed in the present application may further include an intelligent cabinet module 4000. The intelligent cabinet module 4000 includes a cabinet 4100 provided with compartments 4110A and 4110B for storing finished beverages. The intelligent cabinet module 4000 is further configured to be able to transfer the finished beverages, i.e. the finished-product cups 2101, in an automated manner, from the first revolving member 2150, 3150 of the multi-station dual-revolving modules 2000, 3000 into the respective compartments 4110A, 4110B of the cabinet 4100. More specifically, the intelligent cabinet module 4000 is further configured to be able to inform the main control module that the beverage has been completed in preparation and placed in the respective compartments 4110A, 4110B. More specifically, the intelligent cabinet module 4000 is further configured to allow a customer, a delivery person, a waiter, etc. to take the beverages (finished-product cups) out from the respective compartments 4110A, 4110B by themselves, for example, the intelligent cabinet module 4000 being further configured to be able to communicate with a mobile device.

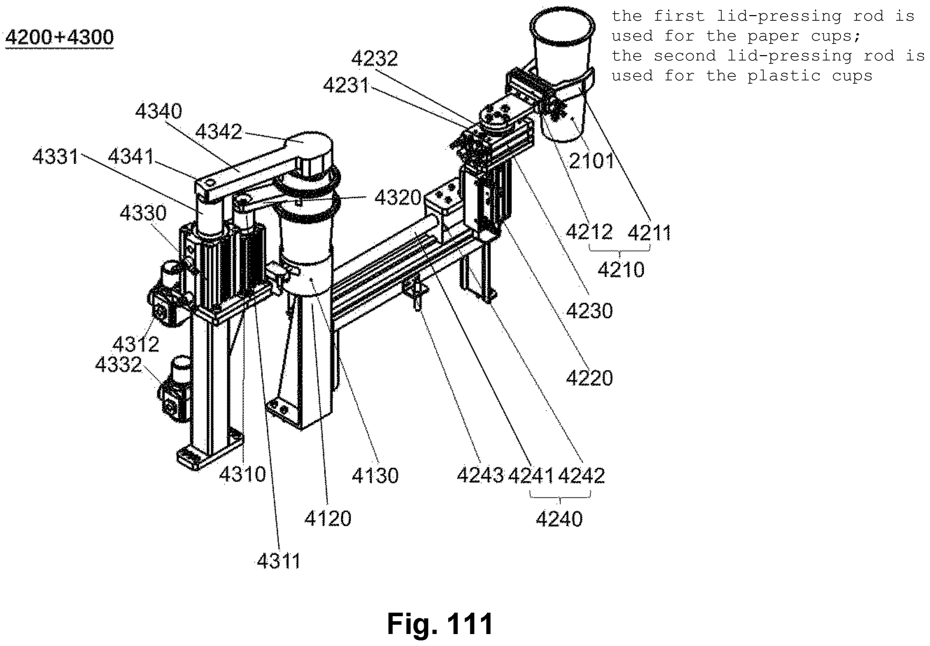

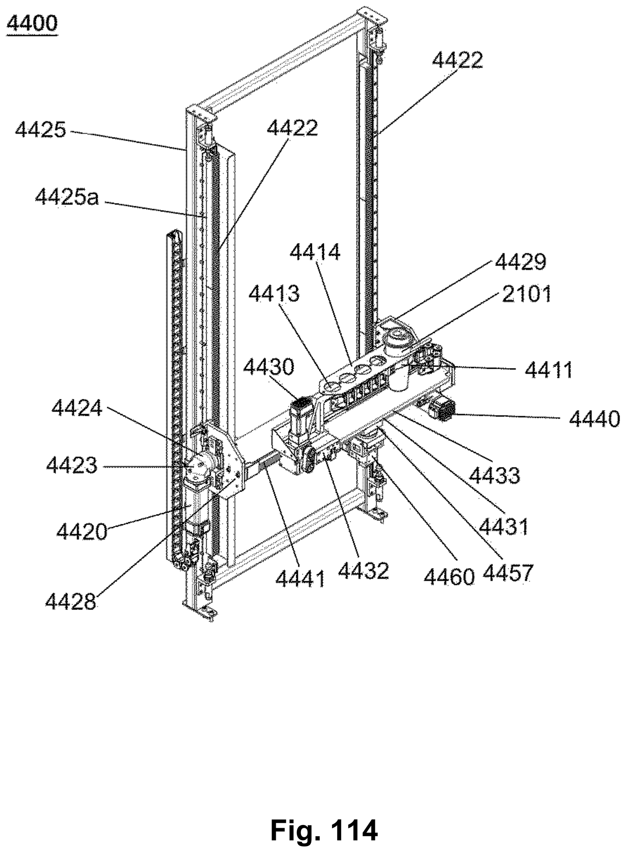

In some embodiments, the intelligent cabinet module 4000 may include a grasping assembly 4200, as shown in Figs. 111-113. In some embodiments, the intelligent cabinet module 4000 may further include a lid-pressing assembly 4300, as shown in Figs. 111-113. In some embodiments, the intelligent cabinet module 4000 may further include a transfer assembly 4400, as shown in Figs. 114-127.

### 3.1 Grasping Assembly 4200

In some embodiments, as shown in Figs. 111-113, the intelligent cabinet module 4000 may include a grasping assembly 4200 configured to grasp and transfer the finished-product cup 2101, including the first type finished-product cup 2101a and the second type finished-product cup 2101b, from the first revolving member 2150, 3150 of the multi-station dual-revolving modules 2000, 3000 to the finished-product cup receptacle 4120 disposed at the cabinet 4100. The grasping assembly 4200 may include a grasping jaw assembly 4210 and a grasping drive assembly. The grasping jaw assembly 4210 is disposed to be movable between a grasping position and a cup placing position under the drive of the grasping drive assembly, specifically, the grasping position corresponding to a position of the finished-product cup 2101 with finished beverage, which has been completed in beverage making, on the first revolving member 2150, 3150 of the multi-station dual-revolving module 2000, 3000, and the cup placing position corresponding to the position of the finished-product cup receptacle 4120 at the cabinet 4100. The grasping jaw assembly 4210 may include grasping jaws 4211 configured to grasp the finished-product cup 2101 located on the first revolving member 2150, 3150 of the multi-station dual-revolving module 2000, 3000 in the grasping position and to place the finished-product cup 2101 to the finished-product cup receptacle 4120 at the cabinet 4100 in the cup placing position, and a grasping jaw drive 4212 configured to drive the grasping jaws 4211 to be tightened and loosened. In a specific embodiment, the grasping jaw drive 4212 is a grasping jaw cylinder. More specifically, when the grasping jaws 4211 are in the grasping position, the grasping jaws 4211 surrounds the finished-product cup 2101 located on the first revolving member 2150, 3150 of the multi-station dual-revolving module 2000, 3000, at which time the grasping jaw drive 4212 can drive the grasping jaws 4211 to tighten to grasp the finished-product cup 2101; when the grasping jaws 4211 are in the cup placing position, after the finished-product cup 2101 is placed in the finished-product cup receptacle 4120 of the cabinet 4100, the grasping jaw drive 4212 may drive the grasping jaws 4211 to loosen so as to release the finished-product cup 2101.

In some embodiments, the grasping drive assembly may include a grasping lifting drive configured to drive the grasping jaw assembly 4210 for moving up and down in the height direction and a grasping rotation drive configured to drive the grasping jaw assembly 4210 for rotational movement. In a specific embodiment, as shown in Figs. 111-113, the grasping lifting drive may be a grasping lifting cylinder 4220 which may include a grasping lifting cylinder body 4221 and a lifting movable member 4222, which is more specifically a grasping lifting cylinder rod, that is movable in the height direction relative to the grasping lifting cylinder body 4221. The grasping rotating drive is a grasping rotating cylinder 4230 including a grasping rotating cylinder body 4231 coupled (e.g., fixed) to the lifting movable member 4222 and a rotating shaft 4232 rotatable relative to the grasping rotating cylinder body 4231, whereby the grasping rotating cylinder body 4231 can move synchronously with the lifting movable member 4222. In such embodiments, the grasping jaw assembly 4210 may be coupled to the rotating shaft 4232 to move synchronously with the rotating shaft 4232. More specifically, the grasping assembly 4200 is configured such that, in operation and after the grasping jaws 4211 have grasped the finished-product cup 2101, first the lifting movable member 4222 moves upward in the height direction to drive the grasping rotating cylinder 4230 and thus the grasping jaw assembly 4210 and thus the finished-product cup 2101 upward, which is particularly applicable when the finished-product cup 2101 is originally located in the corresponding cup holder 2151, 3151 on the first revolving member 2150, 3150 of the multi-station dual-revolving module 2000, 3000, since the cup holders 2151, 3151 usually have a bottom and a surrounding portion extending upward from the periphery of the bottom to be able to stably hold the finished cup 2101, it is necessary to move the finished cup 2101 upward first to take the finished cup 2101 out of the cup holders 2151, 3151 after the grasping claws 4211 grasp the finished cup 2101; the rotating shaft 4232 then rotates by an angle in the first circumferential direction to drive the grasping jaw assembly 4210 and thus the finished-product cup 4101 to rotate by an angle in the first circumferential direction as well. Optionally, the angle is 180°, that is, the grasping jaw assembly 4210 needs to be rotated by 180° to allow the finished-product cup 2101 to be placed into the finished-product cup receptacle 4120 of the cabinet 4100. Of course, this angle value is merely schematic, and other angles are also possible depending on the arrangement position of the cabinet 4100 with respect to the multi-station dual-revolving modules 2000, 3000, and are also within the scope of protection of the present application.

In a more specific embodiment, the grasping assembly 4200 may further include a grasping horizontal drive configured to drive the grasping jaw assembly 4210 for horizontal translational movement. In a specific embodiment, as shown in Figs. 111-113, the grasping horizontal drive is a grasping horizontal cylinder 4240 comprising a grasping horizontal cylinder body 4241 and a horizontal movable member 4242, the grasping horizontal cylinder body 4241 being coupled to the grasping lifting cylinder body 4221, more specifically the grasping lifting cylinder body 4221 being fixed to the horizontal movable member 4242 so as to move synchronously with the horizontal movable member 4242. More specifically, the grasping horizontal cylinder 4240 may be a rodless cylinder, and the horizontal movable member 4242 may be a grasping horizontal cylinder slider. In such embodiments, the grasping assembly 4200 may also be configured such that after the rotating shaft 4232 is rotated by an angle of, for example, 180°, the grasping horizontal cylinder 4240 moves in a first translational direction to the cup placing position thereby moving the finished-product cup 2101 to the cup placing position, and to place the finished-product cup 2101 at the finished-product cup receptacle 4120 of the cabinet 4100 in the cup placing position.

In a more specific embodiment, after the grasping horizontal cylinder slider 4242 drives the grasping lifting cylinder 4220, the grasping jaw assembly 4210, and the finished-product cup 2101 to the cup placing position, the lifting movable member 4222 moves down, thereby driving the grasping jaw assembly 4210 and the finished-product cup 2101 to move down to enable the finished-product cup 2101 to be placed at the finished-product cup receptacle 4120 of the cabinet 4100, more specifically in a transitional cup holder 4130 there, and then the grasping jaws 4211 loosen to release the finished-product cup 2101. More specifically, the grasping assembly 4200 may also be configured such that after the grasping jaws 4211 release the finished-product cup 2101, the horizontal movable member 4242, more specifically the grasping horizontal cylinder slider, returns in a second translation direction opposite to the first translation direction.

In a more specific embodiment, as shown in Fig. 111, the grasping assembly 4200 may further include a fourth sensor 4243 fixedly disposed at an intermediate position between the grasping position and the cup placing position, noting that the intermediate position may be any suitable position between the grasping position and the cup placing position. The fourth sensor 4243 is configured to sense the proximity or presence of the horizontal movable member 4242 during the returning of the horizontal movable member 4242 in the second translational direction opposite to the first translational direction, and to communicate with a solenoid valve controlling operation of the grasping rotating cylinder 4230 to rotate the rotating shaft 4232 in a second circumferential direction opposite to the first circumferential direction by the above-described angle, e.g. 180 °, upon sensing the proximity or presence of the horizontal movable member 4242. More specifically, the fourth sensor 4243 is further configured to communicate with a solenoid valve that controls operation of the grasping horizontal cylinder 4240 to suspend operation of the grasping horizontal cylinder 4240 for a period of time, for example, for about 1 to about 3 seconds, upon sensing the proximity or presence of the horizontal movable member 4242. More specifically, during the period of time in which the grasping horizontal cylinder 4240 is suspended, the rotating shaft 4232 is rotated in the second circumferential direction opposite to the first circumferential direction by the above-mentioned angle, so that the orientation of grasping jaw assembly 4210 and thus the grasping jaws 4211 is turned back to towards the finished-product cup 2101 on the first revolving member 2150, 3150 of the multi-station dual-revolving module 2000, 3000. Changing the orientation of the rotating shaft 4232 at the intermediate position between the grasping position and the cup placing position allows there is sufficient space for this change in orientation without any interference with other mechanisms or components, which facilitates an overall compact construction.

### 3.2 Lid-pressing Assembly 4300

In some embodiments, as shown in Figs. 111-113, the intelligent cabinet module 4000 may also be configured to include a lid-pressing assembly 4300, which corresponds particularly to an embodiment in which a finished-product cup 2101 that has completed making a beverage has been covered with a finished-product cup lid 2102 at the multi-station dual-revolving module 2000, 3000, but no lid-pressing operation has been performed. The lid-pressing assembly 4300 is configured to press the finished-product cup lid 2102 against the respective finished-product cup 2101a, 2101b at the finished-product cup receptacle 4120. The lid-pressing assembly 4300 includes at least a first rotary lid-pressing cylinder 4310 including a first rotating shaft 4311 which can rotationally move up and down, and a first lid-pressing connecting rod 4320 coupled to the first rotating shaft 4311 so as to be movable with the first rotating shaft 4311. More specifically, the first lid-pressing connecting rod 4320 has a first coupling end 4321 coupled to the first rotating shaft 4311, and a first lid-pressing end 4322 opposite to the first coupling end 4321 for pressing the finished-product cup lid 2102 against the finished-product cup, the first coupling end 4321 being optionally screwed directly on the first rotating shaft 4311. More specifically, when the first rotary lid-pressing cylinder 4310 is not operating, the first lid-pressing connecting rod 4320 is disposed with its first lid-pressing end 4322 offset from the finished-product cup 2101, more specifically at a first offset angle which is offset from the central longitudinal axis of the finished-product cup 2101a; after the first rotary lid-pressing cylinder 4310 starts to operate, the first rotating shaft 4311 rotationally moves up and drives the first lid-pressing connecting rod 4320 to rotationally move up, and when the first rotating shaft 4311 drives the first lid-pressing end 4322 of the first lid-pressing connecting rod 4320 to rotate to an angle which is half of the first offset angle with respect to the central longitudinal axis of the finished-product cup 2101a, the first rotating shaft 4311 starts to rotationally move down and drives the first lid-pressing connecting rod 4320 to rotationally move down, so that when the first lid-pressing end 4322 is rotated to coincide with the central longitudinal axis of the finished cup 2101a, it can exert downward pressing force on the finished-product cup lid 2102, thereby pressing the finished-product cup lid 2102 tightly on the finished cup 2101a, that is to say, tightly covering the finished-product cup lid 2102 of the finished-product cup 2101a. More specifically, after the lid-pressing operation is performed, the first rotary lid-pressing cylinder 4310 drives the first lid-pressing connecting rod 4320 to return to the position when it is not operated. More specifically, the lid-pressing assembly 4300 may further include a first pressure relief valve 4312 for the first rotary lid-pressing cylinder 4310 to avoid excessive pressing of the finished-product cup lid 2102.

In a more specific embodiment, as shown in Figs. 111-113, the lid-pressing assembly 4300 further includes a second rotary lid-pressing cylinder 4330 including a second rotating shaft 4331 that can rotationally movable up and down, and a second lid-pressing connecting rod 4340 that is coupled to the second rotating shaft 4331 so as to be movable with the second rotating shaft 4331. More specifically, the second lid-pressing connecting rod 4340 has a second coupling end 4341 coupled to the second rotating shaft 4331, and a second lid-pressing end 4342 opposite to the second coupling end 4341 for pressing the finished-product cup lid 2102 against the finished-product cup, the second coupling end 4341 being optionally screwed directly onto the second rotating shaft 4331. More specifically, when the second rotary lid-pressing cylinder 4330 is not operating, the second lid-pressing end 4342 of the second lid-pressing connecting rod 4340 is offset from the finished-product cup 2101b, more specifically by a second offset angle from the central longitudinal axis of the finished-product cup 2101b; after the second rotary lid-pressing cylinder 4330 starts to operate, first the second rotating shaft 4331 rotationally moves up and drives the second lid-pressing connecting rod 4340 to rotationally move up, and when the second rotating shaft 4331 drives the second lid-pressing end 4342 of the second lid-pressing connecting rod 4340 to rotate to an angle which is half of the second offset angle from the central longitudinal axis of the finished-product cup 2101b, the second rotating shaft 4331 starts to rotationally move down and drives the second lid-pressing connecting rod 4340 to rotationally move down, so that when the second lid-pressing end 4342 is rotated to coincide with the central longitudinal axis of the finished cup 2101b, it can exert downward pressing force on the finished-product cup lid 2102, thereby pressing the finished-product cup lid 2102 tightly on the finished cup 2101b, that is to say, tightly covering the finished-product cup lid 2102 of the finished-product cup 2101a. More specifically, after the lid-pressing operation is performed, the second rotary lid-pressing cylinder 4330 drives the second lid-pressing connecting rod 4340 to return to the position when it is not operated. Optionally, the second offset angle is the same as the first offset angle. More specifically, the lid-pressing assembly 4300 may further include a second pressure relief valve 4332 for the second rotary lid-pressing cylinder 4330 to avoid excessive pressing of the finished-product cup lid 2102.

In a more specific embodiment, the first rotary lid-pressing cylinder 4310 and the second rotary lid-pressing cylinder 4330 are suitable for finished-product cups 2101a, 2101b of different heights, respectively, more specifically, the first rotary lid-pressing cylinder 4310 may be used for a first type finished-product cups 2101a of lower height, more specifically paper cups, and the second rotary lid-pressing cylinder 4330 may be used for a second type finished-product cups 2101b of higher height, more specifically plastic cups.

### 3.3 Transfer Assembly 4400

In some embodiments, as shown in Figs. 114-127, the intelligent cabinet module 4000 may further include a transfer assembly 4400 configured to transfer the finished-product cups 2101 (including the first type finished-product cups 2101a and the second type finished-product cups 2101b) from the finished-product cup receptacle 4120 of the cabinet 4100 into the respective compartments 4110A, 4110B of the cabinet 4100.

In some embodiments, as shown in Figs. 108, 119, 124, and 127, the cabinet 4100 includes at least a first side 4101 on which a plurality of rows of compartments 4110A are provided for storing the finished-product cups 2101. More specifically, each row of compartments of the first side 4101 may include 1-3 compartments 4110A.

In a more specific embodiment, as shown in Figs. 108, 119, 124, and 127, the cabinet 4100 may also be configured to include a second side 4102 disposed adjacent to and angularly, for example, perpendicular to the first side 4101 described above, and provided with a plurality of rows of compartments 4110B for storing finished-product cups 2101 on the second side 4102. More specifically, each row of compartments of the second side 4102 may include one compartment 4110B.

In some embodiments, as shown in Figs. 114-127, the transfer assembly 4400 is configured to include a transfer jaw assembly 4410 and a transfer drive assembly configured to drive the transfer jaw assembly 4410 to move between the finished-product cup receptacle 4120 at the cabinet 4100 and the respective compartments 4110A, 4110B. The transfer jaw assembly 4410 may include transfer jaws 4411 configured to grasp the finished-product cup 2101 located in the finished-product cup receptacle 4120 of the cabinet 4100 and to place the finished-product cup 2101 into the respective compartments 4110A, 4110B, and a transfer jaw drive 4412 configured to drive the transfer jaws 4411 to be tightened and loosened. In a specific embodiment, the transfer jaw drive 4412 is a transfer jaw cylinder. More specifically, when the transfer jaws 4411 are in the finished-product cup receptacle 4120 of the cabinet 4100, the grasping jaws 4411 surround the finished-product cup 2101 located in the finished-product cup receptacle 4120, more specifically in the transitional cup holder 4130 at the finished-product cup receptacle 4120, at which time the transfer jaw driver 4412 can drive the transfer jaws 4411 to tighten to grasp the finished-product cup 2101; after the transfer jaws 4411 place the finished-product cup 2101 in the respective compartments 4110A, 4110B of the cabinet 4100, the transfer jaw drive 4412 may drive the transfer jaws 4411 to loosen to release the finished-product cup 2101.

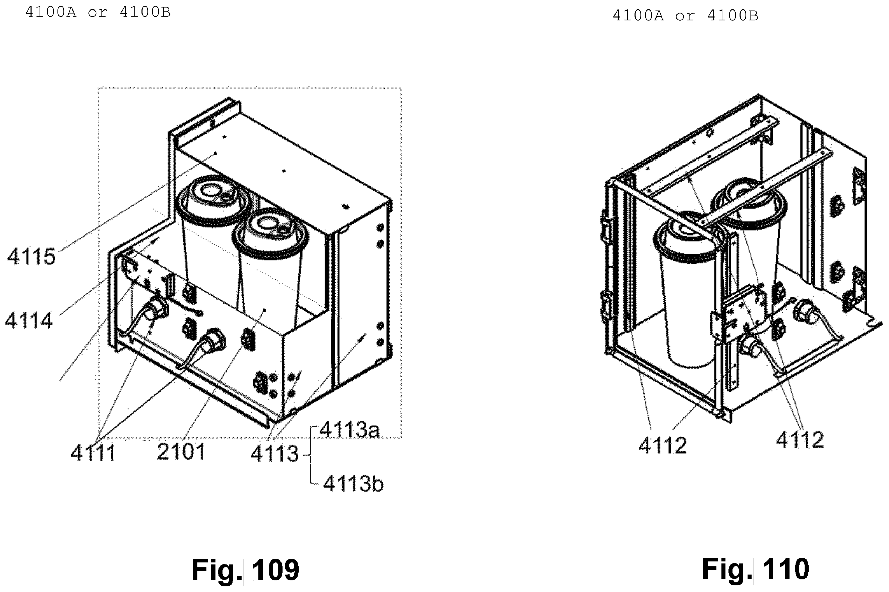

In some embodiments, as shown in Figs. 109-110, each compartment 4110A, 4110B may be configured to include a first door 4113, the transfer jaw assembly 4410 being configured to be able to push open the first door 4113 to enable placement of the finished-product cup 2101 into the compartment 4110A, 4110B via the first door, i.e. the transfer drive assembly can push the first door 4113 open when driving he transfer jaws 4411 to arrive the first door 4113 of the respective compartments 4110A, 4110B, thereby allowing the transfer jaws 4411 to enter the compartment 4110A, 4110B so as to place the finished-product cup 2101 therein. In a specific embodiment, the transfer jaw assembly 4410 includes a push plate 4414 disposed on a jaw arm 4413 configured to push open the first door 4113 of the compartments 4100A, 4100B when the transfer jaws 4411 approaches the first door 4113. As shown in Figs. 109-110, the first door 4113 may be provided to include a first door leaf 4113a and a second door leaf 4113b that can be closed and opened with each other and are provided to be openable by the push plate 4414. In a specific embodiment, the first door leaf 4113a and the second door leaf 4113b are each pivotably mounted on a door frame, such as hinged on the door frame, thereby allowing the push plate 4414 to open the first door leaf 4113a and the second door leaf 4113b with each other when a pushing force is applied to them. More specifically, an elastic restoring member may also be provided between the first door leaf 4113a and the second door leaf 4113b and the door frame, respectively, which is provided to allow the first door leaf 4113a and the second door leaf 4113b to return to a position in which the latter are closed with each other when the transfer jaw 4411moves away from the latter. More specifically, a side plate of the compartments 4110A, 4110B in which the first door 4113 is provided is further provided with a stop portion for restricting the stroke of the first door leaf 4113a and the second door leaf 4113b when the first door leaf 4113a and the second door leaf 4113b return toward the closed position, that is, restricting the first door leaf 4113a and the second door leaf 4113b to just the closed position without swinging back and forth.

In a variation not shown, the first door 4113 may be provided with its top portion hinged with a top plate 4115 of the compartments 4110A, 4110B, thereby allowing the top portion of the first door 4113 to be pivoted to open the first door 4113 when a pushing force is applied to the first door 4113 by the push plate 4414 of the transfer jaw assembly. More specifically, the compartments 4110A, 4110B are further provided with a second elastic restoring member connected between the first door 4113 and the side plate of the compartment on which the first door 4113 is mounted, and the second elastic restoring member is arranged to apply a restoring force to the first door 4113 that tends to close the first door 4113 when the first door 4113 is opened. Accordingly, it can be ensured that the first door 4113 can return to the closed position when the transfer jaws 4411 place the finished-product cup 2101 in the compartments 4110A, 4110B and come out from the latter. More specifically, the side plate of the compartments 4110A, 4110B in which the first door 4113 is provided are further provided with a stop portion for restricting the travel of the first door 4113 when the first door 4113 is returned toward the closed position, that is, restricting the first door 4113 to just the closed position without causing the first door to swing back and forth.

In some embodiments, as shown in Fig. 109, a sensor referred to as a sixth sensor 4111 may be provided in each compartment 4110A, 4110B, which may be a laser sensor and configured to detect the presence or absence of a finished-product cup 2101 in the compartment 4110A, 4110B. The sixth sensor 4111 is, for example, arranged to be able to communicate with the main control module, thereby enabling the main control module to determine which compartments 4110A, 4110B are currently available, i.e. can be used to place the upcoming finished-product cup 2101, and which compartments 4110A, 4110B are currently unavailable, i.e. can no longer receive the finished-product cup 2101. In a specific embodiment, each compartment 4110A, 4110B is configured to be able to accommodate two finished-product cups 2101, and each compartment 4110A, 4110B is provided with two laser sensors 4111 that detect the presence or absence of each of the two finished-product cups 2101. That is, only when the two laser sensors 4111 in the same compartment 4110 A, 4110 B detect the presence of the corresponding finished-product cups 2101, the compartment 4110 A, 4110 B is considered to be currently disabled. More specifically, each compartment 4110A, 4110B is further provided with an indicator light 4112 configured to illuminate when the respective laser sensor 4111 detects the presence of the respective finished-product cup 2101 in the compartment 4110A, 4110B.

More specifically, as shown in Figs. 108 and 109, each of the compartments 4110A, 4110B is further provided with a second door 4114 through which the finished-product cup 2101 can be taken out, for example, by a customer, a courier, a waiter, or the like. In a specific embodiment, the second door 4114 is disposed on the opposite side of the compartments 4110A, 4110B from the first door 4113.

In some embodiments, the transfer drive assembly may include a transfer lifting drive assembly configured to drive the transfer jaw assembly 4410 to move up and down in the height direction and a transfer horizontal drive assembly configured to drive the transfer jaw assembly 4410 for horizontal displacement. Accordingly, the transfer drive assembly can drive the transfer jaw assembly 4410 to perform horizontal and/or lifting movement according to actual needs, more specifically according to a position indication given by the main control module, so that the transfer jaws 4411 can reach the respective one of the compartments 4110A, 4110B as desired.

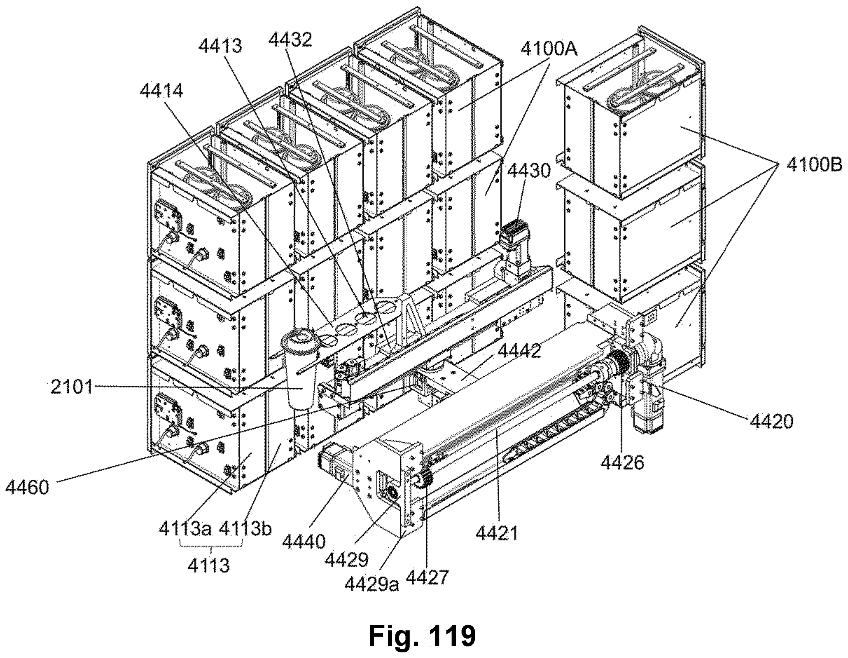

In a specific embodiment, as shown in Figs. 114-127, the transfer lifting drive assembly may include a transfer lifting drive motor 4420 that includes a motor shaft referred to as a fifth motor shaft. The transfer lifting drive assembly may further include a transfer lifting transmission assembly which may include a fixedly disposed rack known as a second rack 4422, for example, disposed on a support frame 4425, and a first drive gear 4426 (as shown in Figs. 119, 124, and 127) capable of rolling along the second rack 4422, which is disposed to be driven by the fifth motor shaft and meshed with the second rack 4422 to enable lifting and lowering movement along the second rack 4422 in the height direction and thus drive the transfer jaw assembly 4410 to move up and down. In a more specific embodiment, the transfer lifting transmission assembly 4420 may further include a first speed reducer 4423 disposed between the transfer lifting drive motor 4420 and the first drive gear 4426, and including a first housing 4424 and a first reduction transmission assembly located within the first housing 4424.

In one variation, the first reduction transmission assembly may include an input shaft configured to be coupled with the fifth motor shaft of the transfer lifting drive motor 4420 via a coupling referred to as a second coupling and a planetary gear train configured to include an input gear coupled with the input shaft and an output gear coupled with the first drive gear 4426.

In another variation, as shown in Figs. 114-117, the transfer lifting drive assembly may include two second racks 4422 fixed to the support frame 4425 and disposed in parallel with each other, and a second drive gear 4427 (as shown in Figs. 119, 124, and 127) capable of rolling along the second rack 4422, thereby allowing to drive he transfer jaw assembly 4410 to move in the height direction in a smooth manner. In such an embodiment, the transfer lifting drive assembly may include a driving rotating shaft 4421 (as shown in Figs. 119, 124, and 127) driven by the transfer lifting drive motor 4420, and the first and second drive gears 4426, 4427 are respectively fixed at opposite ends of the driving rotating shaft 4421 so that, driven by the driving rotating shaft 4421, the first and second drive gears 4426, 4427 are each capable of rolling along a respective second rack 4422. More specifically, the first reduction transmission assembly may be disposed between the motor shaft of the transfer lifting drive motor 4420 and the driving rotating shaft 4421.

In a more specific embodiment, the transfer lifting drive assembly includes a height-direction origin identification assembly configured to determine the origin of the transfer lifting drive motor 4420 in the height direction. The height-direction origin identification assembly may include a height-direction origin detection piece disposed to move in the height direction with the transfer lifting drive motor 4420, and a fixedly disposed height-direction origin sensor configured to detect the height-direction origin detection piece, thereby determining the height position of the height-direction origin detection piece, and thus the height position of the transfer lifting drive motor 4420.

In a specific embodiment, the transfer horizontal drive assembly is configured to be driven by the transfer lifting drive assembly for moving up and down in the height direction. In a specific embodiment, as shown in Figs. 114-127, the transfer horizontal drive assembly may include a transfer horizontal drive motor 4430 and a first linear module 4431 including a first horizontal slider 4432 that can be driven by the transfer horizontal drive motor 4430 for translational movement, more specifically horizontal translational movement. More specifically, the transfer jaw assembly 4410 is disposed to be coupled with the first horizontal slider 4432, more specifically to be coupled with the first horizontal slider 4432 via a transfer jaw arm 4413 of the transfer jaw assembly, to be able to translate with the first horizontal slider 4432; and thus, when the transfer horizontal drive assembly is driven by the transfer lifting drive assembly to move up and down in the height direction, the transfer jaw assembly 4410 coupled to the first horizontal slider 4432 of the transfer horizontal drive assembly can also move up and down synchronously. More specifically, the transfer horizontal drive assembly may include a first horizontal slide rail 4433 for guiding sliding of the first horizontal slider 4432. In a specific embodiment, the transfer jaw arm 4413 is disposed parallel to the first horizontal slide rail 4433.

In a more specific embodiment, the transfer drive assembly may further include a transfer intermediate drive assembly configured to transfer force between the transfer lifting drive assembly and the transfer horizontal drive assembly. More specifically, as shown in Figs. 114-127, the transfer intermediate drive assembly is disposed to be coupled to the transfer lifting drive assembly, more specifically to the first housing 4424 of the first reduction gear 4423 of the transfer lifting drive assembly via a first coupling plate 4428, to able to move up and down in the height direction with the transfer lifting drive assembly. In a specific embodiment, the transfer intermediate drive assembly may include a transfer intermediate drive motor 4440 and a second linear module 4441 that includes a second horizontal slider 4442 that can be driven by the transfer intermediate drive motor 4440 for translational motion, more specifically horizontal translational motion. More specifically, the transfer horizontal drive assembly may be configured to connect with the second horizontal slider 4442 to able to perform horizontal translational movement with the second horizontal slider 4442. Optionally, the transport horizontal drive assembly may be provided to be indirectly connected to the second horizontal slider 4442. More specifically, the transfer intermediate drive assembly may further include a second horizontal slide rail 4443 for guiding sliding of the second horizontal slider 4442, the first coupling plate 4428 being further coupled to the second horizontal slide rail.

In embodiments in which the transfer lifting drive assembly includes two second racks 4422 disposed in parallel, as shown in Figs. 114-127, the transfer intermediate drive assembly is further coupled to the driving rotating shaft 4421 via a second coupling plate 4429 disposed opposite the first coupling plate 4428. More specifically, each of the first coupling plate 4428 and the second coupling plate 4429 is provided with holes through which portions of the driving rotating shaft 4421 adjacent to the first and second driving gears 4426 and 4427, respectively, can rotatably pass, for example, via bearings, to assemble the first coupling plate 4428 and the second coupling plate 4429 with the driving rotating shaft 4421. At the same time, the first coupling plate 4428 and the second coupling plate 4429 are coupled to the second horizontal slide rail 4443. The connection between the transfer lifting drive assembly and the transfer intermediate drive assembly is thereby realized.

More specifically, in order to guide the movement upward and downward of the transfer assembly, as shown in Figs. 114-127, the support frame 4425 may also be provided with a first guide rail 4425a and a second guide rail 4425b adjacent to each second rack 4422, respectively, the first coupling plate 4428 is provided with a first guide block 4428a, and the second coupling plate 4429 is provided with a second guide block 4429a, and the first guide block 4428a and the second guide block 4429a are provided to slide along the first guide rail 4425a and the second guide rail 4425b respectively, thereby realizing the guidance of the movement upward and downward. In a more specific embodiment, as shown in Figs. 114-127, the transfer horizontal drive assembly may be configured to be connected to the second horizontal slider 4442 of the transfer intermediate drive assembly via a transfer rotating drive assembly 4460 configured to rotatably connect the transfer horizontal drive assembly to the second horizontal slider 4442 of the transfer intermediate drive assembly, i.e., the transfer rotating drive assembly 4460 is connected to the second horizontal slider 4442 on the one hand and to the transfer horizontal drive assembly 4460 on the other hand, so that the transfer horizontal drive assembly can be driven by the second horizontal slider 4442 to move horizontally, and can also be rotated by the transfer rotating drive assembly 4460, so that the grasping jaw assembly 4410 can be turned from the first side 4101 to the second side 4102 or from the second side 4102 to the first side 4101 of the cabinet 4100, so that the finished-product cup can be placed in the respective compartment 4110A, 4110B on the first side 4101 or the second side 4102 of the cabinet 4410 as needed. More specifically, the rotating drive assembly is coupled with the first horizontal slide rail 4433. Optionally, the rotating drive assembly may be coupled to the first horizontal slide rail 4433 at a middle position of the first horizontal slide rail 4433. In such embodiments, the position of the second horizontal slider 4442 on the second horizontal slide rail 4443 determines the position of the transfer rotating drive assembly 4460, more specifically a transfer rotating shaft 4451 as described below of the transfer rotating drive assembly 4460, along the second horizontal slide rail 4443. It should be noted that the second horizontal slide rail 4443 is provided to be fixed relative to the first housing 4424 of the first speed reducer 4423 of the transfer lifting drive assembly.

In some embodiments, as shown in Figs. 114-127, the transfer rotating drive assembly 4460 may include a transfer rotary motor 4450 comprising a motor shaft referred to as a sixth motor shaft and a transfer rotating shaft 4451 disposed in connection with the sixth motor shaft to be driven rotationally by the transfer rotary motor 4450. More specifically, the transfer horizontal drive assembly is disposed to be coupled with the transfer rotating shaft 4451 to be rotatable with the transfer rotating shaft 4451, more specifically the transfer rotating shaft 4451 is coupled to the first horizontal slide rail 4433 of the transfer horizontal drive assembly as described above, more specifically via a U-shaped intermediate plate 4457. More specifically, the transfer rotating drive assembly 4460 further includes a second speed reducer 4452 disposed between the transfer rotary motor 4450 and the transfer rotating shaft 4451, and the second speed reducer 4452 may include a second housing 4453 and a second reduction transmission assembly disposed within the second housing 4453, and coupled between the sixth motor shaft of the transfer rotary motor 4450 and the transfer rotating shaft 4451. More specifically, the second horizontal slider 4442 of the transfer intermediate drive assembly may be coupled to the second housing 4453 of the second speed reducer 4452, for example, the second horizontal slider 4442 is coupled to the second housing 4453 via a U-shaped connecting plate 4454.

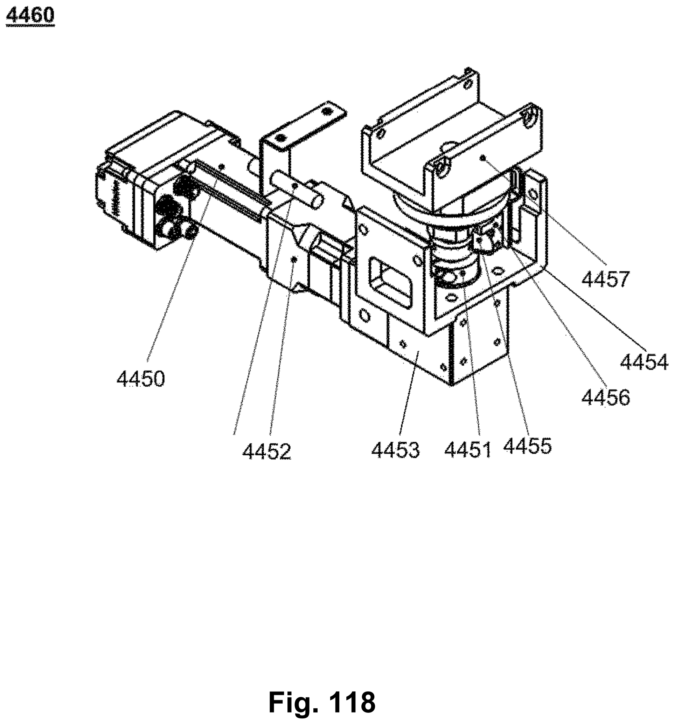

In some embodiments, as shown in Fig. 118, the transfer rotating drive assembly 4460 may further include an angle detection assembly configured to detect an angular position of the transfer rotating shaft 4451. More specifically, the angle detection assembly may include an angle detection piece 4455 disposed to move with the transfer rotating shaft 4451 and a sensor called a fifth sensor 4456 fixedly disposed and configured to detect an angular position of the angle detection piece 4455 and thus an angular position of the transfer rotating shaft 4451. More specifically, the fifth sensor 4456 is configured to be able to communicate with the main control module, e.g. to be able to communicate information on the detected angular position to the main control module and accordingly receive commands issued by the main control module based at least on the information on the current angular position to perform corresponding rotating movement, thereby enabling resetting or turning to a given compartment 4410A, 4410B.

In a more specific embodiment, as shown in Figs. 114-127, the second horizontal slide rail 4443 is disposed parallel to the first side 4101 of the cabinet 4100. In the case in which the compartments 4100A are arranged in a rows and columns while each row on the first side 4101 includes more than one compartment 4100A, the position of the second horizontal slider 4442 on the second horizontal slide rail 4443 determines which column of compartments on the first side 4101 the transfer rotating shaft 4451 drives the transfer jaws 4411 to turn toward, thereby allowing the transfer jaws 4411 to reach the desired column of compartments. The transfer jaw assembly 4110 may then be moved closer to the desired column of compartments on the first side 4101, under the drive by the first horizontal slider 4432.

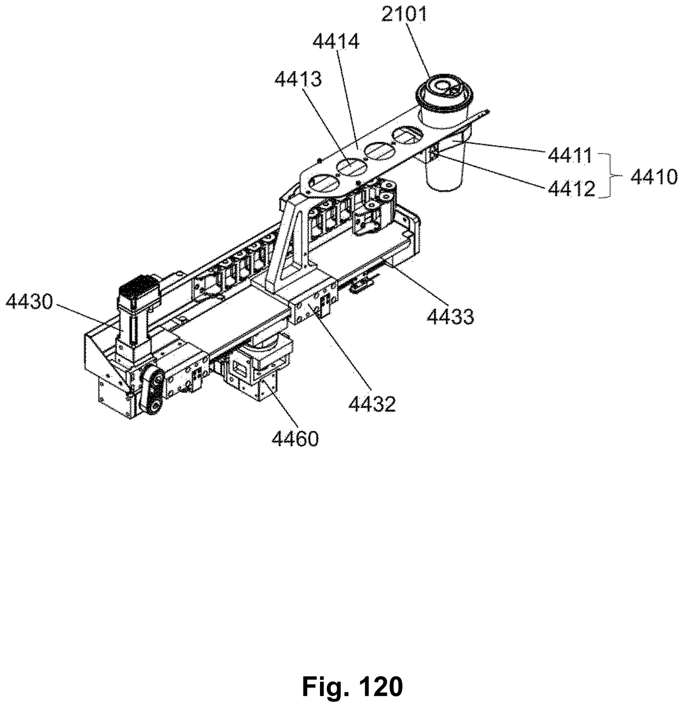

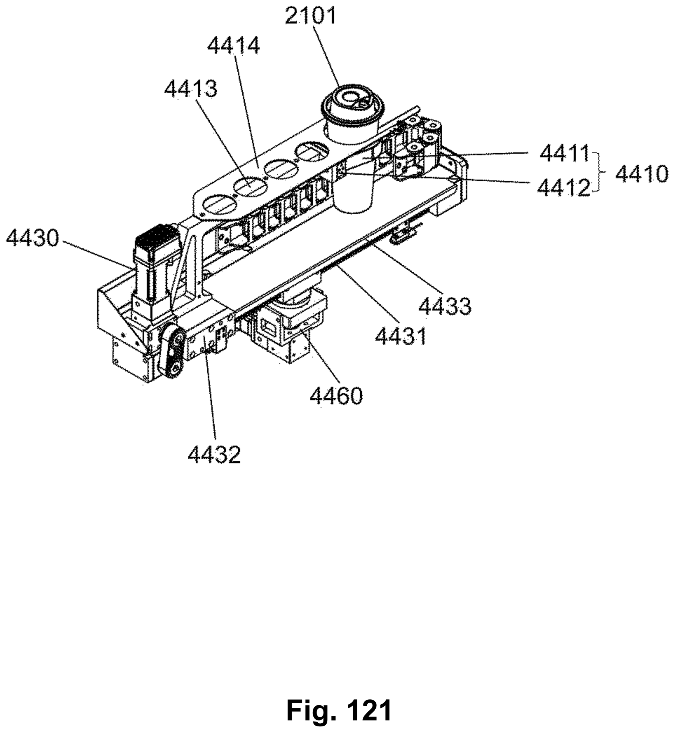

In a specific embodiment, the compartments 4100A on the first side 4101 of the cabinet 4100 may be arranged in a plurality of rows and columns, for example, as shown in Fig. 108, in 5 rows and 3 columns, and the compartments 4100B on the second side 4102 of the cabinet 4100 may be arranged in5 rows and 1 column. More specifically, the second side 4102 may be disposed connected to the first side 4101 and at right angles to each other. More specifically, in the original state of the transfer drive assembly, i.e., the state in which no operation has been performed, the first horizontal slide rail 4433 and the second horizontal slide rail 4443 are parallel to each other, and the first horizontal slider 4432 coupled with the transfer jaw assembly 4410 is in a retracted position, as shown in Fig. 114. In this case, when the finished-product cup 2101 needs to be transferred from the finished-product cup receptacle 4120 of the cabinet 4100 into the corresponding compartment 4100A, 4100B on the first side 4101 or the second side 4102 of the cabinet 4100, the transfer drive assembly may first drive the transfer jaws 4411 to align with the finished-product cup 2101 at the finished-product cup receptacle 4120, then the transfer horizontal drive assembly operates, more specifically the transfer horizontal drive motor 4430 operates to enable the first horizontal slider 4432 to slide along the first horizontal slide rail 4433 and thus to enable the transfer jaws 4411 to move toward the finished-product cup 2101. Then, optionally, with the finished-product cup 2101 placed in the transitional cup holder 4130 located at the finished-product cup receptacle 4120, the transfer lifting drive assembly of the transfer drive assembly, more specifically the transfer lifting drive motor 4420, may be operated to drive the transfer jaw assembly 4410 to first move up in the height direction so that the finished-product cup 2101 can come out of the transitional cup holder 4130, as shown in Fig. 120. Then, optionally, the transfer horizontal drive motor 4430 may be operated so that the first horizontal slider 4432 can drive the transfer jaws 4411 back to the retracted position, as shown in Figs. 119 and 121.

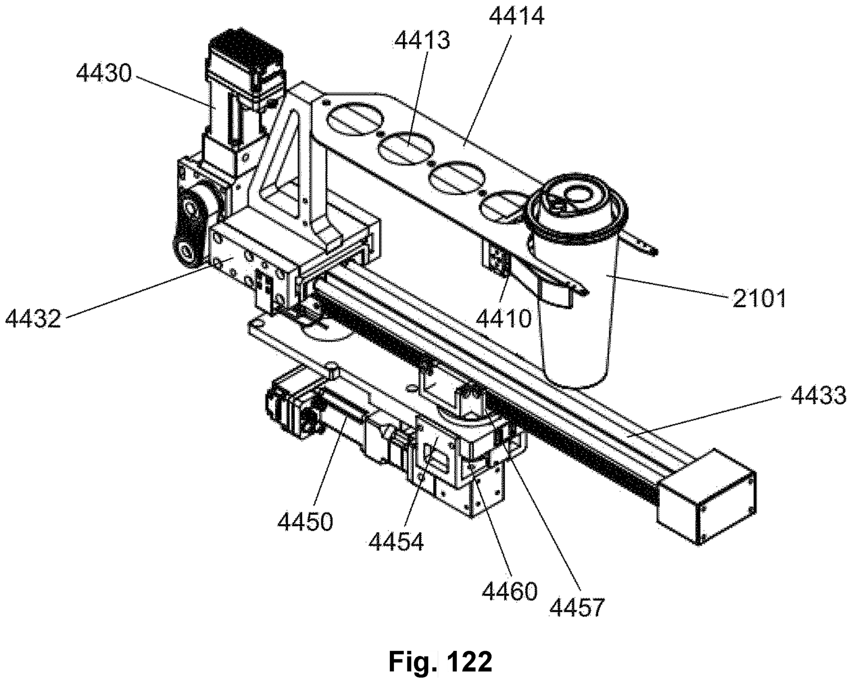

Then, as shown in Figs. 122-124, if the main control module commands that the finished-product cup 2101 be placed into a certain compartment 4100A on the first side 4101 of the cabinet 4100, the transfer lifting drive assembly, more specifically the transfer lifting drive motor 4420, may be operated to drive the transfer jaws 4411 to the height of the row in which the compartment 4100A is located, depending on the position of the compartment 4100A to be used received from the main control module; the transfer intermediate drive assembly, more specifically the transfer intermediate drive motor 4440, can then be operated to cause the second horizontal slider 4442 to slide to the column in which the compartment 4100A is located; then, the transfer rotary motor 4450 operates to rotate the transfer rotating shaft 4451 so as to drive the transfer jaws 4411 to rotate so as to be orientated toward the compartment 4100A, for example by 90°; the transfer horizontal drive assembly, more specifically the transfer horizontal drive motor 4430, is then operated again to cause the first horizontal slider 4432 to drive the transfer jaws 4411 to move toward the compartment 4100A and, upon touching the first door 4113 of the compartment 4100A, to be able to push open the first door 4113 to enter the compartment 4100A via the first door 4113 so as to place the finished-product cup 2101 onto the floor of the compartment 4100A; the transfer jaw drive 4412 then operates to loosen the transfer jaws 4411; then, the transfer drive assembly can be returned or a corresponding subsequent action can be carried out according to the control of the main control module.

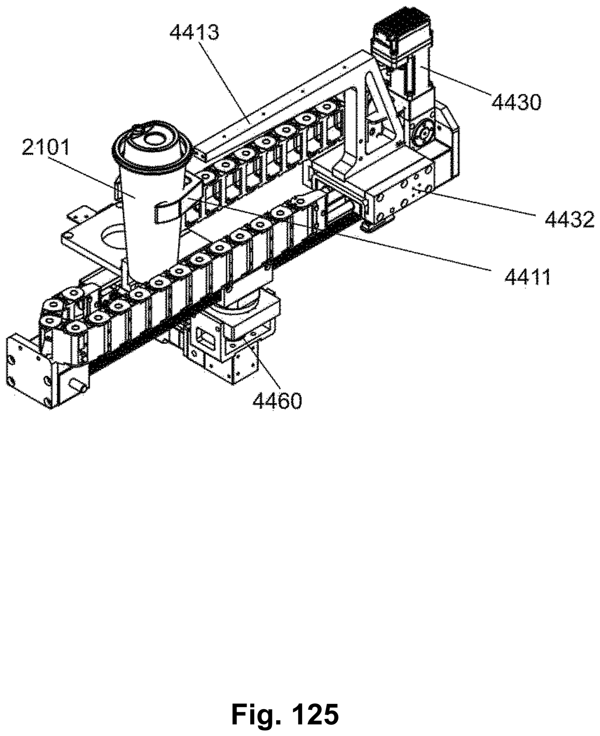

Alternatively, as shown in Figs. 125-127, if the main control module commands that the finished-product cup 2101 be placed in a compartment 4100B on the second side 4102 of the cabinet 4100, the transfer lifting drive assembly may be operated to drive the transfer jaws 4411 to the height of the row in which the compartment 4100B is located according to the position of compartment 4100B to be used received from the main control module; then, the transfer rotating shaft 4451 is rotated to drive the transfer jaws 4411 to be orientated toward the compartment 4100B, for example by 180°; the transfer horizontal drive assembly then operates again to cause the first horizontal slider 4432 to drive the transfer jaws 4411 to move toward the compartment 4100B and, upon touching the first door 4113 of the compartment 4100B, to be able to push open the first door 4113 to enter the compartment 4100B via the first door 4113 to place the finished-product cup 2101 onto the floor of the compartment 4100B; the transfer jaw drive member 4412 then operates to loosen the transfer jaws 4411. Then, the transfer drive assembly can be returned or a corresponding subsequent action can be carried out according to the control of the main control module. In the event that the main control module commands the finished-product cup 2101 to be placed in a compartment 4100B on the second side 4102 of the cabinet 4100, before the transfer rotating shaft 4451 rotates, the transfer intermediate drive assembly, more specifically the transfer intermediate drive motor 4440, may be operated to slide the second horizontal slider 4443 to a desired position, for example, to facilitate the transfer rotating shaft 4451 to drive the rotational movement of the transfer jaw assembly 4410.

It should be noted that the number and manner of arrangement of the compartments on the first and second sides of the cabinet mentioned above are merely schematic and not limiting.

In some embodiments, the above-described transfer horizontal drive assembly and/or transfer intermediate drive assembly each comprises an origin detection assembly for determining the origin of the respective first horizontal slider 4432 and/or second horizontal slider 4442. The principle of the origin detection assembly is the same as that of the aforementioned ones, and will not be described herein.

### 4. Automated cleaning module

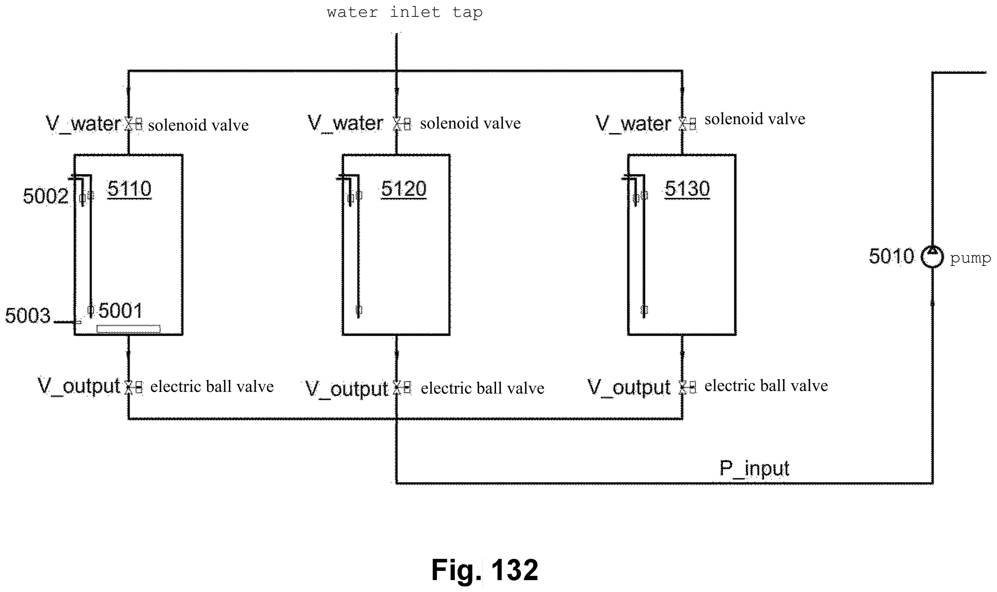

In some embodiments, as shown in Figs. 132-133, the intelligent beverage robot may include an automated cleaning module configured to automatically clean components involved in the entire intelligent beverage robot that require regular cleaning. More specifically, the automated cleaning module is a type which can be triggered to work with a button, so as to allow automatic cleaning of individual material buckets 1200 and the various lines, pipes, tubes, etc., without the intervention of an operator, and which can be shutdown by itself when completing the cleaning work.

According to a specific embodiment, the automated cleaning module includes a cleaning fluid storage assembly configured to store one or more cleaning fluids for cleaning the material buckets 1200 and a cleaning fluid supply assembly configured to supply at least one cleaning fluid to the inlet pipes P_inlet of the material buckets 1200.

In some embodiments, as shown in Fig. 132, the cleaning fluid storage assembly includes at least a clean water tub 5110 for storing clean water, a cleaning agent tub 5120 for storing cleaning agent, and a disinfectant tub 5130 for storing disinfectant. Alternatively, the cleaning agent may be a dish detergent or the like, and the disinfectant may be a red disinfectant, a green disinfectant, or other disinfectant that can be used for disinfecting food instruments. The clean water tub 5110, the detergent tub 5120, and the disinfectant tub 5130 may each be arranged to be in fluid communication with a water inlet source, more specifically with a water inlet tap, via a respective water inlet valve V_water to enable the feeding of water to the respective tub 5110, 5120, 5130. The water inlet valve V_water is, for example, a solenoid valve, more particularly, for example, a plastic solenoid valve in the embodiment of the figures. In addition, each of the clean water tub 5110, the cleaning agent tub 5120, and the disinfectant tub 5130 may be provided with a low level sensor 5001 and at least one high level sensor 5002, which are, for example, floating ball level sensors. The low level sensor 5001 is used to give a low level signal, that is, a signal that the cleaning liquid in the respective tubs 5110, 5120, 5130 is exhausted or is about to be exhausted, and the high level sensor 5002 is used to give a signal that the respective tubs 5110, 5120, 5130 have been filled up. Preferably, the clean water tub 5110, the cleaning agent tub 5120, and the disinfectant tub 5130 may each be provided with two high level sensors 5002, which may ensure that in the event of a failure of one of the high level sensors, the correct signal may still be given to avoid fluid spilling from the tubs 5110, 5120, 5130 damaging components of the equipment or causing contamination.

In some embodiments, the clean water tub 5110 is provided with a heating device for heating the clean water (e.g., a heating coil, not shown) and a temperature sensor 5003, and the heating device can heat the clean water in the clean water tub 5110 to a desired temperature, e.g., 60 °C or 80 °C or other temperature, so as to achieve a better cleaning effect. More specifically, the tub wall of the clean water tub 5110 may be provided with a thermal insulation layer.

In a specific embodiment, the clean water tub 5110, the detergent tub 5120, and the disinfectant tub 5130 may be provided on a movable cart, so that the movable cart may be pushed near the material buckets to be cleaned when an automatic cleaning operation is required, and can be stored elsewhere as needed when an automatic cleaning operation is not required, thereby facilitating efficient use of space.

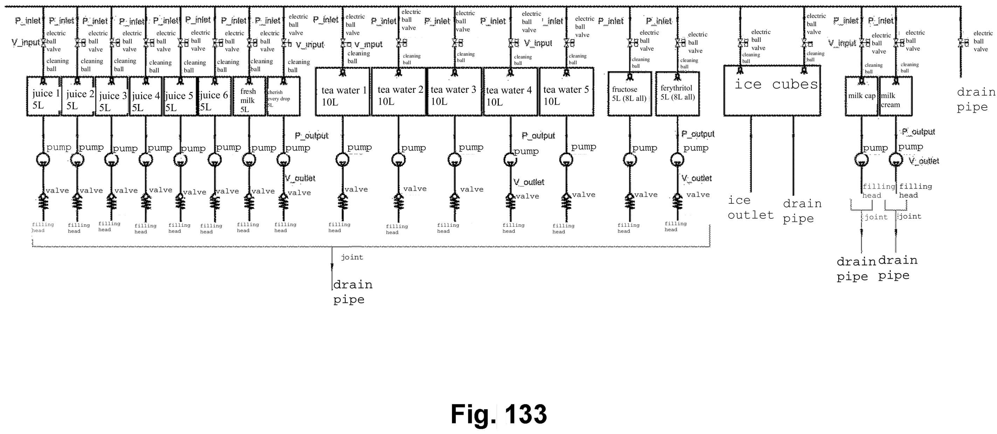

In some embodiments, as shown in Figs. 132 and 133, the cleaning fluid supply assembly includes supply valves, a pump 5010, and a tube disposed between each of the clean water tub 5110, the cleaning agent pass 5120, and the disinfectant tub 5130 and each material bucket 1200. More specifically, the supply valves include an output valve V_output for each of the clean water tub 5110, the detergent tub 5120, and the disinfectant tub 5130, and an input valve V_input for each material bucket 1200, which supply valves may be controlled individually or in groups according to actual needs to accomplish a desired cleaning operation. Optionally, a pump 5200, such as a gear pump, may be disposed on a tube between the output valve V_output of each of the clean water tub 5110, the detergent tub 5120, and the disinfectant tub 5130 and the input valve V_input of each material bucket 1200. Alternatively, the supply valves may be electric ball valves, and more specifically electric ball valves of stainless steel, as these are more durable in high temperature fluid, high flow rate, less susceptible to damage, and has a large diameter. More specifically, the input valve V_input of the material bucket 1200 is disposed on an input pipe P_input of the material bucket 1200 which is in fluid communication with the inlet pipe P_inlet of each material bucket 1200, thereby allowing cleaning fluid to flow to the cleaning ball 1240 of the material bucket 1200 for the cleaning operation.

Each valve and pump involved in the automated cleaning module can be controlled by the main control module of the intelligent beverage robot, so that it can be turned on and off as needed or according to various set programs, so as to complete the automatic cleaning of the material buckets and the corresponding tubes, pipes and so on, especially in allowing the operator to select a given program to complete the automatic cleaning work, thereby realizing triggered with one button and shutdown by itself at the end of the cleaning work.

In some embodiments, as shown in Fig. 133, a discharge port 1260 of the material bucket 1200 is connected to an outlet pipe P_output to enable discharge of material, residue, or cleaning fluid in the material bucket 1200 via the outlet pipe P_output. More specifically, a discharge valve V_outlet, more specifically a solenoid valve, may be provided on the outlet pipe P_output to be able to control whether the outlet pipe P_output is opened or not. For example, the outlet pipe P_output may be controlled by the main control module to operate as needed or according to various setting programs. Furthermore, as shown, a peristaltic pump can also be provided on each outlet pipe.

More specifically, the first filling valve 2360 for feeding liquid materials and the second filling valve 2460 for feeding milk caps described above are each in communication with the outlet pipe P_output of the respective material bucket 1200 downstream of the respective discharge valve V_outlet. Thus, in this case, the discharge of material, residue, or cleaning fluid in the material bucket 1200 needs to be achieved via the respective filling valves 2360, 2460. More specifically, when the intelligent beverage robot is operating normally, that is, making a beverage, when the required material needs to be output from the corresponding material bucket 1200 to the corresponding finished-product cup 2101 or blending cup 2201, the corresponding finished-product cup 2101 or blending cup 2201 will be aligned with the filling valve of the corresponding material bucket 1200 (the first or second filling valves 2360, 2460 described above); while in other scenarios, including performing a cleaning operation of the material bucket 1200, it is desirable to align the aforementioned receiving tray 2391 or receiving tray 2457 with the respective liquid material bucket or milk cap bucket to allow the residue or cleaning fluid in the material bucket 1200 to be received and discharged via the discharge pipe 2392 or the discharge pipe 2458.

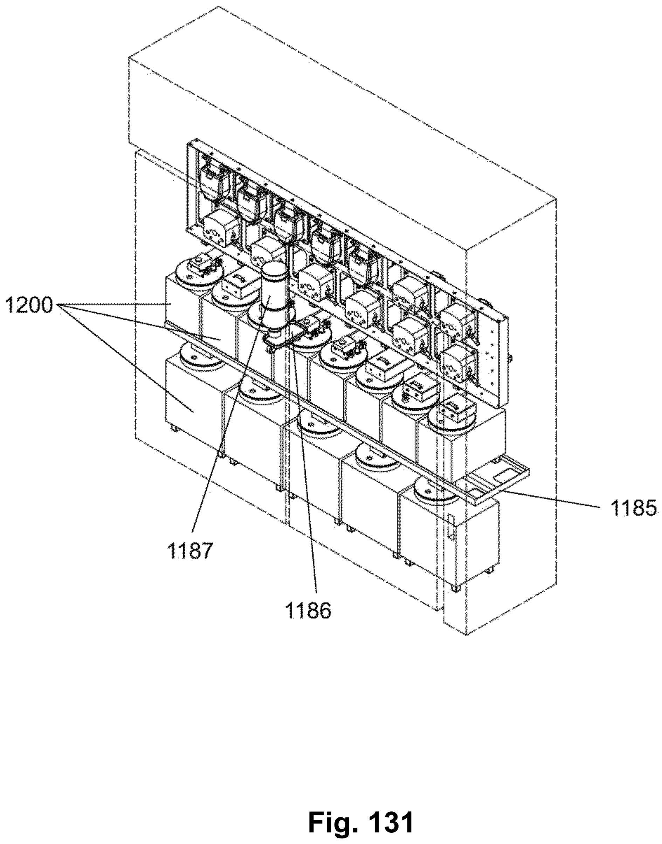

In some embodiments, as shown in Fig. 131, the aforementioned liquid material chamber 1180 and/or milk cap chamber 1190 may include shelves 1185 for placing material buckets 1200, which, for example, may be placed in rows on respective shelves 1185. More specifically, output joints may be provided on each shelf 1185, and one end of each of the output joints is connected to the discharge port 1260 of the corresponding material bucket 1200 in a sealed manner, and the other end is connected to the outlet pipe P_output. For example, two layers of sealing rings may be provided at the end of each of the output joints connected to the material bucket 1260.

In some embodiments, as shown in Fig. 131, to ensure the convenience of adding materials into the material buckets 1200, the material buckets 1200 may be placed in a single row on the shelf 1185 of the material bucket compartment so that there is no obstruction between the operator and the material buckets 1200. In this case, it is particularly advantageous to arrange the feed port 1211 of the material bucket 1200 close to the periphery of the top lid 1210, since a specially made rectangular funnel 1186 can be employed, wherein one side of the funnel 1186 can extend out of the material bucket, so that a source-material container 1187 for storing the material to be added cannot interfere with or be interfered with other objects when pouring the material into the material bucket 1200. Since some liquid materials, e.g. the juice, contain sediment and small particles, a layer of filter screen can also be added at a mouth of the funnel to prevent particles from entering the material buckets from the source, thereby preventing particles from damaging the pump, affecting the accuracy, shortening the service life, or accumulating in the oneway valve, affecting the discharge, and unclean cleaning which can easily cause food safety hazards. In addition, for source-material containers with large capacity and heavy weight, the following two methods can be adopted instead of direct pouring: a) manual siphon pump, which does not require power supply and is simple and convenient to operate, but requires height difference; ② electric small water pump, which needs to be connected to power supply, but does not require height difference.

The exemplary embodiments of the intelligent beverage robot and each module thereof proposed by the present invention have been described in detail above with reference to the preferred embodiments, but those skilled in the art can understand that various modifications and variants can be made to the above specific embodiments without departing from the concept of the present invention, and various combinations of various technical features and structures proposed by the present invention can be made without exceeding the scope of protection of the present invention.

The scope of the present disclosure is not limited by the embodiments described above, but by the appended claims and their equivalents.

## Claims

1. An integrated intelligent beverage robot comprising:
a material storage and supply module configured to store materials for fully automated beverage making and capable of supplying materials to a multi-station dual-revolving module of the integrated intelligent beverage robot;
the multi-station dual-revolving module is configured to make beverages in a fully automated way, and comprises:
a first revolving member configured to carry a finished-product cup and move along a first trajectory passing through a plurality of first type stations to perform beverage making operations associated with the finished-product cup at each of the first type stations,
a second revolving member configured to carry a blending cup and move along a second trajectory passing through a plurality of second type stations to perform beverage making operations associated with the blending cup at each of the second type stations,
wherein the plurality of first type stations comprises a first pouring station, the plurality of second type stations comprises a second pouring station corresponding to the first pouring station, and when the finished-product cup is located at the first pouring station, a respective blending cup is located at the second pouring station, so as to perform pouring operations at the first pouring station and the second pouring station, the pouring operation comprising pouring materials from the blending cup into the finished-product cup.

2. The integrated intelligent beverage robot according to claim 1, further comprising an intelligent cabinet module comprising a cabinet which comprises compartments for storage of the finished-product cups with finished beverages, the intelligent cabinet module being configured to transfer the finished-product cups with finished beverages from the first revolving member to a respective compartment of the cabinet.

3. The integrated intelligent beverage robot according to claim 2, further comprising a main control module configured to communicate with the material storage and supply module, the multi-station dual-revolving module, and the intelligent cabinet module to command and control the operations of the material storage and supply module, the multi-station dual-revolving module, and the intelligent cabinet module.

4. The integrated intelligent beverage robot according to claim 3, wherein the main control module is further configured to be capable of communicating with a mobile device.

5. The integrated intelligent beverage robot according to claim 4, wherein the intelligent cabinet is further configured to allow a customer or a delivery person or a waiter to take a finished-product cup out from a respective compartment.

6. The integrated intelligent beverage robot according to claim 5, wherein the intelligent cabinet module is also configured to be able to communicate with a mobile device.

7. The integrated intelligent robot according to any one of claims 3 to 6, further comprising an automated cleaning module configured to perform cleaning operations for components of the material storage and supply module and the multi-station dual-revolving module.

8. The integrated intelligent beverage robot according to claim 7, wherein the main control module is further configured to be able to communicate with the automated cleaning module to be able to command and control an operations of the automated cleaning module.

9. The integrated intelligent beverage robot according to claim 3, wherein the intelligent cabinet module further comprises a grasping assembly configured to move the finished-product cup from the multi-station dual-revolving module to a finished-product cup receptacle of the cabinet, the grasping assembly comprising:
a grasping jaw assembly configured to be movable between a grasping position and a cup placing position, and comprising:
grasping jaws configured to grasp the finished-product cup located on the first revolving member of the multi-station dual-revolving module in the grasping position and to place the finished-product cup in the finished-product cup receptacle in the cup placing position; and
a grasping jaw drive configured to drive the grasping jaws to be tightened and loosened,
a grasping drive assembly configured to drive the grasping jaw assembly to move between the grasping position and the cup placing position.

10. The integrated intelligent beverage robot according to claim 9, wherein the grasping drive assembly comprises:
a grasping lifting drive configured to drive the grasping jaw assembly to move up and down in a height direction; and
a grasping rotating drive configured to drive the grasping jaw assembly for rotational movement.

11. The integrated intelligent beverage robot according to claim 10, wherein:
the grasping lifting drive is a grasping lifting cylinder including a grasping lifting cylinder body and a lifting movable member movable in the height direction relative to the grasping lifting cylinder body;
the grasping rotating drive is a grasping rotating cylinder including a grasping rotating cylinder body coupled to the lifting movable member and a g rotating shaft rotatable relative to the grasping rotating cylinder body;
wherein the grasping jaw assembly is coupled with the rotating shaft; and/or
the grasping jaw drive is a grasping jaw cylinder.

12. The integrated intelligent beverage robot according to claim 11, wherein the grasping assembly is configured such that, in operation, after the grasping jaws have grasped the finished-product cup, the lifting movable member moves upward in the height direction, and then the rotating shaft is rotated by an angle in a first circumferential direction.

13. The integrated intelligent beverage robot according to claim 12, wherein the angle is 180 °.

14. The integrated intelligent beverage robot of claim 12, wherein the grasping assembly further comprises a grasping horizontal drive configured to drive the grasping jaw assembly for horizontal translational motion.

15. The integrated intelligent beverage robot according to claim 14, wherein the grasping horizontal driving member is a grasping horizontal cylinder including a grasping horizontal cylinder body and a horizontal movable member which is coupled to the grasping lifting cylinder body.

16. The integrated intelligent beverage robot according to claim 15, wherein the grasping horizontal cylinder is a rodless cylinder, and the horizontal movable member is a grasping horizontal cylinder slider.

17. The integrated intelligent beverage robot according to claim 14, wherein the grasping assembly is further configured to move the grasping horizontal cylinder to the cup placing position in a first translation direction after the rotating shaft of the grasping rotating cylinder is rotated by the angle.

18. The integrated intelligent beverage robot according to claim 17, wherein the grasping assembly is further configured such that, in the cup placing position, the lifting movable member is lowered to place the finished-product cup in a cup holder at the finished-product cup receptacle, and then the grasping jaws release the finished-product cup.

19. The integrated intelligent beverage robot according to claim 18, wherein the grasping assembly is further configured to move the horizontal movable member back in a second translation direction opposite to the first translation direction after the grasping jaw releases the finished-product cup.

20. The integrated intelligent beverage robot of claim 19, wherein the grasping assembly further includes a fourth sensor fixed at an intermediate position between the grasping position and the cup placing position, and configured to sense proximity or presence of the horizontal movable member during the moving back of the horizontal movable member in the second translational direction opposite the first translational direction and to communicate with a solenoid valve controlling operation of the grasping rotating cylinder, so as to rotate the rotating shaft by the angle in a second circumferential direction opposite the first circumferential direction upon sensing the proximity or presence of the horizontal movable member.

21. The integrated smart beverage robot of claim 20, wherein the fourth sensor is further configured to communicate with a solenoid valve controlling operation of the grasping horizontal cylinder to suspend operation of the grasping horizontal cylinder for a time period upon sensing proximity or presence of a horizontal movable member.

22. The integrated intelligent beverage robot according to claim 21, wherein the time period is 1 to 3 seconds.

23. The integrated intelligent beverage robot of claim 14, wherein the intelligent cabinet module further includes a lid-pressing assembly configured to press a finished-product cup lid against a respective finished-product cup at the finished-product cup receptacle, and at least including:
a first rotating lid-pressing cylinder including a first rotating shaft that is rotatably move up and down, and
a first lid-pressing link lever coupled to the first rotating shaft to be movable with the first rotating shaft.

24. The integrated intelligent beverage robot according to claim 23, wherein the lid-pressing assembly further comprises:
a second rotating lid-pressing cylinder including a second rotating shaft rotatably movable up and down; and
a second lid-pressing link lever coupled to the second rotating shaft to be movable with the second rotating shaft.

25. The integrated intelligent beverage robot according to claim 24, wherein the first rotating lid-pressing cylinder and the second rotating lid-pressing cylinder are suitable for finished-product cups of different heights.

26. The integrated intelligent beverage robot according to claim 24, wherein the lid-pressing assembly further includes a first pressure relief valve for the first rotating lid-pressing cylinder and/or a second pressure relief valve for the second rotating lid-pressing cylinder.

27. The integrated intelligent beverage robot according to any one of claims 9 to 26, wherein the cabinet includes at least a first side on which a plurality of rows of compartments are provided for storing the finished-product cups.

28. The integrated intelligent beverage robot according to claim 27, wherein t the cabinet further includes a second side adjacent to and disposed at an angle with respect to the first side, on which a plurality of rows of compartments for storing the finished-product cups are disposed.

29. The integrated intelligent beverage robot of claim 28, wherein the intelligent cabinet module includes a transfer assembly configured to transfer the finished-product cup from the finished-product cup receptacle of the cabinet into a respective compartment of the cabinet, the transfer assembly comprising:
a transfer jaw assembly configured to be movable between the finished-product cup receptacle and a respective compartment and comprising:
transfer jaws configured to grasp the finished-product cup located in the finished-product cup receptacle and to place the finished-product cup into a respective compartment; and
a transfer jaw drive configured to drive the transfer jaws to be tightened and loosened,
a transfer drive assembly configured to drive the transfer jaw assembly for movement between the finished-product cup receptacle and a respective compartment.

30. The integrated intelligent beverage robot according to claim 29, wherein the transfer drive assembly comprises:
a transfer lifting drive assembly configured to drive the transfer jaw assembly to move up and down in the height direction; and
a transfer horizontal drive assembly configured to drive the transfer jaw assembly for horizontal translation movement.

31. The integrated intelligent beverage robot according to claim 30, wherein the transfer lifting drive assembly comprises:
a transfer lifting drive motor comprising a fifth motor shaft;
a transfer lifting transmission assembly comprising:
a second rack which is fixedly disposed;
a drive gear configured to be driven by the fifth motor shaft and meshed with the second rack to be able to move up and down along the second rack in the height direction and thus to drive the transfer jaw assembly to move up and down.

32. The integrated intelligent beverage robot according to claim 31, wherein the transfer lifting transmission assembly further comprises a first speed reducer disposed between the transfer lifting drive motor and the drive gear and comprising a first housing and a first reduction transmission assembly located within the first housing.

33. The integrated intelligent beverage robot according to claim 32, wherein the first reduction transmission assembly comprises:
an input shaft configured to be coupled with the fifth motor shaft of the transfer lifting drive motor via a coupling called a second coupling;
a planetary gear train configured to include an input gear coupled with the input shaft and an output gear coupled with the drive gear.

34. The integrated intelligent beverage robot according to claim 32, wherein the transfer horizontal drive assembly is configured to be driven by the transfer lifting drive assembly for moving up and down in a height direction, and comprises:
transfer horizontal drive motor;
a first linear module comprising a first horizontal slider drivable by the transfer horizontal drive motor for translational movement,
wherein the transfer jaw assembly is disposed to be coupled with the first horizontal slider to enable translational movement with the first horizontal slider.

35. The integrated intelligent beverage robot of claim 34, wherein the transfer drive assembly further includes a transfer intermediate drive assembly configured to transfer power between the transfer lifting drive assembly and the transfer horizontal drive assembly.

36. The integrated intelligent beverage robot according to claim 35, wherein the transfer intermediate drive assembly is disposed to be coupled to the first housing of the first speed reducer of the transfer lifting drive assembly so as to be able to move up and down with the transfer lifting drive assembly.

37. The integrated intelligent beverage robot according to claim 36, wherein the transfer intermediate drive assembly comprises:
a transfer intermediate drive motor;
a second linear module comprising a second horizontal slider drivable by the transfer intermediate drive motor for translational movement; wherein the transfer horizontal drive assembly is arranged to be connected with the second horizontal slider to be capable of translational movement with the second horizontal slider.

38. The integrated intelligent beverage robot of claim 37, wherein the transfer horizontal drive assembly is configured to connect with the second horizontal slider via a transfer rotating drive assembly configured to rotatably connect the transfer horizontal drive assembly to the second horizontal slider.

39. The integrated intelligent beverage robot according to claim 38, wherein the transfer rotation drive assembly comprises:
a transfer rotary motor comprising a sixth motor shaft;
a transfer rotating shaft configured to be connected to the sixth motor shaft so as to be driven rotatably by the transfer rotary motor;
wherein the transfer horizontal drive assembly is arranged to be coupled with the transfer rotating shaft to be rotatable with the transfer rotating shaft.

40. The integrated intelligent beverage robot according to claim 39, wherein the transfer rotating drive assembly further comprises a second speed reducer disposed between the transfer rotary motor and the transfer rotating shaft, and comprising a second housing and a second reduction transmission assembly disposed within the second housing.

41. The integrated intelligent beverage robot according to claim 40, wherein the second slider is connected to the second housing of the second speed reducer.

42. The integrated intelligent beverage robot according to claim 41, wherein the transfer rotating drive assembly further comprises an angle detection assembly configured to detect an angular position of the transfer rotating shaft, the angle detection assembly comprising:
an angle detection piece arranged to move together with the transfer rotating shaft;
a fifth sensor fixedly arranged and configured to detect an angular position of the angle detection piece.

43. The integrated intelligent beverage robot according to claim 31, wherein the transfer lifting drive assembly includes an assembly for identifying original point in height direction comprising:
a detection piece for identifying original point in height direction configured to move in the height direction with the transfer lifting drive motor;
a sensor for identifying original point in height direction which is fixedly arranged and configured to be capable of detecting the detection piece for identifying original point in height direction.

44. The integrated intelligent beverage robot of claim 39, wherein each compartment is provided with a first door, and the transfer jaws are arranged to push open the first door to enable the finished-product cup to be placed into the compartment.

45. The integrated intelligent beverage robot according to claim 44, the top of the first door is hinged with a top plate of the compartment.

46. The integrated intelligent beverage robot according to claim 45, wherein the compartment is further provided with a second resilient returning member connected between the first door and a side plate of the compartment on which the first door is mounted and configured to apply a restoring force to the first door that tends to close the first door when the first door is opened.

47. The integrated intelligent beverage robot according to claim 46, wherein the side plate of the compartment provided with the first door is further provided with a stop for limiting the travel of the first door when the first door is returned.

48. The all-in-one smart beverage robot of claim 44, wherein each compartment is provided with a sixth sensor configured to detect the presence or absence of the finished-product cup in the compartment.

49. The integrated intelligent beverage robot according to claim 48, wherein the sixth sensor is a laser sensor.

50. The all-in-one smart beverage robot of claim 48, wherein the compartment is further provided with an indicator light configured to illuminate when the laser sensor detects the presence of the finished-product cup in the compartment.

51. The integrated intelligent beverage robot according to claim 50, wherein each compartment is configured to accommodate two finished-product cups, and each compartment is provided with two laser sensors, each sensor for detecting the presence or absence of a respective one of the two finished-product cups.

52. The integrated intelligent beverage robot according to claim 44, wherein each compartment is further provided with a second door through which the finished-product cup can be taken out.
